# EUROPEAN PATENT APPLICATION

(11) **EP 4 826 798 A1**
(43) Date of publication of application: **21.10.2026**
(21) Application number: 24903773.0
(22) Date of filing: 12.12.2024
(51) Int. Cl.: H01M 4/62, C08L 27/18, C08L 101/04, H01G 11/38, H01G 11/86

(54) **TETRAFLUOROETHYLENE POLYMER COMPOSITION, BINDER FOR ELECTROCHEMICAL DEVICE, ELECTRODE MIXTURE, ELECTRODE, AND SECONDARY BATTERY**

(30) Priority: 12.12.2023 JP 2023209464
(71) Applicant: DAIKIN INDUSTRIES, LTD., Osaka-shi, Osaka 530-0001 (JP)
(72) Inventor: NISHIMURA, Kenta, Osaka-Shi, Osaka 530-0001 (JP); YAMADA, Takaya, Osaka-Shi, Osaka 530-0001 (JP); KATO, Taketo, Osaka-Shi, Osaka 530-0001 (JP); YASUDA, Kohei, Osaka-Shi, Osaka 530-0001 (JP); TERADA, Junpei, Osaka-Shi, Osaka 530-0001 (JP)
(74) Representative: Hoffmann Eitle
(86) International application number: PCT/JP2024/044087
(87) International publication number: WO 2025/127120

(57) **Abstract**

The disclosure provides a tetrafluoroethylene-based polymer composition for a binder for an electrochemical device, capable of reducing the resistance of an electrochemical device and yielding a mixture sheet with excellent adhesion to a substrate, and a binder for an electrochemical device, an electrode mixture, an electrode, and a secondary battery each containing the composition. Provided is a tetrafluoroethylene-based polymer composition for use in a binder for an electrochemical device, the tetrafluoroethylene-based polymer composition containing a polar group in an amount of less than 0.020 meq/g based on the tetrafluoroethylene-based polymer composition, being non melt-processible, and having an apparent density of less than 0.50 g/mL.

## Description

### TECHNICAL FIELD

The disclosure relates to tetrafluoroethylene-based polymer compositions, binders for electrochemical devices, electrode mixtures, electrodes, and secondary batteries.

### BACKGROUND ART

Secondary batteries such as lithium-ion secondary batteries are used in small and portable electrical and electronic devices such as laptop PCs, cellular phones, smart phones, tablet PCs, and Ultrabooks, and are also being commercialized as a wide variety of power sources, including in-vehicle power sources for driving automobiles and the like and large power sources for stationary applications. The reason for this is that secondary batteries are high-voltage, high-energy-density batteries with low self-discharge and low memory effect and can be made extremely lightweight. Secondary batteries are now demanded to have even higher energy densities, and further improvements in battery characteristics are desired.

Patent Literature 1 discloses an energy storage device in which at least one of the cathode or the anode includes a polytetrafluoroethylene composite binder material.

Patent Literatures 2 to 6 each describe use of polytetrafluoroethylene as a binder for batteries.

Patent Literatures 7 to 9 each describe use of a vinylidene fluoride polymer as a binder for batteries.

### CITATION LIST

### - Patent Literature

Patent Literature 1: JP 2017-517862 T
Patent Literature 2: WO 2021/181887
Patent Literature 3: WO 2021/181888
Patent Literature 4: WO 2021/192541
Patent Literature 5: WO 2022/138942
Patent Literature 6: WO 2022/138939
Patent Literature 7: WO 2018/008263
Patent Literature 8: WO 2022/163631
Patent Literature 9: WO 2023/074245

### SUMMARY OF INVENTION

### - Technical Problem

The disclosure aims to provide a tetrafluoroethylene-based polymer composition for a binder for an electrochemical device, capable of reducing the resistance of an electrochemical device and yielding a mixture sheet with excellent adhesion to a substrate, and a binder for an electrochemical device, an electrode mixture, an electrode, and a secondary battery each containing the composition.

### - Solution to Problem

The disclosure (1) relates to a tetrafluoroethylene-based polymer composition for use in a binder for an electrochemical device, the tetrafluoroethylene-based polymer composition containing a polar group in an amount of less than 0.020 meq/g based on the tetrafluoroethylene-based polymer composition, being non melt-processible, and having an apparent density of less than 0.50 g/mL.

The disclosure (2) relates to the tetrafluoroethylene-based polymer composition according to the disclosure (1), wherein the apparent density is 0.35 g/mL or more and less than 0.50 g/mL.

The disclosure (3) relates to the tetrafluoroethylene-based polymer composition according to the disclosure (1) or (2), wherein the tetrafluoroethylene-based polymer composition is for use in a binder for a lithium-ion secondary battery and is in a form of powder.

The disclosure (4) relates to a binder for an electrochemical device consisting essentially of a tetrafluoroethylene-based polymer composition, the tetrafluoroethylene-based polymer composition containing a polar group in an amount of less than 0.020 meq/g based on the tetrafluoroethylene-based polymer composition, being non melt-processible, and having an apparent density of less than 0.50 g/mL.

The disclosure (5) relates to the binder for an electrochemical device according to the disclosure (4), wherein the apparent density of the tetrafluoroethylene-based polymer composition is 0.35 g/mL or more and less than 0.50 g/mL.

The disclosure (6) relates to the binder for an electrochemical device according to the disclosure (4) or (5), wherein the polar group includes at least one functional group selected from the group consisting of an amino group, a nitrile group, and an oxygen-containing polar group.

The disclosure (7) relates to the binder for an electrochemical device according to the disclosure (6), wherein the oxygen-containing polar group includes at least one functional group selected from the group consisting of a carbonyl group-containing group, an epoxy group, an oxetanyl group, -SO₃X^{a}, -SO₂X^{a}, -OSO₂X^{a}, -PO₃X^{a}, and -OX^{a} where X^{a} is -H, a metal atom, -NR¹₄, imidazolium optionally containing a substituent, pyridinium optionally containing a substituent, phosphonium optionally containing a substituent, an alkyl group, or a nitrile group; and R¹ is H or an organic group.

The disclosure (8) relates to the binder for an electrochemical device according to any one of the disclosures (4) to (7), wherein the tetrafluoroethylene-based polymer is a copolymer of tetrafluoroethylene and a monomer containing a polar group.

The disclosure (9) relates to the binder for an electrochemical device according to any one of the disclosures (4) to (8), wherein the tetrafluoroethylene-based polymer composition contains a fluorine-containing compound containing a hydrophilic group.

The disclosure (10) relates to the binder for an electrochemical device according to the disclosure (9), wherein the hydrophilic group includes at least one selected from the group consisting of -SO₃M^{a}, -SO₂M^{a}, - OSO₂M^{a}, -PO₃M^{a}, -COOM^{a}, -OCOM^{a}, and -OM^{a}, where M^{a} is -H, a metal atom, -NR¹₄, imidazolium optionally containing a substituent, pyridinium optionally containing a substituent, or phosphonium optionally containing a substituent; and R¹ is H or an organic group.

The disclosure (11) relates to the binder for an electrochemical device according to the disclosure (9) or (10), wherein the fluorine-containing compound containing a hydrophilic group is a compound represented by the following formula (N⁰):

Xⁿ⁰-Rfⁿ⁰-Y⁰ (N⁰)

wherein Xⁿ⁰ is H, Cl, or F; Rfⁿ⁰ is a C3-C20 linear, branched, or cyclic alkylene group in which any or all of H atoms are replaced by F atoms, where the alkylene group optionally contains at least one ether bond and a part of the H atoms are optionally replaced by Cl atoms; and Y⁰ is an anionic group.

The disclosure (12) relates to the binder for an electrochemical device according to any one of the disclosures (9) to (11), wherein the fluorine-containing compound containing a hydrophilic group includes at least one selected from the group consisting of a compound represented by the following formula (1) and a compound represented by the following formula (2),

formula (1): (H-(CF₂)ₘ₋₁-COO)ₚM¹

wherein m is 4 to 20; M¹ is H, a metal atom, NR⁵₄ where R⁵s are optionally the same as or different from each other and each represent H or a C1-C10 organic group, imidazolium optionally containing a substituent, pyridinium optionally containing a substituent, or phosphonium optionally containing a substituent; and p is 1 or 2, and

formula (2): (H-(CF₂)ₙ-SO₃)_{q}M²

wherein n is 4 to 20; M² is H, a metal atom, NR⁵₄ where R⁵ is as defined above, imidazolium optionally containing a substituent, pyridinium optionally containing a substituent, or phosphonium optionally containing a substituent; and q is 1 or 2.

The disclosure (13) relates to the binder for an electrochemical device according to the disclosure (9) or (10), wherein the fluorine-containing compound containing a hydrophilic group is a macromolecular compound containing an ionic group.

The disclosure (14) relates to the binder for an electrochemical device according to the disclosure (13), wherein the macromolecular compound includes at least one selected from the group consisting of a polymer (I) containing a polymerized unit (I) based on a monomer represented by the following formula (I) and a compound (II) represented by the following formula (II),
formula (I):

CX¹X³=CX²R(-CZ¹Z²-A⁰)ₘ (I)

wherein X¹ and X³ are each independently F, Cl, H, or CF₃; A⁰ is an anionic group; X² is H, F, an alkyl group, or a fluorine-containing alkyl group; R is a linking group; Z¹ and Z² are each independently H, F, an alkyl group, or a fluorine-containing alkyl group; and m is an integer of 1 or more, and
formula (II):

T^{X}-X^{A}-R^{FA1}-R^{FA2}-X^{A}-T^{X}' (II)

wherein
R^{FA1} is -Rf¹ₚ-R^{F}-O_{q}-;
R^{FA2} is -Rf²ₚ-R^{FX}-O_{q}-,
   where R^{F} is a divalent fluoropolyether group,
   R^{FX} is a divalent fluoropolyether group containing an anionic group,
   Rf¹ and Rf² are each independently a C1-C6 alkylene group optionally substituted with one or more fluorine atoms,
   each p is independently 0 or 1, and
   each q is independently 0 or 1;
each X^{A} is independently a single bond or a divalent to decavalent group; and
T^{X} and T^{X}' are each independently selected from the group consisting of (i) a C1-C24 (hydro)(fluoro)carbon group optionally containing one or more of H, O, and Cl and free from the anionic group and (ii) a C1-C24 (hydro)(fluoro)carbon group containing at least one anionic group.

The disclosure (15) relates to the binder for an electrochemical device according to the disclosure (14), wherein the macromolecular compound includes the polymer (I) containing a polymerized unit (I) based on a monomer represented by the formula (I).

The disclosure (16) relates to the binder for an electrochemical device according to any one of the disclosures (4) to (15), wherein the binder for an electrochemical device is a binder for a lithium-ion secondary battery and is in a form of powder.

The disclosure (17) relates to an electrode mixture containing: the tetrafluoroethylene-based polymer composition according to any one of the disclosures (1) to (3) or the binder for an electrochemical device according to any one of the disclosures (4) to (16); and an electrode active material.

The disclosure (18) relates to the electrode mixture according to the disclosure (17), wherein the electrode mixture is in a form of a sheet.

The disclosure (19) relates to an electrode including: the tetrafluoroethylene-based polymer composition according to any one of the disclosures (1) to (3) or the binder for an electrochemical device according to any one of the disclosures (4) to (16); an electrode active material; and a current collector.

The disclosure (20) relates to a secondary battery including the electrode according to the disclosure (19).

### - Advantageous Effects of Invention

The disclosure can provide a tetrafluoroethylene-based polymer composition for a binder for an electrochemical device, capable of reducing the resistance of an electrochemical device and yielding a mixture sheet with excellent adhesion to a substrate, and a binder for an electrochemical device, an electrode mixture, an electrode, and a secondary battery each containing the composition.

### BRIEF DESCRIPTION OF DRAWINGS

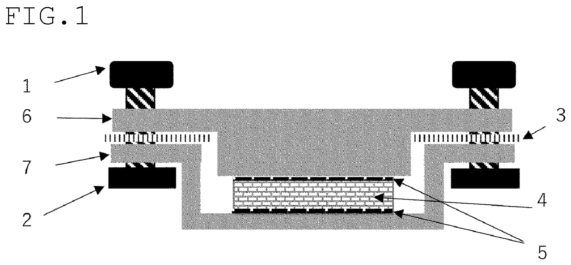

FIG. 1 is a schematic cross-sectional view of a pressure cell used in ion-conductivity measurement on solid electrolyte mixture sheets in EXAMPLES.

### DESCRIPTION OF EMBODIMENTS

The term "organic group" as used herein means a group containing one or more carbon atoms or a group formed by removing one hydrogen atom from an organic compound.

The organic group is preferably an alkyl group optionally containing one or more substituents.

The disclosure is described in detail below.

The disclosure provides a tetrafluoroethylene (TFE)-based polymer composition for use in a binder for an electrochemical device, the TFE-based polymer composition containing a polar group in an amount of less than 0.020 meq/g based on the TFE-based polymer composition, being non melt-processible, and having an apparent density of less than 0.50 g/mL.

Having the above formulation, the TFE-based polymer composition of the disclosure when used as a binder for an electrochemical device can reduce the resistance of the electrochemical device and yield a mixture sheet with excellent adhesion to a substrate (e.g., metal of the current collector and the like, carbon-coated layer, electrode mixture layer). Also, the TFE-based polymer composition of the disclosure can improve the cycle characteristics of the electrochemical device.

Since the TFE-based polymer composition of the disclosure can be used in a dry process, it is not necessary to use a large amount of dispersion medium such as water or an organic solvent and the electrode active material or solid electrolyte to be used together can be selected from a wide range of selections, which is advantageous in terms of production process. The process and cost derived from use of a dispersion medium can be reduced.

In addition, the TFE-based polymer composition of the disclosure has excellent binding force to active materials or electrolytes, which can reduce the amount of the TFE-based polymer composition used.

The TFE-based polymer composition of the disclosure contains a polar group. The polar group is a group having polarity and encompasses a hydrophilic group and an ionic group described later.

The polar group includes, for example, at least one functional group selected from the group consisting of an amino group, a nitrile group, and an oxygen-containing polar group. Among these, preferred is at least one selected from the group consisting of a nitrile group and an oxygen-containing polar group, and more preferred is an oxygen-containing polar group.

Examples of the oxygen-containing polar group include at least one functional group selected from the group consisting of a carbonyl group-containing group, an epoxy group, an oxetanyl group, -SO₃X^{a}, -SO₂X^{a}, -OSO₂X^{a}, -PO₃X^{a}, and -OX^{a} where X^{a} is -H, a metal atom, -NR¹₄, imidazolium optionally containing a substituent, pyridinium optionally containing a substituent, phosphonium optionally containing a substituent, an alkyl group, or a nitrile group; and R¹ is H or an organic group.

Preferred among these is at least one selected from the group consisting of a carbonyl group-containing group, -SO₃X^{a}, and -OX^{a}, and more preferred is at least one selected from the group consisting of a carbonyl group-containing group and -SO₃X^{a}. The oxygen-containing polar group also preferably includes at least one selected from the group consisting of -COOX^{a} (wherein X^{a} is as defined above) and -SO₃X^{a}.

Examples of the carbonyl group-containing group include -COOX^{a}, -OCOX^{a} (wherein X^{a} is as defined above), a carbonate group, a haloformyl group, an acid anhydride residue, and an isocyanate group. Among these, preferred is at least one selected from the group consisting of - COOX^{a}, -OCOX^{a}, and an acid anhydride residue, and more preferred is at least one selected from the group consisting of -COOX^{a} and an acid anhydride residue.

X^{a} is -H, a metal atom, -NR¹₄, imidazolium optionally containing a substituent, pyridinium optionally containing a substituent, phosphonium optionally containing a substituent, an alkyl group, or a nitrile group.

The metal atom for X^{a} may be a monovalent or divalent metal atom, such as an alkali metal (Group 1) or an alkaline earth metal (Group 2). Specific examples thereof include Na, K, and Li.

The four R¹s may be the same as or different from each other. R1 is preferably H or a C1-C10 organic group, more preferably H or a C1-C4 organic group.

The number of carbon atoms of the alkyl group for X^{a} is preferably 1 or more, while preferably 10 or less, more preferably 6 or less, still more preferably 4 or less. The alkyl group may be either linear or cyclic. When the alkyl group is cyclic, it corresponds to a cycloalkyl group.

X^{a} is preferably -H, an alkali metal atom, NH₄, an alkyl group, or a nitrile group, more preferably -H, an alkali metal atom, NH₄, or an alkyl group, still more preferably -H, an alkali metal atom, or NH₄.

The amount of the polar group is less than 0.020 meq/g based on the TFE-based polymer composition. In order to reduce resistance, to improve adhesion to a substrate, and to improve cycle characteristics, the amount of the polar group is preferably 0.018 meq/g or less, more preferably 0.015 meq/g or less, still more preferably 0.012 meq/g or less, further preferably 0.010 meq/g or less, while it is preferably 0.000001 meq/g or more, more preferably 0.000005 meq/g or more, still more preferably 0.00001 meq/g or more, further preferably 0.00005 meq/g or more, even more preferably 0.0001 meq/g or more.

The amount of the polar group can be measured by ion chromatography or can be determined by calculation from the molecular weight per polar group.

The polar group may be contained in the unit constituting the TFE-based polymer, may be contained in the end group of the polymer main chain, or may be introduced into the TFE-based polymer by plasma treatment or the like. An example of a TFE-based polymer containing the polar group in the end group of the polymer main chain is a TFE-based polymer having the polar group as the end group derived from, for example, a polymerization initiator or a chain transfer agent.

The polar group may also be derived from a substance used in polymerization of the TFE-based polymer.

The polar group can be introduced by, for example, copolymerization of TFE and a monomer containing a polar group. The polar group can also be introduced by polymerization of TFE in the presence of a non-fluorinated hydrocarbon surfactant, a fluorine-containing surfactant, or a macromolecular compound containing an ionic group. In particular, the polar group is preferably introduced by copolymerization. In other words, the TFE-based polymer is preferably a copolymer of TFE and a monomer containing a polar group.

The TFE-based polymer may be a TFE homopolymer or a TFE copolymer containing a polymerized unit based on TFE (TFE unit) and a polymerized unit based on a modifying monomer copolymerizable with TFE (modifying monomer unit).

The TFE-based polymer may also be polytetrafluoroethylene (PTFE). The PTFE encompasses a TFE homopolymer and a modified PTFE containing 99.0% by mass or more of the TFE unit and 1.0% by mass or less of the modifying monomer unit.

In order to reduce resistance, to improve adhesion to a substrate, to improve cycle characteristics, and to obtain a mixture sheet excellent in uniformity, strength, and flexibility, the TFE-based polymer is preferably PTFE, more preferably a modified PTFE.

The TFE homopolymer herein refers to a polymer containing the modifying monomer unit in an amount of less than 0.0001% by mass based on the total polymerized units.

In order to reduce resistance, to improve adhesion to a substrate, to improve cycle characteristics, and to obtain a mixture sheet excellent in uniformity, strength, and flexibility, the amount of the modifying monomer unit is preferably within a range of 0.0001 to 10% by mass based on the total polymerized units. The lower limit of the amount of the modifying monomer unit is more preferably 0.001% by mass, still more preferably 0.005% by mass, further preferably 0.010% by mass, even more preferably 0.015% by mass, particularly preferably 0.020% by mass. The upper limit of the amount of the modifying monomer unit is preferably 5.0% by mass, more preferably 3.0% by mass, still more preferably 1.0% by mass, further preferably 0.80% by mass, further preferably 0.60% by mass, further preferably 0.50% by mass, further preferably 0.40% by mass, further preferably 0.30% by mass, particularly preferably 0.20% by mass.

The modifying monomer unit as used herein means a portion constituting the molecular structure of the TFE-based polymer and derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include a perfluoroolefin such as hexafluoropropylene (HFP); a hydrogen-containing fluoroolefin such as trifluoroethylene and vinylidene fluoride (VDF); a perhaloolefin such as chlorotrifluoroethylene (CTFE); a perfluorovinyl ether; a perfluoroallyl ether; a (perfluoroalkyl)ethylene; ethylene; and a monomer containing a polar group. One modifying monomer may be used alone or two or more modifying monomers may be used in combination.

Examples of the perfluorovinyl ether include, but are not limited to, an unsaturated perfluoro compound represented by the following formula (A):

CF₂=CF-ORf¹ (A)

wherein Rf¹ is a perfluoro organic group. The term "perfluoro organic group" herein means an organic group in which all hydrogen atoms bonded to any carbon atom are replaced by fluorine atoms. The perfluoro organic group may have an ether oxygen.

Examples of the perfluorovinyl ether include a perfluoro(alkyl vinyl ether) (PAVE) represented by the formula (A) in which Rf¹ is a C1-C10 perfluoroalkyl group. The number of carbon atoms of the perfluoroalkyl group is preferably 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include:
those represented by the formula (A) wherein Rf¹ is a C4-C9 perfluoro(alkoxy alkyl) group;
those represented by the formula (A) wherein Rf¹ is a group represented by the following formula: 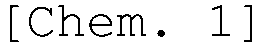 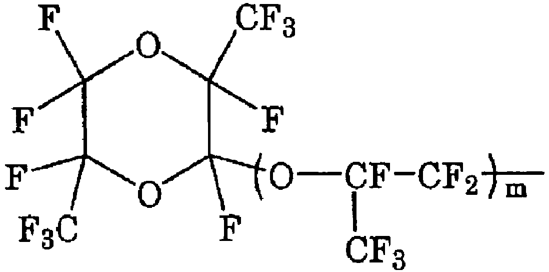 wherein m is an integer of 0 or 1 to 4; and
those represented by the formula (A) wherein Rf¹ is a group represented by the following formula: 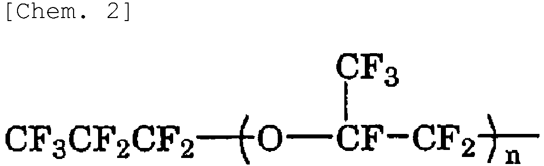 wherein n is an integer of 1 to 4.

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

CF₂=CF-CF₂-ORf² (B)

wherein Rf² is a perfluoro organic group.

Rf² is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₃, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, still more preferably CF₂=CF-CF₂-O-CF₂CF₂CF₃.

The modifying monomer is preferably a compound represented by the following formula (i):

CX¹X²=CX³X⁴ (i)

wherein X¹ to X³ are each independently H or F, X⁴ is F, Cl, Rf, or O-Rf, where Rf is a perfluoro organic group.

Rf in the formula (i) is preferably a C1-C10 perfluoroalkyl group, more preferably a C1-C5 perfluoroalkyl group, still more preferably a C1-C4 perfluoroalkyl group.

The monomer containing a polar group may be a non-fluorinated monomer or a fluorine-containing monomer.

Examples of the non-fluorinated monomer include: non-fluorinated monomers containing a hydroxy group, such as hydroxyalkyl vinyl ethers (e.g., hydroxyethyl vinyl ether, hydroxypropyl vinyl ether, hydroxybutyl vinyl ether, hydroxyisobutyl vinyl ether, and hydroxycyclohexyl vinyl ether); non-fluorinated monomers containing a carboxy group, such as acrylic acid, methacrylic acid, itaconic acid, succinic acid, fumaric acid, crotonic acid, maleic acid, citraconic acid, undecylenic acid, and acetylenedicarboxylic acid; non-fluorinated monomers containing an acid anhydride residue, such as itaconic anhydride (hereinafter also referred to as "IAH"), citraconic anhydride (hereinafter also referred to as "CAH"), 5-norbornene-2,3-dicarboxylic anhydride (hereinafter also referred to as "NAH"), succinic anhydride, fumaric anhydride, and maleic anhydride; non-fluorinated monomers containing a sulfo group, such as vinyl sulfonic acid; non-fluorinated monomers containing an epoxy group (glycidyl group), such as glycidyl vinyl ether and glycidyl allyl ether; non-fluorinated monomers containing an amino group, such as aminoalkyl vinyl ether and aminoalkyl allyl ether; non-fluorinated monomers containing an amide group, such as (meth)acrylamide and methylolacrylamide; and non-fluorinated monomers containing a nitrile group, such as acrylonitrile and methacrylonitrile.

Preferred among these is a non-fluorinated monomer containing a carboxy group and a non-fluorinated monomer containing an acid anhydride residue, more preferred is a non-fluorinated monomer containing an acid anhydride residue, and still more preferred is a cyclic non-fluorinated monomer containing an acid anhydride residue.

The non-fluorinated monomer is also preferably a monomer (10) represented by the following formula (10),

formula (10): CH₂=CR¹¹-L¹¹-R¹².

In the formula, R¹¹ is a hydrogen atom or an alkyl group where the number of carbon atoms of the alkyl group is preferably 1 to 3, more preferably 1.

L¹¹ is a single bond, -CO-O-*, -O-CO-*, or-O- where * represents a bonding position with R¹². When L¹¹ is -CO-O-*, for example, the formula (10) represents CH₂=CR¹¹-CO-OR¹².

R¹² is a hydrogen atom, an alkyl group, or a nitrile group.

The number of carbon atoms of the alkyl group is preferably 1 to 10, more preferably 1 to 6, still more preferably 1 to 4.

The alkyl group may be either linear or cyclic. When the alkyl group is cyclic, it corresponds to a cycloalkyl group.

The monomer (10) is preferably a monomer selected from the group consisting of a monomer represented by the following formula (10-1), a monomer represented by the following formula (10-2), a monomer represented by the following formula (10-3), and a monomer represented by the following formula (10-4).

formula (10-1): CH₂=CR¹¹-CO-O-R¹³

formula (10-2): CH₂=CR¹¹-O-CO-R¹⁴

formula (10-3): CH₂=CR¹¹-O-R¹⁵

formula (10-4): CH₂=CR¹¹-R¹⁶

In the formulas, R¹¹ is as defined above;
R¹³ is a hydrogen atom or an alkyl group, and is preferably a C1-C6 alkyl group;
R¹⁴ is an alkyl group, and is preferably a C1-C3 alkyl group, more preferably a methyl group;
R¹⁵ is an alkyl group, and is preferably a linear alkyl group or a cyclic alkyl group; and
R¹⁶ is a nitrile group.

Examples of the monomer (10) include methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether.

The monomer (10) is more preferably a monomer represented by the formula (10-1) or a monomer represented by the formula (10-2), particularly preferably a monomer represented by the formula (10-1) wherein R¹³ is a C1-C6 alkyl group.

The monomer containing a polar group also preferably includes a modifying monomer containing a functional group that is reactive in radical polymerization and a hydrophilic group (hereinafter, referred to as "modifying monomer (A)").

Examples of the hydrophilic group in the modifying monomer (A) include -NH₂, -PO₃M, -OPO₃M, -SO₃M, -OSO₃M, - COOM (wherein M is H, a metal atom, NR⁷₄, imidazolium optionally containing a substituent, pyridinium optionally containing a substituent, or phosphonium optionally containing a substituent; R⁷s are each H or an organic group and are the same as or different from each other, and any two of these may bond to each other to form a ring). Preferred among these hydrophilic groups is -SO₃M or -COOM. R⁷ is preferably H or a C1-C10 organic group, more preferably H or a C1-C4 organic group, still more preferably H or a C1-C4 alkyl group.

Examples of the metal atom include monovalent or divalent metal atoms such as alkali metals (Group 1) and alkaline earth metals (Group 2), and preferred is Na, K, or Li.

An example of the "functional group that is reactive in radical polymerization" in the modifying monomer (A) is a group containing an ethylenically unsaturated bond such as a vinyl group or an allyl group. The group containing an ethylenically unsaturated bond can be represented by the following formula:

CX^{e}X^{g}=CX^{f}R-

wherein X^{e}, X^{f}, and X^{g} are each independently F, Cl, H, CF₃, CF₂H, CFH₂, or CH₃ and R is a linking group. Examples of the linking group for R include linking groups as R^{a} described later. Preferred examples thereof include groups containing an unsaturated bond such as -CH=CH₂, -CF=CH₂, - CH=CF₂, -CF=CF₂, -CH₂-CH=CH₂, -CF₂-CF=CH₂, -CF₂-CF=CF₂, - (C=O)-CH=CH₂, -(C=O)-CF=CH₂, -(C=O)-CH=CF₂, -(C=O)-CF=CF₂, - (C=O)-C(CH₃)=CH₂, -(C=O)-C(CF₃)=CH₂, -(C=O)-C(CH₃)=CF₂, - (C=O)-C(CF₃)=CF₂, -O-CH₂-CH=CH₂, -O-CF₂-CF=CH₂, -O-CH₂-CH=CF₂, and -O-CF₂-CF=CF₂.

The modifying monomer (A) contains a functional group that is reactive in radical polymerization. Thus, when used in polymerization, it reacts with a fluorine-containing monomer in an early stage of the polymerization reaction, which presumably results in formation of particles containing a hydrophilic group derived from the modifying monomer (A) and having high stability. Accordingly, polymerization in the presence of the modifying monomer (A) seems to generate a large number of particles.

One modifying monomer (A) may be used alone, or two or more modifying monomers (A) may be used in combination.

The modifying monomer (A) may be a compound containing an unsaturated bond.

The modifying monomer (A) is preferably a compound represented by the following formula (4):

CXⁱX^{k}=CX^{j}R^{a}-(CZ¹Z²)ₖ-Y³ (4)

wherein Xⁱ, X^{j}, and X^{k} are each independently F, Cl, H, or CF₃; Y³ is a hydrophilic group; R^{a} is a linking group; Z¹ and Z² are each independently H, F, or CF₃; and k is 0 or 1.

Examples of the hydrophilic group include -NH₂, - PO₃M, -OPO₃M, -SO₃M, -OSO₃M, -COOM (wherein M is H, a metal atom, NR⁷₄, imidazolium optionally containing a substituent, pyridinium optionally containing a substituent, or phosphonium optionally containing a substituent; and R⁷s are each H or an organic group and are the same as or different from each other, and any two of these may bond to each other to form a ring). Preferred among these hydrophilic groups is -SO₃M or -COOM. R7 is preferably H or a C1-C10 organic group, more preferably H or a C1-C4 organic group, still more preferably H or a C1-C4 alkyl group.

Examples of the metal atom include monovalent or divalent metal atoms such as alkali metals (Group 1) and alkaline earth metals (Group 2), and preferred is Na, K, or Li.

Use of the modifying monomer (A) enables preparation of an aqueous dispersion having a smaller average primary particle size and better stability. The aspect ratio of primary particles can also be made lower.

R^{a} is a linking group. The "linking group" herein means a divalent linking group. The linking group may be a single bond and preferably contains at least one carbon atom. The number of carbon atoms may be 2 or more, or may be 4 or more, or may be 8 or more, or may be 10 or more, or may be 20 or more. The upper limit may be, but is not limited to, 100 or less or 50 or less.

The linking group may be linear or branched, may have a cyclic or acyclic structure, may be saturated or unsaturated, may be substituted or unsubstituted, may contain, if necessary, at least one hetero atom selected from sulfur, oxygen, and nitrogen, and may contain, if necessary, one or more functional groups selected from the group consisting of an ester, amide, sulfonamide, carbonyl, carbonate, urethane, urea, and carbamate. The linking group may contain no carbon atom and may be a catenary heteroatom such as oxygen, sulfur, or nitrogen.

For example, R^{a} is preferably a catenary hetero atom such as oxygen, sulfur, or nitrogen or a divalent organic group.

When R^{a} is a divalent organic group, a hydrogen atom bonded to a carbon atom may be replaced by a halogen other than fluorine, such as chlorine, and the group may or may not contain a double bond. Ra may be either linear or branched and may be either cyclic or acyclic. Ra may contain a functional group, such as an ester, an ether, a ketone, an amine, or a halide.

R^{a} may also be a fluorine-free divalent organic group or may be a partially fluorinated or perfluorinated divalent organic group.

For example, R^{a} may be a hydrocarbon group in which no fluorine atom is bonded to a carbon atom, a hydrocarbon group in which part of hydrogen atoms bonded to any carbon atom is replaced by a fluorine atom, a hydrocarbon group in which all hydrogen atoms bonded to any carbon atom are replaced by fluorine atoms, or a hydrocarbon group containing -(C=O)-, -(C=O)-O-, or -(C=O)-. These may contain an oxygen atom, may contain a double bond, and may contain a functional group.

R^{a} is preferably -(C=O)-, -(C=O)-O-, or a C1-C100 hydrocarbon group optionally containing an ether bond and optionally containing a carbonyl group, and any or every hydrogen atom bonded to any carbon atom in this hydrocarbon group may be replaced by fluorine.

R^{a} preferably includes at least one selected from - (CH₂)ₐ-, -(CF₂)ₐ-, -O-(CF₂)ₐ-, -(CF₂)ₐ-O-(CF₂)_{b}-, -O(CF₂)ₐ-O-(CF₂)_{b}-, -(CF₂)ₐ-[O-(CF₂)_{b}]_{c}-, -O(CF₂)ₐ-[O-(CF₂)_{b}]_{c}-, -[(CF₂)ₐ-O]_{b}-[(CF₂)_{c}-O]_{d}-, -O[(CF₂)ₐ-O]_{b}-[(CF₂)_{c}-O]_{d}-, -O-[CF₂CF(CF₃)O]ₐ-(CF₂)_{b}-, -(C=O)-, -(C=O)-O-, -(C=O)-(CH₂)ₐ-, - (C=O)-(CF₂)ₐ-, -(C=O)-O-(CH₂)ₐ-, -(C=O)-O-(CF₂)ₐ-, -(C=O)-[(CH₂)ₐ-O]_{b}-, -(C=O)-[(CF₂)ₐ-O]_{b}-, -(C=O)-O[(CH₂)ₐ-O]_{b}-, - (C=O)-O[(CF₂)ₐ-O]_{b}-, -(C=O)-O[(CH₂)ₐ-O]_{b}-(CH₂)_{c}-, -(C=O)-O[(CF₂)ₐ-O]_{b}-(CF₂)_{c}-, -(C=O)-(CH₂)ₐ-O-(CH₂)_{b}-, -(C=O)-(CF₂)ₐ-O-(CF₂)_{b}-, -(C=O)-O-(CH₂)ₐ-O-(CH₂)_{b}-, -(C=O)-O-(CF₂)ₐ-O-(CF₂)_{b}-, -(C=O)-O-C₆H₄-, and a combination of any of these.

In the formulas, a, b, c, and d are each independently 1 or greater; a, b, c, and d each may be 2 or greater, may be 3 or greater, may be 4 or greater, may be 10 or greater, and may be 20 or greater; the upper limit of a, b, c, and d may be 100, for example.

Specific examples of preferred R^{a} include -CF₂-O-, - CF₂-O-CF₂-, -CF₂-O-CH₂-, -CF₂-O-CH₂CF₂-, -CF₂-O-CF₂CF₂-, -CF₂-O-CF₂CH₂-, -CF₂-O-CF₂CF₂CH₂-, -CF₂-O-CF(CF₃)-, -CF₂-O-CF(CF₃)CF₂-, -CF₂-O-CF(CF₃)CF₂-O-, -CF₂-O-CF(CF₃)CH₂-, - (C=O)-, -(C=O)-O-, -(C=O)-(CH₂)-, -(C=O)-(CF₂)-, -(C=O)-O-(CH₂)-, -(C=O)-O-(CF₂)-, -(C=O)-[(CH₂)₂-O]ₙ-, -(C=O)-[(CF₂)₂-O]ₙ-, -(C=O)-O[(CH₂)₂-O]ₙ-, -(C=O)-O[(CF₂)₂-O]ₙ-, -(C=O)-O[(CH₂)₂-O]ₙ-(CH₂)-, -(C=O)-O[(CF₂)₂-O]ₙ-(CF₂)-, -(C=O)-(CH₂)₂-O-(CH₂)-, -(C=O)-(CF₂)₂-O-(CF₂)-, -(C=O)-O-(CH₂)₂-O-(CH₂)-, -(C=O)-O-(CF₂)₂-O-(CF₂)-, and -(C=O)-O-C₆H₄-. In particular, R^{a} is specifically preferably -CF₂-O-, -CF₂-O-CF₂-, -CF₂-O-CF₂CF₂-, -CF₂-O-CF(CF₃)-, -CF₂-O-CF(CF₃)CF₂-, - CF₂-O-CF(CF₃)CF₂-O-, -(C=O)-, -(C=O)-O-, -(C=O)-(CH₂)-, - (C=O)-O-(CH₂)-, -(C=O)-O[(CH₂)₂-O]ₙ-, -(C=O)-O[(CH₂)₂-O]ₙ-(CH₂)-, -(C=O)-(CH₂)₂-O-(CH₂)-, or -(C=O)-O-C₆H₄-.

In the formulas, n is an integer of 1 to 10.

-R^{a}-(CZ¹Z²)ₖ in the formula (4) is preferably -CF₂-O-CF₂-, -CF₂-O-CF(CF₃)-, -CF₂-O-C(CF₃)₂-, -CF₂-O-CF₂-CF₂-, -CF₂-O-CF₂-CF(CF₃)-, -CF₂-O-CF₂-C(CF₃)₂-, -CF₂-O-CF₂CF₂-CF₂-, -CF₂-O-CF₂CF₂-CF(CF₃)-, -CF₂-O-CF₂CF₂-C(CF₃)₂-, -CF₂-O-CF(CF₃)-CF₂-, -CF₂-O-CF(CF₃)-CF(CF₃)-, -CF₂-O-CF(CF₃)-C(CF₃)₂-, -CF₂-O-CF(CF₃)-CF₂-, -CF₂-O-CF(CF₃)-CF(CF₃)-, -CF₂-O-CF(CF₃)-C(CF₃)₂-, -CF₂-O-CF(CF₃)CF₂-CF₂-, -CF₂-O-CF(CF₃)CF₂-CF(CF₃)-, -CF₂-O-CF(CF₃)CF₂-C(CF₃)₂-, -CF₂-O-CF(CF₃)CF₂-O-CF₂-, -CF₂-O-CF(CF₃)CF₂-O-CF(CF₃)-, -CF₂-O-CF(CF₃)CF₂-O-C(CF₃)₂-, -(C=O)-, -(C=O)-O-, -(C=O)-(CH₂)-, -(C=O)-(CF₂)-, -(C=O)-O-(CH₂)-, - (C=O)-O-(CF₂)-, -(C=O)-[(CH₂)₂-O]ₙ-(CH₂)-, -(C=O)-[(CF₂)₂-O]ₙ-(CF₂)-, -(C=O)-[(CH₂)₂-O]ₙ-(CH₂)-(CH₂)-, -(C=O)-[(CF₂)₂-O]ₙ-(CF₂)-(CF₂)-, -(C=O)-O[(CH₂)₂-O]ₙ-(CF₂)-, -(C=O)-O[(CH₂)₂-O]ₙ-(CH₂)-(CH₂)-, -(C=O)-O[(CF₂)₂-O]ₙ-(CF₂)-, -(C=O)-O[(CF₂)₂-O]ₙ-(CF₂)-(CF₂)-, -(C=O)-(CH₂)₂-O-(CH₂)-(CH₂)-, -(C=O)-(CF₂)₂-O-(CF₂)-(CF₂)-, -(C=O)-O-(CH₂)₂-O-(CH₂)-(CH₂)-, -(C=O)-O-(CF₂)₂-O-(CF₂)-(CF₂)-, -(C=O)-O-(CH₂)₂-O-(CH₂)-C(CF₃)₂-, - (C=O)-O-(CF₂)₂-O-(CF₂)-C(CF₃)₂-, or -(C=O)-O-C₆H₄-C(CF₃)₂-, more preferably -CF₂-O-CF(CF₃)-, -CF₂-O-CF₂-CF(CF₃)-, -CF₂-O-CF₂CF₂-CF(CF₃)-, -CF₂-O-CF(CF₃)-CF(CF₃)-, -CF₂-O-CF(CF₃)CF₂-CF(CF₃)-, -CF₂-O-CF(CF₃)CF₂-O-CF(CF₃)-, -(C=O)-, -(C=O)-O-(CH₂)-, -(C=O)-O-(CH₂)-(CH₂)-, -(C=O)-O[(CH₂)₂-O]ₙ-(CH₂)-(CH₂)-, -(C=O)-O-(CH₂)₂-O-(CH₂)-C(CF₃)₂-, or -(C=O)-O-C₆H₄-C(CF₃)₂-.

In the formulas, n is an integer of 1 to 10.

Specific examples of the compound represented by the formula (4) include 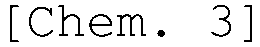 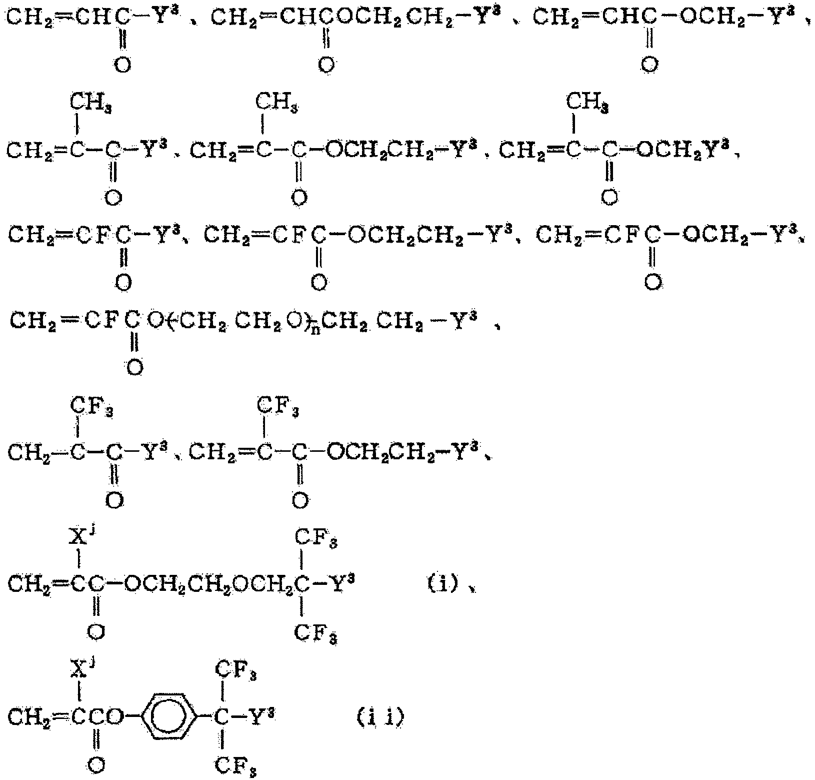 wherein X^{j} and Y³ are as defined above and n is an integer of 1 to 10.

R^{a} is preferably a divalent group represented by the following formula (r1):

-(C=O)ₕ-(O)ᵢ-CF₂-O-(CX⁶₂)ₑ-{O-CF(CF₃)}_{f}-(O)_{g}- (r1)

wherein each X⁶ is independently H, F, or CF₃, e is an integer of 0 to 3, f is an integer of 0 to 3, g is 0 or 1, h is 0 or 1, and i is 0 or 1, and is also preferably a divalent group represented by the following formula (r2):

-(C=O)ₕ-(O)ᵢ-CF₂-O-(CX⁷₂)ₑ-(O)_{g}- (r2)

wherein each X⁷ is independently H, F, or CF₃, e is an integer of 0 to 3, g is 0 or 1, h is 0 or 1, and i is 0 or 1.

-R^{a}-CZ¹Z²- in the formula (4) is also preferably a divalent group represented by the following formula (t1):

-(C=O)ₕ-(O)ᵢ-CF₂-O-(CX⁶₂)ₑ-{O-CF(CF₃)}_{f}-(O)_{g}-CZ¹Z²- (t1)

wherein each X⁶ is independently H, F, or CF₃, e is an integer of 0 to 3, f is an integer of 0 to 3, g is 0 or 1, h is 0 or 1, i is 0 or 1, and Z¹ and Z² are each independently F or CF₃. In the formula (t1), more preferably, one of Z¹ and Z² is F and the other is CF₃.

In the formula (4), -R^{a}-CZ¹Z²- is also preferably a divalent group represented by the following formula (t2):

-(C=O)ₕ-(O)ᵢ-CF₂-O-(CX⁷₂)ₑ-(O)_{g}-CZ¹Z²- (t2)

wherein each X⁷ is independently H, F, or CF₃, e is an integer of 0 to 3, g is 0 or 1, h is 0 or 1, i is 0 or 1, and Z¹ and Z² are each independently H, F, or CF₃. In the formula (t2), more preferably, one of Z¹ and Z² is F and the other is CF₃.

Also preferably, the compound represented by the formula (4) contains a C-F bond but does not contain a C-H bond, except for the hydrophilic group (Y³). In other words, in the formula (4), preferably, all of Xⁱ, X^{j}, and X^{k} are F and R^{a} is a C1 or higher perfluoroalkylene group, and the perfluoroalkylene group may be either linear or branched, may be either cyclic or acyclic, and may contain at least one catenary heteroatom. The number of carbon atoms of the perfluoroalkylene group may be 2 to 20 or may be 4 to 18.

The compound represented by the formula (4) may be partially fluorinated. In other words, except for the hydrophilic group (Y³), the compound represented by the formula (4) also preferably contains at least one hydrogen atom bonded to any carbon atom and at least one fluorine atom bonded to any carbon atom.

The compound represented by the formula (4) is also preferably a compound represented by the following formula (4a):

CF₂=CF-O-Rf⁰-Y³ (4a)

wherein Y³ is a hydrophilic group, Rf⁰ is a perfluorinated divalent linking group that may be linear or branched, cyclic or acyclic, saturated or unsaturated, and substituted or unsubstituted, and may optionally contain one or more heteroatoms selected from the group consisting of sulfur, oxygen, and nitrogen.

The compound represented by the formula (4) is also preferably a compound represented by the following formula (4b):

CH₂=CH-O-Rf⁰-Y³ (4b)

wherein Y³ is a hydrophilic group and Rf⁰ is a perfluorinated divalent linking group defined by the formula (4a).

In a preferred case, Y³ in the formula (4) is -OSO₃M. When Y³ is -OSO₃M, examples of the polymerized unit based on the compound represented by the formula (4) include - [CF₂CF(OCF₂CF₂CH₂OSO₃M)]-, -[CH₂CH((CF₂)₄CH₂OSO₃M)]-, - [CF₂CF(O(CF₂)₄CH₂OSO₃M)]-, -[CF₂CF(OCF₂CF(CF₃)CH₂OSO₃M)]-, - [CF₂CF(OCF₂CF(CF₃)OCF₂CF₂CH₂OSO₃M)]-, - [CH₂CH((CF₂)₄CH₂OSO₃M)]-, - [CF₂CF(OCF₂CF₂SO₂N(CH₃)CH₂CH₂OSO₃M)]-, - [CH₂CH(CF₂CF₂CH₂OSO₃M)]-, - [CF₂CF(OCF₂CF₂CF₂CF₂SO₂N(CH₃)CH₂CH₂OSO₃M)]-, and - [CH₂CH(CF₂CF₂CH₂OSO₃M)]-. In the formulas, M is as defined above.

In a preferred case, Y³ in the formula (4) is -SO₃M. When Y³ is -SO₃M, examples of the polymerized unit based on the compound represented by the formula (4) include - [CF₂CF(OCF₂CF₂SO₃M)]-, -[CF₂CF(O(CF₂)₄SO₃M)]-, - [CF₂CF(OCF₂CF(CF₃)SO₃M)]-, -[CF₂CF(OCF₂CF(CF₃)OCF₂CF₂SO₃M)]-, -[CH₂CH(CF₂CF₂SO₃M)]-, -[CF₂CF(OCF₂CF(CF₃)OCF₂CF₂CF₂CF₂SO₃M)]-, -[CH₂CH((CF₂)₄SO₃M)]-, -[CH₂CH(CF₂CF₂SO₃M)]-, and - [CH₂CH((CF₂)₄SO₃M)]-. In the formulas, M is as defined above.

In a preferred case, Y³ in the formula (4) is -COOM. When Y³ is -COOM, examples of the polymerized unit based on the compound represented by the formula (4) include - [CF₂CF(OCF₂CF₂COOM)]-, -[CF₂CF(O(CF₂)₅COOM)]-, - [CF₂CF(OCF₂CF(CF₃)COOM)]-, -[CF₂CF(OCF₂CF(CF₃)O(CF₂)ₙCOOM)]-(wherein n is greater than 1), -[CH₂CH(CF₂CF₂COOM)]-, - [CH₂CH((CF₂)₄COOM)]-, -[CH₂CH(CF₂CF₂COOM)]-, - [CH₂CH((CF₂)₄COOM)]-, -[CF₂CF(OCF₂CF₂SO₂NR'CH₂COOM)]-, - [CF₂CF(O(CF₂)₄SO₂NR'CH₂COOM)]-, - [CF₂CF(OCF₂CF(CF₃)SO₂NR'CH₂COOM)]-, - [CF₂CF(OCF₂CF(CF₃)OCF₂CF₂SO₂NR'CH₂COOM)]-, - [CH₂CH(CF₂CF₂SO₂NR'CH₂COOM)]-, - [CF₂CF(OCF₂CF(CF₃)OCF₂CF₂CF₂CF₂SO₂NR'CH₂COOM)]-, - [CH₂CH((CF₂)₄SO₂NR'CH₂COOM)]-, -[CH₂CH(CF₂CF₂SO₂NR'CH₂COOM)]-, and -[CH₂CH((CF₂)₄SO₂NR'CH₂COOM)]-. In the formulas, R' is H or a C1-C4 alkyl group and M is as defined above.

In a preferred case, Y³ in the formula (4) is -OPO₃M. When Y³ is -OPO₃M, examples of the polymerized unit based on the compound represented by the formula (4) include - [CF₂CF(OCF₂CF₂CH₂OP(O)(OM)₂)]-, - [CF₂CF(O(CF₂)₄CH₂OP(O)(OM)₂)]-, - [CF₂CF(OCF₂CF(CF₃)CH₂OP(O)(OM)₂)]-, - [CF₂CF(OCF₂CF(CF₃)OCF₂CF₂CH₂OP(O)(OM)₂)]-, - [CF₂CF(OCF₂CF₂SO₂N(CH₃)CH₂CH₂OP(O)(OM)₂)]-, - [CF₂CF(OCF₂CF₂CF₂CF₂SO₂N(CH₃)CH₂CH₂OP(O)(OM)₂)]-, - [CH₂CH(CF₂CF₂CH₂OP(O)(OM)₂)]-, -[CH₂CH((CF₂)₄CH₂OP(O)(OM)₂)]-, -[CH₂CH(CF₂CF₂CH₂OP(O)(OM)₂)]-, and - [CH₂CH((CF₂)₄CH₂OP(O)(OM)₂)]-. In the formulas, M is as defined above.

In a preferred case, Y³ in the formula (4) is -PO₃M. When Y³ is -PO₃M, examples of the polymerized unit based on the compound represented by the formula (4) include - [CF₂CF(OCF₂CF₂P(O)(OM)₂)]-, -[CF₂CF(O(CF₂)₄P(O)(OM)₂)]-, - [CF₂CF(OCF₂CF(CF₃)P(O)(OM)₂)]-, - [CF₂CF(OCF₂CF(CF₃)OCF₂CF₂P(O)(OM)₂)]-, - [CH₂CH(CF₂CF₂P(O)(OM)₂)]-, -[CH₂CH((CF₂)₄P(O)(OM)₂)]-, - [CH₂CH(CF₂CF₂P(O)(OM)₂)]-, and -[CH₂CH((CF₂)₄P(O)(OM)₂)]. In the formulas, M is as defined above.

The compound represented by the formula (4) preferably includes at least one selected from the group consisting of a monomer represented by the following formula (5):

CX₂=CY(-CZ₂-O-Rf-Y³) (5)

wherein Xs are the same as or different from each other and are each -H or -F; Y is -H, -F, an alkyl group, or a fluorine-containing alkyl group; Zs are the same as or different from each other and are each -H, -F, an alkyl group, or a fluorine-containing alkyl group; Rf is a C1-C40 fluorine-containing alkylene group or a C2-C100 fluorine-containing alkylene group containing an ether bond; and Y³ is as defined above;
a monomer represented by the following formula (6):

   CX₂=CY(-O-Rf-Y³) (6)

   wherein Xs are the same as or different from each other and are each -H or -F; Y is -H, -F, an alkyl group, or a fluorine-containing alkyl group; Rf is a C1-C40 fluorine-containing alkylene group or a C2-C100 fluorine-containing alkylene group containing an ether bond; and Y³ is as defined above; and
a monomer represented by the following formula (7):

   CX₂=CY(-Rf-Y³) (7)

   wherein Xs are the same as or different from each other and are each -H or -F; Y is -H, -F, an alkyl group, or a fluorine-containing alkyl group; Rf is a C1-C40 fluorine-containing alkylene group or a C2-C100 fluorine-containing alkylene group containing an ether bond; and Y³ is as defined above.

In the formula (5), X is -H or -F. Both Xs may be -F or at least one of these may be -H. For example, one of these may be -F while the other may be -H, or both may be - H.

In the formula (5), Y is -H, -F, an alkyl group, or a fluorine-containing alkyl group.

The alkyl group is an alkyl group containing no fluorine atom and the number of carbon atoms thereof is 1 or more. The number of carbon atoms of the alkyl group is preferably 6 or less, more preferably 4 or less, still more preferably 3 or less.

The fluorine-containing alkyl group is an alkyl group containing at least one fluorine atom, and the number of carbon atoms thereof is 1 or more. The number of carbon atoms of the fluorine-containing alkyl group is preferably 6 or less, more preferably 4 or less, still more preferably 3 or less.

Y is preferably -H, -F, or -CF₃, more preferably -F.

In the formula (5), Zs are the same as or different from each other and are each -H, -F, an alkyl group, or a fluoroalkyl group.

The alkyl group is an alkyl group containing no fluorine atom and the number of carbon atoms thereof is 1 or more. The number of carbon atoms of the alkyl group is preferably 6 or less, more preferably 4 or less, still more preferably 3 or less.

The fluorine-containing alkyl group is an alkyl group containing at least one fluorine atom, and the number of carbon atoms thereof is 1 or more. The number of carbon atoms of the fluorine-containing alkyl group is preferably 6 or less, more preferably 4 or less, still more preferably 3 or less.

Z is preferably -H, -F, or -CF₃, more preferably -F.

In the formula (5), at least one of X, Y, or Z preferably contains a fluorine atom.

For example, X may be -H while Y and Z may be -F.

In the formula (5), Rf is a C1-C40 fluorine-containing alkylene group or a C2-C100 fluorine-containing alkylene group containing an ether bond.

The number of carbon atoms of the fluorine-containing alkylene group is preferably 2 or more. The number of carbon atoms is preferably 30 or less, more preferably 20 or less, still more preferably 10 or less. Examples of the fluorine-containing alkylene group include -CF₂-, -CH₂CF₂-, -CF₂CF₂-, -CF₂CH₂-, -CF₂CF₂CH₂-, -CF(CF₃)-, -CF(CF₃)CF₂-, and -CF(CF₃)CH₂-. The fluorine-containing alkylene group is preferably a perfluoroalkylene group.

The number of carbon atoms of the fluorine-containing alkylene group containing an ether bond is preferably 3 or more. The number of carbon atoms is preferably 60 or less, more preferably 30 or less, still more preferably 12 or less.

The fluorine-containing alkylene group containing an ether bond is also preferably a divalent group represented by the following formula: 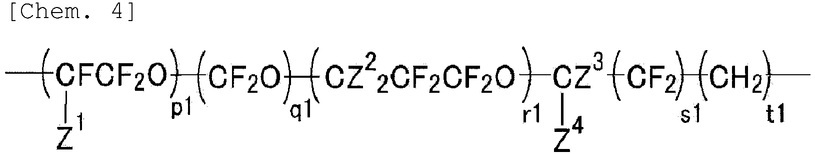 wherein Z¹ is F or CF₃; Z² and Z³ are each independently H or F; Z⁴ is H, F, or CF₃; p1 + q1 + r1 is an integer of 0 to 10; s1 is 0 or 1; t1 is an integer of 0 to 5; and when both Z³ and Z⁴ are H, p1 + q1 + r1 + s1 is not 0.

Specific examples of the fluorine-containing alkylene group containing an ether bond include -CF(CF₃)CF₂-O-CF(CF₃)-, -(CF(CF₃)CF₂-O)ₙ-CF(CF₃)- (wherein n is an integer of 1 to 10), -CF(CF₃)CF₂-O-CF(CF₃)CH₂-, -(CF(CF₃)CF₂-O)ₙ-CF(CF₃)CH₂- (wherein n is an integer of 1 to 10), - CH₂CF₂CF₂O-CH₂CF₂CH₂-, -CF₂CF₂CF₂O-CF₂CF₂-, -CF₂CF₂CF₂O-CF₂CF₂CH₂-, -CF₂CF₂O-CF₂-, -CF₂CF₂O-CF₂CH₂-, and -CF(CF₃)CH₂-.

The fluorine-containing alkylene group containing an ether bond is preferably a perfluoroalkylene group.

In the formula (5), Y³ is -COOM, -SO₃M, or -OSO₃M (wherein M is H, a metal atom, NR⁷₄, imidazolium optionally containing a substituent, pyridinium optionally containing a substituent, or phosphonium optionally containing a substituent; and R⁷s are each H or an organic group and are the same as or different from each other, and any two of these may bond to each other to form a ring).

R⁷ is preferably H or a C1-C10 organic group, more preferably H or a C1-C4 organic group, still more preferably H or a C1-C4 alkyl group.

Examples of the metal atom include alkali metals (Group 1) and alkaline earth metals (Group 2), and preferred is Na, K, or Li.

M is preferably -H, a metal atom, or -NR⁷₄, more preferably -H, an alkali metal (Group 1), an alkaline earth metal (Group 2), or -NR⁷₄, still more preferably -H, -Na, - K, -Li, or -NH₄, further preferably -Na, -K, or -NH₄, particularly preferably -Na or -NH₄, most preferably -NH₄.

Y³ is preferably -COOM or -SO₃M, more preferably - COOM.

A preferred example of the monomer represented by the formula (5) is a fluoroallyl ether compound represented by the following formula (5a):

CX^{h}₂=CFCF₂-O-(CF(CF₃)CF₂O)ₙ₅-CF(CF₃)-Y³ (5a)

wherein X^{h}s are the same and are F or H; n5 is an integer of 0 or 1 to 10; and Y³ is as defined above.

To form TFE-based polymer particles having a small primary particle size, n5 in the formula (5a) is preferably an integer of 0 or 1 to 5, more preferably 0, 1, or 2, still more preferably 0 or 1. In order to achieve appropriate water solubility and surface activity, Y³ is preferably -COOM. In order to reduce remaining as impurities and to improve the heat resistance of the resulting composition and the expanded article containing the composition, M is preferably H or NH₄.

The monomer represented by the formula (5) is preferably a monomer (5b) represented by the following formula (5b):

CH₂=CF(-CF₂-O-Rf-Y³) (5b)

wherein Rf and Y³ are as defined above.

A specific example of the monomer represented by the formula (5b) is a monomer represented by the formula: 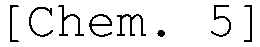 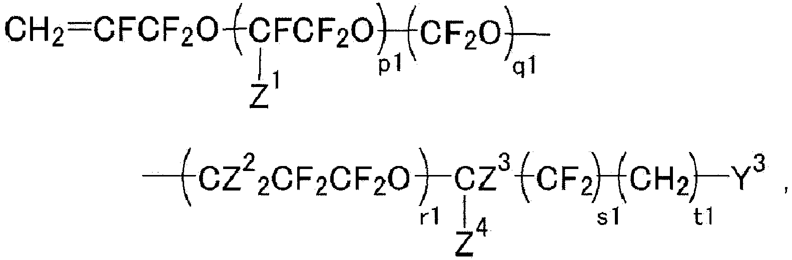 wherein Z¹ is F or CF₃; Z² and Z³ are each H or F; Z⁴ is H, F, or CF₃; p1 + q1 + r1 is an integer of 0 to 10; s1 is 0 or 1; t1 is an integer of 0 to 5; Y³ is as defined above; and when both Z³ and Z⁴ are H, p1 + q1 + r1 + s1 is not 0. More specific preferred examples thereof include the following.

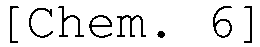

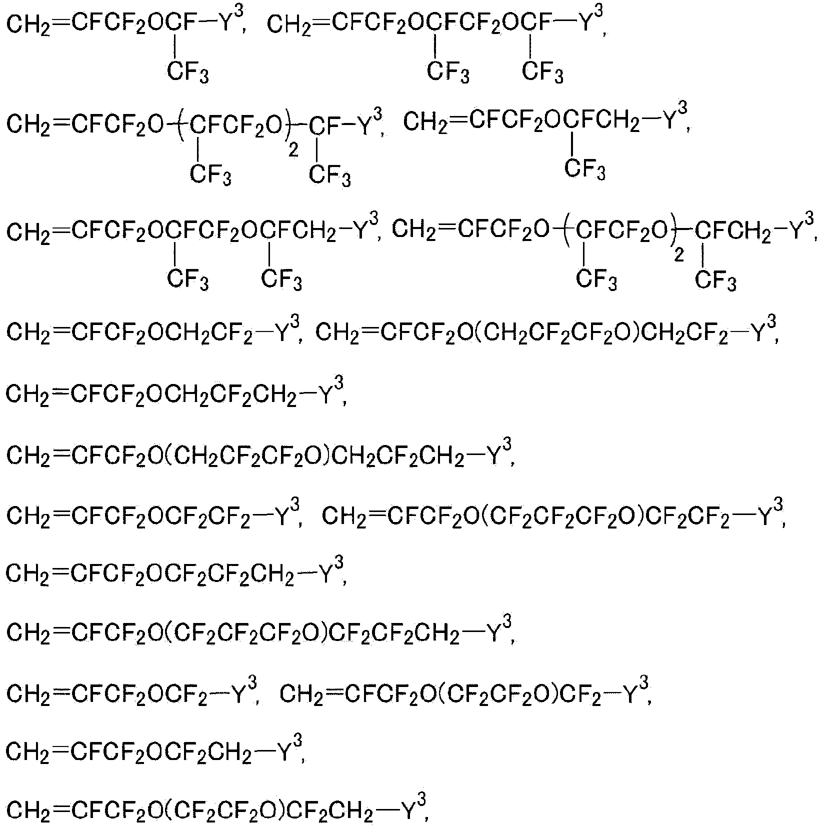

Among these, 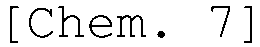 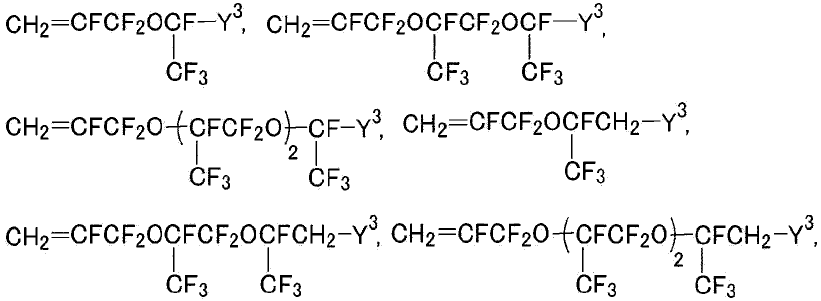 are preferred.

The monomer represented by the formula (5b) is preferably a monomer of the formula (5b) in which Y³ is - COOM. In particular, at least one selected from the group consisting of CH₂=CFCF₂OCF(CF₃)COOM and CH₂=CFCF₂OCF(CF₃)CF₂OCF(CF₃)COOM (wherein M is as defined above) is preferred, and CH₂=CFCF₂OCF(CF₃)COOM is more preferred.

The monomer represented by the formula (5) is preferably a monomer (5c) represented by the following formula (5c):

CX²₂=CFCF₂-O-(CF(CF₃)CF₂O)ₙ₅-CF(CF₃)-Y³ (5c)

wherein X²s are the same as each other and are each F or H; n5 is an integer of 0 or 1 to 10; and Y³ is as defined above.

In terms of stability of the resulting aqueous dispersion, n5 in the formula (5c) is preferably an integer of 0 or 1 to 5, more preferably 0, 1, or 2, still more preferably 0 or 1. In order to achieve appropriate water solubility and the stability of the aqueous dispersion, Y³ is preferably -COOM¹. In order to reduce remaining as impurities and to improve the heat resistance of the resulting molded article, M¹ is preferably H or NH₄.

Examples of a perfluorovinyl alkyl compound represented by the formula (5c) include CH₂=CFCF₂OCF(CF₃)COOM¹ and CH₂=CFCF₂OCF(CF₃)CF₂OCF(CF₃)COOM¹, wherein M¹ is as defined above.

Examples of the monomer represented by the formula (5) also include a monomer represented by the following formula (5d) and a monomer represented by the following formula (5e):

CF₂=CFCF₂-O-Rf-Y³ (5d)

CF₂=CF-Rf-Y³ (5e)

wherein Rf and Y³ are as defined above.

More specifically, 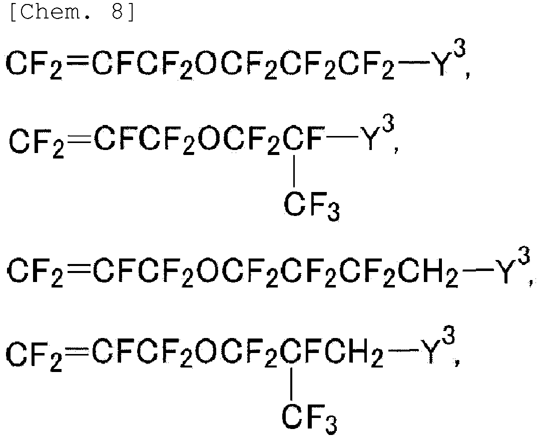 can be mentioned.

In the formula (6), X is -H or -F. Both Xs may be -F or at least one of these may be -H. For example, one of these may be -F while the other may be -H, or both may be - H.

In the formula (6), Y is -H, -F, an alkyl group, or a fluorine-containing alkyl group.

The alkyl group is an alkyl group containing no fluorine atom and the number of carbon atoms thereof is 1 or more. The number of carbon atoms of the alkyl group is preferably 6 or less, more preferably 4 or less, still more preferably 3 or less.

The fluorine-containing alkyl group is an alkyl group containing at least one fluorine atom, and the number of carbon atoms thereof is 1 or more. The number of carbon atoms of the fluorine-containing alkyl group is preferably 6 or less, more preferably 4 or less, still more preferably 3 or less.

Y is preferably -H, -F, or -CF₃, more preferably -F.

In the formula (6), at least one of X or Y preferably contains a fluorine atom. For example, X may be -H while Y and Z may be -F.

In the formula (6), Rf is a C1-C40 fluorine-containing alkylene group or a C2-C100 fluorine-containing alkylene group containing an ether bond.

The number of carbon atoms of the fluorine-containing alkylene group is preferably 2 or more. The number of carbon atoms is preferably 30 or less, more preferably 20 or less, still more preferably 10 or less. Examples of the fluorine-containing alkylene group include -CF₂-, -CH₂CF₂-, -CF₂CF₂-, -CF₂CH₂-, -CF₂CF₂CH₂-, -CF(CF₃)-, -CF(CF₃)CF₂-, and -CF(CF₃)CH₂-. The fluorine-containing alkylene group is preferably a perfluoroalkylene group.

The monomer represented by the formula (6) preferably includes at least one selected from the group consisting of monomers represented by the following formulas (6a), (6b), (6c), and (6d):

CF₂=CF-(CF₂)ₙ₁-Y³ (6a)

wherein n1 is an integer of 1 to 10; Y³ is -SO₃M¹ or -COOM¹; and M¹ is H, a metal atom, NR⁷₄, imidazolium optionally containing a substituent, pyridinium optionally containing a substituent, or phosphonium optionally containing a substituent; and R⁷ is H or an organic group;

CF₂=CF-(CF₂C(CF₃)F)ₙ₂-Y³ (6b)

wherein n2 is an integer of 1 to 5; and Y³ is as defined above;

CF₂=CF-O-(CFX¹)ₙ₃-Y³ (6c)

wherein X¹ is F or CF₃; n3 is an integer of 1 to 10; and Y³ is as defined above; and

CF₂=CF-O-(CF₂CFX¹O)ₙ₄-CF₂CF₂-Y³ (6d)

wherein n4 is an integer of 1 to 10; and Y³ and X¹ are as defined above.

In the formula (6a), n1 is preferably an integer of 5 or less, more preferably an integer of 2 or less. In order to achieve appropriate water solubility and the stability of the aqueous dispersion, Y³ is preferably -COOM¹. In order to reduce remaining as impurities and to improve the heat resistance of the resulting molded article, M¹ is preferably H or NH₄.

An example of a perfluorovinyl alkyl compound represented by the formula (6a) is CF₂=CFCF₂COOM¹ wherein M¹ is as defined above.

In terms of stability of the resulting aqueous dispersion, n2 in the formula (6b) is preferably an integer of 3 or less. In order to achieve appropriate water solubility and the stability of the aqueous dispersion, Y³ is preferably -COOM¹. In order to reduce remaining as impurities and to improve the heat resistance of the resulting molded article, M¹ is preferably H or NH₄.

In terms of water solubility, n3 in the formula (6c) is preferably an integer of 5 or less. In order to achieve appropriate water solubility and the stability of the aqueous dispersion, Y³ is preferably -COOM¹. In order to achieve better dispersion stability, M¹ is preferably H or NH₄.

In terms of the stability of the aqueous dispersion, X¹ in the formula (6d) is preferably -CF₃. In terms of water solubility, n4 is preferably an integer of 5 or less. In order to achieve appropriate water solubility and the stability of the aqueous dispersion, Y³ is preferably - COOM¹. M1 is preferably H or NH₄.

An example of a perfluorovinyl ether compound represented by the formula (6d) is CF₂=CFOCF₂CF(CF₃)OCF₂CF₂COOM¹, wherein M¹ is H, NH₄, or an alkali metal.

In the formula (7), Rf is preferably a C1-C40 fluorine-containing alkylene group. In the formula (7), at least one of X or Y preferably contains a fluorine atom.

The monomer represented by the formula (7) preferably includes at least one selected from the group consisting of a monomer represented by the formula (7a):

CF₂=CF-(CF₂)ₙ₁-Y³ (7a)

wherein n1 is an integer of 1 to 10 and Y³ is as defined above, and a monomer represented by the formula (7b)

CF₂=CF-(CF₂C(CF₃)F)ₙ₂-Y³ (7b)

wherein n2 is an integer of 1 to 5 and Y³ is as defined above.

Y³ is preferably -SO₃M¹ or -COOM¹, M¹ is preferably H, a metal atom, NR⁷₄, imidazolium optionally containing a substituent, pyridinium optionally containing a substituent, or phosphonium optionally containing a substituent; and R⁷ is H or an organic group.

In the formula (7a), n1 is preferably an integer of 5 or less, more preferably an integer of 2 or less. In order to achieve appropriate water solubility and the stability of the aqueous dispersion, Y³ is preferably -COOM¹. In order to reduce remaining as impurities and to improve the heat resistance of the resulting molded article, M¹ is preferably H or NH₄.

An example of a perfluorovinyl alkyl compound represented by the formula (7a) is CF₂=CFCF₂COOM¹ wherein M¹ is as defined above.

In terms of stability of the resulting aqueous dispersion, n2 in the formula (7b) is preferably an integer of 3 or less. In order to achieve appropriate water solubility and the stability of the aqueous dispersion, Y³ is preferably -COOM¹. In order to reduce remaining as impurities and to improve the heat resistance of the resulting molded article, M¹ is preferably H or NH₄.

The modifying monomer (A) preferably includes at least one selected from the group consisting of compounds represented by the formula (5c), the formula (6a), the formula (6b), the formula (6c), and the formula (6d), more preferably includes a compound represented by the formula (5c).

In order to improve expandability, binding force, and the flexibility of the resulting mixture sheet, the modifying monomer preferably includes at least one selected from the group consisting of CTFE, HFP, perfluoro(methyl vinyl ether) (PMVE), perfluoro(propyl vinyl ether) (PPVE), PFBE, VDF, and a monomer containing a polar group, more preferably includes at least one selected from the group consisting of CTFE, HFP, PMVE, and PPVE, still more preferably includes at least one selected from the group consisting of CTFE, HFP, and PPVE, further preferably includes at least one selected from the group consisting of PPVE and HFP, particularly preferably includes HFP.

In order to improve dispersibility, handleability, and adhesion to a current collector, the modifying monomer is also preferably a monomer containing a polar group, more preferably includes at least one selected from the group consisting of a non-fluorinated monomer containing an acid anhydride residue and the modifying monomer (A), still more preferably includes at least one selected from the group consisting of a cyclic non-fluorinated monomer containing an acid anhydride residue and the compound represented by the formula (5c), further preferably includes the compound represented by the formula (5c).

The TFE-based polymer may have a core-shell structure. An example of the TFE-based polymer having a core-shell structure is a modified PTFE including a core of high-molecular-weight PTFE and a shell of lower-molecular-weight PTFE or modified PTFE in a particle. Examples of this modified PTFE include PTFEs disclosed in JP 2005-527652 T.

The TFE-based polymer preferably is non melt-processible.

The term "non melt-processible" herein means that the melt flow rate (MFR) is lower than 0.25 g/10 min, preferably less than 0.10 g/10 min, more preferably 0.05 g/10 min or less, still more preferably 0.01 g/10 min or less.

The MFR is a value obtained in conformity with ASTM D1238 using a melt indexer, as the mass (g/10 min) of a polymer flowing out of a nozzle (inner diameter: 2.095 mm, length: 8 mm) per 10 minutes at 372°C and a load of 5 kg.

The amount of the TFE-based polymer in the TFE-based polymer composition of the disclosure may be 95.0% by mass or more, preferably 98.0% by mass or more, more preferably 99.0% by mass or more, still more preferably 99.5% by mass or more, particularly preferably 99.9% by mass or more, most preferably 99.95% by mass or more, based on the TFE-based polymer composition.

The TFE-based polymer composition of the disclosure may contain a fluorine-containing compound containing a hydrophilic group.

The hydrophilic group may include, for example, at least one selected from the group consisting of -SO₃M^{a}, - SO₂M^{a}, -OSO₂M^{a}, -PO₃M^{a}, -COOM^{a}, -OCOM^{a}, and -OM^{a} (where M^{a} is -H, a metal atom, -NR¹₄, imidazolium optionally containing a substituent, pyridinium optionally containing a substituent, or phosphonium optionally containing a substituent; and R¹ is H or an organic group).

The hydrophilic group may be an ionic group, and is preferably an anionic group.

The fluorine-containing compound containing a hydrophilic group may be, for example, a fluorine-containing compound containing a hydrophilic group with a molecular weight of 1000 or lower, that is, a fluorine-containing compound containing a hydrophilic group with a molecular weight of 1000 g/mol or lower. The molecular weight of the fluorine-containing compound is preferably 800 or lower, more preferably 500 or lower.

Polymerized particles obtained by polymerization performed in the presence of a fluorine-containing surfactant usually contain the fluorine-containing surfactant in addition to the TFE-based polymer. The fluorine-containing surfactant herein is used in polymerization.

The fluorine-containing compound having a molecular weight of 1000 or lower may also be a compound that is not added in polymerization, for example, a compound that is produced as a by-product in polymerization.

When containing an anionic moiety and a cationic moiety, the fluorine-containing compound having a molecular weight of 1000 or lower refers to a fluorine-containing compound in which the anionic moiety has a molecular weight of 1000 or lower. The fluorine-containing compound having a molecular weight of 1000 or lower does not include the TFE-based polymer.

The fluorine-containing compound containing a hydrophilic group with a molecular weight of 1000 or lower may be, for example, a fluorine-containing surfactant in which the anionic moiety has a molecular weight of 1000 or lower (fluorine-containing anionic surfactant). The "anionic moiety" means a portion excluding the cation in the fluorine-containing surfactant. For example, in the case of F(CF₂)ₙ₁COOM, the anionic moiety refers to the portion "F(CF₂)ₙ₁COO".

Examples of the fluorine-containing anionic surfactant include a compound represented by the formula (N⁰):

Xⁿ⁰-Rfⁿ⁰-Y⁰ (N⁰)

wherein Xⁿ⁰ is H, Cl, or F; Rfⁿ⁰ is a linear, branched, or cyclic alkylene group containing 3 to 20 carbon atoms in which any or all of the H atoms are replaced by F atoms; the alkylene group optionally containing one or more ether bonds in which any of the H atoms are replaced by Cl atoms; and Y⁰ is an anionic group.

The anionic group for Y⁰ may be -COOM, -SO₂M, or - SO₃M, and may be -COOM or -SO₃M. M is H, a metal atom, NR⁷₄, imidazolium optionally containing a substituent, pyridinium optionally containing a substituent, or phosphonium an optionally containing a substituent. R7 is H or an organic group. Examples of the metal atom include alkali metals (Group 1) and alkaline earth metals (Group 2), such as Na, K, and Li. R7 may be H or a C1-C10 organic group, may be H or a C1-C4 organic group, and may be H or a C1-C4 alkyl group. M may be H, a metal atom, or NR⁷₄, or may be H, an alkali metal (Group 1), an alkaline earth metal (Group 2), or NR⁷₄, or may be H, Na, K, Li, or NH₄. Rfⁿ⁰ may be a group in which 50% or more of the H atoms are replaced by fluorine atoms.

Examples of the compound represented by the formula (N⁰) include
compounds represented by the formula (N¹):

   Xⁿ⁰-(CF₂)ₘ₁-Y⁰ (N¹)

   wherein Xⁿ⁰ is H, Cl, or F; m1 is an integer of 9 to 15; and Y⁰ is as defined above;
compounds represented by the formula (N²):

   Rfⁿ¹-O-(CF(CF₃)CF₂O)ₘ₂CFXⁿ¹-Y⁰ (N²)

   wherein Rfⁿ¹ is a C1-C5 perfluoroalkyl group; m2 is an integer of 0 to 3; Xⁿ¹ is F or CF₃; and Y⁰ is as defined above;
compounds represented by the following formula (N³):

   Rfⁿ²(CH₂)ₘ₃-(Rfⁿ³)_{q}-Y⁰ (N³)

   wherein Rfⁿ² is a C1-C13 partially or completely fluorinated alkyl group optionally containing an ether bond; m3 is an integer of 1 to 3; Rfⁿ³ is a C1-C3 linear or branched perfluoroalkylene group; q is 0 or 1; and Y⁰ is as defined above;
compounds represented by the formula (N⁴):

   Rfⁿ⁴-O-(CYⁿ¹Yⁿ²)ₚCF₂-Y⁰ (N⁴)

   wherein Rfⁿ⁴ is a C1-C12 linear or branched, partially or completely fluorinated alkyl group optionally containing an ether bond and/or a chlorine atom; Yⁿ¹ and Yⁿ² are the same as or different from each other and are each H or F; p is 0 or 1; and Y⁰ is as defined above; and
compounds represented by the formula (N⁵): 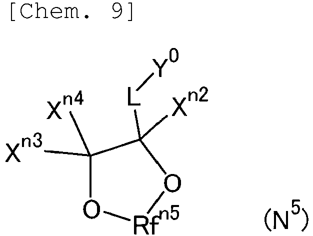 wherein Xⁿ², Xⁿ³, and Xⁿ⁴ are the same as or different from each other and are each H, F, or a C1-C6 linear or branched, partially or completely fluorinated alkyl group optionally containing an ether bond; Rfⁿ⁵ is a C1-C3 linear or branched, partially or completely fluorinated alkylene group optionally containing an ether bond; L is a linking group; and Y⁰ is as defined above, where the total number of carbon atoms of Xⁿ², Xⁿ³, Xⁿ⁴, and Rfⁿ⁵ is 18 or less.

Specific examples of the compound represented by the formula (N⁰) include a perfluorocarboxylic acid (I) represented by the formula (I), an ω-H perfluorocarboxylic acid (II) represented by the formula (II), a perfluoroether carboxylic acid (III) represented by the formula (III), a perfluoroalkyl alkylene carboxylic acid (IV) represented by the formula (IV), a perfluoroalkoxyfluorocarboxylic acid (V) represented by the formula (V), a perfluoroalkyl sulfonic acid (VI) represented by the formula (VI), an ω-H perfluorosulfonic acid (VII) represented by the formula (VII), a perfluoroalkyl alkylene sulfonic acid (VIII) represented by the formula (VIII), an alkyl alkylene carboxylic acid (IX) represented by the formula (IX), a fluorocarboxylic acid (X) represented by the formula (X), an alkoxyfluorosulfonic acid (XI) represented by the formula (XI), a compound (XII) represented by the formula (XII), and a compound (XIII) represented by the formula (XIII).

The perfluorocarboxylic acid (I) is represented by the formula (I):

F(CF₂)ₙ₁COOM (I)

wherein n1 is an integer of 3 to 14; M is H, a metal atom, NR⁷₄, imidazolium optionally containing a substituent, pyridinium optionally containing a substituent, or phosphonium optionally containing a substituent; and R⁷ is H or an organic group.

The ω-H perfluorocarboxylic acid (II) is represented by the formula (II):

H(CF₂)ₙ₂COOM (II)

wherein n2 is an integer of 4 to 15; and M is as defined above.

The perfluoroether carboxylic acid (III) is represented by the formula (III):

Rf¹-O-(CF(CF₃)CF₂O)ₙ₃CF(CF₃)COOM (III)

wherein Rf¹ is a C1-C5 perfluoroalkyl group; n3 is an integer of 0 to 3; and M is as defined above.

The perfluoroalkyl alkylene carboxylic acid (IV) is represented by the formula (IV):

Rf²(CH₂)ₙ₄Rf³COOM (IV)

wherein Rf² is a C1-C5 perfluoroalkyl group; Rf³ is a C1-C3 linear or branched perfluoroalkylene group; n4 is an integer of 1 to 3; and M is as defined above.

The alkoxyfluorocarboxylic acid (V) is represented by the formula (V):

Rf⁴-O-CY¹Y²CF₂-COOM (V)

wherein Rf⁴ is a C1-C12 linear or branched, partially or completely fluorinated alkyl group optionally containing an ether bond and/or a chlorine atom; Y¹ and Y² are the same as or different from each other and are each H or F; and M is as defined above.

The perfluoroalkylsulfonic acid (VI) is represented by the formula (VI):

F(CF₂)ₙ₅SO₃M (VI)

wherein n5 is an integer of 3 to 14; and M is as defined above.

The ω-H perfluorosulfonic acid (VII) is represented by the formula (VII):

H(CF₂)ₙ₆SO₃M (VII)

wherein n6 is an integer of 4 to 14; and M is as defined above.

The perfluoroalkyl alkylene sulfonic acid (VIII) is represented by the formula (VIII):

Rf⁵(CH₂)ₙ₇SO₃M (VIII)

wherein Rf⁵ is a C1-C13 perfluoroalkyl group; n7 is an integer of 1 to 3; and M is as defined above.

The alkyl alkylene carboxylic acid (IX) is represented by the formula (IX):

Rf⁶(CH₂)ₙ₈COOM (IX)

wherein Rf⁶ is a C1-C13 linear or branched, partially or completely fluorinated alkyl group optionally containing an ether bond; n8 is an integer of 1 to 3; and M is as defined above.

The fluorocarboxylic acid (X) is represented by the formula (X):

Rf⁷-O-Rf⁸-O-CF₂-COOM (X)

wherein Rf⁷ is a C1-C6 linear or branched, partially or completely fluorinated alkyl group optionally containing an ether bond and/or a chlorine atom; Rf⁸ is a C1-C6 linear or branched, partially or completely fluorinated alkyl group; and M is as defined above.

The alkoxyfluorosulfonic acid (XI) is represented by the formula (XI):

Rf⁹-O-CY¹Y²CF₂-SO₃M (XI)

wherein Rf⁹ is a C1-C12 linear or branched, partially or completely fluorinated alkyl group optionally containing an ether bond and optionally containing a chlorine atom; Y¹ and Y² are the same as or different from each other and are each H or F; and M is as defined above.

The compound (XII) is represented by the formula (XII): 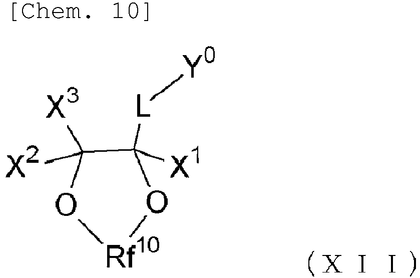 wherein X¹, X², and X³ are the same as or different from each other and are each H, F, or a C1-C6 linear or branched, partially or completely fluorinated alkyl group optionally containing an ether bond; Rf¹⁰ is a C1-C3 perfluoroalkylene group; L is a linking group; and Y⁰ is an anionic group. Y0 may be -COOM, -SO₂M, or -SO₃M, or may be -SO₃M or COOM, wherein M is as defined above. L may be a single bond or a C1-C10 partially or completely fluorinated alkylene group optionally containing an ether bond, for example.

The compound (XIII) is represented by the following formula (XIII):

Rf¹¹-O-(CF₂CF(CF₃)O)ₙ₉(CF₂O)ₙ₁₀CF₂COOM (XIII)

wherein Rf¹¹ is a C1-C5 fluoroalkyl group containing chlorine; n9 is an integer of 0 to 3; n10 is an integer of 0 to 3; and M is as defined above. The compound (XIII) may be CF₂ClO(CF₂CF(CF₃)O)ₙ₉(CF₂O)ₙ₁₀CF₂COONH₄, which is a mixture having an average molecular weight of 750, wherein n9 and n10 are as defined above.

As described above, examples of the fluorine-containing anionic surfactant include carboxylic acid surfactants and sulfonic acid surfactants.

The fluorine-containing surfactant may be a single fluorine-containing surfactant or may be a mixture of two or more fluorine-containing surfactants.

Examples of the fluorine-containing surfactant include compounds represented by the following formulas. The fluorine-containing surfactant may be a mixture of these compounds:

F(CF₂)₇COOM,

F(CF₂)₅COOM,

H(CF₂)₆COOM,

H(CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF(CF₃)CF₂OCF₂COOM,

CF₂ClCF(CF₃)OCF₂CF(CF₃)OCF₂COOM,

and 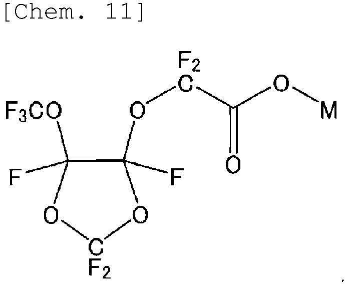 wherein M is H, a metal atom, NR⁷₄, imidazolium optionally containing a substituent, pyridinium optionally containing a substituent, or phosphonium optionally containing a substituent; and R⁷ is H or an organic group.

In each of the above formulas, M may be H, a metal atom, or NR⁷₄, or may be H, an alkali metal (Group 1), an alkaline earth metal (Group 2), or NR⁷₄, or may be H, Na, K, Li, or NH₄.

R⁷ may be H or a C1-C10 organic group, or may be H or a C1-C4 organic group, or may be H or a C1-C4 alkyl group.

The amount of the fluorine-containing anionic surfactant based on the TFE-based polymer composition is preferably 25 ppb by mass or less, more preferably 20 ppb by mass or less, still more preferably 15 ppb by mass or less, further preferably 10 ppb by mass or less, further preferably less than 10 ppb by mass, further preferably 1 ppb by mass or less, further preferably less than 1 ppb by mass, particularly preferably below the lower limit of quantitation. The lower limit is not limited, and may be an amount below the lower limit of quantitation.

The amount of the fluorine-containing anionic surfactant is determined by the following method.

To a 1-g portion of a sample weighed out is added 10 g (12.6 mL) of methanol, followed by ultrasonication for 60 minutes, whereby an extract is obtained. The resulting extract is appropriately concentrated by nitrogen purge, and the fluorine-containing compound in the concentrated extract is subjected to a LC/MS/MS assay. Based on the molecular weight information extracted from the LC/MS spectrum obtained, consistency with the structural formulas of the candidate fluorine-containing compounds is examined. Aqueous solutions having five or more different levels of standard substance concentrations are prepared, and LC/MS analysis is performed on the aqueous solutions containing varied amounts of the standard substance. The relation between the amount and the area relative to the amount is plotted, and a calibration curve is drawn. Based on the resulting calibration curve, the area of the fluorine-containing compound in the extract in the LC/MS chromatogram is converted to the amount of the fluorine-containing compound.

The lower limit of quantitation in this measurement method is 10 ppb by mass.

The TFE-based polymer composition containing a fluorine-containing anionic surfactant can be obtained by polymerization using a fluorine-containing anionic surfactant, for example.

The fluorine-containing compound containing a hydrophilic group with a molecular weight of 1000 or lower may also be, for example, a compound represented by the following formula (1) (hereafter, also referred to as compound (1)),

formula (1): (H-(CF₂)ₘ₋₁-COO)ₚM¹

wherein m is 4 to 20; M¹ is H, a metal atom, NR⁵₄ where R⁵s are optionally the same as or different from each other and each represent H or a C1-C10 organic group, imidazolium optionally containing a substituent, pyridinium optionally containing a substituent, or phosphonium optionally containing a substituent; and p is 1 or 2.

The metal atom for M¹ may be a monovalent or divalent metal atom, such as an alkali metal (Group 1) or an alkaline earth metal (Group 2). Specific examples thereof include Na, K, and Li.

The four R⁵s may be the same as or different from each other. R5 is preferably H or a C1-C10 organic group, more preferably H or a C1-C4 organic group.

In the formula (1), m is preferably 6 or more, more preferably 8 or more, still more preferably 11 or more, further preferably 13 or more, particularly preferably 15 or more, while it is preferably 18 or less, more preferably 16 or less.

The TFE-based polymer composition of the disclosure may contain one or more compounds (1), two or more compounds (1), or three or more compounds (1).

The amount of the compound (1) (if two or more compounds (1) are contained, the amount of each compound) relative to the TFE-based polymer may be 10 ppm by mass or less, preferably 5000 ppb by mass or less, more preferably 1000 ppb by mass or less, still more preferably 500 ppb by mass or less, further preferably 100 ppb by mass or less, further preferably 50 ppb by mass or less, further preferably 25 ppb by mass or less, particularly preferably 10 ppb by mass or less.

The lower limit is not limited, and may be 0.1 ppb by mass or 1 ppb by mass.

The fluorine-containing compound containing a hydrophilic group with a molecular weight of 1000 or lower may also be, for example, a compound represented by the following formula (2) (hereafter, also referred to as compound (2)),

formula (2): (H-(CF₂)ₙ-SO₃)_{q}M²

wherein n is 4 to 20; M² is H, a metal atom, NR⁵₄ where R⁵ is as defined above, imidazolium optionally containing a substituent, pyridinium optionally containing a substituent, or phosphonium optionally containing a substituent; and q is 1 or 2.

The metal atom for M² may be a monovalent or divalent metal atom, such as an alkali metal (Group 1) or an alkaline earth metal (Group 2). Specific examples thereof include Na, K, and Li.

The four R⁵s may be the same as or different from each other. R5 is preferably H or a C1-C10 organic group, more preferably H or a C1-C4 organic group.

In the formula (2), n is preferably 6 or more, more preferably 8 or more, still more preferably 11 or more, further preferably 13 or more, particularly preferably 15 or more, while it is preferably 18 or less, more preferably 16 or less.

The TFE-based polymer composition of the disclosure may contain one or more compounds (2), two or more compounds (2), or three or more compounds (2).

The amount of the compound (2) (if two or more compounds (2) are contained, the amount of each compound) relative to the TFE-based polymer may be 10 ppm by mass or less, preferably 5000 ppb by mass or less, more preferably 1000 ppb by mass or less, still more preferably 500 ppb by mass or less, further preferably 100 ppb by mass or less, further preferably 50 ppb by mass or less, further preferably 25 ppb by mass or less, further preferably 10 ppb by mass or less, further preferably 1 ppb by mass or less, further preferably less than 1 ppb by mass, further preferably below the lower limit of quantitation. The lower limit is not limited, and may be an amount below the lower limit of quantitation.

The TFE-based polymer composition containing the compound (1) and/or the compound (2) can be obtained using a hydrocarbon surfactant. The TFE-based polymer composition of the disclosure may contain a hydrocarbon surfactant in addition to the TFE-based polymer and the compound (1) and/or the compound (2). The amount of the hydrocarbon surfactant in the TFE-based polymer composition is not limited, and is typically 100 ppm by mass to 10% by mass.

In the hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The TFE-based polymer composition of the disclosure is preferably substantially free from a compound represented by the following formula (3) (hereafter, also referred to as compound (3)):

formula (3): (H-(CF₂)₈-SO₃)_{q}M²

wherein M² is H, a metal atom, NR⁵₄ where R⁵s may be the same as or different from each other and each represent H or a C1-C10 organic group (preferably, a fluorine-free C1-C10 organic group), imidazolium optionally containing a substituent, pyridinium optionally containing a substituent, or phosphonium optionally containing a substituent; and q is 1 or 2.

The phrase "substantially free from the compound (3)" means that the amount of the compound (3) is 25 ppb by mass or less relative to the TFE-based polymer. The amount of the compound (3) is preferably 20 ppb by mass or less, more preferably 15 ppb by mass or less, still more preferably 10 ppb by mass or less, relative to the TFE-based polymer. The lower limit is not limited, and may be 0 ppb by mass, 0.1 ppb by mass, or 1 ppb by mass.

The amounts of the compounds (1), (2), and (3) are values measured by liquid chromatography mass spectrometry as described later in EXAMPLES.

The fluorine-containing compound containing a hydrophilic group may be, for example, a fluorine-containing compound containing a hydrophilic group with a molecular weight of higher than 1000, that is, a fluorine-containing compound containing a hydrophilic group with a molecular weight of higher than 1000 g/mol.

The fluorine-containing compound containing a hydrophilic group with a molecular weight of higher than 10000 may be, for example, a macromolecular compound containing an ionic group.

The TFE-based polymer is not encompassed by the macromolecular compound.

The ionic group is preferably an anionic group, and examples thereof include a sulfate group, -COOM^{a} (carboxylate group), a phosphate group, -PO₃M^{a} (phosphonate group), -SO₃M^{a} (sulfonate group), -SO₂M^{a} (sulfinate group), and -C(CF₃)₂OM^{a}, wherein M^{a} is -H, a metal atom, -NR²₄, imidazolium optionally containing a substituent, pyridinium optionally containing a substituent, or phosphonium optionally containing a substituent; and R² is H or an organic group.

Among these, preferred is at least one selected from the group consisting of -SO₃M^{a}, -SO₂M^{a}, -PO₃M^{a}, and -COOM^{a}.

The ionic group is contained in an amount of preferably 0.80 meq/g or more, more preferably 1.20 meq/g or more, still more preferably 1.75 meq/g or more, further preferably 2.00 meq/g or more, particularly preferably 2.50 meq/g or more relative to the macromolecular compound. The amount may be 10.0 meq/g or less, or may be 8.00 meq/g or less, or may be 5.00 meq/g or less.

The amount of the ionic group can be determined by calculation from the composition of the macromolecular compound.

The macromolecular compound preferably contains a fluorine atom and the proportion of hydrogen atoms replaced by fluorine atoms among those bonded to any carbon atom of the macromolecular compound is preferably 50% or more. The "proportion of hydrogen atoms replaced by fluorine atoms among those bonded to any carbon atom of the macromolecular compound" can be determined as the proportion of the number of fluorine atoms to the total number of the hydrogen atoms bonded to any carbon atom and the halogen atoms (including fluorine atoms) bonded to any carbon atom. The proportion of hydrogen atoms replaced by fluorine atoms among those bonded to any carbon atom in the macromolecular compound is more preferably 70% or higher, still more preferably 80% or higher, further preferably 90% or higher, particularly preferably 95% or higher, most preferably 100%, but not limited thereto.

The macromolecular compound has an ion exchange ratio (IXR) of preferably 53 or lower. The IXR is defined as the number of carbon atoms in the main chain of the macromolecular compound relative to the number of the ionic group. A precursor group (e.g., -SO₂F) to be ionic as a result of hydrolysis is not regarded as an ionic group in the context of IXR determination.

The IXR is preferably 0.5 or higher, more preferably 1 or higher, still more preferably 3 or higher, further preferably 4 or higher, further preferably 5 or higher. The IXR is also preferably 43 or lower, more preferably 33 or lower, still more preferably 23 or lower.

The ionic groups in the macromolecular compound are typically distributed along the polymer main chain. Preferably, the macromolecular compound also has repeated side chains bonded to the polymer main chain and these side chains have an ionic group.

The macromolecular compound is preferably a water-soluble macromolecular compound. The "water-soluble" means an ability to easily dissolve or disperse in an aqueous medium. For a macromolecular compound having water solubility, dynamic light scattering (DLS), for example, cannot measure its particle size or can indicate a particle size of 5 nm or less. In contrast, for a macromolecular compound having water insolubility, dynamic light scattering (DLS), for example, can measure a particle size of more than 5 nm.

The macromolecular compound has a number average molecular weight of preferably higher than 0.1 × 10⁴, more preferably 0.15 × 10⁴ or higher, still more preferably 0.2 × 10⁴ or higher, further preferably 0.3 × 10⁴ or higher, further more preferably 0.5 × 10⁴ or higher, still further preferably 1.0 × 10⁴ or higher, particularly preferably 2.0 × 10⁴ or higher, most preferably 3.0 × 10⁴ or higher. The number average molecular weight is also preferably 75.0 × 10⁴ or lower, more preferably 50.0 × 10⁴ or lower, still more preferably 40.0 × 10⁴ or lower, further preferably 30.0 × 10⁴ or lower, particularly preferably 20.0 × 10⁴ or lower.

The macromolecular compound has a weight average molecular weight of preferably higher than 0.1 × 10⁴, more preferably 0.2 × 10⁴ or higher, still more preferably 0.4 × 10⁴ or higher, further preferably 0.6 × 10⁴ or higher, further preferably 1.0 × 10⁴ or higher, particularly preferably 2.0 × 10⁴ or higher, most preferably 5.0 × 10⁴ or higher. The weight average molecular weight is also preferably 150.0 × 10⁴ or lower, more preferably 100.0 × 10⁴ or lower, still more preferably 80.0 × 10⁴ or lower, further preferably 60.0 × 10⁴ or lower, particularly preferably 40.0 × 10⁴ or lower.

The number average molecular weight and the weight average molecular weight are molecular weight values calculated by gel permeation chromatography (GPC) with monodisperse polystyrene standard or monodisperse polyethylene oxide (PEO) and polyethylene glycol (PEG) standards. In the case where GPC measurement is not available, the number average molecular weight of the macromolecular compound can be obtained from the correlation of the number average molecular weight calculated from the number of end groups obtained by NMR or FT-IR, for example, and the melt flow rate. The melt flow rate can be determined in conformity with JIS K7210.

The macromolecular compound is preferably substantially free from a fraction having a molecular weight of 1000 or lower, more preferably substantially free from a fraction having a molecular weight of lower than 1500, still more preferably substantially free from a fraction having a molecular weight of lower than 2000, particularly preferably substantially free from a fraction having a molecular weight of lower than 3000.

The phrase "substantially free from a fraction" means that the amount of the fraction is 3.0% by mass or less of the macromolecular compound. The amount of the fraction is preferably 1.0% by mass or less, more preferably 0.5% by mass or less, still more preferably 0.1% by mass or less of the macromolecular compound.

The amount of the fraction can be determined by gel permeation chromatography (GPC) or liquid chromatography-mass spectrometry (LC-MS).

The macromolecular compound is preferably substantially free from a fluorine-containing compound having a molecular weight of 1000 or lower. The phrase "substantially free from a fluorine-containing compound" means that the amount of the fluorine-containing compound is 25 ppb by mass or less in the macromolecular compound.

The amount of the fluorine-containing compound is more preferably less than 25 ppb by mass, still more preferably 10 ppb by mass or less, further preferably less than 10 ppb by mass, further preferably 5 ppb by mass or less, further preferably 3 ppb by mass or less, further preferably 1 ppb by mass or less, particularly preferably less than 1 ppb by mass. The lower limit is not limited, and may be an amount below the detection limit.

The fluorine-containing compound having a molecular weight of 1000 or lower and a quantification method therefor will be described below.

The macromolecular compound preferably includes at least one selected from the group consisting of a polymer (I) containing a polymerized unit (I) based on a monomer represented by the following formula (I) and a compound (II) represented by the following formula (II), formula (I):

CX¹X³=CX²R(-CZ¹Z²-A⁰)ₘ (I)

wherein X¹ and X³ are each independently F, Cl, H, or CF₃; A⁰ is an anionic group; X² is H, F, an alkyl group, or a fluorine-containing alkyl group; R is a linking group; Z¹ and Z² are each independently H, F, an alkyl group, or a fluorine-containing alkyl group; and m is an integer of 1 or more, and
formula (II):

T^{X}-X^{A}-R^{FA1}-R^{FA2}-X^{A}-T^{X}' (II)

wherein
R^{FA1} is -Rf¹ₚ-R^{F}-O_{q}-;
R^{FA2} is -Rf²ₚ-R^{FX}-O_{q}-,
   where R^{F} is a divalent fluoropolyether group,
   R^{FX} is a divalent fluoropolyether group containing an anionic group,
   Rf¹ and Rf² are each independently a C1-C6 alkylene group optionally substituted with one or more fluorine atoms,
   each p is independently 0 or 1, and
   each q is independently 0 or 1;
each X^{A} is independently a single bond or a divalent to decavalent group; and
T^{X} and T^{X}' are each independently selected from the group consisting of (i) a C1-C24 (hydro)(fluoro)carbon group optionally containing one or more of H, O, and Cl and free from the anionic group and (ii) a C1-C24 (hydro)(fluoro)carbon group containing at least one anionic group.

The polymer (I) is a polymer containing a polymerized unit (I) based on a monomer (I). The monomer (I) is represented by the following formula (I):

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

X² is preferably F, Cl, H, or CF₃. Z1 and Z² are each preferably F or CF₃.

In the disclosure, the anionic group encompasses anionic groups such as a sulfate group and a carboxylate group, as well as functional groups to give an anionic group such as an acid group, e.g., -COOH, and an acid salt group, e.g., -COONH₄. The anionic group is preferably a sulfate group, a carboxylate group, a phosphate group, a phosphonate group, a sulfonate group, a sulfinate group, or -C(CF₃)₂OM^{a} (wherein M^{a} is -H, a metal atom, -NR²₄, imidazolium optionally containing a substituent, pyridinium optionally containing a substituent, or phosphonium optionally containing a substituent; and R² is H or an organic group).

In the disclosure, the monomer (I) represented by the formula (I) may include one monomer or two or more monomers.

R is a linking group. The "linking group" herein is a (m+1)-valent linking group, and is a divalent linking group when m is 1. The linking group may be a single bond and preferably contains at least one carbon atom. The number of carbon atoms may be 2 or more, or may be 4 or more, or may be 8 or more, or may be 10 or more, or may be 20 or more. The upper limit may be, but is not limited to, 100 or less or 50 or less.

The linking group may be linear or branched, may have a cyclic or acyclic structure, may be saturated or unsaturated, may be substituted or unsubstituted, may contain one or more heteroatoms selected from the group consisting of sulfur, oxygen, and nitrogen if necessary, and may contain one or more functional groups selected from the group consisting of ester, amide, sulfonamide, carbonyl, carbonate, urethane, urea, and carbamate if necessary. The linking group may contain no carbon atom and may be a catenary heteroatom such as oxygen, sulfur, or nitrogen.

For the linking group, m is an integer of 1 or more, preferably 1 or 2, more preferably 1. When m is an integer of 2 or more, Z¹, Z², and A⁰ may be the same as or different from each other.

Next described is a preferred structure of the formula (I) in which m is 1.

R is preferably a catenary heteroatom, such as oxygen, sulfur, or nitrogen, or a divalent organic group, for example.

The polymer (I) may also preferably be highly fluorinated. For example, except for the anionic groups (A⁰) such as a phosphate group portion (e.g., CH₂OP(O)(OM^{a})₂) and a sulfate group portion (e.g., CH₂OS(O)₂OM^{a}), 80% or more, 90% or more, 95% or more, or 100% of the C-H bonds in the polymer (I) are preferably replaced by C-F bonds.

Except for the anionic groups (A⁰), the monomer (I) and the polymer (I) also preferably contain a C-F bond and contain no C-H bond. In other words, in the formula(I), preferably, all of X¹, X², and X³ are F and R is a C1 or higher perfluoroalkylene group, and the perfluoroalkylene group may be either linear or branched, may be either cyclic or acyclic, and may contain at least one catenary heteroatom. The number of carbon atoms of the perfluoroalkylene group may be 2 to 20 or may be 4 to 18.

The monomer (I) and the polymer (I) each may be partially fluorinated. In other words, except for the anionic groups (A⁰), the monomer (I) and the polymer (I) also preferably contain at least one hydrogen atom bonded to any carbon atom and at least one fluorine atom bonded to any carbon atom.

The anionic group (A⁰) may be -SO₃M^{a}, -OSO₃M^{a}, -SO₂M^{a}, -COOM^{a}, -SO₂NR'CH₂COOM^{a}, -CH₂OP(O)(OM^{a})₂, [-CH₂O]₂P(O)(OM^{a}), - CH₂CH₂OP(O)(OM^{a})₂, [-CH₂CH₂O]₂P(O)(OM^{a}), -CH₂CH₂OSO₃M^{a}, - P(O)(OM^{a})₂, -SO₂NR'CH₂CH₂OP(O)(OM^{a})₂, [-SO₂NR'CH₂CH₂O]₂P(O)(OM^{a}), -CH₂OSO₃M^{a}, -SO₂NR'CH₂CH₂OSO₃M^{a}, or - C(CF₃)₂OM^{a}. Preferred among these is -SO₃M^{a}, -OSO₃M^{a}, -COOM^{a}, -P(O)(OM^{a})₂, or C(CF₃)₂OM^{a}, more preferred is -COOM^{a}, -SO₃M^{a}, -OSO₃M^{a}, or C(CF₃)₂OM^{a}, still more preferred is -SO₃M^{a}, - COOM^{a}, or P(O)(OM^{a})₂, particularly preferred is -SO₃M^{a} or COOM^{a}, and most preferred is -COOM^{a}.

M^{a} is H, a metal atom, NR²₄, imidazolium optionally containing a substituent, pyridinium optionally containing a substituent, or phosphonium optionally containing a substituent; and R² is H or an organic group.

Examples of the metal atom include alkali metals (Group 1) and alkaline earth metals (Group 2), and preferred is Na, K, or Li.

M^{a} is preferably -H, a metal atom, or NR²₄, more preferably -H, an alkali metal (Group 1), an alkaline earth metal (Group 2), or NR²₄, still more preferably -H, -Na, - K, -Li, or NH₄, further preferably -H, -Na, -K, or NH₄, particularly preferably -H, -Na, or NH₄, most preferably -H or NH₄.

In the polymer (I), the polymerized units (I) may contain different anionic groups or may contain the same anionic groups.

The monomer (I) is also preferably a monomer represented by the formula (Ia).

The polymer (I) is also preferably a polymer containing a polymerized unit (Ia) based on the monomer represented by the formula (Ia):

CF₂ = CF-O-Rf⁰-A⁰ (Ia)

wherein A⁰ is an anionic group, Rf⁰ is a perfluorinated divalent linking group that may be linear or branched, cyclic or acyclic, saturated or unsaturated, substituted or unsubstituted, and may optionally contain one or more heteroatoms selected from the group consisting of sulfur, oxygen, and nitrogen.

The monomer (I) is also preferably a monomer represented by the formula (Ib).

The polymer (I) is also preferably a polymer containing a polymerized unit (Ib) based on the monomer represented by the formula (Ib):

CH₂ = CH-O-Rf⁰-A⁰ (Ib)

wherein A⁰ is an anionic group and Rf⁰ is a perfluorinated divalent linking group defined by the formula Ia.

In a preferred case, A⁰ in the formula (I) is a sulfate group. A0 is, for example, -CH₂OSO₃M^{a}, -CH₂CH₂OSO₃M^{a}, or -SO₂NR'CH₂CH₂OSO₃M^{a} wherein R' is H or a C1-C4 alkyl group and M^{a} is as defined above.

When A⁰ is a sulfate group, examples of the monomer represented by the formula (I) include CF₂=CF(OCF₂CF₂CH₂OSO₃M^{a}), CH₂=CH(O(CF₂)₄CH₂OSO₃M^{a}), CF₂=CF(O(CF₂)₄CH₂OSO₃M^{a}), CF₂=CF(OCF₂CF(CF₃)CH₂OSO₃M^{a}), CF₂=CF(OCF₂CF(CF₃)OCF₂CF₂CH₂OSO₃M^{a}), CH₂=CH(O(CF₂)₄CH₂OSO₃M^{a}), CF₂=CF(OCF₂CF₂SO₂N(CH₃)CH₂CH₂OSO₃M^{a}), CH₂=CH(OCF₂CF₂CH₂OSO₃M^{a}), CF₂=CF(OCF₂CF₂CF₂CF₂SO₂N(CH₃)CH₂CH₂OSO₃M^{a}), and CH₂=CH(OCF₂CF₂CF₂CH₂OSO₃M^{a}). In the formulas, M^{a} is as defined above.

In another preferred case, A⁰ in the formula (I) is preferably a sulfonate group. A0 is, for example, -SO₃M^{a} wherein M^{a} is as defined above.

When A⁰ is a sulfonate group, examples of the monomer represented by the formula (I) include CF₂=CF(OCF₂CF₂SO₃M^{a}), CF₂=CF(O(CF₂)₃SO₃M^{a}), CF₂=CF(O(CF₂)₄SO₃M^{a}), CF₂=CF(OCF₂CF(CF₃)SO₃M^{a}), CF₂=CF(OCF₂CF(CF₃)OCF₂CF₂SO₃M^{a}), CH₂=CH(OCF₂CF₂SO₃M^{a}), CF₂=CF(OCF₂CF(CF₃)OCF₂CF₂CF₂CF₂SO₃M^{a}), CH₂=CH(O(CF₂)₄SO₃M^{a}), and CH₂=CH(O(CF₂)₃SO₃M^{a}). In the formulas, M^{a} is as defined above.

In another preferred case, A⁰ in the formula (I) is preferably a sulfinate group. A0 is, for example, -SO₂M^{a} wherein M^{a} is as defined above.

When A⁰ is a sulfinate group, examples of the monomer represented by the formula (I) include CF₂=CF(OCF₂CF₂SO₂M^{a}), CF₂=CF(O(CF₂)₃SO₂M^{a}), CF₂=CF(O(CF₂)₄SO₂M^{a}), CF₂=CF(OCF₂CF(CF₃)SO₂M^{a}), CF₂=CF(OCF₂CF(CF₃)OCF₂CF₂SO₂M^{a}), CH₂=CH(OCF₂CF₂SO₂M^{a}), CF₂=CF(OCF₂CF(CF₃)OCF₂CF₂CF₂CF₂SO₂M^{a}), CH₂=CH(O(CF₂)₄SO₂M^{a}), and CH₂=CH(O(CF₂)₃SO₂M^{a}). In the formulas, M^{a} is as defined above.

In another preferred case, A⁰ in the formula (I) is preferably a carboxylate group. A0 is, for example, COOM^{a} or SO₂NR'CH₂COOM^{a} wherein R' is H or a C1-C4 alkyl group and M^{a} is as defined above. When A⁰ is a carboxylate group, examples of the monomer represented by the formula (I) include CF₂=CF(OCF₂CF₂COOM^{a}), CF₂=CF(O(CF₂)₃COOM^{a}), CF₂=CF(O(CF₂)₄COOM^{a}), CF₂=CF(O(CF₂)₅COOM^{a}), CF₂=CF(OCF₂CF(CF₃)COOM^{a}), CF₂=CF(OCF₂CF(CF₃)O(CF₂)ₙCOOM^{a}) (where n is more than 1), CH₂=CH(OCF₂CF₂COOM^{a}), CH₂=CH(O(CF₂)₄COOM^{a}), CH₂=CH(O(CF₂)₃COOM^{a}), CF₂=CF(OCF₂CF₂SO₂NR'CH₂COOM^{a}), CF₂=CF(O(CF₂)₄SO₂NR'CH₂COOM^{a}), CF₂=CF(OCF₂CF(CF₃)SO₂NR'CH₂COOM^{a}), CF₂=CF(OCF₂CF(CF₃)OCF₂CF₂SO₂NR'CH₂COOM^{a}), CH₂=CH(OCF₂CF₂SO₂NR'CH₂COOM^{a}), CF₂=CF(OCF₂CF(CF₃)OCF₂CF₂CF₂CF₂SO₂NR'CH₂COOM^{a}), CH₂=CH(O(CF₂)₄SO₂NR'CH₂COOM^{a}), and CH₂=CH(O(CF₂)₃SO₂NR'CH₂COOM^{a}). In the formulas, R' is H or a C1-C4 alkyl group and M^{a} is as defined above.

In another preferred case, A⁰ in the formula (I) is a phosphate group. A0 is, for example, -CH₂OP(O)(OM^{a})₂, [-CH₂O]₂P(O)(OM^{a}), -CH₂CH₂OP(O)(OM^{a})₂, [-CH₂CH₂O]₂P(O)(OM^{a}), [-SO₂NR'CH₂CH₂O]₂P(O)(OM^{a}), or SO₂NR'CH₂CH₂OP(O)(OM^{a})₂ wherein R' is a C1-C4 alkyl group and M^{a} is as defined above.

When A⁰ is a phosphate group, examples of the monomer represented by the formula (I) include CF₂=CF(OCF₂CF₂CH₂OP(O)(OM^{a})₂), CF₂=CF(O(CF₂)₄CH₂OP(O)(OM^{a})₂), CF₂=CF(OCF₂CF(CF₃)CH₂OP(O)(OM^{a})₂), CF₂=CF(OCF₂CF(CF₃)OCF₂CF₂CH₂OP(O)(OM^{a})₂), CF₂=CF(OCF₂CF₂SO₂N(CH₃)CH₂CH₂OP(O)(OM^{a})₂), CF₂=CF(OCF₂CF₂CF₂CF₂SO₂N(CH₃)CH₂CH₂OP(O)(OM^{a})₂), CH₂=CH(OCF₂CF₂CH₂OP(O)(OM^{a})₂), CH₂=CH(O(CF₂)₄CH₂OP(O)(OM^{a})₂), and CH₂=CH(O(CF₂)₃CH₂OP(O)(OM^{a})₂). In the formulas, M^{a} is as defined above.

In another preferred case, A⁰ in the formula (I) is preferably a phosphonate group. When A⁰ is a phosphonate group, examples of the monomer represented by the formula (I) include CF₂=CF(OCF₂CF₂P(O)(OM^{a})₂), CF₂=CF(O(CF₂)₄P(O)(OM^{a})₂), CF₂=CF(OCF₂CF(CF₃)P(O)(OM^{a})₂), CF₂=CF(OCF₂CF(CF₃)OCF₂CF₂P(O)(OM^{a})₂), CH₂=CH(OCF₂CF₂P(O)(OM^{a})₂), CH₂=CH(O(CF₂)₄P(O)(OM^{a})₂), and CH₂=CH(O(CF₂)₃P(O)(OM^{a})₂) wherein M^{a} is as defined above.

The monomer (I) is preferably a monomer (1) represented by the formula (1).

The polymer (I) is preferably a polymer (1) containing a polymerized unit (1) based on the monomer represented by the formula (1).

CX₂=CY(-CZ₂-O-Rf-A) (1)

wherein Xs are the same as or different from each other and are each -H or F, Y is -H, -F, an alkyl group, or a fluorine-containing alkyl group, Zs are the same as or different from each other and are each -H, -F, an alkyl group, or a fluoroalkyl group, Rf is a C1-C40 fluorine-containing alkylene group or a C2-C100 fluorine-containing alkylene group containing an ether bond, and A is -COOM^{a}, - SO₃M^{a}, -OSO₃M^{a}, -SO₂M^{a}, or C(CF₃)₂OM^{a} (where M^{a} is -H, a metal atom, -NR²₄, imidazolium optionally containing a substituent, pyridinium optionally containing a substituent, or phosphonium optionally containing a substituent; and R² is H or an organic group), and at least one of X, Y, or Z contains a fluorine atom.

In the production method of the disclosure, the monomer (1) represented by the formula (1) may be copolymerized with an additional monomer.

The polymer (1) may be a homopolymer of the monomer (1) represented by the formula (1) or may be a copolymer of the monomer (1) and an additional monomer.

The C2-C100 fluorine-containing alkylene group containing an ether bond is an alkylene group that has no structure containing an oxygen atom at an end and that contains an ether bond between carbon atoms.

In the formula (1), X is -H or F. Both Xs may be -F or at least one of these may be -H. For example, one of these may be -F while the other may be -H, or both may be - H.

In the formula (1), Y is -H, -F, an alkyl group, or a fluorine-containing alkyl group. The alkyl group is an alkyl group containing no fluorine atom and the number of carbon atoms thereof is 1 or more. The number of carbon atoms of the alkyl group is preferably 6 or less, more preferably 4 or less, still more preferably 3 or less. The fluorine-containing alkyl group is an alkyl group containing at least one fluorine atom, and the number of carbon atoms thereof is 1 or more. The number of carbon atoms of the fluorine-containing alkyl group is preferably 6 or less, more preferably 4 or less, still more preferably 3 or less. Y is preferably -H, -F, or CF₃, more preferably -F.

In the formula (1), Zs are the same as or different from each other and are each -H, -F, an alkyl group, or a fluoroalkyl group. The alkyl group is an alkyl group containing no fluorine atom and the number of carbon atoms thereof is 1 or more. The number of carbon atoms of the alkyl group is preferably 6 or less, more preferably 4 or less, still more preferably 3 or less. The fluorine-containing alkyl group is an alkyl group containing at least one fluorine atom, and the number of carbon atoms thereof is 1 or more. The number of carbon atoms of the fluorine-containing alkyl group is preferably 6 or less, more preferably 4 or less, still more preferably 3 or less. Z is preferably -H, -F, or CF₃, more preferably -F.

In the formula (1), at least one of X, Y, or Z contains a fluorine atom. For example, X may be -H while Y and Z may be -F.

In the formula (1), Rf is a C1-C40 fluorine-containing alkylene group or a C2-C100 fluorine-containing alkylene group containing an ether bond.

The number of carbon atoms of the fluorine-containing alkylene group is preferably 2 or more. The number of carbon atoms of the fluorine-containing alkylene group is also preferably 30 or less, more preferably 20 or less, still more preferably 10 or less, particularly preferably 6 or less, most preferably 3 or less. Examples of the fluorine-containing alkylene group include -CF₂-, -CH₂CF₂-, -CF₂CF₂-, -CF₂CH₂-, -CF₂CF₂CF₂-, -CF₂CF₂CH₂-, -CF(CF₃)-, - CF(CF₃)CF₂-, and -CF(CF₃)CH₂-. The fluorine-containing alkylene group is preferably a perfluoroalkylene group.

The number of carbon atoms of the fluorine-containing alkylene group containing an ether bond is preferably 3 or more. The number of carbon atoms of the fluorine-containing alkylene group containing an ether bond is also preferably 60 or less, more preferably 30 or less, still more preferably 12 or less, particularly preferably 9 or less, most preferably 6 or less. The fluorine-containing alkylene group containing an ether bond is also preferably a divalent group represented by the formula: 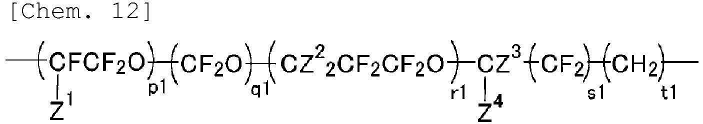 wherein Z¹ is F or CF₃; Z² and Z³ are each independently H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group containing an ether bond include -CF₂CF(CF₃)OCF₂CF₂-, -CF(CF₃)CF₂-O-CF(CF₃)-, -(CF(CF₃)CF₂-O)ₙ-CF(CF₃)- (wherein n is an integer of 1 to 10), -CF(CF₃)CF₂-O-CF(CF₃)CH₂-, - (CF(CF₃)CF₂-O)ₙ-CF(CF₃)CH₂- (wherein n is an integer of 1 to 10), -CH₂CF₂CF₂O-CH₂CF₂CH₂-, -CF₂CF₂CF₂O-CF₂-, -CF₂CF₂CF₂O-CF₂CF₂-, -CF₂CF₂CF₂O-CF₂CF₂CF₂, -CF₂CF₂CF₂O-CF₂CF₂CH₂-, - CF₂CF₂O-CF₂-, and -CF₂CF₂O-CF₂CH₂-. The fluorine-containing alkylene group containing an ether bond is preferably a perfluoroalkylene group.

In the formula (1), A is -COOM^{a}, -SO₃M^{a}, -OSO₃M^{a}, - SO₂M^{a}, or C(CF₃)₂OM^{a}, wherein M² is H, a metal atom, NR²₄, imidazolium optionally containing a substituent, pyridinium optionally containing a substituent, or phosphonium optionally containing a substituent; and R² is H or an organic group.

R² is preferably H or a C1-C10 organic group, more preferably H or a C1-C4 organic group, still more preferably H or a C1-C4 alkyl group.

Examples of the metal atom include alkali metals (Group 1) and alkaline earth metals (Group 2), and preferred is Na, K, or Li.

M^{a} is preferably H, a metal atom, or NR²₄, more preferably H, an alkali metal (Group 1), an alkaline earth metal (Group 2), or NR²₄, still more preferably H, Na, K, Li, or NH₄, further preferably H, Na, K, or NH₄, particularly preferably H, Na, or NH₄, most preferably H or NH₄.

A is preferably -COOM^{a} or SO₃M^{a}, more preferably - COOM^{a}.

An example of the monomer represented by the formula (1) is a monomer represented by the formula (1a):

CX₂=CFCF₂-O-(CF(CF₃)CF₂O)ₙ₅-CF(CF₃)-A (1a)

wherein Xs are the same as each other and are each F or H; n5 is an integer of 0 or 1 to 10; and A is as defined above.

To form particles having a small primary particle size, n5 in the formula (1a) is preferably an integer of 0 or 1 to 5, more preferably 0, 1, or 2, still more preferably 0 or 1.

In the production method of the disclosure, the monomer represented by the formula (1a) may be copolymerized with an additional monomer.

The polymer (1) may be a homopolymer of the monomer represented by the formula (1a) or may be a copolymer thereof with an additional monomer.

The monomer (1) is preferably a monomer represented by the formula (1A). The polymerized unit (1) is preferably a polymerized unit (1A) based on the monomer represented by the formula (1A):

CH₂=CF(-CF₂-O-Rf-A) (1A)

wherein Rf and A are as defined above.

In the production method of the disclosure, the monomer represented by the formula (1A) may be copolymerized with an additional monomer.

The polymer (1) may be a homopolymer of the monomer represented by the formula (1A) or a copolymer thereof with an additional monomer.

A specific example of the monomer represented by the formula (1A) is a monomer represented by the formula: 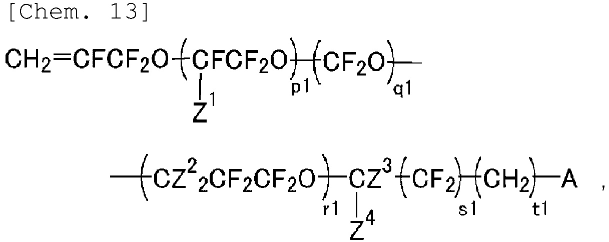 wherein Z¹ is F or CF₃; Z² and Z³ are each H or F; Z⁴ is H, F, or CF₃; the value of p1 + q1 + r1 is an integer of 0 to 10; s1 is 0 or 1; t1 is an integer of 0 to 5, provided that when both Z³ and Z⁴ are H, the value of p1 + q1 + r1 + s1 is not 0; and A is as defined above. More specific preferred examples thereof include the following.

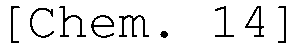

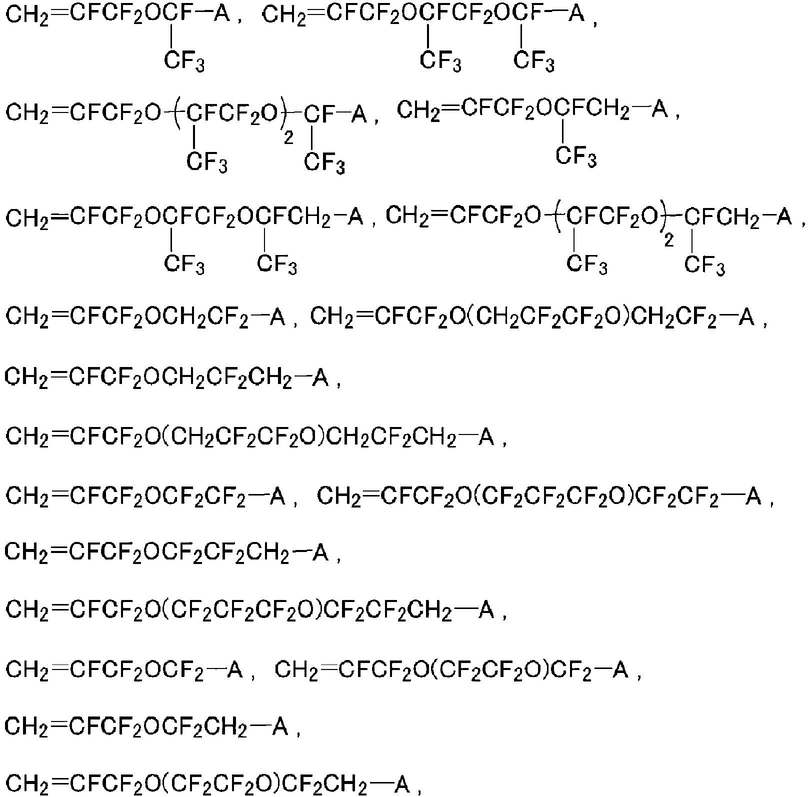

Among these, 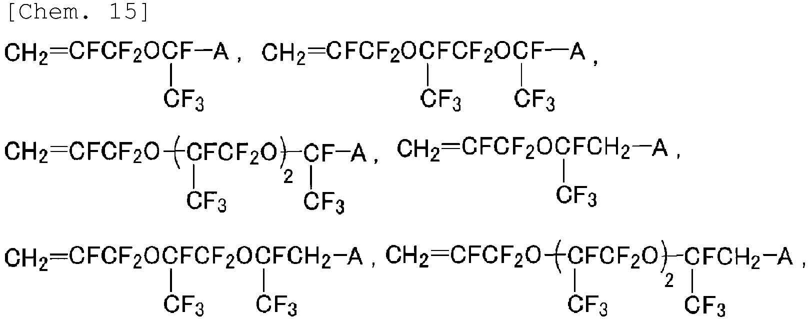 are preferred.

The monomer represented by the formula (1A) is preferably a monomer of the formula (1A) in which A is - COOM^{a}. In particular, it preferably includes at least one selected from the group consisting of CH₂=CFCF₂OCF(CF₃)COOM^{a} and CH₂=CFCF₂OCF(CF₃)CF₂OCF(CF₃)COOM^{a} (wherein M^{a} is as defined above), more preferably CH₂=CFCF₂OCF(CF₃)COOM^{a}.

The monomer represented by the formula (1) may also be, for example, a monomer represented by the following formula:

CF₂=CFCF₂-O-Rf-A

wherein Rf and A are as defined above.

More specifically, 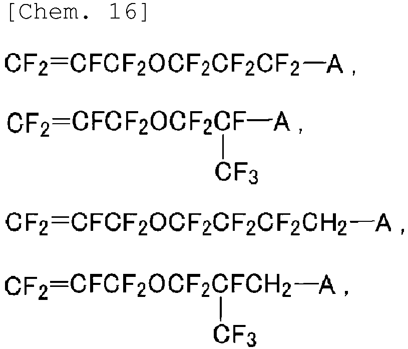 can be mentioned.

The monomer (I) is also preferably a monomer (2) represented by the formula (2).

The polymer (I) is also preferably a polymer (2) containing a polymerized unit (2) based on the monomer represented by the formula (2):

CX₂=CY(-O-Rf-A) (2)

wherein Xs are the same as or different from each other and are each -H or -F; Y is -H, -F, an alkyl group, or a fluorine-containing alkyl group; Rf is a C1-C40 fluorine-containing alkylene group or a C2-C100 fluorine-containing alkylene group containing an ether bond or a keto group; and A is as defined above.

In the production method of the disclosure, the monomer (2) represented by the formula (2) may be copolymerized with an additional monomer.

The polymer (2) may be a homopolymer of the monomer represented by the formula (2) or a copolymer thereof with an additional monomer.

In the formula (2), X is -H or F. Both Xs may be -F or at least one of these may be -H. For example, one of these may be -F while the other may be -H, or both may be - H.

In the formula (2), Y is -H, -F, an alkyl group, or a fluorine-containing alkyl group. The alkyl group is an alkyl group containing no fluorine atom and the number of carbon atoms thereof is 1 or more. The number of carbon atoms of the alkyl group is preferably 6 or less, more preferably 4 or less, still more preferably 3 or less. The fluorine-containing alkyl group is an alkyl group containing at least one fluorine atom, and the number of carbon atoms thereof is 1 or more. The number of carbon atoms of the fluorine-containing alkyl group is preferably 6 or less, more preferably 4 or less, still more preferably 3 or less. Y is preferably -H, -F, or CF₃, more preferably -F.

In the formula (2), at least one of X or Y preferably contains a fluorine atom. For example, X may be -H while Y and Z may be -F.

In the formula (2), Rf is a C1-C40 fluorine-containing alkylene group, a C2-C100 fluorine-containing alkylene group containing an ether bond, or a C2-C100 fluorine-containing alkylene group containing a keto group. The C2-C100 fluorine-containing alkylene group containing an ether bond is an alkylene group that has no structure containing an oxygen atom at an end and that contains an ether bond between carbon atoms.

The number of carbon atoms of the fluorine-containing alkylene group for Rf is preferably 2 or more. The number of carbon atoms is preferably 30 or less, more preferably 20 or less, still more preferably 10 or less. Examples of the fluorine-containing alkylene group include -CF₂-, - CH₂CF₂-, -CF₂CF₂-, -CF₂CH₂-, -CF₂CF₂CH₂-, -CF(CF₃)-, - CF(CF₃)CF₂-, -CF(CF₃)CH₂-, -CF₂CF₂CF₂-, and CF₂CF₂CF₂CF₂-. The fluorine-containing alkylene group is preferably a perfluoroalkylene group, more preferably an unbranched linear perfluoroalkylene group.

The number of carbon atoms of the fluorine-containing alkylene group containing an ether bond is preferably 3 or more. The number of carbon atoms of the fluorine-containing alkylene group containing an ether bond is also preferably 60 or less, more preferably 30 or less, still more preferably 12 or less, particularly preferably 9 or less. The fluorine-containing alkylene group containing an ether bond is also preferably a divalent group represented by the formula: 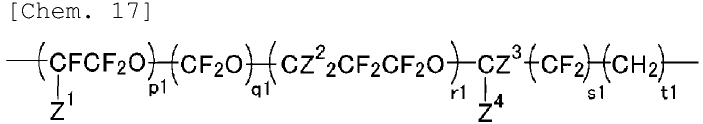 wherein Z¹ is F or CF₃; Z² and Z³ are each independently H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group containing an ether bond include -CF₂CF(CF₃)OCF₂CF₂-, -CF₂CF(CF₃)OCF₂CF₂CF₂-, -CF(CF₃)CF₂-O-CF(CF₃)-, -(CF(CF₃)CF₂-O)ₙ-CF(CF₃)- (wherein n is an integer of 1 to 10), - CF(CF₃)CF₂-O-CF(CF₃)CH₂-, -(CF(CF₃)CF₂-O)ₙ-CF(CF₃)CH₂-(wherein n is an integer of 1 to 10), -CH₂CF₂CF₂O-CH₂CF₂CH₂-, -CF₂CF₂CF₂O-CF₂-, -CF₂CF₂CF₂O-CF₂CF₂-, -CF₂CF₂CF₂O-CF₂CF₂CF₂-, - CF₂CF₂CF₂O-CF₂CF₂CH₂-, -CF₂CF₂O-CF₂-, and -CF₂CF₂O-CF₂CH₂-. The fluorine-containing alkylene group containing an ether bond is preferably a perfluoroalkylene group.

The number of carbon atoms of the fluorine-containing alkylene group containing a keto group is preferably 3 or more. The number of carbon atoms of the fluorine-containing alkylene group containing a keto group is preferably 60 or less, more preferably 30 or less, still more preferably 12 or less, particularly preferably 5 or less.

Specific examples of the fluorine-containing alkylene group containing a keto group include -CF₂CF(CF₃)CO-CF₂-, - CF₂CF(CF₃)CO-CF₂CF₂-, -CF₂CF(CF₃)CO-CF₂CF₂CF₂-, and - CF₂CF(CF₃)CO-CF₂CF₂CF₂CF₂-. The fluorine-containing alkylene group containing a keto group is preferably a perfluoroalkylene group.

Water may be added to the keto group in the fluorine-containing alkylene group. Thus, the monomer (2) may be a hydrate. Examples of the fluorine-containing alkylene group containing a water-added keto group include - CF₂CF(CF₃)C(OH)₂-CF₂-, -CF₂CF(CF₃)C(OH)₂-CF₂CF₂-, - CF₂CF(CF₃)C(OH)₂-CF₂CF₂CF₂-, and -CF₂CF(CF₃)C(OH)₂-CF₂CF₂CF₂CF₂-.

The monomer represented by the formula (2) preferably includes at least one selected from the group consisting of the monomers represented by the formulas (2a), (2b), (2c), (2d), (2e), (2f), and (2g):

CF₂=CF-O-(CF₂)ₙ₁-A (2a)

wherein n1 is an integer of 1 to 10, and A is as defined above;

CF₂=CF-O-(CF₂C(CF₃)F)ₙ₂-A (2b)

wherein n2 is an integer of 1 to 5, and A is as defined above;

CF₂=CF-O-(CFX¹)ₙ₃-A (2c)

wherein X¹ is F or CF₃, n3 is an integer of 1 to 10, and A is as defined above;

CF₂=CF-O-(CF₂CFX¹O)ₙ₄-(CF₂)ₙ₆-A (2d)

wherein n4 is an integer of 1 to 10, n6 is an integer of 1 to 3, and A and X¹ are as defined above;

CF₂=CF-O-(CF₂CF₂CFX¹O)ₙ₅-CF₂CF₂CF₂-A (2e)

wherein n5 is an integer of 0 to 10, and A and X¹ are as defined above;

CF₂=CF-O-(CF₂)ₙ₇-O-(CF₂)ₙ₈-A (2f)

wherein n7 is an integer of 1 to 10, n8 is an integer of 1 to 3, and A is as defined above; and

CF₂=CF[OCF₂CF(CF₃)]ₙ₉O(CF₂)ₙ₁₀O[CF(CF₃)CF₂O]ₙ₁₁CF(CF₃)-A (2g)

wherein n9 is an integer of 0 to 5, n10 is an integer of 1 to 8, n11 is an integer of 0 to 5, and A is as defined above.

In the formula (2a), n1 is preferably an integer of 5 or less, more preferably an integer of 2 or less.

Examples of the monomer represented by the formula (2a) include CF₂=CF-O-CF₂COOM^{a}, CF₂=CF(OCF₂CF₂COOM^{a}), CF₂=CF(O(CF₂)₃COOM^{a}), CF₂=CF(OCF₂CF₂SO₃M^{a}), CF₂=CFOCF₂SO₃M^{a}, and CF₂=CFOCF₂CF₂CF₂SO₃M^{a} (wherein M^{a} is as defined above).

In terms of dispersion stability of the resulting composition, n2 in the formula (2b) is preferably an integer of 3 or less.

In the formula (2c), n3 is preferably an integer of 5 or less in terms of water solubility, A is preferably - COOM^{a}, and M^{a} is preferably H, Na, or NH₄.

In the formula (2d), X¹ is preferably -CF₃ in terms of dispersion stability of the composition, n4 is preferably an integer of 5 or less in terms of water solubility, A is preferably -COOM^{a}, and M^{a} is preferably H, Na, or NH₄.

Examples of the monomer represented by the formula (2d) include CF₂=CFOCF₂CF(CF₃)OCF₂CF₂COOM^{a}, CF₂=CFOCF₂CF(CF₃)OCF₂COOM^{a}, CF₂=CFOCF₂CF(CF₃)OCF₂CF₂CF₂COOM^{a}, CF₂=CFOCF₂CF(CF₃)OCF₂SO₃M^{a}, CF₂=CFOCF₂CF(CF₃)OCF₂CF₂SO₃M^{a}, and CF₂=CFOCF₂CF(CF₃)OCF₂CF₂CF₂SO₃M^{a} (wherein M^{a} is H, NH₄, or an alkaline metal).

In the formula (2e), n5 is preferably an integer of 5 or less in terms of water solubility, A is preferably - COOM^{a}, M^{a} is preferably H or NH₄.

An example of the monomer represented by the formula (2e) is CF₂=CFOCF₂CF₂CF₂COOM^{a} (wherein M^{a} is H, Na, NH₄, or an alkaline metal).

In the formula (2f), n7 is preferably an integer of 5 or less in terms of water solubility, and A is preferably - COOM^{a} or SO₃M^{a}, more preferably -COOM^{a}. Ma is preferably H, Na, K, or NH₄.

An example of the monomer represented by the formula (2f) is CF₂=CF-O-(CF₂)₃-O-CF₂-COOM^{a} (wherein M^{a} is H, NH₄, or an alkaline metal).

In the formula (2g), n9 is preferably an integer of 3 or less in terms of water solubility, n10 is preferably an integer of 3 or less, n11 is preferably an integer of 3 or less, and A is preferably -COOM^{a} or SO₃M^{a}, more preferably - COOM^{a}. Ma is preferably H, Na, K, or NH₄.

Examples of the monomer represented by the formula (2g) include CF₂=CFO(CF₂)₂OCF(CF₃)COOM^{a}, CF₂=CFOCF₂CF₂OCF(CF₃)CF₂OCF(CF₃)COOM^{a}, CF₂=CFOCF₂CF(CF₃)OCF₂CF₂OCF(CF₃)COOM^{a}, CF₂=CF[OCF₂CF(CF₃)]₂O(CF₂)₂O[CF(CF₃)CF₂O]CF(CF₃)COOM^{a}, and CF₂=CF[OCF₂CF(CF₃)]₃O(CF₂)₂O[CF(CF₃)CF₂O]₃CF(CF₃)COOM^{a} (wherein M^{a} is H, NH₄, or an alkaline metal).

The monomer (I) is also preferably a monomer (3) represented by the formula (3).

The polymer (I) is also preferably a polymer (3) containing a polymerized unit (3) based on the monomer represented by the formula (3):

CX₂=CY(-Rf-A) (3)

wherein Xs are the same as or different from each other and are each -H or F; Y is -H, -F, an alkyl group, or a fluorine-containing alkyl group; Rf is a C1-C40 fluorine-containing alkylene group or a C2-C100 fluorine-containing alkylene group containing an ether bond; and A is as defined above.

In the production method of the disclosure, the monomer (3) represented by the formula (3) may be copolymerized with an additional monomer.

The polymer (3) may be a homopolymer of the monomer represented by the formula (3) or a copolymer thereof with an additional monomer.

The C2-C100 fluorine-containing alkylene group containing an ether bond is an alkylene group that has no structure containing an oxygen atom at an end and that contains an ether bond between carbon atoms.

In the formula (3), Rf is preferably a C1-C40 fluorine-containing alkylene group. In the formula (3), at least one of X or Y preferably contains a fluorine atom.

The monomer represented by the formula (3) preferably includes at least one selected from the group consisting of a monomer represented by the formula (3a):

CF₂=CF-(CF₂)ₙ₁-A (3a)

wherein n1 is an integer of 1 to 10 and A is as defined above, and a monomer represented by the formula (3b)

CF₂=CF-(CF₂C(CF₃)F)ₙ₂-A (3b)

wherein n2 is an integer of 1 to 5 and A is as defined above.

In the formula (3a) and the formula (3b), A is preferably -SO₃M^{a} or COOM^{a}, wherein M^{a} is preferably H, a metal atom, NR²₄, imidazolium optionally containing a substituent, pyridinium optionally containing a substituent, or phosphonium optionally containing a substituent, and R² is H or an organic group.

In the formula (3a), n1 is preferably an integer of 5 or less, more preferably an integer of 2 or less. A is preferably -COOM^{a} where M^{a} is preferably H or NH₄.

An example of the monomer represented by the formula (3a) is CF₂=CFCF₂COOM^{a} (wherein M^{a} is as defined above).

In the formula (3b), n2 is preferably an integer of 3 or less in terms of dispersion stability of the resulting composition, and A is preferably -COOM^{a} where M^{a} is preferably H or NH₄.

Next described is a preferred structure of the formula (I) in which m is an integer of 2 or more.

The monomer (I) also preferably includes at least one selected from the group consisting of monomers represented by the formula (4a) and the formula (4b).

The polymer (I) is also preferably a polymer (4) containing a polymerized unit (4) based on at least one monomer selected from the group consisting of monomers represented by the formula (4a) and the formula (4b):

CF₂=CF-CF₂-O-Q^{F1}-CF(-Q^{F2}-CZ¹Z²-A)₂ (4a)

wherein Z¹, Z², and A are as defined above, and Q^{F1} and Q^{F2} are the same as or different from each other and are each a single bond, a fluorine-containing alkylene group optionally containing an ether bond between carbon atoms, or a fluorine-containing oxyalkylene group optionally containing an ether bond between carbon atoms; and

CF₂=CF-O-Q^{F1}-CF(-Q^{F2}-CZ¹Z²-A)₂ (4b)

wherein Z¹, Z², A, Q^{F1}, and Q^{F2} are as defined above.

As examples of the monomers represented by the formula (4a) and the formula (4b), 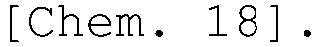 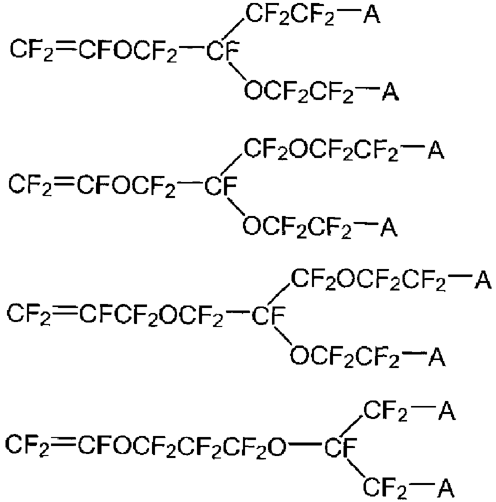 can be mentioned.

The monomer (I) preferably includes at least one selected from the group consisting of the monomer (1), the monomer (2), and the monomer (3), more preferably the monomer (1), still more preferably the monomer (1A).

The polymer (I) preferably includes at least one selected from the group consisting of the polymer (1), the polymer (2), and the polymer (3), more preferably the polymer (1).

In the disclosure, the monomer (I) may be copolymerized with an additional monomer.

The polymer (I) may be a homopolymer consisting of a polymerized unit (I) or a copolymer containing the polymerized unit (I) and a polymerized unit based on an additional monomer copolymerizable with a monomer represented by the formula (I). From the standpoint of solubility in an aqueous medium, preferred is a homopolymer consisting of a polymerized unit (I). The polymerized units (I) at respective occurrences may be the same as or different from each other and the polymer (I) may contain polymerized units (I) based on two or more different monomers represented by the formula (I).

The additional monomer is preferably a monomer represented by the formula CFR=CR₂ wherein each R is independently H, F, or a C1-C4 perfluoroalkyl group. The additional monomer is preferably a C2 or C3 fluorine-containing ethylenic monomer. Examples of the additional monomer include CF₂=CF₂, CF₂=CFCl, CH₂=CF₂, CFH=CH₂, CFH=CF₂, CF₂=CFCF₃, CH₂=CFCF₃, CH₂=CHCF₃, CHF=CHCF₃ (E isomer), and CHF=CHCF₃ (Z isomer).

The additional monomer preferably includes at least one selected from the group consisting of tetrafluoroethylene (CF₂=CF₂), chlorotrifluoroethylene (CF₂=CFCl), and vinylidene fluoride (CH₂=CF₂) because they are well copolymerizable, more preferably includes at least one selected from the group consisting of tetrafluoroethylene and vinylidene fluoride. Thus, the polymerized unit based on the additional monomer is preferably a polymerized unit based on tetrafluoroethylene. The polymerized units based on the additional monomer at respective occurrences may be the same as or different from each other and the polymer (I) may contain polymerized units based on two or more different additional monomers.

Examples of the additional monomer also include monomers represented by the formula (n1-2): 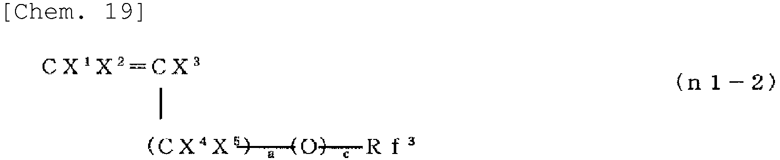 wherein X¹ and X² are the same as or different from each other and are each H or F; X³ is H, F, Cl, CH₃, or CF₃; X⁴ and X⁵ are the same as or different from each other and are each H or F; a and c are the same as or different from each other and are each 0 or 1; and Rf³ is a C1-C40 fluorine-containing alkyl group or a C2-C100 fluorine-containing alkyl group containing an ether bond.

Specific preferred examples include CH₂=CFCF₂-O-Rf³, CF₂=CF-O-Rf³, CF₂=CFCF₂-O-Rf³, CF₂=CF-Rf³, CH₂=CH-Rf³, and CH₂=CH-O-Rf³ (wherein Rf³ is as described for the formula (n1-2)).

Examples of the additional monomer also include a fluorine-containing acrylate monomer represented by the formula (n2-1): 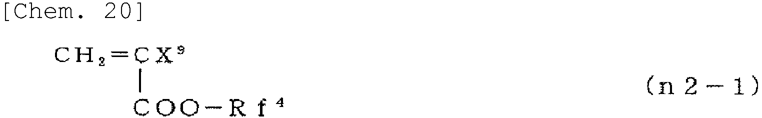 wherein X⁹ is H, F, or CH₃; Rf⁴ is C1-C40 fluorine-containing alkyl group or a C2-C100 fluorine-containing alkyl group containing an ether bond. Examples of the Rf⁴ group include 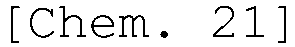 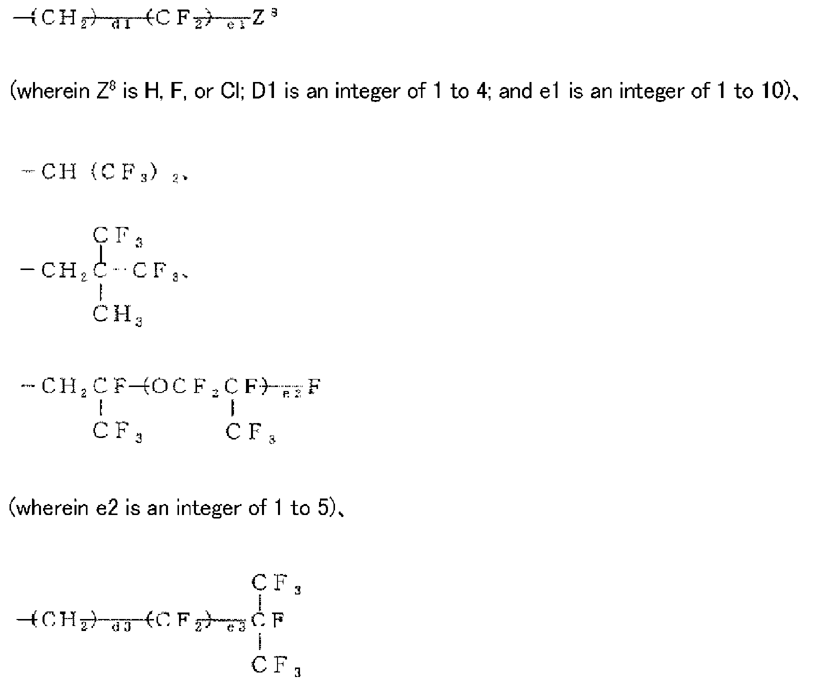 wherein d3 is an integer of 1 to 4 and e3 is an integer of 1 to 10.

Examples of the additional monomer also include a fluorine-containing vinyl ether represented by the formula (n2-2):

CH₂=CHO-Rf⁵ (n2-2)

wherein Rf⁵ is a C1-C40 fluorine-containing alkyl group or a C2-C100 fluorine-containing alkyl group containing an ether bond.

Specific preferred examples of the monomer represented by the formula (n2-2) include 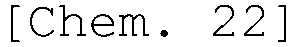 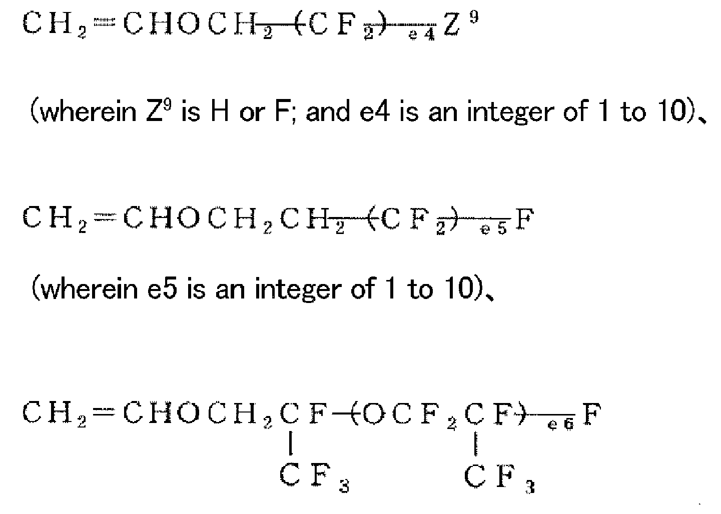 wherein e6 is an integer of 1 to 10.

More specifically, 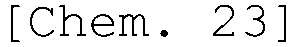 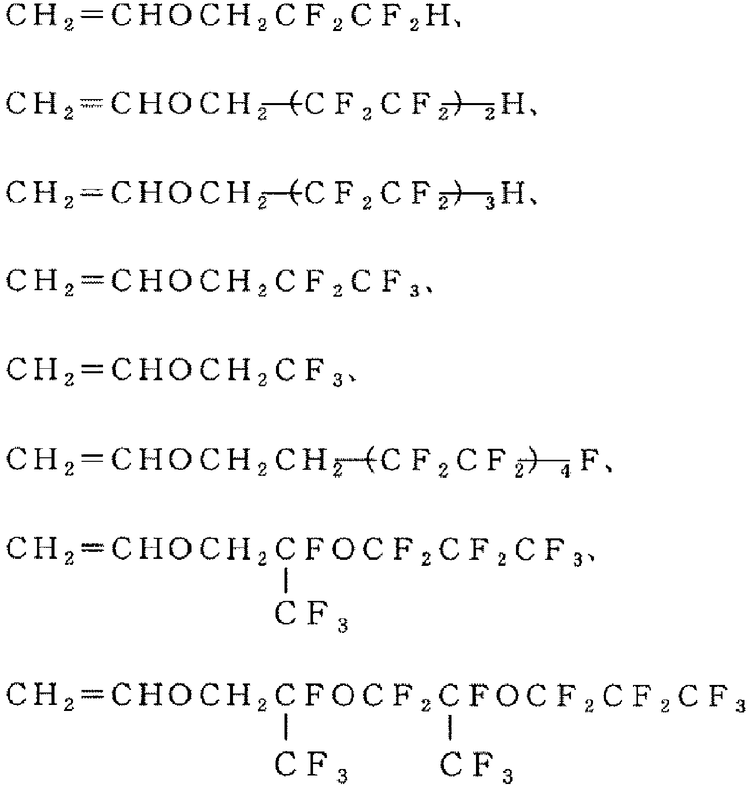 can be mentioned.

The examples further include a fluorine-containing allyl ether represented by the formula (n2-3):

CH₂=CHCH₂O-Rf⁶ (n2-3)

wherein Rf⁶ is a C1-C40 fluorine-containing alkyl group or a C2-C100 fluorine-containing alkyl group containing an ether bond and a fluorine-containing vinyl monomer represented by the formula (n2-4):

CH₂=CH-Rf⁷ (n2-4)

wherein Rf⁷ is a C1-C40 fluorine-containing alkyl group or a C2-C100 fluorine-containing alkyl group containing an ether bond.

As specific examples of the monomers represented by the formulas (n2-3) and (n2-4), monomers such as 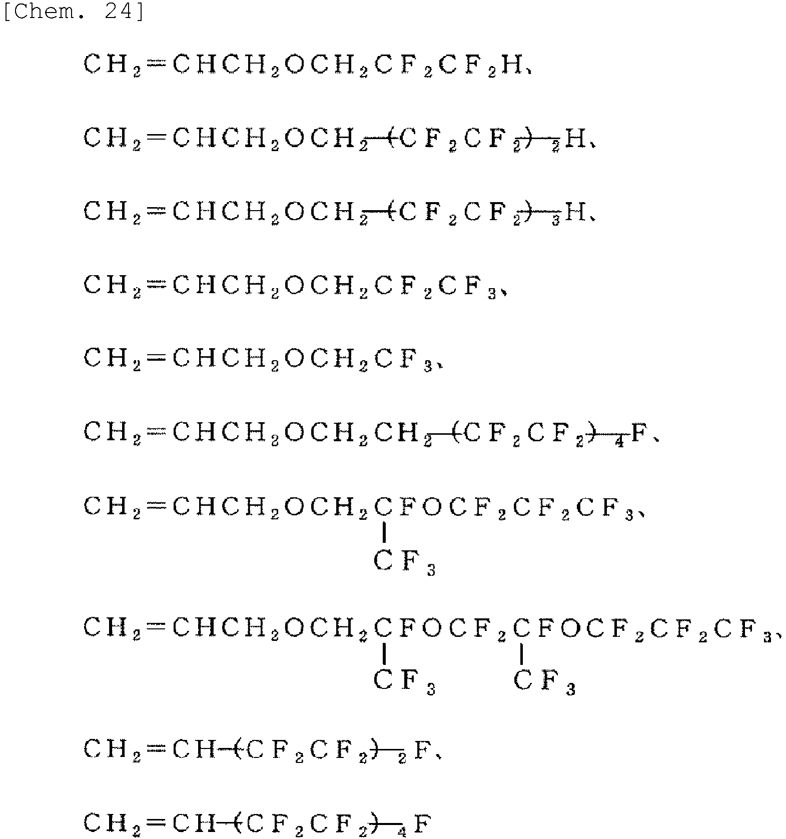 can be mentioned.

The polymer (I) commonly has an end group. The end group is an end group generated during polymerization. A typical end group is independently selected from hydrogen, iodine, bromine, a linear or branched alkyl group, and a linear or branched fluoroalkyl group, and may optionally contain at least one catenary heteroatom. The number of carbon atoms of the alkyl group or the fluoroalkyl group is preferably 1 to 20. These end groups are commonly generated from an initiator or chain transfer agent used in formation of the polymer (I) or generated during chain transfer reaction.

The polymer (I) contains the polymerized unit (I) in an amount, in order of preference, of 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, or 90 mol% or more based on the total polymerized units. Particularly preferably, the amount of the polymerized unit (I) is substantially 100 mol%. Most preferably, the polymer (I) consists of the polymerized unit (I).

The polymer (I) contains a polymerized unit based on an additional monomer copolymerizable with the monomer represented by the formula (I) in an amount, in order of preference, of 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, or 10 mol% or less based on the total polymerized units. Particularly preferably, the amount of a polymerized unit based on an additional monomer copolymerizable with the monomer represented by the formula (I) is substantially 0 mol%. Most preferably, the polymer (I) is free from a polymerized unit based on an additional monomer.

The polymer (I) has a number average molecular weight of preferably 0.1 × 10⁴ or higher, more preferably 0.2 × 10⁴ or higher, still more preferably 0.3 × 10⁴ or higher, further preferably 0.4 × 10⁴ or higher, even more preferably 0.5 × 10⁴ or higher, particularly preferably 1.0 × 10⁴ or higher, more particularly preferably 3.0 × 10⁴ or higher, most preferably 3.1 × 10⁴ or higher. The number average molecular weight is also preferably 75.0 × 10⁴ or lower, more preferably 50.0 × 10⁴ or lower, still more preferably 40.0 × 10⁴ or lower, further preferably 30.0 × 10⁴ or lower, particularly preferably 20.0 × 10⁴ or lower. The number average molecular weight and the weight average molecular weight are molecular weight values calculated by gel permeation chromatography (GPC) with monodisperse polystyrene standard. In the case where GPC measurement is not available, the number average molecular weight of the polymer (I) can be obtained from the correlation of the number average molecular weight calculated from the number of end groups obtained by NMR or FT-IR, for example, and the melt flow rate. The melt flow rate can be determined in conformity with JIS K7210.

The lower limit of the weight average molecular weight of the polymer (I) is, in order of preference, 0.2 × 10⁴ or higher, 0.4 × 10⁴ or higher, 0.6 × 10⁴ or higher, 0.8 × 10⁴ or higher, 1.0 × 10⁴ or higher, 2.0 × 10⁴ or higher, 5.0 × 10⁴ or higher, 10.0 × 10⁴ or higher, 15.0 × 10⁴ or higher, 20.0 × 10⁴ or higher, or 25.0 × 10⁴ or higher. The upper limit of the weight average molecular weight of the polymer (I) is, in order of preference, 150.0 × 10⁴ or lower, 100.0 × 10⁴ or lower, 60.0 × 10⁴ or lower, 50.0 × 10⁴ or lower, or 40.0 × 10⁴ or lower.

The polymer (I) has an ion exchange ratio (IXR) of preferably 53 or lower. The IXR is defined as the number of carbon atoms in the polymer main chain relative to the ionic group. A precursor group (e.g., -SO₂F) to be ionic as a result of hydrolysis is not regarded as an ionic group in the context of IXR determination.

The IXR is preferably 0.5 or higher, more preferably 1 or higher, still more preferably 3 or higher, further preferably 4 or higher, even more preferably 5 or higher. The IXR is also more preferably 43 or lower, still more preferably 33 or lower, particularly preferably 23 or lower.

The polymer (I) has an ion exchange capacity, in order of preference, of 0.80 meq/g or higher, 1.50 meq/g or higher, 1.75 meq/g or higher, 2.00 meq/g or higher, 2.20 meq/g or higher, higher than 2.20 meq/g, 2.50 meq/g or higher, 2.60 meq/g or higher, 3.00 meq/g or higher, or 3.50 meq/g or higher. The ion exchange capacity corresponds to the amount of the ionic groups (anionic groups) in the polymer (I) and can be determined by calculation from the composition of the polymer (I).

The ionic groups (anionic groups) in the polymer (I) are typically distributed along the polymer main chain. Preferably, the polymer (I) has the polymer chain with repeated side chains bonded to this main chain and these side chains have an ionic group.

The polymer (I) preferably contains an ionic group having a pKa of smaller than 10, more preferably smaller than 7. The ionic group of the polymer (I) is preferably selected from sulfonate, carboxylate, phosphonate, and phosphate.

The phrase "sulfonate, carboxylate, phosphonate, and phosphate" is intended to refer to the respective salts or the corresponding acids capable of forming the respective salts. In the case of using a salt, this salt is preferably an alkali metal salt or an ammonium salt. The ionic group is preferably a sulfonate group.

The polymer (I) preferably has water solubility. The "water solubility" means an ability to easily dissolve or disperse in an aqueous medium. For the polymer (I) having water solubility, dynamic light scattering (DLS), for example, cannot measure its particle size or can indicate a particle size of 5 nm or less.

An aqueous solution of the polymer (I) has a viscosity of preferably 5.0 mPa·s or higher, more preferably 8.0 mPa·s or higher, still more preferably 10.0 mPa·s or higher, particularly preferably 12.0 mPa·s or higher, most preferably 14.0 mPa·s or higher, while preferably 100.0 mPa·s or lower, more preferably 50.0 mPa·s or lower, still more preferably 25.0 mPa·s or lower, further preferably 20.0mPa·s or lower.

The viscosity of an aqueous solution of the polymer (I) can be specified by preparing an aqueous solution in which the amount of the polymer (I) in the aqueous solution is adjusted to 33% by mass of the aqueous solution and then measuring the viscosity of the resulting aqueous solution at 20°C using a tuning fork vibro viscometer (model: SV-10) available from A & D Co., Ltd.

The polymer (I) has a critical micelle concentration (CMC) of preferably 0.1% by mass or higher, more preferably 0.5% by mass or higher, still more preferably 1% by mass or higher, while preferably 20% by mass or lower, more preferably 10% by mass or lower, still more preferably 5% by mass or lower.

The critical micelle concentration of the polymer (I) can be determined by measuring the surface tension. The surface tension can be determined using a surface tensiometer model CBVP-A3 available from Kyowa Interface Science Co., Ltd., for example.

The polymer (I) has an acid value of preferably 60 or higher, more preferably 90 or higher, still more preferably 120 or higher, particularly preferably 150 or higher, most preferably 180 or higher; the upper limit is preferably, but is not limited to, 300 or lower.

In the case where the polymer (I) contains an anionic group different from an acid-form functional group, such as -COOM^{a}, -SO₃M^{a}, -OSO₃M^{a}, or C(CF₃)₂OM^{a} (wherein M^{a} is a metal atom, NR²₄, imidazolium optionally containing a substituent, pyridinium optionally containing a substituent, or phosphonium optionally containing a substituent, and R² is H or an organic group), the acid value of the polymer (I) can be determined by acid-base titration after the above group is converted into its acid-form group.

A dimer and trimer of the monomer (I) represented by the formula (I) are contained in an amount of preferably 1.0% by mass or less, more preferably 0.1% by mass or less, still more preferably 0.01% by mass or less, particularly preferably 0.001% by mass or less, most preferably 0.0001% by mass or less relative to the polymer (I).

The dimer and trimer can be removed by ultrafiltration, microfiltration, dialysis membrane treatment, or the like.

The compound (II) is represented by the formula (II), formula (II):

T^{X}-X^{A}-R^{FA1}-R^{FA2}-X^{A}-T^{X}' (II)

wherein
R^{FA1} is -Rf¹ₚ-R^{F}-O_{q}-;
R^{FA2} is -Rf²ₚ-R^{FX}-O_{q}-,
   where R^{F} is a divalent fluoropolyether group,
   R^{FX} is a divalent fluoropolyether group containing an anionic group,
   Rf¹ and Rf² are each independently a C1-C6 alkylene group optionally substituted with one or more fluorine atoms,
   each p is independently 0 or 1, and
   each q is independently 0 or 1;
each X^{A} is independently a single bond or a divalent to decavalent group; and
T^{X} and T^{X}' are each independently selected from the group consisting of (i) a C1-C24 (hydro)(fluoro)carbon group optionally containing one or more of H, O, and Cl and free from the anionic group and (ii) a C1-C24 (hydro)(fluoro)carbon group containing at least one anionic group.

In the formula (II), R^{FA1} is -Rf¹ₚ-R^{F}-O_{q}-.

In the formula (II), R^{FA2} is -Rf²ₚ-R^{FX}-O_{q}-.

In the formula (II), Rf¹ and Rf² are each independently a C1-C6 alkylene group optionally substituted with one or more fluorine atoms.

The "C1-C6 alkylene group" in the C1-C6 alkylene group optionally substituted with one or more fluorine atoms may be linear or branched, and is preferably a C1-C3 linear or branched alkylene group, more preferably a C1-C3 linear alkylene group.

Rf¹ and Rf² are each preferably a C1-C6 alkylene group optionally substituted with one or more fluorine atoms, more preferably a C1-C6 perfluoroalkylene group, still more preferably a C1-C3 perfluoroalkylene group.

The C1-C6 perfluoroalkylene group may be linear or branched, and is preferably a C1-C3 linear or branched perfluoroalkylene group, more preferably a C1-C3 linear perfluoroalkylene group such as, specifically, -CF₂-, - CF₂CF₂-, or -CF₂CF₂CF₂-.

In the formula, each p is independently 0 or 1. In one case, p is 0. In another case, p is 1.

In the formula, each q is independently 0 or 1. In one case, q is 0. In another embodiment, q is 1.

In the formula (II), R^{F} is a divalent fluoropolyether group.

R^{F} is preferably a group represented by the formula:

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein
each R^{Fa} is independently a hydrogen atom, a fluorine atom, or a chlorine atom; and
a, b, c, d, e, and f are each independently an integer of 0 to 200, the sum of a, b, c, d, e, and f is 1 or more, repeating units enclosed in parentheses with a, b, c, d, e, and f are present in an arbitrary order in the formula, and at least one of a, b, c, e, and f is 1 or more when all R^{Fa}s are hydrogen atoms or chlorine atoms.

R^{Fa} is preferably a hydrogen atom or a fluorine atom, more preferably a fluorine atom. At least one of a, b, c, e, and f is 1 or more when all R^{Fa}s are hydrogen atoms or chlorine atoms.

a, b, c, d, e, and f may be each independently preferably an integer of 0 to 100, more preferably an integer of 0 to 50.

The sum of a, b, c, d, e, and f is preferably 5 or more, more preferably 10 or more, still more preferably 20 or more, and may be, for example, 25 or more or 30 or more. The sum of a, b, c, d, e, and f is preferably 200 or less, more preferably 100 or less, still more preferably 60 or less, and may be, for example, 50 or less or 30 or less.

These repeating units may be linear or branched and may include a cyclic structure. For example, -(OC₆F₁₂)- may be -(OCF₂CF₂CF₂CF₂CF₂CF₂)-, -(OCF(CF₃)CF₂CF₂CF₂CF₂)-, - (OCF₂CF(CF₃)CF₂CF₂CF₂)-, -(OCF₂CF₂CF(CF₃)CF₂CF₂)-, - (OCF₂CF₂CF₂CF(CF₃)CF₂)-, -(OCF₂CF₂CF₂CF₂CF(CF₃))- or the like. -(OC₅F₁₀)- may be -(OCF₂CF₂CF₂CF₂CF₂)-, -(OCF(CF₃)CF₂CF₂CF₂)-, -(OCF₂CF(CF₃)CF₂CF₂)-, -(OCF₂CF₂CF(CF₃)CF₂)-, - (OCF₂CF₂CF₂CF(CF₃)) or the like. -(OC4_{F}8₎- may be any of - (OCF₂CF₂CF₂CF₂)-, -(OCF(CF₃)CF₂CF₂)-, -(OCF₂CF(CF₃)CF₂)-, - (OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F₅))-. - (OC₃F₆)- (in other words, R^{Fa} in the formula is a fluorine atom) may be any of -(OCF₂CF₂CF₂)-, -(OCF(CF₃)CF₂)-, and - (OCF₂CF(CF₃))-. -(OC2_{F}4₎- may be either -(OCF₂CF₂)- or - (OCF(CF₃))-.

The cyclic structure may be the following three-membered, four-membered, five-membered, or six-membered ring.

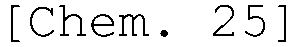

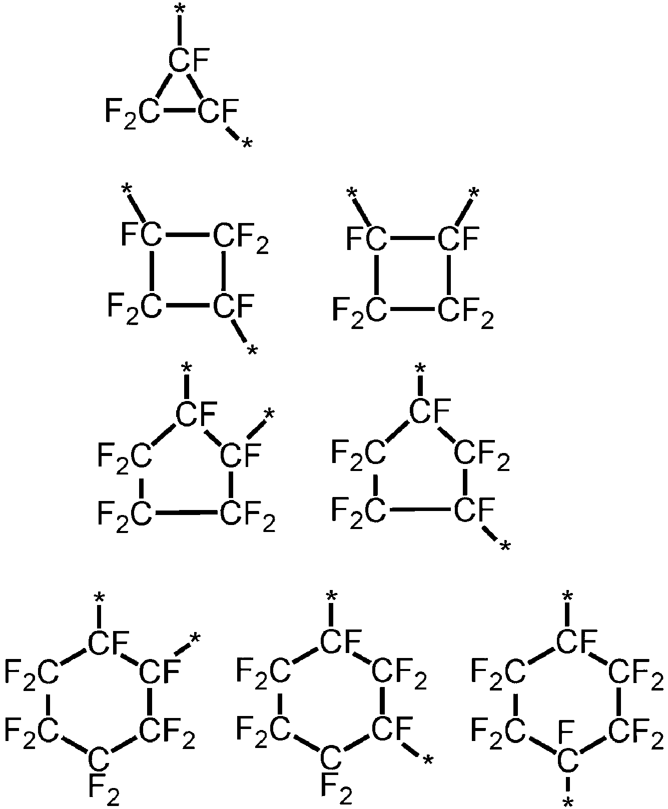

In the formulas, * indicates the bonding position.

The cyclic structure is preferably a four-membered, five-membered, or six-membered ring, more preferably a four-membered or six-membered ring.

The repeating units having a cyclic structure may be preferably the following units.

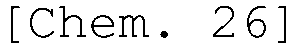

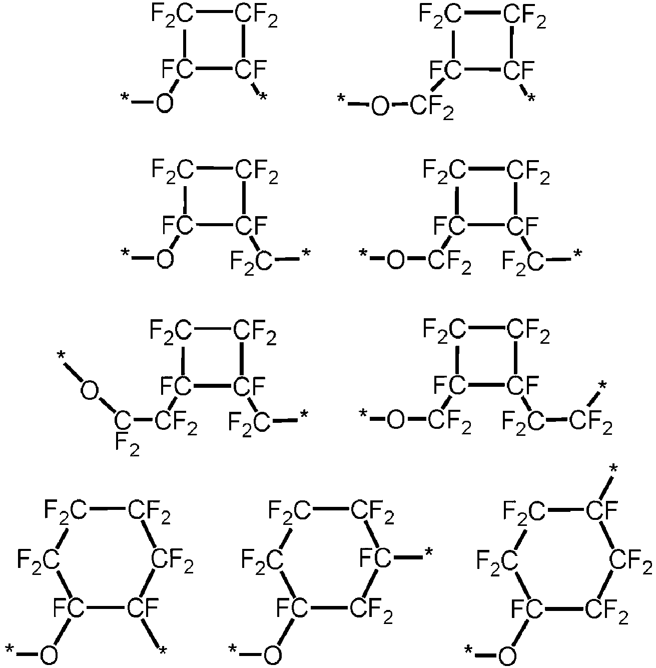

In the formulas, * indicates the bonding position.

In one case, the repeating units are linear.

In one case, the repeating units are branched.

In one case, R^{F} is a group represented by any of the following formulas (f1) to (f6):

-(OC₃F₆)_{d}-(OC₂F₄)ₑ- (f1)

wherein d is an integer of 1 to 200 and e is 0 or 1, preferably 0;

-(OC₄F₈)_{c}-(OC₃F₆)_{d}-(OC₂F₄)ₑ-(OCF₂)_{f}- (f2)

wherein c and d are each independently an integer of 0 to 30, e and f are each independently an integer of 1 to 200,
the sum of c, d, e, and f is 2 or more; and
repeating units enclosed in parentheses with c, d, e, and f are present in an arbitrary order in the formula;

   -(R⁶-R⁷)_{g}- (f3)

   wherein R⁶ is OCF₂ or OC₂F₄,
R⁷ is a group selected from OC₂F₄, OC₃F₆, OC₄F₈, OC₅F₁₀, and OC₆F₁₂ or a combination of two or three groups selected from the aforementioned groups,
g is an integer of 2 to 100;

   -(R⁶-R⁷)_{g}-R^{r}-(R^{7'}-R^{6'})_{g'}- (f4)

   wherein R⁶ is OCF₂ or OC₂F₄,
R⁷ is a group selected from OC₂F₄, OC₃F₆, OC₄F₈, OC₅F₁₀, and OC₆F₁₂ or a combination of two or three groups selected from the aforementioned groups,
R^{6'} is OCF₂ or OC₂F₄,
R^{7'} is a group selected from OC₂F₄, OC₃F₆, OC₄F₈, OC₅F₁₀, and OC₆F₁₂ or a combination of two or three groups selected from the aforementioned groups,
g is an integer of 2 to 100,
g' is an integer of 2 to 100, and
R^{r} is any of 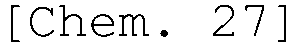 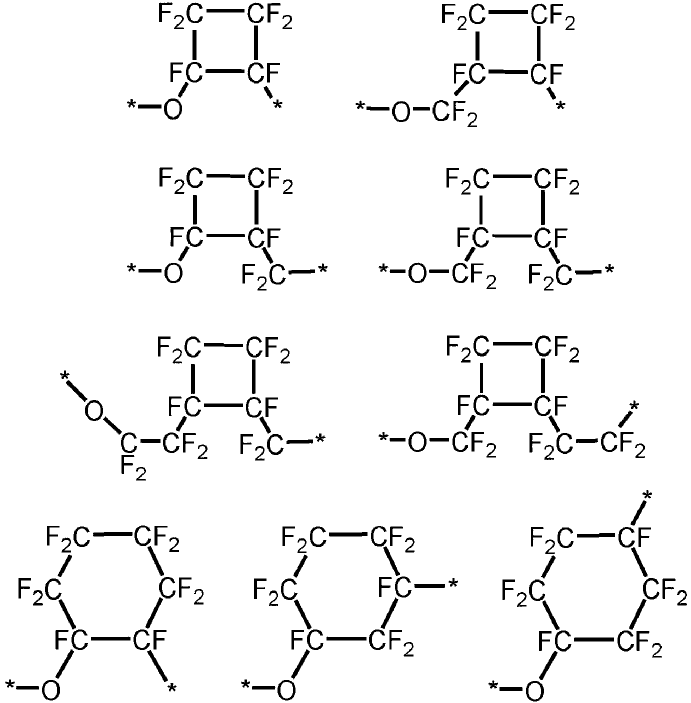 wherein * indicates the bonding position;

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)

   wherein e is an integer of 1 to 200, a, b, c, d, and f are each independently an integer of 0 to 200, and repeating units enclosed in parentheses with a, b, c, d, e, and f are present in an arbitrary order in the formula; and

   -(OC₆F₁₂)ₐ-(OC₃F₁₀)_{b}-(OC₄F₈)_{c}-(OC₃F₆)_{d}-(OC₂F₄)ₑ-(OCF₂)_{f}- (f6)

   wherein f is an integer of 1 to 200, a, b, c, d, and e are each independently an integer of 0 to 200, and repeating units enclosed in parentheses with a, b, c, d, e, and f are present in an arbitrary order in the formula.

In the formula (f1), d is preferably an integer of 5 to 200, more preferably 10 to 100, still more preferably 15 to 50, for example 25 to 35. OC3_{F}6 in the formula (f1) is preferably (OCF₂CF₂CF₂), (OCF(CF₃)CF₂), or (OCF₂CF(CF₃)), more preferably (OCF₂CF₂CF₂). In one case, e is 0. In another case, e is 1. (OC2_{F}4₎ in the formula (f1) is preferably (OCF₂CF₂) or (OCF(CF₃)), more preferably (OCF₂CF₂).

In the formula (f2), e and f are each independently an integer of preferably 5 to 200, more preferably 10 to 200. The sum of c, d, e, and f is preferably 5 or more, more preferably 10 or more, and may be, for example, 15 or more or 20 or more. In one case, the formula (f2) is preferably a group represented by -(OCF₂CF₂CF₂CF₂)_{c}-(OCF₂CF₂CF₂)_{d}-(OCF₂CF₂)ₑ-(OCF₂)_{f}-. In another case, the formula (f2) may be a group represented by -(OC₂F₄)ₑ-(OCF₂)_{f}-.

In the formula (f3), R⁶ is preferably OC₂F₄. In the formula (f3), R⁷ is preferably a group selected from OC₂F₄, OC₃F₆, and OC₄F₈, or a combination of two or three groups independently selected from the aforementioned groups, more preferably OC₃F₆ or OC₄F₈. Non-limiting examples of the combination of two or three groups independently selected from OC₂F₄, OC₃F₆, and OC₄F₈ include -OC₂F₄OC₃F₆-, - OC₂F₄OC₄F₈-, -OC₃F₆OC₂F₄-, -OC₃F₆OC₃F₆-, -OC₃F₆OC₄F₈-, - OC₄F₈OC₄F₈-, -OC₄F₈OC₃F₆-, -OC₄F₈OC₂F₄-, -OC₂F₄OC₂F₄OC₃F₆-, - OC₂F₄OC₂F₄OC₄F₈-, -OC₂F₄OC₃F₆OC₂F₄-, -OC₂F₄OC₃F₆OC₃F₆-, - OC₂F₄OC₄F₈OC₂F₄-, -OC₃F₆OC₂F₄OC₂F₄-, -OC₃F₆OC₂F₄OC₃F₆-, - OC₃F₆OC₃F₆OC₂F₄-, and -OC₄F₈OC₂F₄OC₂F₄-. In the formula (f3), g is preferably an integer of 3 or more, more preferably 5 or more. g is preferably an integer of 50 or less. In the formula (f3), OC₂F₄, OC₃F₆, OC₄F₈, OC₅F₁₀, and OC₆F₁₂ may be linear or branched, and are preferably linear. In this case, the formula (f3) preferably represents -(OC₂F₄-OC₃F₆)_{g}- or -(OC₂F₄-OC₄F₈)_{g}-.

In the formula (f4), R⁶, R⁷, and g have the same meanings in the same manner as those described for the formula (f3). R6^{',} R^{7'}, and g^{'} have the same meanings in the same manner as R⁶, R⁷, and g in the formula (f3). Rr is preferably any of 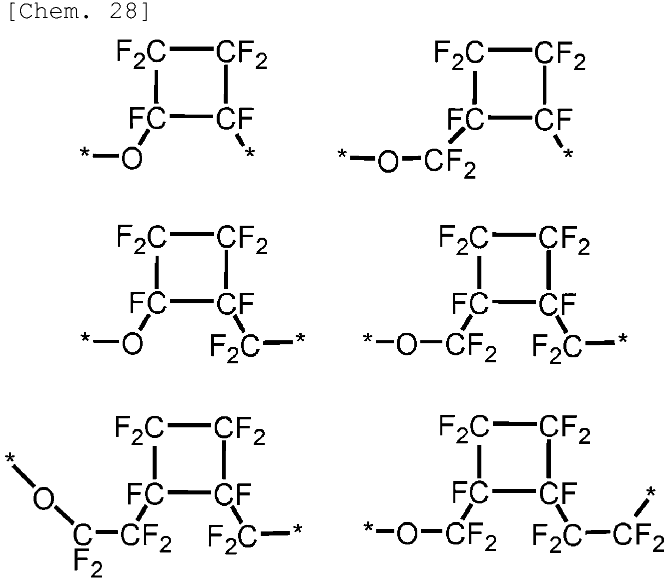 wherein * indicates the bonding position, more preferably 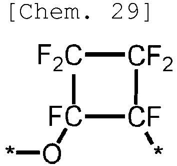 wherein * indicates the bonding position.

In the formula (f5), e is preferably an integer of 1 to 100, more preferably 5 to 100. The sum of a, b, c, d, e, and f is preferably 5 or more, more preferably 10 or more, and is, for example, 10 to 100.

In the formula (f6), f is preferably an integer of 1 to 100, more preferably 5 to 100. The sum of a, b, c, d, e, and f is preferably 5 or more, more preferably 10 or more, and is, for example, 10 to 100.

In one case, R^{F} is a group represented by the formula (f1).

In one case, R^{F} is a group represented by the formula (f2).

In one case, R^{F} is a group represented by the formula (f3) or (f4).

In one case, R^{F} is a group represented by the formula (f3).

In one case, R^{F} is a group represented by the formula (f4).

In one case, R^{F} is a group represented by the formula (f5).

In one case, R^{F} is a group represented by the formula (f6).

The ratio of e to f (hereafter, referred to as "e/f ratio") in R^{F} is preferably 0.1 to 10, more preferably 0.2 to 5, still more preferably 0.2 to 2, further preferably 0.2 to 1.5, particularly preferably 0.2 to 0.85. Setting the e/f ratio to 0.1 or higher can further improve the stability of the compound. The higher the e/f ratio, the higher the stability of the compound.

In one case, from the standpoint of heat resistance, the e/f ratio may be preferably 1.0 or higher, more preferably 1.0 to 2.0.

In the formula (II), R^{FX} is a divalent fluoropolyether group containing an anionic group.

Examples of the anionic group include anionic groups such as a sulfate group and a carboxylate group as well as functional groups that give anionic groups including an acid group such as -COOH and an acid base such as -COONH₄. The anionic group is preferably a sulfate group, a carboxylate group, a phosphate group, a phosphonate group, a sulfonate group, or -C(CF₃)₂OM^{a} (wherein M^{a} is -H, a metal atom, -NR²₄, imidazolium optionally containing a substituent, pyridinium optionally containing a substituent, or phosphonium optionally containing a substituent; and R² is H or an organic group).

The fluoropolyether group in R^{FX} may be a group in which one or more hydrogen atoms of the polyether group are replaced by fluorine atoms, and is preferably a perfluoropolyether group.

R^{FX} is preferably a divalent fluoropolyether group containing a repeating unit selected from the group consisting of

(a1) -CF₂CF(Gₓ)O-

(b1) -CF(Gₓ)O-

(c1) -CF₂(CF₂)ₓ₁CF(Gₓ)(CF₂)ₓ₂O-

(wherein X1 and X2 are each an integer of 0 or 1 to 2, provided that the value of X1 + X2 is at least 1)
where
Gₓ includes a C1-C5 perfluoro(oxy)alkylene group containing at least one anionic group described in detail above.

The repeating units constituting R^{F} and R^{FX} may be present in any order.

In the compound (II), the number average molecular weights of the R^{FA1} and R^{FA2} portions are each, but not limited to, for example, 500 to 30000, preferably 1500 to 30000, more preferably 2000 to 10000. The number average molecular weights of R^{FA1} and R^{FA2} herein are measured by ¹⁹F-NMR.

In the formula (II), X^{A} is understood to be a linker connecting a fluoropolyether moiety (R^{FA1}, R^{FA2}) and a moiety containing an anionic group (T^{X}, T^{X'}). XA therefore may be a single bond or any other group, as long as the compound represented by the formula (II) can exist stably.

Each X^{A} is independently a single bond or a divalent to decavalent group.

Each X^{A} is independently preferably a single bond or a divalent to decavalent organic group.

In one case, X^{A} is free from a siloxane bond (-Si-O-Si-).

The divalent to decavalent group for X^{A} is preferably a divalent to octavalent group. In one case, the divalent to decavalent group is preferably a divalent to tetravalent group, more preferably a divalent group. In another case, the divalent to decavalent group is preferably a divalent to octavalent group, more preferably a trivalent to hexavalent group.

In one case, X^{A} is a single bond or a divalent group.

The divalent group is preferably an oxygen atom, a sulfur atom, NH, CO, or a divalent organic group, more preferably an oxygen atom or a divalent organic group, still more preferably a divalent organic group.

In one case, X^{A} is a trivalent to hexavalent group, preferably a trivalent to hexavalent organic group.

In one case, X^{A} is a trivalent group, preferably a trivalent organic group.

In one case, X^{A} is a single bond.

In another case, X^{A} is a divalent organic group.

In one case, X^{A} is, for example, a single bond or a divalent organic group represented by the following formula:

-(R⁵¹)ₚ₅-(X⁵¹)_{q5}-

wherein
R⁵¹ is a single bond, -(CH₂)ₛ₅-, or an o-, m-, or p-phenylene group, preferably -(CH₂)ₛ₅-,
   where s5 is an integer of 1 to 20, preferably an integer of 1 to 6, more preferably an integer of 1 to 3, still more preferably 1 or 2;
X⁵¹ is -(X⁵²)ₗ₅-,
   where each X⁵² is independently a group selected from the group consisting of -O-, -S-, an o-, m-, or p-phenylene group, -C(O)O-, -Si(R⁵³)₂-, -(Si(R⁵³)₂O)ₘ₅-Si(R⁵³)₂-, -CONR⁵⁴-, -O-CONR⁵⁴-, -NR⁵⁴-, and -(CH₂)ₙ₅-,
      wherein each R⁵³ is independently a phenyl group, a C1-C6 alkyl group, or a C1-C6 alkoxy group, preferably a phenyl group or a C1-C6 alkyl group, more preferably a methyl group,
      each R⁵⁴ is independently a hydrogen atom, a phenyl group, or a C1-C6 alkyl group (preferably a methyl group),
      m5s at respective occurrences are each independently an integer of 1 to 100, preferably an integer of 1 to 20, and
      n5s at respective occurrences are each independently an integer of 1 to 20, preferably an integer of 1 to 6, more preferably an integer of 1 to 3, and
   l5 is an integer of 1 to 10, preferably an integer of 1 to 5, more preferably an integer of 1 to 3;
p5 is 0 or 1;
q5 is 0 or 1;
at least one of p5 or q5 is 1, and repeating units enclosed in parentheses with p5 and p5 are present in an arbitrary order; and
the right-hand side of X^{A} binds to T^{X} or T^{X'}.

Here, X^{A} (typically, the hydrogen atom of X^{A}) may be substituted with one or more substituents selected from a fluorine atom, a C1-C3 alkyl group, and a C1-C3 fluoroalkyl group. In a preferred case, X^{A} is not substituted with any of these groups.

In a preferred case, each X^{A} is independently - (R⁵¹)ₚ₅-(X⁵¹)_{q5}-R⁵²-. R5² is a single bond, -(CH₂)ₜ₅-, or an o-, m-, or p-phenylene group, preferably -(CH₂)ₜ₅-. t5 is an integer of 1 to 20, preferably an integer of 2 to 6, more preferably an integer of 2 or 3. Here, R⁵² (typically, the hydrogen atom of R⁵²) may be substituted with one or more substituents selected from a fluorine atom, a C1-C3 alkyl group, and a C1-C3 fluoroalkyl group. In a preferred case, R⁵² is not substituted with any of these groups.

Preferably, each X^{A} may be independently
a single bond,
a C1-C20 alkylene group,
   - R⁵¹-X⁵³-R⁵²-, or
   - X⁵⁴-R⁵-
      wherein R⁵¹ and R⁵² are as defined above;
      X⁵³ is

         -O-,

         -S-,

         -C(O)O-,

         -CONR⁵⁴-,

         -O-CONR⁵⁴-,

         -Si(R⁵³)₂-,

         -(Si(R⁵³)₂O)ₘ₅-Si(R⁵³)₂-,

         -O-(CH₂)ᵤ₅-(Si(R⁵³)₂O)ₘ₅-Si(R⁵³)₂-,

         -O-(CH₂)ᵤ₅-Si(R⁵³)₂-O-Si(R⁵³)₂-CH₂CH₂-Si(R⁵³)₂-O-Si(R⁵³)₂-,

         -O-(CH₂)ᵤ₅-Si(OCH₃)₂OSi(OCH₃)₂-,

         -CONR⁵⁴-(CH₂)ᵤ₅-(Si(R⁵³)₂O)ₘ₅-Si(R⁵³)₂-,

         -CONR⁵⁴-(CH₂)ᵤ₅-N(R⁵⁴)-, or

         -CONR⁵⁴-(o-, m-, or p-phenylene)-Si(R⁵³)₂-,

         wherein R⁵³, R⁵⁴, and m5 are as defined above,
         u5 is an integer of 1 to 20, preferably an integer of 2 to 6, more preferably an integer of 2 or 3;
      X⁵⁴ is

         -S-,

         -C(O)O-,

         -CONR⁵⁴-,

         -O-CONR⁵⁴-,

         -CONR⁵⁴-(CH₂)ᵤ₅-(Si(R⁵⁴)₂O)ₘ₅-Si(R⁵⁴)₂-,

         -CONR⁵⁴-(CH₂)ᵤ₅-N(R⁵⁴)-, or

         -CONR⁵⁴-(o-, m-, or p-phenylene)-Si(R⁵³)₂-

         wherein the symbols are as defined above.

More preferably, each X^{A} is independently
a single bond,
a C1-C20 alkylene group,
   - (CH₂)ₛ₅-X⁵³-,
   - (CH₂)ₛ₅-X⁵³-(CH₂)ₜ₅-,
   - X⁵⁴-, or
   - X⁵⁴-(CH₂)ₜ₅-,
   wherein X⁵³, X⁵⁴, s5, and t5 are as defined above.

More preferably, each X^{A} may be independently
a single bond,
a C1-C20 alkylene group,
-(CH₂)ₛ₅-X⁵³-(CH₂)ₜ₅-, or
-X⁵⁴-(CH₂)ₜ₅-
wherein the symbols are as defined above.

In a preferred case, each X^{A} may be independently
a single bond,
a C1-C20 alkylene group,
-(CH₂)ₛ₅-X⁵³-, or
-(CH₂)ₛ₅-X⁵³-(CH₂)ₜ₅-,
wherein

X⁵³ is -O-, -CONR⁵⁴-, or -O-CONR⁵⁴-,
where each R⁵⁴ is independently a hydrogen atom, a phenyl group, or a C1-C6 alkyl group;
s5 is an integer of 1 to 20; and
t5 is an integer of 1 to 20.

In a preferred case, each X^{A} may be independently
- (CH₂)ₛ₅-O-(CH₂)ₜ₅- or
- CONR⁵⁴-(CH₂)ₜ₅-
wherein
each R⁵⁴ is independently a hydrogen atom, a phenyl group, or a C1-C6 alkyl group;
s5 is an integer of 1 to 20; and
t5 is an integer of 1 to 20.

In one case, each X^{A} is independently
a single bond,
a C1-C20 alkylene group,
-(CH₂)ₛ₅-O-(CH₂)ₜ₅-,
-(CH₂)ₛ₅-(Si(R⁵³)₂O)ₘ₅-Si(R⁵³)₂-(CH₂)ₜ₅-,
-(CH₂)ₛ₅-O-(CH₂)ᵤ₅-(Si(R⁵³)₂O)ₘ₅-Si(R⁵³)₂-(CH₂)ₜ₅-, or
-(CH₂)ₛ₅-O-(CH₂)ₜ₅-Si(R⁵³)₂-(CH₂)ᵤ₅-Si(R⁵³)₂-(CᵥH₂ᵥ)-
wherein R⁵³, m5, s5, t5, and u5 are as defined above, and v is an integer of 1 to 20, preferably an integer of 2 to 6, more preferably an integer of 2 or 3.

In the above formula, -(CᵥH₂ᵥ)- may be linear or branched, and may be, for example, -CH₂CH₂-, -CH₂CH₂CH₂-, - CH(CH₃)-, or -CH(CH₃)CH₂-.

Each X^{A} may be independently substituted with one or more substituents selected from a fluorine atom, a C1-C3 alkyl group, and a C1-C3 fluoroalkyl group (preferably, a C1-C3 perfluoroalkyl group). In one case, X^{A} is not substituted.

In one case, each X^{A} is independently other than a - O-(C1-C6 alkylene group).

In another case, examples of X^{A} include the following groups.

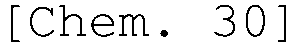

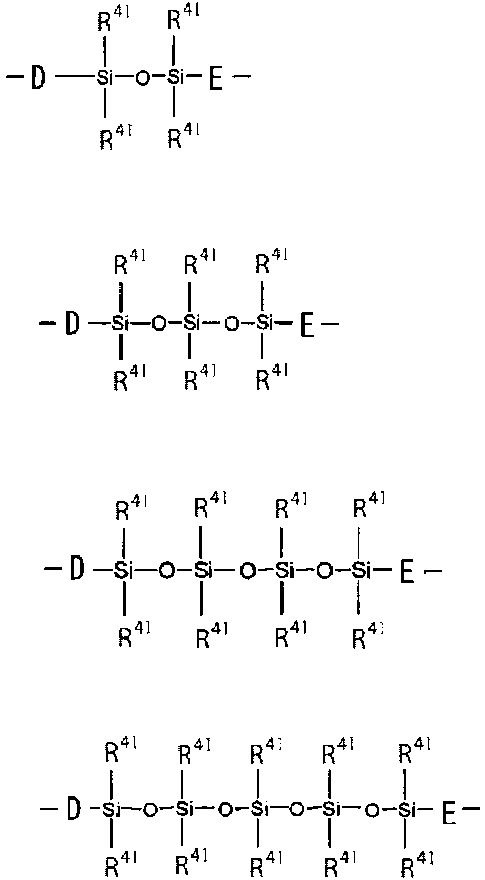

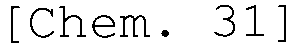

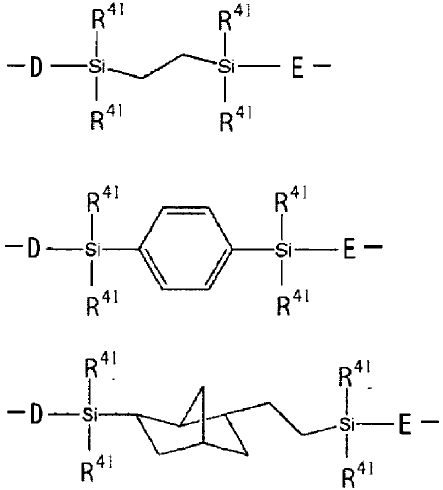

In the formulas, each R⁴¹ is independently a hydrogen atom, a phenyl group, a C1-C6 alkyl group, or a C1-C6 alkoxy group, preferably a methyl group;
D is a group selected from

   -CH₂O(CH₂)₂-,

   -CH₂O(CH₂)₃-,

   -CF₂O(CH₂)₃-,

   -(CH₂)2-,

   -(CH₂)3-,

   -(CH₂)4-,

   -CONH-(CH₂)₃-,

   -CON(CH₃)-(CH₂)₃-,

   -CON(Ph)-(CH₂)₃- (wherein Ph represents phenyl), and

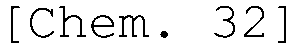

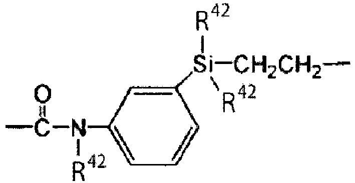

   wherein each R⁴² is independently a hydrogen atom, a C1-C6 alkyl group, or a C1-C6 alkoxy group, preferably a methyl group or a methoxy group, more preferably a methyl group;
E is -(CH₂)ₙ- wherein n is an integer of 2 to 6; and
D binds to R^{FA1} or R^{FA2} of the molecular main chain, and E binds to R^{Si}.

Specific examples of X^{A} include
a single bond,

   -CH₂OCH₂-,

   -CH₂O(CH₂)₂-,

   -CH₂O(CH₂)₃-,

   -CH₂O(CH₂)₄-,

   -CH₂O(CH₂)₅-,

   -CH₂O(CH₂)₆-,

   -CH₂O(CH₂)₃Si(CH₃)₂OSi(CH₃)₂(CH₂)₂-,

   -CH₂O(CH₂)₃Si(CH₃)₂OSi(CH₃)₂OSi(CH₃)₂(CH₂)₂-,

   -CH₂O(CH₂)₃Si(CH₃)₂O(Si(CH₃)₂O)₂Si(CH₃)₂(CH₂)₂-,

   -CH₂O(CH₂)₃Si(CH₃)₂O(Si(CH₃)₂O)₃Si(CH₃)₂(CH₂)₂-,

   -CH₂O(CH₂)₃Si(CH₃)₂O(Si(CH₃)₂O)₁₀Si(CH₃)₂(CH₂)₂-,

   -CH₂O(CH₂)₃Si(CH₃)₂O(Si(CH₃)₂O)₂₀Si(CH₃)₂(CH₂)₂-,

   -CH₂OCF₂CHFOCF₂-,

   -CH₂OCF₂CHFOCF₂CF₂-,

   -CH₂OCF₂CHFOCF₂CF₂CF₂-,

   -CH₂OCH₂CF₂CF₂OCF₂-,

   -CH₂OCH₂CF₂CF₂OCF₂CF₂-,

   -CH₂OCH₂CF₂CF₂OCF₂CF₂CF₂-,

   -CH₂OCH₂CF₂CF₂OCF(CF₃)CF₂OCF₂-,

   -CH₂OCH₂CF₂CF₂OCF(CF₃)CF₂OCF₂CF₂-,

   -CH₂OCH₂CF₂CF₂OCF(CF₃)CF₂OCF₂CF₂CF₂-,

   -CH₂OCH₂CHFCF₂OCF₂-,

   -CH₂OCH₂CHFCF₂OCF₂CF₂-,

   -CH₂OCH₂CHFCF₂OCF₂CF₂CF₂-,

   -CH₂OCH₂CHFCF₂OCF(CF₃)CF₂OCF₂-,

   -CH₂OCH₂CHFCF₂OCF(CF₃)CF₂OCF₂CF₂-,

   -CH₂OCH₂CHFCF₂OCF(CF₃)CF₂OCF₂CF₂CF₂-,

   -CH₂OCF₂CHFOCF₂CF₂CF₂-C(O)NH-CH₂-,

   -CH₂OCH₂(CH₂)₇CH₂Si(OCH₃)₂OSi(OCH₃)₂(CH₂)₂Si(OCH₃)₂OSi(OCH₃)₂(CH₂ )₂-,

   -CH₂OCH₂CH₂CH₂Si(OCH₃)₂OSi(OCH₃)₂(CH₂)₃-,

   -CH₂OCH₂CH₂CH₂Si(OCH₂CH₃)₂OSi(OCH₂CH₃)₂(CH₂)₃-,

   -CH₂OCH₂CH₂CH₂Si(OCH₃)₂OSi(OCH₃)₂(CH₂)₂-,

   -CH₂OCH₂CH₂CH₂Si(OCH₂CH₃)₂OSi(OCH₂CH₃)₂(CH₂)₂-,

   -(CH₂)₂-Si(CH₃)₂-(CH₂)₂-,

   -CH₂-,

   -(CH₂)₂-,

   -(CH₂)₃-,

   -(CH₂)₄-,

   -(CH₂)₅-,

   -(CH₂)₆-,

   -CO-,

   -CONH-,

   -CONH-CH₂-,

   -CONH-(CH₂)₂-,

   -CONH-(CH₂)₃-,

   -CONH-(CH₂)₄-,

   -CONH-(CH₂)₅-,

   -CONH-(CH₂)₆-,

   -CON(CH₃)-CH₂-,

   -CON(CH₃)-(CH₂)₂-,

   -CON(CH₃)-(CH₂)₃-,

   -CON(CH₃)-(CH₂)₄-,

   -CON(CH₃)-(CH₂)₅-,

   -CON(CH₃)-(CH₂)₆-,

   -CON(Ph)-CH₂-

   (wherein Ph represents phenyl),

   -CON(Ph)-(CH₂)₂-

   (wherein Ph represents phenyl),

   -CON(Ph)-(CH₂)₃-

   (wherein Ph represents phenyl),

   -CON(Ph)-(CH₂)₄-

   (wherein Ph represents phenyl),

   -CON(Ph)-(CH₂)₅-

   (wherein Ph represents phenyl),

   -CON(Ph)-(CH₂)₆-

   (wherein Ph represents phenyl),

   -CONH-(CH₂)₂NH(CH₂)₃-,

   -CONH-(CH₂)₆NH(CH₂)₃-,

   -CH₂O-CONH-(CH₂)₃-,

   -CH₂O-CONH-(CH₂)₆-,

   -S-(CH₂)₃-,

   -(CH₂)₂S(CH₂)₃-,

   -CONH-(CH₂)₃Si(CH₃)₂OSi(CH₃)₂(CH₂)₂-,

   -CONH-(CH₂)₃Si(CH₃)₂OSi(CH₃)₂OSi(CH₃)₂(CH₂)₂-,

   -CONH-(CH₂)₃Si(CH₃)₂O(Si(CH₃)₂O)₂Si(CH₃)₂(CH₂)₂-,

   -CONH-(CH₂)₃Si(CH₃)₂O(Si(CH₃)₂O)₃Si(CH₃)₂(CH₂)₂-,

   -CONH-(CH₂)₃Si(CH₃)₂O(Si(CH₃)₂O)₁₀Si(CH₃)₂(CH₂)₂-,

   -CONH-(CH₂)₃Si(CH₃)₂O(Si(CH₃)₂O)₂₀Si(CH₃)₂(CH₂)₂-,

   -C(O)O-(CH₂)₃-,

   -C(O)O-(CH₂)₆-,

   -CH₂-O-(CH₂)₃-Si(CH₃)₂-(CH₂)₂-Si(CH₃)₂-(CH₂)₂-,

   -CH₂-O-(CH₂)₃-Si(CH₃)₂-(CH₂)₂-Si(CH₃)₂-CH(CH₃)-,

   -CH₂-O-(CH₂)₃-Si(CH₃)₂-(CH₂)₂-Si(CH₃)₂-(CH₂)₃-,

   -CH₂-O-(CH₂)₃-Si(CH₃)₂-(CH₂)₂-Si(CH₃)₂-CH(CH₃)-CH₂-,

   -OCH₂-,

   -O(CH₂)₃-,

   -OCFHCF₂-,

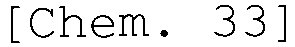

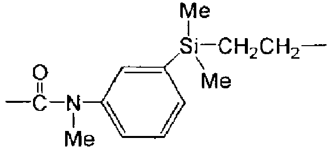

   and 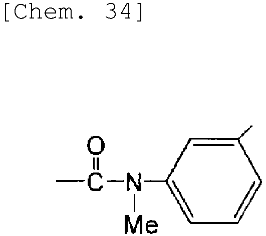 .

In still another case, each X^{A} is independently a group represented by the formula: -(R¹⁶)ₓ₁-(CFR¹⁷)_{y1}-(CH₂)_{z1}-. In the formula, x1, y1, and z1 are each independently an integer of 0 to 10, the sum of x1, y1, and z1 are 1 or more, and repeating units enclosed in parentheses are present in an arbitrary order in the formula.

In the formula, each R¹⁶ is independently an oxygen atom, phenylene, carbazolylene, -NR¹⁸- (wherein R¹⁸ is a hydrogen atom or an organic group), or a divalent organic group. Preferably, R¹⁸ is an oxygen atom or a divalent polar group.

The "divalent polar group" is not limited, and examples thereof include -C(O)-, -C(=NR¹⁹)-, and -C(O)NR¹⁹- wherein R¹⁹ is a hydrogen atom or a lower alkyl group. The "lower alkyl group" is, for example, a C1-C6 alkyl group such as methyl, ethyl, or n-propyl, which may be substituted by one or more fluorine atoms.

In the formula, each R¹⁷ is independently a hydrogen atom, a fluorine atom, or a lower fluoroalkyl group, preferably a fluorine atom. The "lower fluoroalkyl group" is, for example, a C1-C6, preferably C1-C3 fluoroalkyl group, preferably a C1-C3 perfluoroalkyl group, more preferably a trifluoromethyl group or a pentafluoroethyl group, still more preferably a trifluoromethyl group.

The left-hand side of each formula for X^{A} binds to R^{FA1} or R^{FA2} and the right-hand side thereof binds to T^{X} or T^{X}'.

In still another case, examples of X^{A} include the following groups: 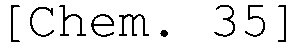 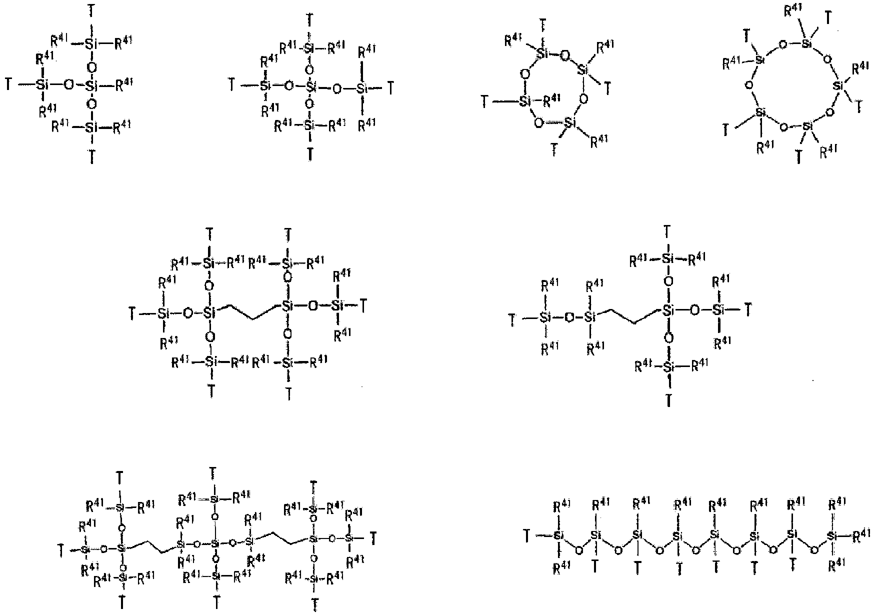 wherein
each R⁴¹ is independently a hydrogen atom, a phenyl group, a C1-C6 alkyl group, or a C1-C6 alkoxy group, preferably a methyl group; and
any number of T in the X^{A} group are the following groups that bind to R^{FA1} or R^{FA2} of the molecular main chain:

   -CH₂O(CH₂)₂-,

   -CH₂O(CH₂)₃-,

   -CF₂O(CH₂)₃-,

   -(CH₂)₂-,

   -(CH₂)₃-,

   -(CH₂)₄-,

   -CONH-(CH₂)₃-,

   -CON(CH₃)-(CH₂)₃-,

   -CON(Ph)-(CH₂)₃-

   (wherein Ph represents phenyl), or 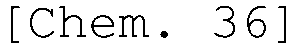 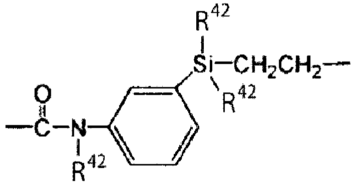
wherein each R⁴² is independently a hydrogen atom, a C1-C6 alkyl group, or a C1-C6 alkoxy group, preferably a methyl group or a methoxy group, more preferably a methyl group; and
any number of the remaining Ts are bonded to R^{Si} of the molecular main chain; and the remaining Ts, if present, are each independently a methyl group, a phenyl group, a C1-C6 alkoxy group, a radical scavenging group, or a UV-absorbing group.

The radical scavenging group is not limited as long as it can capture radicals generated by light irradiation. Examples thereof include residues of benzophenones, benzotriazoles, benzoic acid esters, phenyl salicylates, crotonic acids, malonic acid esters, organoacrylates, hindered amines, hindered phenols, and triazines.

The UV-absorbing group is not limited as long as it can absorb ultraviolet rays. Examples thereof include residues of benzotriazoles, hydroxybenzophenones, esters of substituted and unsubstituted benzoic or salicylic acid compounds, acrylates or alkoxycinnamates, oxamides, oxanilides, benzoxazinones, and benzoxazoles.

In a preferred case, as preferable radical scavenging group or UV-absorbing groups, 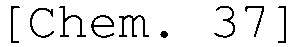 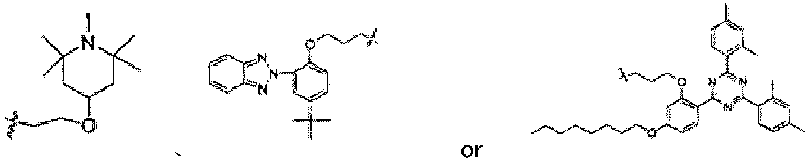 can be mentioned.

In this case, each X^{A} may be independently a trivalent to decavalent group.

In still another case, examples of X^{A} include the following group: 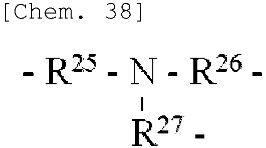 wherein R²⁵, R²⁶, and R²⁷ are each independently a divalent to hexavalent organic group,
R²⁵ binds to at least one R^{FA1} or R^{FA2}, and R²⁶ and R²⁷ each bind to at least one R^{Si}.

In one case, R²⁵ is a single bond, a C1-C20 alkylene group, a C3-C20 cycloalkylene group, a C5-C20 arylene group, -R⁵⁷-X⁵⁸-R⁵⁹-, -X⁵⁸-R⁵⁹-, or -R⁵⁷-X⁵⁸-. R⁵⁷ and R⁵⁹ are each independently a single bond, a C1-C20 alkylene group, a C3-C20 cycloalkylene group, or a C5-C20 arylene group. X⁵⁸ is -O-, -S-, -CO-, -O-CO-, or -COO-.

In one case, R²⁶ and R²⁷ are each independently a hydrocarbon or a group having at least one atom selected from N, O, and S at the end or in the main chain of a hydrocarbon, preferably a C1-C6 alkyl group, -R³⁶-R³⁷-R³⁶-, - R³⁶-CHR³⁸₂, or the like. Each R³⁶ is independently a single bond or a C1-C6 alkyl group, preferably a C1-C6 alkyl group. R³⁷ is N, O, or S, preferably N or O. R³⁸ is -R⁴⁵-R⁴⁶-R⁴⁵-, -R⁴⁶-R⁴⁵-, or -R⁴⁵-R⁴⁶-. Each R⁴⁵ is independently a C1-C6 alkyl group. R⁴⁶ is N, O, or S, preferably O.

In this case, each X^{A} may be independently a trivalent to decavalent group.

In still another case, XA is a group represented by the following: 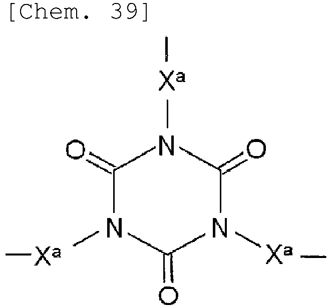 wherein X^{a} is a single bond or a divalent organic group.

X^{a} is a single bond or a divalent linking group directly bonded to the isocyanurate ring. X^{a} is preferably a single bond, an alkylene group, or a divalent group containing at least one bond selected from the group consisting of an ether bond, an ester bond, an amide bond, and a sulfide bond, more preferably a single bond, a C1-C10 alkylene group, or a C1-C10 divalent hydrocarbon group containing at least one bond selected from the group consisting of an ether bond, an ester bond, an amide bond, and a sulfide bond.

X^{a} is still more preferably a group represented by the following formula:

-(CX¹²¹X¹²²)ₓ₁-(X^{a1})_{y1}-(CX¹²³X¹²⁴)_{z1}-

wherein X¹²¹ to X¹²⁴ are each independently H, F, OH, or - OSi(OR¹²¹)₃ (wherein three R¹²¹s are each independently a C1-C4 alkyl group),
X^{a1} is -C(=O)NH-, -NHC(=O)-, -O-, -C(=O)O-, -OC(=O)-, -OC(=O)O-, or -NHC(=O)NH- (the left-hand side of each bond binds to CX¹²¹X¹²²),
x1 is an integer of 0 to 10; y1 is 0 or 1; and z1 is an integer of 1 to 10.

X^{a1} is preferably -O- or -C(=O)O-.

X^{a} is particularly preferably a group represented by the following formula:

-(CF₂)ₘ₁₁-(CH₂)ₘ₁₂-O-(CH₂)ₘ₁₃-

(wherein m11 is an integer of 1 to 3, m12 is an integer of 1 to 3, and m13 is an integer of 1 to 3,
a group represented by

   -(CF₂)ₘ₁₄-(CH₂)ₘ₁₅-O-CH₂CH(OH)-(CH₂)ₘ₁₆-

   wherein m 14 is an integer of 1 to 3, m15 is an integer of 1 to 3, and m16 is an integer of 1 to 3;
a group represented by

   -(CF₂)ₘ₁₇-(CH₂)ₘ₁₈-

   wherein m17 is an integer of 1 to 3, and m18 is an integer of 1 to 3;
a group represented by

   -(CF₂)ₘ₁₉-(CH₂)ₘ₂₀-O-CH₂CH(OSi(OCH₃)₃)-(CH₂)ₘ₂₁-

   wherein m19 is an integer of 1 to 3, m20 is an integer of 1 to 3, and m21 is an integer of 1 to 3; or
a group represented by the following formula:

   -(CH₂)ₘ₂₂-

   wherein m22 is an integer of 1 to 3.

X^{a} is not limited. As specific examples thereof,
-CH₂-, -C₂H₄-, -C₃H₆-, -C₄H₈-, -C₄H₈-O-CH₂-, -CO-O-CH₂-CH(OH)-CH₂-, -(CF₂)ₙ₅- (wherein n5 is an integer of 0 to 4), -(CF₂)ₙ₅-(CH₂)ₘ₅- (wherein n5 and m5 are each independently an integer of 0 to 4), -CF₂CF₂CH₂OCH₂CH(OH)CH₂-, and - CF₂CF₂CH₂OCH₂CH(OSi(OCH₃)₃)CH₂-
can be mentioned.

In this case, each X^{A} may be independently a divalent or trivalent group.

In one case, the compound (II) represented by the formula (II) is free from a siloxane bond (-Si-O-Si-).

The number average molecular weight of the compound (II) may be, but is not limited to, 5 × 10² to 1 × 10⁵. From the standpoint of polymerization stability, in particular, the lower limit of the number average molecular weight of the compound (II) is preferably 2000 or higher, more preferably 2500 or higher, and the upper limit thereof is preferably 32000 or lower, more preferably 12000 or lower. The number average molecular weight of the compound (II) is a value measured by ¹⁹F-NMR.

In one case, the number average molecular weight of the compound (II) is preferably 500 or higher, more preferably 1000 or higher, still more preferably 2000 or higher, further preferably 3000 or higher, while it is preferably 30000 or lower, more preferably 20000 or lower, still more preferably 15000 or lower, further preferably 10000 or lower, particularly preferably 6000 or lower.

In another case, the number average molecular weight of the compound (II) may be preferably 4000 or higher, more preferably 5000 or higher, more preferably 6000 or higher, while it may be preferably 30000 or lower, more preferably 10000 or lower.

The compound (II) may be, for example, a compound disclosed in WO 2019/048394.

The TFE-based polymer composition of the disclosure contains the macromolecular compound in an amount of preferably 0.01% by mass or more, more preferably 0.05% by mass or more, still more preferably 0.08% by mass or more, while preferably 5.0% by mass or less, more preferably 3.0% by mass or less, still more preferably 2.0% by mass or less, further preferably 1.0% by mass or less relative to the TFE-based polymer.

The amount of the macromolecular compound in the TFE-based polymer composition can be determined by solid-state NMR spectroscopy.

Methods of analyzing the respective polymers are disclosed in WO 2014/099453, WO 2010/075497, WO 2010/075496, WO 2011/008381, WO 2009/055521, WO 1987/007619, JP S61-293476 A, WO 2010/075494, WO 2010/075359, WO 2012/082454, WO 2006/119224, WO 2013/085864, WO 2012/082707, WO 2012/082703, WO 2012/082451, WO 2006/135825, WO 2004/067588, WO 2009/068528, JP 2004-075978 A, JP 2001-226436 A, WO 1992/017635, WO 2014/069165, JP H11-181009 A, and the like. The method for determining the amount of the macromolecular compound may be any of the polymer analysis methods disclosed in the respective documents.

The TFE-based polymer composition containing a macromolecular compound containing an ionic group can be obtained, for example, by polymerization using the macromolecular compound.

The TFE-based polymer composition of the disclosure is preferably substantially free from water. Such a TFE-based polymer composition can reduce or prevent gas generation and deterioration of electrochemical device characteristics. Moreover, the electrode active material or solid electrolyte to be used together can be selected from a wide range of selections, which is advantageous in terms of production process. The phrase "substantially free from water" means that the water content of the TFE-based polymer composition is 0.010% by mass or less.

The water content is preferably 0.005% by mass or less, more preferably 0.003% by mass or less, still more preferably 0.002% by mass or less, further preferably 0.001% by mass or less.

The water content is determined by the following method.

The mass of the TFE-based polymer composition is weighed before and after heating at 150°C for two hours, and the water content is calculated by the following equation. Three samples are taken, and this calculation is performed for each sample and the values are averaged.

Water content (% by mass) = [(Mass (g) of TFE-based polymer composition before heating) - (Mass (g) of TFE-based polymer composition after heating)]/(Mass (g) of TFE-based polymer composition before heating) × 100

The TFE-based polymer composition of the disclosure is non melt-processible.

The TFE-based polymer composition of the disclosure has an apparent density of less than 0.50 g/mL. In order to reduce resistance, to improve adhesion to a substrate, to improve cycle characteristics, and to achieve a mixture sheet excellent in strength and flexibility, the apparent density is preferably 0.45 g/mL or less, more preferably 0.43 g/mL or less, still more preferably 0.40 g/mL or less, further preferably less than 0.40 g/mL, while it is preferably 0.10 g/mL or more, more preferably 0.15 g/mL or more, still more preferably 0.20 g/mL or more, further preferably 0.25 g/mL or more, further preferably 0.30 g/mL or more, particularly preferably 0.35 g/mL or more.

The apparent density is determined in conformity with JIS K 6892.

The TFE-based polymer composition of the disclosure may have a 1.0% mass reduction temperature of 492°C or lower.

The TFE-based polymer composition having a 1.0% mass reduction temperature of 492°C or lower can be obtained using a hydrocarbon surfactant. The 1.0% mass reduction temperature is a value measured by the following method.

About 10 mg of a TFE-based polymer composition that has never been heated to 300°C or higher is precisely weighed out, and placed in a special aluminum pan, followed by simultaneous thermogravimetry/differential thermal analysis (TG-DTA). The 1.0% mass reduction temperature is a temperature corresponding to a point at which the weight is reduced by 1.0 mass% when the temperature of the aluminum pan is increased in a temperature range from 25°C to 600°C at a rate of 10°C/min in the air atmosphere.

The TFE-based polymer composition of the disclosure may have a thermal stability index (TII) of 20 or higher,

The TFE-based polymer composition having a TII of 20 or higher can be obtained using a hydrocarbon surfactant. The TII is preferably 25 or higher, more preferably 30 or higher, still more preferably 35 or more, particularly preferably 40 or higher. The TII is also preferably 50 or lower.

The TII is measured in conformity with ASTM D4895-89.

In order to form a mixture sheet with still higher strength, the TFE-based polymer composition of the disclosure preferably has an endothermic peak temperature of 333°C or higher, more preferably 335°C or higher, still more preferably 337°C or higher, further preferably 340°C or higher, while preferably 350°C or lower, more preferably 346°C or lower.

The endothermic peak temperature is the temperature corresponding to the minimum point on a heat-of-fusion curve obtained by performing differential scanning calorimetry (DSC) at a temperature-increasing rate of 10°C/min on a TFE-based polymer composition that has never been heated to a temperature of 300°C or higher. In the case where one melting peak includes two or more local minimums, each minimum is defined as an endothermic peak temperature.

In order to form a mixture sheet with still higher strength, the TFE-based polymer composition of the disclosure preferably has a melting point of 315°C or higher, more preferably 320°C or higher, still more preferably 323°C or higher, further preferably 325°C or higher, while preferably 335°C or lower, more preferably 330°C or lower.

The melting point is the temperature corresponding to the minimum point on a heat-of-fusion curve obtained by performing differential scanning calorimetry (DSC) at a temperature-increasing rate of 10°C/min on a TFE-based polymer composition that has a history of being heated to a temperature of 300°C or higher.

In order to form a mixture sheet with still higher strength, the TFE-based polymer composition of the disclosure preferably has a standard specific gravity (SSG) of 2.280 or less, more preferably 2.250 or less, still more preferably 2.220 or less, further preferably 2.200 or less, further preferably 2.190 or less, even more preferably 2.180 or less, particularly preferably 2.170 or less.

The SSG is also preferably 2.130 or more.

The SSG is determined by the water displacement method in conformity with ASTM D792 using a sample molded in conformity with ASTM D4895-89.

The TFE-based polymer composition of the disclosure may have an average secondary particle size of 350 µm or more, preferably 400 µm or more, more preferably 450 µm or more, while preferably 1000 µm or less, more preferably 900 µm or less, still more preferably 800 µm or less, further preferably 700 µm or less, particularly preferably 600 µm or less.

The average secondary particle size is measured in conformity with JIS K 6891.

The TFE-based polymer composition of the disclosure may be in any form, and is preferably in the form of powder so that it can be mixed with an electrode active material or a solid electrolyte without a large amount of dispersion medium.

The TFE-based polymer composition may be in a form other than powder, such as a dispersion.

The TFE-based polymer composition of the disclosure can be favorably produced by, for example, a method including: (A) preparing an aqueous dispersion of a TFE-based polymer; (B) coagulating the aqueous dispersion to obtain a wet powder; and (C) drying the wet powder.

The step (A) is preferably a step (A1) including emulsion-polymerizing TFE and a monomer containing a polar group in an aqueous medium in the presence of a fluorine-containing anionic surfactant to obtain an aqueous dispersion of a TFE-based polymer.

Emulsion polymerization in the step (A1) can be performed by a known method. For example, an aqueous dispersion containing particles (primary particles) of the TFE-based polymer is obtainable by emulsion polymerization of a monomer to form the TFE-based polymer in an aqueous medium in the presence of a fluorine-containing anionic surfactant and a polymerization initiator. In the emulsion polymerization, additives such as a chain transfer agent, a buffer, a pH adjuster, a stabilization aid, a dispersion stabilizer, and a radical scavenger may be used as appropriate.

The emulsion polymerization can be performed, for example, in an aqueous medium in the presence of a fluorine-containing anionic surfactant and a polymerization initiator.

The emulsion polymerization may be performed by, for example, charging a polymerization reactor with an aqueous medium, the fluorine-containing anionic surfactant, a monomer, and optionally other additives, stirring the contents in the reactor, maintaining the reactor at a predetermined polymerization temperature, and then adding a predetermined amount of a polymerization initiator to start the polymerization reaction. After the initiation of the polymerization reaction, the components such as the monomer, the polymerization initiator, a chain transfer agent, and the surfactant may additionally be added depending on the purpose.

The polymerization initiator may be any initiator capable of generating radicals within the polymerization temperature range, and any known oil-soluble and/or water-soluble polymerization initiator may be used. The polymerization initiator may be combined with a reducing agent, for example, into the form of a redox agent, which initiates the polymerization. The concentration of the polymerization initiator is appropriately determined in accordance with the types of the monomers, the target molecular weight of the TFE-based polymer, and the reaction rate.

The polymerization initiator used may be an oil-soluble radical polymerization initiator or a water-soluble radical polymerization initiator.

The oil-soluble radical polymerization initiator may be a known oil-soluble peroxide. Typical examples thereof include dialkyl peroxycarbonates such as diisopropyl peroxydicarbonate and di-sec-butyl peroxydicarbonate, peroxy esters such as t-butyl peroxyisobutyrate and t-butyl peroxypivalate, dialkyl peroxides such as di-t-butyl peroxide, as well as di(perfluoroacyl) or di(fluorochloroacyl) peroxides such as di(ω-hydro-dodecafluoroheptanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The water-soluble radical polymerization initiator may be a known water-soluble peroxide. Examples thereof include ammonium salts, potassium salts, and sodium salts of persulfuric acid, perboric acid, perchloric acid, perphosphoric acid, and percarbonic acid, t-butyl permaleate, t-butyl hydroperoxide, and disuccinic acid peroxide. Preferred among these are ammonium persulfate and disuccinic acid peroxide. The initiator may also contain a reducing agent such as a sulfite or a sulfurous acid salt. The amount thereof used may be 0.1 to 20 times the amount of the peroxide.

The water-soluble radical polymerization initiator may be added in any amount. For example, it may be added in an amount that does not significantly decrease the polymerization rate (e.g., concentration of several parts per million relative to water) or more at one time in an early stage of polymerization or intermittently or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces.

In order to easily achieve the physical properties described above, the amount of the polymerization initiator added is preferably an amount equivalent to 0.1 ppm or more, more preferably an amount equivalent to 1.0 ppm or more, while it is preferably an amount equivalent to 100 ppm or less, more preferably an amount equivalent to 10 ppm or less in the aqueous medium.

For example, in the case of the polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, ammonium cerium nitrate, and a bromate. Examples of the reducing agent include a sulfite, a bisulfite, a bromate, a diimine, and oxalic acid. Examples of the persulfate include ammonium persulfate and potassium persulfate. Examples of the sulfite include sodium sulfite and ammonium sulfite. In order to increase the decomposition rate of the initiator, the combination of the redox initiator is also preferably combined with a copper salt or an iron salt. An example of copper salts is copper(II) sulfate and an example of iron salts is iron(II) sulfate.

The oxidizing agent of the redox initiator is preferably permanganic acid or its salt, a persulfate, manganese triacetate, a cerium(IV) salt, or bromic acid or its salt. The reducing agent of the redox initiator is preferably a dicarboxylic acid or its salt, or a diimine.

More preferably, the oxidizing agent is permanganic acid or its salt, a persulfate, or bromic acid or its salt, and the reducing agent is a dicarboxylic acid or its salt.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, a polymerization vessel may be charged with an oxidizing agent or a reducing agent in advance, and the other may be continuously or intermittently added thereto to start polymerization. For example, in the case of using potassium permanganate/oxalic acid, preferably, oxalic acid is fed to a polymerization vessel and potassium permanganate is continuously added thereto.

In the redox initiator herein, "potassium permanganate/oxalic acid" refers to a combination of potassium permanganate and oxalic acid. The same applies to other compounds.

The redox initiator is particularly preferably a combination of an oxidizing agent in the form of a salt and a reducing agent in the form of a salt.

For example, the oxidizing agent in the form of a salt more preferably includes at least one selected from the group consisting of persulfates, permanganates, cerium(IV) salts, and bromates, still more preferably a permanganate, particularly preferably potassium permanganate.

The reducing agent in the form of a salt more preferably includes at least one selected from the group consisting of oxalates, malonates, succinates, glutarates, and bromates, still more preferably an oxalate, particularly preferably ammonium oxalate.

Specifically, the redox initiator preferably includes at least one selected from the group consisting of potassium permanganate/oxalic acid, potassium permanganate/ammonium oxalate, potassium bromate/ammonium sulfite, manganese triacetate/ammonium oxalate, and ammonium cerium nitrate/ammonium oxalate, more preferably at least one selected from the group consisting of potassium permanganate/oxalic acid, potassium permanganate/ammonium oxalate, potassium bromate/ammonium sulfite, and ammonium cerium nitrate/ammonium oxalate, still more preferably potassium permanganate/oxalic acid.

When a redox initiator is used, the oxidizing agent and the reducing agent may be added all at once at the initial stage of polymerization, or the reducing agent may be added all at once at the initial stage of polymerization and the oxidizing agent may be added continuously. Alternatively, the oxidizing agent may be added all at once at the initial stage of polymerization and the reducing agent may be added continuously, or both the oxidizing agent and the reducing agent may be added continuously.

When one agent of the redox polymerization initiator is added in an early stage of polymerization and the other agent is added continuously, it is preferable to gradually slow down the addition speed in order to obtain a TFE-based polymer with a low SSG. Moreover, addition is preferably stopped in the middle of polymerization. The addition is preferably stopped before 20% to 40% by mass of the total TFE to be consumed in the polymerization reaction is consumed.

In use of a redox initiator as a polymerization initiator, the amount of the oxidizing agent added is preferably 0.1 ppm or more, more preferably 0.3 ppm or more, still more preferably 0.5 ppm or more, further more preferably 1 ppm or more, particularly preferably 5 ppm or more, even more preferably 10 ppm or more, while preferably 10000 ppm or less, more preferably 1000 ppm or less, still more preferably 100 ppm or less, further more preferably 50 ppm or less in the aqueous medium. The amount of the reducing agent added is preferably 0.1 ppm or more, more preferably 1.0 ppm or more, still more preferably 3 ppm or more, further more preferably 5 ppm or more, particularly preferably 10 ppm or more, while preferably 10000 ppm or less, more preferably 1000 ppm or less, still more preferably 100 ppm or less, further more preferably 50 ppm or less.

In use of a redox initiator in the emulsion polymerization, the polymerization temperature is preferably 100°C or lower, more preferably 95°C or lower, still more preferably 90°C or lower. The polymerization temperature is preferably 10°C or higher, more preferably 20°C or higher, still more preferably 30°C or higher.

In order to easily achieve various physical properties described above, preferred examples of the polymerization initiator include a water-soluble radical polymerization initiator and a redox initiator.

The aqueous medium is a reaction medium in which polymerization is allowed to occur, and means a liquid that contains water. The aqueous medium may be any one containing water, and may be one containing water as well as, for example, a fluorine-free organic solvent such as alcohol, ether, and ketone and/or a fluorine-containing organic solvent having a boiling point of 40°C or lower.

In the emulsion polymerization, additives such as a nucleating agent, a chain transfer agent, a buffer, a pH adjuster, a stabilizing aid, a dispersion stabilizer, a radical scavenger, a decomposer of a polymerization initiator, or a dicarboxylic acid may be used as needed.

In order to adjust the particle size, a nucleating agent is preferably added in the emulsion polymerization. The nucleating agent is preferably added before starting the polymerization reaction.

The nucleating agent may be a known one. The nucleating agent preferably includes at least one selected from the group consisting of fluoropolyethers, nonionic surfactants, and chain transfer agents, more preferably a nonionic surfactant.

The fluoropolyether may be, for example, perfluoropolyether (PFPE) acid or its salt. The perfluoropolyether (PFPE) acid or its salt may have any chain structure in which oxygen atoms in the main chain of the molecule are separated by saturated fluorocarbon groups containing 1 to 3 carbon atoms. Also, two or more types of fluorocarbon groups may be present in the molecule. A typical structure has a repeating unit represented by any of the following formulas:

(-CFCF₃-CF₂-O-)ₙ,

(-CF₂-CF₂-CF₂-O-)ₙ,

(-CF₂-CF₂-O-)ₙ-(-CF₂-O-)ₘ, and

(-CF₂-CFCF₃-O-)ₙ-(-CF₂-O-)ₘ.

These structures are disclosed by Kasai in J. Appl. Polymer Sci. 57, 797 (1995). As disclosed in this literature, the PFPE acid or its salt may have a carboxylic acid group or its salt at one end or each end. The PFPE acid or its salt may also have a sulfonic acid or phosphonic acid group or its salt at one end or at each end. Moreover, the PFPE acid or its salt may have a different group at each end. In the case of monofunctional PFPE, the other end of the molecule is usually perfluorinated but may have a hydrogen or chlorine atom. The PFPE acid or its salt contains at least two ether oxygens, preferably at least four ether oxygens, still more preferably at least six ether oxygens. Preferably at least one, more preferably at least two of the fluorocarbon groups separating the ether oxygens contain two or three carbon atoms. Further preferably, at least 50% of the fluorocarbon groups separating the ether oxygens contain two or three carbon atoms. Preferably, the PFPE acid or its salt contains a total of at least 15 carbon atoms, and, for example, a preferred minimum value of n or n + m in the repeating unit structure is at least 5. Two or more PFPE acids or their salts having an acid group at one end or at each end may be used in the production method of the disclosure. The PFPE acid or its salt preferably has a number average molecular weight of lower than 6000 g/mol.

In order to further increase the molecular weight of the TFE-based polymer and improve the strength of the mixture sheet, a radical scavenger or a decomposer of a polymerization initiator is preferably added in the emulsion polymerization. The radical scavenger or the decomposer of a polymerization initiator is added after the start of the polymerization reaction, preferably before 10% by mass or more, preferably 20% by mass or more of the total TFE to be consumed in the polymerization reaction is polymerized, while preferably before 50% by mass or less, preferably 40% by mass or less of the total TFE to be consumed in the polymerization reaction is polymerized. The radical scavenger or the decomposer of a polymerization initiator is preferably added after later-described depressurization and repressurization, if performed.

The radical scavenger used is a compound that has no reinitiation ability after addition or chain transfer to free radicals in the polymerization system. Specifically, the compound used is a compound having a function of readily causing a chain transfer reaction with a primary radical or propagating radical and then generating a stable radical that does not react with a monomer or a compound having a function of readily causing an addition reaction with a primary radical or propagating radical to generate a stable radical.

In general, those called chain transfer agents are characterized by their activity in terms of chain transfer constant and reinitiation efficiency, and among them, those with almost 0% reinitiation efficiency are called radical scavengers.

The radical scavenger can also be described as, for example, a compound whose chain transfer constant to TFE at the polymerization temperature is greater than the polymerization rate constant and whose reinitiation efficiency is substantially 0%. The phrase "reinitiation efficiency is substantially 0%" means that the generated radicals make the radical scavenger a stable radical.

Preferably, the radical scavenger is a compound having a chain transfer constant (Cs) (= chain transfer rate constant (kc)/polymerization rate constant (kp)) to TFE at the polymerization temperature of greater than 0.1. The compound has a chain transfer constant (Cs) of more preferably 0.5 or more, still more preferably 1.0 or more, further preferably 5.0 or more, particularly preferably 10 or more.

The radical scavenger preferably includes, for example, at least one selected from the group consisting of aromatic hydroxy compounds, aromatic amines, N,N-diethylhydroxylamine, quinone compounds, terpenes, thiocyanates, and cupric chloride (CuCl₂).

Examples of aromatic hydroxy compounds include unsubstituted phenols, polyhydric phenols, salicylic acid, m- or p-salicylic acid, gallic acid, and naphthol.

Examples of unsubstituted phenols include o-, m-, or p-nitrophenol, o-, m-, or p-aminophenol, and p-nitrosophenol. Examples of polyhydric phenols include catechol, resorcinol, hydroquinone, pyrogallol, phloroglucin, and naphtresorcinol.

Examples of aromatic amines include o-, m-, or p-phenylenediamine, and benzidine.

Examples of quinone compounds include o-, m-, or p-benzoquinone, 1,4-naphthoquinone, and alizarin.

Examples of thiocyanates include ammonium thiocyanate (NH₄SCN), potassium thiocyanate (KSCN), and sodium thiocyanate (NaSCN).

Among these, the radical scavenger is preferably an aromatic hydroxy compound, more preferably an unsubstituted phenol or a polyhydric phenol, still more preferably hydroquinone.

In order to moderately reduce the standard specific gravity, the amount of the radical scavenger added is preferably an amount equivalent to 3% to 500% (on a molar basis) of the polymerization initiator concentration. The lower limit is more preferably 10% (on a molar basis), still more preferably 15% (on a molar basis). The upper limit is more preferably 400% (on a molar basis), still more preferably 300% (on a molar basis).

The decomposer of a polymerization initiator may be any compound that can decompose the polymerization initiator used, and preferably includes at least one selected from the group consisting of, for example, sulfites, bisulfites, bromates, diimines, diimine salts, oxalic acid, oxalates, copper salts, and iron salts. Examples of sulfites include sodium sulfite and ammonium sulfite. An example of copper salts is copper(II) sulfate and an example of iron salts is iron(II) sulfate.

In order to moderately reduce the standard specific gravity, the amount of the decomposer added is preferably an amount equivalent to 3% to 500% (on a molar basis) of the initiator concentration. The lower limit is more preferably 10% (on a molar basis), still more preferably 15% (on a molar basis). The upper limit is more preferably 400% (on a molar basis), still more preferably 300% (on a molar basis).

In order to reduce the amount of coagulum formed during polymerization, the emulsion polymerization may be performed in the presence of a dicarboxylic acid in an amount of 5 to 500 ppm, preferably 10 to 200 ppm in the aqueous medium. If the amount of the dicarboxylic acid is too small relative to the aqueous medium, a sufficient effect may not be achieved. Conversely, if the amount is too large, a chain transfer reaction may occur, and the resulting polymer may have a low molecular weight. The amount of the dicarboxylic acid is more preferably 150 ppm or less. The dicarboxylic acid may be added before the start of the polymerization reaction or may be added during the polymerization.

The dicarboxylic acid is preferably one represented by the formula: HOOCRCOOH (wherein R is a C1-C5 alkylene group), more preferably succinic acid, malonic acid, glutaric acid, adipic acid, or pimelic acid, still more preferably succinic acid.

In the emulsion polymerization, the polymerization temperature and the polymerization pressure are determined as appropriate in accordance with the types of the monomers used, the target molecular weight of the TFE-based polymer, and the reaction rate. Usually, the polymerization temperature is 5°C to 150°C, preferably 10°C or higher, more preferably 30°C or higher, still more preferably 50°C or higher. The polymerization temperature is more preferably 120°C or lower, still more preferably 100°C or lower.

The polymerization pressure is 0.05 to 10 MPaG. The polymerization pressure is more preferably 0.3 MPaG or higher, still more preferably 0.5 MPaG or higher. The polymerization pressure is more preferably 5.0 MPaG or lower, still more preferably 3.0 MPaG or lower.

When VDF is used as a modifying monomer in the emulsion polymerization, in order to easily achieve the above-mentioned physical properties, the VDF concentration in the gas in the reactor at the time of starting polymerization (when adding an initiator) is preferably set to 0.001 mol% or higher, more preferably 0.01 mol% or higher. The VDF concentration may be 15 mol% or lower, preferably 6.0 mol% or lower, still more preferably 5.0 mol% or lower, further preferably 3.0 mol% or lower, particularly preferably 1.0 mol% or lower. The VDF concentration may be maintained thereafter until the end of the polymerization reaction, or depressurization may be performed during the process. VDF is preferably fed all at once before the start of polymerization. Still, a portion thereof may be added continuously or intermittently after the start of polymerization.

When VDF is used as a modifying monomer in the emulsion polymerization, depressurization is preferably not performed until the polymerization is completed after VDF is introduced into the polymerization container. This allows VDF to remain in the system until the end of polymerization, leading to still higher strength of the mixture sheet containing the TFE-based polymer to be obtained.

When HFP is used as a modifying monomer in the emulsion polymerization, in order to easily achieve the above-mentioned physical properties, the HFP concentration in the gas in the reactor at the time of starting polymerization (when adding an initiator) is preferably set to 0.01 to 3.0 mol%. Further, the HFP concentration in the gas in the reactor at the time when 40% by mass of the total TFE to be consumed in the polymerization reaction is polymerized is preferably higher than 0 mol% and 0.2 mol% or lower. The HFP concentration is preferably maintained thereafter until the end of the polymerization reaction. HFP may be fed all at once before the start of polymerization, or a portion thereof may be fed before the start of polymerization and the rest may be added continuously or intermittently after the start of polymerization. By allowing HFP to remain until the end of the polymerization reaction, the extrusion pressure is reduced even though the mixture sheet containing the TFE-based polymer to be obtained has high strength.

When HFP is used as a modifying monomer in the emulsion polymerization, in order to achieve further improved strength of the mixture sheet containing the TFE-based polymer to be obtained, preferably, depressurization is performed before 5% to 40% by mass of the total TFE to be consumed in the polymerization reaction is polymerized, followed by repressurization with TFE alone.

The depressurization is preferably performed such that the pressure inside the reactor is 0.2 MPaG or lower, more preferably 0.1 MPaG or lower, still more preferably 0.05 MPaG or lower. The depressurization is preferably performed such that the pressure inside the reactor is 0.0 MPaG or higher.

The depressurization and the repressurization may be performed multiple times. The depressurization may be performed to a reduced pressure using a vacuum pump.

When CTFE is used as a modifying monomer in the emulsion polymerization, in order to easily achieve the above-mentioned physical properties, the CTFE concentration in the gas in the reactor at the time of starting polymerization (when adding the initiator) is preferably set to 0.001 mol% or higher, more preferably 0.01 mol% or higher. The CTFE concentration is also preferably 3.0 mol% or lower, more preferably 1.0 mol% or lower. The CTFE concentration may be maintained thereafter until the end of the polymerization reaction, or depressurization may be performed during the polymerization reaction. CTFE is preferably fed all at once before the start of polymerization. Still, a portion thereof may be added continuously or intermittently after the start of polymerization.

When CTFE is used as a modifying monomer in the emulsion polymerization, depressurization is preferably not performed until the polymerization is completed after the CTFE is introduced into the polymerization container. This allows CTFE to remain in the system until the end of polymerization, leading to still higher strength of the mixture sheet containing the TFE-based polymer to be obtained.

The step (A) is also preferably a step (A2) including emulsion-polymerizing TFE in an aqueous medium in the presence of a hydrocarbon surfactant to obtain an aqueous dispersion of a TFE-based polymer. Emulsion polymerization in the presence of a hydrocarbon surfactant leads to production of the compound (1) and the compound (2) described above as by-products, and the end groups of these compounds provide polar groups.

In the hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The step (A2) preferably includes a step of performing emulsion polymerization of tetrafluoroethylene alone or emulsion polymerization of tetrafluoroethylene and a modifying monomer copolymerizable with the tetrafluoroethylene, in the presence of a specific hydrocarbon surfactant in an aqueous medium and a step of adding the specific hydrocarbon surfactant continuously in the emulsion polymerization step.

Adding the specific hydrocarbon surfactant continuously means, for example, adding the specific hydrocarbon surfactant not all at once, but adding over time and without interruption or adding in portions. The specific hydrocarbon surfactant is, for example, a hydrocarbon surfactant containing one or more carbonyl groups which are not in a carboxy group or a hydrocarbon surfactant obtained by radically treating or oxidizing the hydrocarbon surfactant containing one or more carbonyl groups which are not in a carboxy group. The radical treatment may be any treatment that generates radicals in the hydrocarbon surfactant containing one or more carbonyl groups which are not in a carboxy group. Examples include a treatment in which deionized water and the hydrocarbon surfactant are added to a reactor, the reactor is hermetically sealed, the inside of the reactor is replaced with nitrogen, the reactor is heated and pressurized, a polymerization initiator is charged, the contents are stirred for a certain time, and then the reactor is depressurized to the atmospheric pressure, and the reactor is cooled. The oxidation treatment is a treatment in which an oxidizing agent is added to a hydrocarbon surfactant containing one or more carbonyl groups which are not in a carboxy group. Examples of the oxidizing agent include oxygen, ozone, hydrogen peroxide solution, manganese(IV) oxide, potassium permanganate, potassium dichromate, nitric acid, and sulfur dioxide. The above production method enables, even without a conventional fluorine-containing surfactant, the production of a TFE-based polymer having a molecular weight equivalent to a TFE-based polymer obtained by a production method using a conventional fluorine-containing surfactant.

In the production method, the step of continuously adding the specific hydrocarbon surfactant is preferably a step of starting to add the hydrocarbon surfactant to the aqueous medium when the solid content of the TFE-based polymer formed in the aqueous medium is less than 0.60% by mass. The specific hydrocarbon surfactant is preferably started to be added to the aqueous medium when the solid content is 0.5% by mass or less. The specific hydrocarbon surfactant is more preferably started to be added when the solid content is 0.3% by mass or less, still more preferably started to be added when the solid content is 0.2% by mass or less, further preferably started to be added when the solid content is 0.1% by mass or less, particularly preferably started to be added when the polymerization is initiated. The solid content means a concentration based on the total amount of the aqueous medium and the TFE-based polymer.

In the step of continuously adding the specific hydrocarbon surfactant, the amount of the specific hydrocarbon surfactant added is preferably 0.01 to 10% by mass relative to 100% by mass of the aqueous medium. The lower limit thereof is more preferably 0.05% by mass, still more preferably 0.1% by mass, while the upper limit thereof is more preferably 5% by mass, still more preferably 1% by mass.

In the step of performing emulsion polymerization of tetrafluoroethylene alone or emulsion polymerization of tetrafluoroethylene and a modifying monomer copolymerizable with the tetrafluoroethylene in the presence of a specific hydrocarbon surfactant in an aqueous medium, the amount of the specific hydrocarbon surfactant is preferably large, and is preferably 0.0001 to 10% by mass relative to 100% by mass of the aqueous medium. The lower limit thereof is more preferably 0.001% by mass, while the upper limit thereof is more preferably 1% by mass. Less than 0.0001% by mass of the surfactant may cause insufficient dispersibility. More than 10% by mass of the surfactant may fail to give the effects corresponding to its amount; on the contrary, such an amount of the surfactant may cause a reduction in the polymerization rate or even stop the reaction. The amount of the specific hydrocarbon surfactant is appropriately determined in accordance with the type of the monomer used, the target molecular weight of the TFE-based polymer, and the like.

The specific hydrocarbon surfactant is preferably a surfactant represented by the formula: R-X (wherein R is a fluorine-free organic group containing one or more carbonyl groups which are not in a carboxy group and containing 1 to 2000 carbon atoms, X is, -OSO₃X¹, -COOX¹, or -SO₃X¹, wherein X¹ is H, a metal atom, NR¹₄, imidazolium optionally containing a substituent, pyridinium optionally containing a substituent, or phosphonium optionally containing a substituent; and R¹s are each H or an organic group (preferably, a fluorine-free organic group) and may be the same as or different from each other). R preferably contains 500 or less carbon atoms, more preferably 100 or less carbon atoms, still more preferably 50 or less carbon atoms, further preferably 30 or less carbon atoms.

The specific hydrocarbon surfactant more preferably includes at least one selected from the group consisting of:
surfactants (a) represented by the following formula (a): 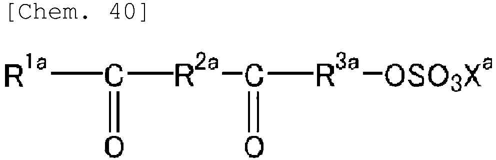 wherein R^{1a} is a linear or branched alkyl group containing 1 or more carbon atoms or a cyclic alkyl group containing 3 or more carbon atoms, with a hydrogen atom bonded to a carbon atom therein being optionally replaced by a hydroxy group or a monovalent organic group (preferably, a fluorine-free organic group) containing an ester bond, optionally contains a carbonyl group when containing 2 or more carbon atoms, and optionally contains a monovalent or divalent heterocycle or optionally forms a ring when containing 3 or more carbon atoms; R^{2a} and R^{3a} are each independently a single bond or a divalent linking group; the total number of carbon atoms of R^{1a}, R^{2a}, and R^{3a} is 6 or more; X^{a} is H, a metal atom, NR^{4a}₄, imidazolium optionally containing a substituent, pyridinium optionally containing a substituent, or phosphonium optionally containing a substituent, and R^{4a}s are each H or an organic group (preferably a fluorine-free organic group) and may be the same as or different from each other; and any two of R^{1a}, R^{2a}, and R^{3a} optionally bind to each other to form a ring;
surfactants (b) represented by the following formula (b): 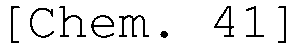 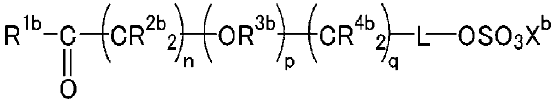 wherein R^{1b} is a linear or branched alkyl group containing 1 or more carbon atoms and optionally containing a substituent or a cyclic alkyl group containing 3 or more carbon atoms and optionally containing a substituent, and optionally contains a monovalent or divalent heterocycle or optionally forms a ring when containing 3 or more carbon atoms; R^{2b} and R^{4b} are each independently H or a substituent; R^{3b} is an alkylene group containing 1 to 10 carbon atoms and optionally containing a substituent; n is an integer of 1 or more; p and q are each independently an integer of 0 or more; X^{b} is H, a metal atom, NR^{5b}₄, imidazolium optionally containing a substituent, pyridinium optionally containing a substituent, or phosphonium optionally containing a substituent, and R^{5b}s are each H or an organic group (preferably a fluorine-free organic group) and may be the same as or different from each other; and any two of R^{1b}, R^{2b}, R^{3b}, and R^{4b} optionally bind to each other to form a ring; L is a single bond, -CO₂-B-*, -OCO-B-*, -CONR^{6b}-B-*, -NR^{6b}CO-B-*, or -CO- other than the carbonyl groups in -CO₂-B-, -OCO-B-, -CONR^{6b}-B-, and -NR⁶CO-B-, wherein B is a single bond or an alkylene group containing 1 to 10 carbon atoms and optionally containing a substituent, R^{6b} is H or an alkyl group containing 1 to 4 carbon atoms and optionally containing a substituent; and * indicates the side bonded to -OSO₃X^{b} in the formula;
surfactants (c) represented by the following formula (c): 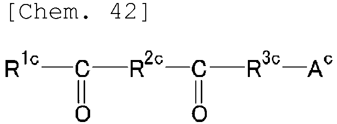 wherein R^{1c} is a linear or branched alkyl group containing 1 or more carbon atoms or a cyclic alkyl group containing 3 or more carbon atoms, with a hydrogen atom bonded to a carbon atom therein being optionally replaced by a hydroxy group or a monovalent organic group (preferably, a fluorine-free organic group) containing an ester bond, optionally contains a carbonyl group when containing 2 or more carbon atoms, and optionally contains a monovalent or divalent heterocycle or optionally forms a ring when containing 3 or more carbon atoms; R^{2c} and R^{3c} are each independently a single bond or a divalent linking group; the total number of carbon atoms of R^{1c}, R^{2c}, and R^{3c} is 5 or more; A^{c} is -COOX^{c} or -SO₃X^{c}, wherein X^{c} is H, a metal atom, NR^{4c}₄, imidazolium optionally containing a substituent, pyridinium optionally containing a substituent, or phosphonium optionally containing a substituent, and R^{4c}s are each H or an organic group (preferably, a fluorine-free organic group) and are the same as or different from each other; and any two of R^{1c}, R^{2c}, and R^{3c} optionally bind to each other to form a ring;
surfactants (d) represented by the following formula (d): 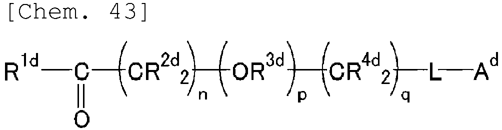 wherein R^{1d} is a linear or branched alkyl group containing 1 or more carbon atoms and optionally containing a substituent or a cyclic alkyl group containing 3 or more carbon atoms and optionally containing a substituent, and optionally contains a monovalent or divalent heterocycle or optionally forms a ring when containing 3 or more carbon atoms; R^{2d} and R^{4d} are each independently H or a substituent; R^{3d} is an alkylene group containing 1 to 10 carbon atoms and optionally containing a substituent; n is an integer of 1 or more; p and q are each independently an integer of 0 or more; A^{d} is -SO₃X^{d} or -COOX^{d}, wherein X^{d} is H, a metal atom, NR^{5d}₄, imidazolium optionally containing a substituent, pyridinium optionally containing a substituent, or phosphonium optionally containing a substituent, and R^{5d}s are each H or an organic group (preferably a fluorine-free organic group) and are the same as or different from each other; any two of R^{1d}, R^{2d}, R^{3d} and R^{4d} optionally bind to each other to form a ring; L is a single bond, -CO₂-B-*, -OCO-B-*, -CONR^{6d}-B-*, -NR^{6d}CO-B-*, or -CO- other than the carbonyl groups in -CO₂-B-, -OCO-B-, -CONR^{6d}-B-, and -NR^{6d}CO-B-, wherein B is a single bond or an alkylene group containing 1 to 10 carbon atoms and optionally containing a substituent, R^{6d} is H or an alkyl group containing 1 to 4 carbon atoms and optionally containing a substituent; and * indicates the side bonded to A^{d} in the formula; and
surfactants (e) represented by the following formula (e): 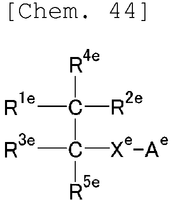 wherein R^{1e} to R^{5e} each represent H or a monovalent substituent, with the proviso that at least one of R^{1e} or R^{3e} represents a group represented by the formula: -Y^{e}-R^{6e} and at least one of R^{2e} or R^{5e} represents a group represented by the formula: -X^{e}-A^{e} or a group represented by the formula: -Y^{e}-R^{6e};
X^{e}s at respective occurrences are the same as or different from each other and are each a divalent linking group or a bond;
A^{e}s at respective occurrences are the same as or different from each other and are each -COOM^{e}, -SO₃M^{e}, or - OSO₃M^{e} (wherein M^{e} is H, a metal atom, NR^{7e}₄, imidazolium optionally containing a substituent, pyridinium optionally containing a substituent, or phosphonium optionally containing a substituent, and R^{7e}s are each H or an organic group (preferably a fluorine-free organic group));
Y^{e}s at respective occurrences are the same as or different from each other and are each a divalent linking group selected from the group consisting of -S(=O)₂-, -O-, -COO-, -OCO-, -CONR^{8e}-, and -NR^{8e}CO-, or a bond, wherein R^{8e} is H or an organic group (preferably, a fluorine-free organic group);
R^{6e}s at respective occurrences are the same as or different from each other and are each an alkyl group containing 2 or more carbon atoms and optionally containing, between carbon atoms, at least one selected from the group consisting of a carbonyl group, an ester group, an amide group, and a sulfonyl group; and
any two of R^{1e} to R^{5e} optionally bind to each other to form a ring.

The surfactant (a) is described below.

In the formula (a), R^{1a} is a linear or branched alkyl group containing 1 or more carbon atoms or a cyclic alkyl group containing 3 or more carbon atoms.

When containing 3 or more carbon atoms, the alkyl group optionally contains a carbonyl group (-C(=O)-) between two carbon atoms. When containing 2 or more carbon atoms, the alkyl group optionally contains the carbonyl group at an end of the alkyl group. In other words, acyl groups such as an acetyl group represented by CH₃-C(=O)-are also included in the alkyl group.

When containing 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In R^{1a}, a divalent heterocycle may be present between two carbon atoms, or a divalent heterocycle may be present at an end and bind to - C(=O)-, or a monovalent heterocycle may be present at an end of the alkyl group.

The "number of carbon atoms" in the alkyl group as used herein includes the number of carbon atoms constituting the carbonyl groups and the number of carbon atoms constituting the heterocycles. For example, the number of carbon atoms in the group represented by CH₃-C(=O)-CH₂- is 3, the number of carbon atoms in the group represented by CH₃-C(=O)-C₂H₄-C(=O)-C₂H₄- is 7, and the number of carbon atoms in the group represented by CH₃-C(=O)- is 2.

In the alkyl group, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C(=O)-R^{101a} (wherein R^{101a} is an alkyl group).

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

In the formula, R^{2a} and R^{3a} are each independently a single bond or a divalent linking group.

Preferably, R^{2a} and R^{3a} are each independently a single bond, or a linear or branched alkylene group containing 1 or more carbon atoms, or a cyclic alkylene group containing 3 or more carbon atoms.

The alkylene group constituting R^{2a} and R^{3a} is preferably free from a carbonyl group.

In the alkylene group, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C(=O)-R^{102a} (wherein R^{102a} is an alkyl group).

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The total number of carbon atoms of R^{1a}, R^{2a}, and R^{3a} is 6 or more. The total number of carbon atoms is preferably 8 or more, more preferably 9 or more, still more preferably 10 or more, while it is preferably 20 or less, more preferably 18 or less, still more preferably 15 or less.

Any two of R^{1a}, R^{2a}, and R^{3a} optionally bind to each other to form a ring.

In the formula (a), X^{a} is H, a metal atom, NR^{4a}₄, imidazolium optionally containing a substituent, pyridinium optionally containing a substituent, or phosphonium optionally containing a substituent, and R^{4a} is H or an organic group (preferably, a fluorine-free organic group). The four R^{4a}s may be the same as or different from each other. The organic group in R^{4a} is preferably an alkyl group. R^{4a} is preferably H or an organic group containing 1 to 10 carbon atoms, more preferably H or an organic group containing 1 to 4 carbon atoms, still more preferably H or an alkyl group containing 1 to 4 carbon atoms. Examples of the metal atom include alkali metals (Group 1) and alkaline earth metals (Group 2), and preferred is Na, K, or Li.

X^{a} is preferably H, an alkali metal (Group 1), an alkaline earth metal (Group 2), or NR^{4a}₄, more preferably H, Na, K, Li, or NH₄ because they are easily dissolved in water, still more preferably Na, K, or NH₄ because they are more easily dissolved in water, particularly preferably Na or NH₄, most preferably NH₄ because it can be easily removed. When X^{a} is NH₄, the solubility of the surfactant in an aqueous medium is excellent, and the metal component is unlikely to remain in the TFE-based polymer or the final product.

Examples of the surfactant (a) include the following surfactants. In each formula, X^{a} is as defined above.

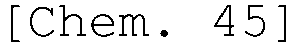

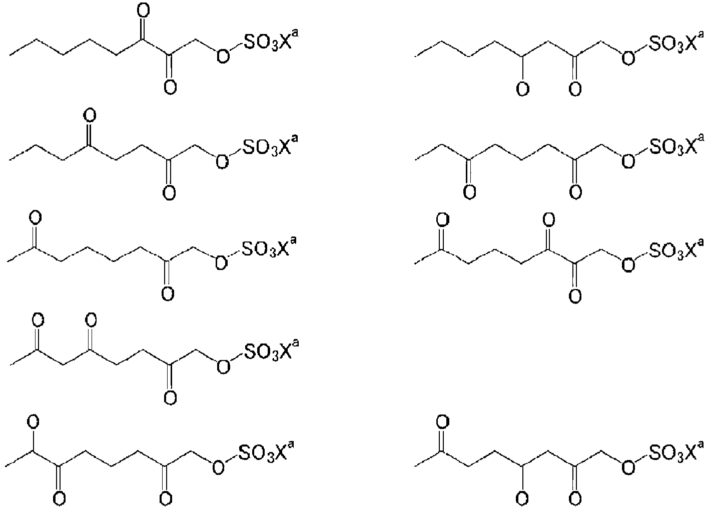

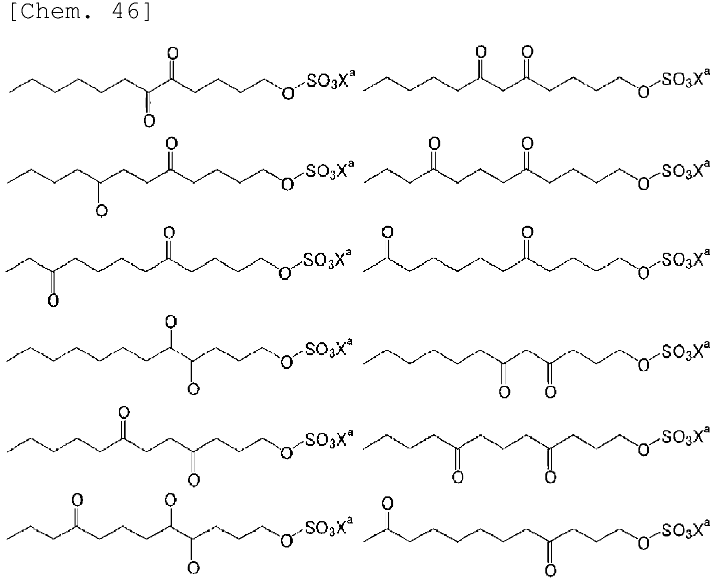

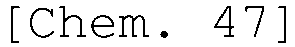

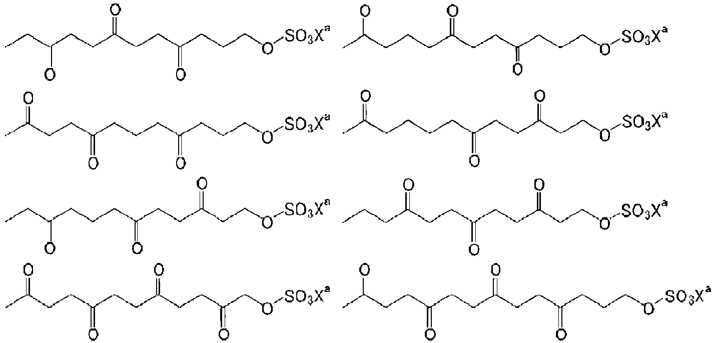

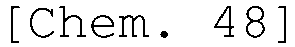

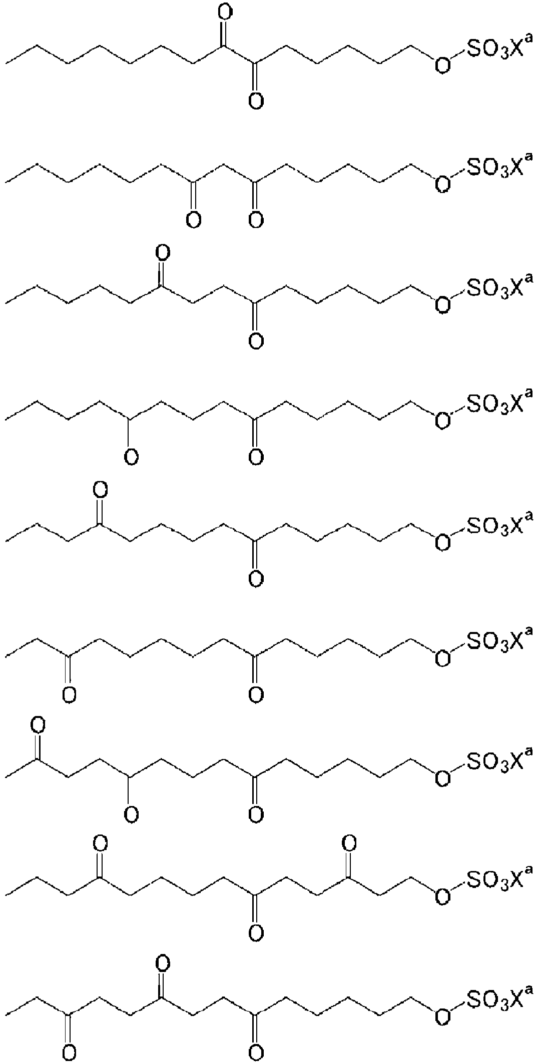

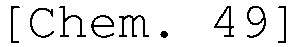

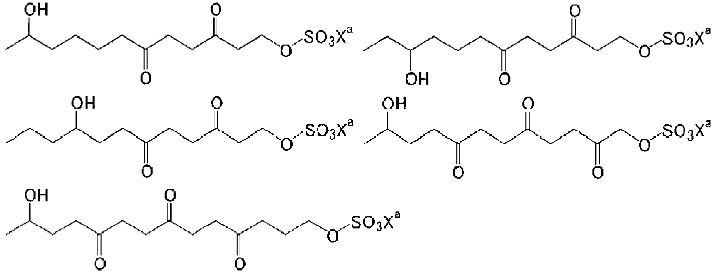

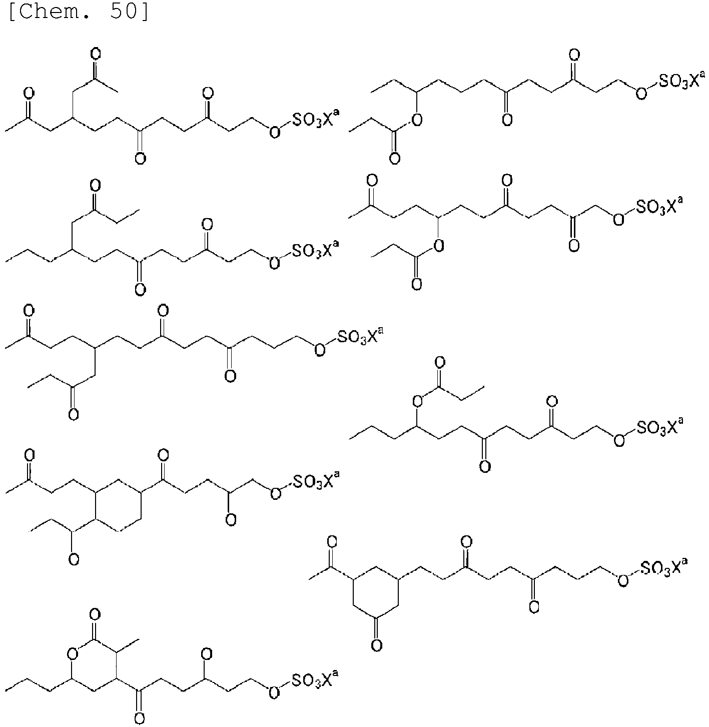

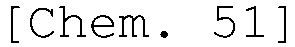

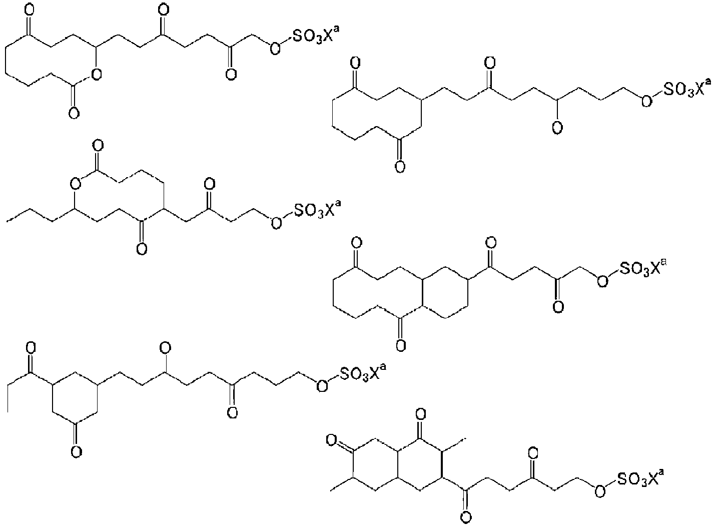

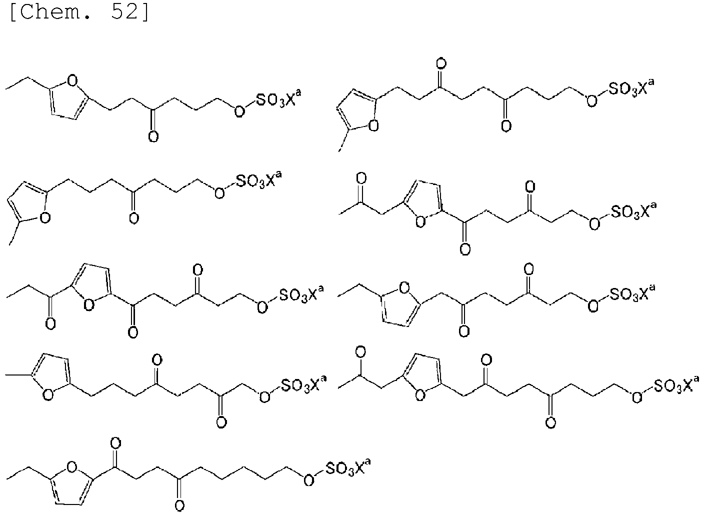

The surfactant (a) can be produced by the production method disclosed in WO 2020/022355.

Next, the surfactant (b) is described below.

In the formula (b), R^{1b} is a linear or branched alkyl group containing 1 or more carbon atoms and optionally containing a substituent or a cyclic alkyl group containing 3 or more carbon atoms and optionally containing a substituent.

When containing 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In R^{1b}, a divalent heterocycle may be present between two carbon atoms, or a divalent heterocycle may be present at an end and bind to - C(=O)-, or a monovalent heterocycle may be present at an end of the alkyl group.

The "number of carbon atoms" in the alkyl group as used herein includes the number of carbon atoms constituting the heterocycles.

The substituent which may be contained in the alkyl group for R^{1b} is preferably a halogen atom, a linear or branched alkyl group containing 1 to 10 carbon atoms, or a cyclic alkyl group containing 3 to 10 carbon atoms, or a hydroxy group, particularly preferably a methyl group or an ethyl group.

The alkyl group for R^{1b} is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R^{1b} is preferably a linear or branched alkyl group containing 1 to 10 carbon atoms and optionally containing a substituent or a cyclic alkyl group containing 3 to 10 carbon atoms and optionally containing a substituent, more preferably a linear or branched alkyl group containing 1 to 10 carbon atoms and free from a carbonyl group or a cyclic alkyl group containing 3 to 10 carbon atoms and free from a carbonyl group, still more preferably a linear or branched alkyl group containing 1 to 10 carbon atoms and not containing a substituent, further preferably a linear or branched alkyl group containing 1 to 3 carbon atoms and not containing a substituent, particularly preferably a methyl group (-CH₃) or an ethyl group (-C₂H₅), most preferably a methyl group (-CH₃).

In the formula (b), R^{2b} and R^{4b} are each independently H or a substituent. A plurality of R^{2b}s and R^{4b}s may be the same as or different from each other.

The substituent for each of R^{2b} and R^{4b} is preferably a halogen atom, a linear or branched alkyl group containing 1 to 10 carbon atoms, or a cyclic alkyl group containing 3 to 10 carbon atoms, or a hydroxy group, particularly preferably a methyl group or an ethyl group.

The alkyl group for each of R^{2b} and R^{4b} is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

The alkyl group for each of R^{2b} and R^{4b} is preferably a linear or branched alkyl group containing 1 to 10 carbon atoms and free from a carbonyl group or a cyclic alkyl group containing 3 to 10 carbon atoms and free from a carbonyl group, more preferably a linear or branched alkyl group containing 1 to 10 carbon atoms and free from a carbonyl group, still more preferably a linear or branched alkyl group containing 1 to 3 carbon atoms and not containing a substituent, particularly preferably a methyl group (-CH₃) or an ethyl group (-C₂H₅).

R^{2b} and R^{4b} are preferably each independently H or a linear or branched alkyl group containing 1 to 10 carbon atoms and free from a carbonyl group, more preferably H or a linear or branched alkyl group containing 1 to 3 carbon atoms and not containing a substituent, still more preferably H, a methyl group (-CH₃), or an ethyl group (-C₂H₅), particularly preferably H.

In the formula (b), R^{3b} is an alkylene group containing 1 to 10 carbon atoms and optionally containing a substituent. When a plurality of R^{3b}s are present, they may be the same as or different from each other.

The alkylene group is preferably free from a carbonyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The alkylene group preferably contains no substituent.

The alkylene group is preferably a linear or branched alkylene group containing 1 to 10 carbon atoms and optionally containing a substituent or a cyclic alkylene group containing 3 to 10 carbon atoms and optionally containing a substituent, preferably a linear or branched alkylene group containing 1 to 10 carbon atoms and free from a carbonyl group or a cyclic alkylene group containing 3 to 10 carbon atoms and free from a carbonyl group, more preferably a linear or branched alkylene group containing 1 to 10 carbon atoms and not containing a substituent, still more preferably a methylene group (-CH₂-), an ethylene group (-C₂H₄-), an isopropylene group (-CH(CH₃)CH₂-), or a propylene group (-C₃H₆-).

Any two of R^{1b}, R^{2b}, R^{3b}, and R^{4b} optionally bind to each other to form a ring, but preferably they do not form a ring.

In the formula (b), n is an integer of 1 or more. In the formula, n is preferably an integer of 1 to 40, more preferably an integer of 1 to 30, still more preferably an integer of 5 to 25, particularly preferably an integer of 5 to 9 and 11 to 25.

In the formula (b), p and q are each independently an integer of 0 or more. p is preferably an integer of 0 to 10, more preferably 0 or 1. q is preferably an integer of 0 to 10, more preferably an integer of 0 to 5.

The sum of n, p, and q is preferably an integer of 5 or more. The sum of n, p, and q is more preferably an integer of 8 or more. The sum of n, p, and q is also preferably an integer of 60 or less, more preferably an integer of 50 or less, still more preferably an integer of 40 or less.

In the formula (b), X^{b} is H, a metal atom, NR^{5b}₄, imidazolium optionally containing a substituent, pyridinium optionally containing a substituent, or phosphonium optionally containing a substituent; and R^{5b} is H or an organic group (preferably, a fluorine-free organic group). The four R^{5b}s may be the same as or different from each other. The organic group in R^{5b} is preferably an alkyl group. R^{5b} is preferably H or an organic group containing 1 to 10 carbon atoms, more preferably H or an organic group containing 1 to 4 carbon atoms, still more preferably H or an alkyl group containing 1 to 4 carbon atoms. Examples of the metal atom include alkali metals (Group 1) and alkaline earth metals (Group 2), and preferred is Na, K, or Li. Xb may be a metal atom or NR^{5b}₄ (wherein R^{5b} is as defined above).

X^{b} is preferably H, an alkali metal (Group 1), an alkaline earth metal (Group 2), or NR^{5b}₄, more preferably H, Na, K, Li, or NH₄ because they are easily dissolved in water, still more preferably Na, K, or NH₄ because they are more easily dissolved in water, particularly preferably Na or NH₄, most preferably NH₄ because it can be easily removed. When X^{b} is NH₄, the solubility of the surfactant in an aqueous medium is excellent, and the metal component is unlikely to remain in the TFE-based polymer or the final product.

In the formula (b), L is a single bond, -CO₂-B-*, - OCO-B-*, -CONR^{6b}-B-*, -NR^{6b}CO-B-*, or -CO- other than the carbonyl groups in -CO₂-B-, -OCO-B-, -CONR^{6b}-B-, and - NR^{6b}Co-B-, wherein B is a single bond or an alkylene group containing 1 to 10 carbon atoms and optionally containing a substituent, R^{6b} is H or an alkyl group containing 1 to 4 carbon atoms and optionally containing a substituent. The alkylene group preferably contains 1 to 5 carbon atoms. R^{6b} is preferably H or a methyl group; and * indicates the side bonded to -OSO₃X^{b} in the formula.

L is preferably a single bond.

The surfactant (b) is preferably a compound represented by the following formula: 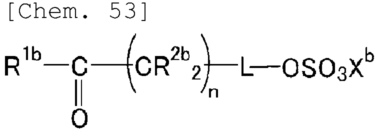 wherein R^{1b}, R^{2b}, L, n, and X^{b} are as defined above.

Examples of the surfactant (b) include

CH₃C(O)CH₂CH₂CH₂CH₂CH₂CH₂CH₂CH₂CH₂OSO₃Na,

CH₃C(O)CH₂CH₂CH₂CH₂CH₂CH₂CH₂CH₂OSO₃Na,

CH₃C(O)CH₂CH₂CH₂CH₂CH₂CH₂CH₂OSO₃Na,

CH₃C(O)CH₂CH₂CH₂CH₂CH₂CH₂OSO₃Na,

CH₃C(O)CH₂CH₂CH₂CH₂CH₂OSO₃Na,

CH₃C(O)CH₂CH₂CH₂CH₂OSO₃Na,

(CH₃)₃CC(O)CH₂CH₂CH₂CH₂CH₂CH₂CH₂CH₂CH₂OSO₃Na,

(CH₃)₂CHC(O)CH₂CH₂CH₂CH₂CH₂CH₂CH₂CH₂CH₂OSO₃Na,

(CH₂)₅CHC(O)CH₂CH₂CH₂CH₂CH₂CH₂CH₂CH₂CH₂OSO₃Na,

CH₃CH₂C(O)CH₂CH₂CH₂CH₂CH₂CH₂CH₂CH₂OSO₃Na,

CH₃CH₂CH₂C(O)CH₂CH₂CH₂CH₂CH₂CH₂CH₂OSO₃Na,

CH₃CH₂CH₂CH₂C(O)CH₂CH₂CH₂CH₂CH₂CH₂OSO₃Na,

CH₃CH₂CH₂CH₂CH₂C(O)CH₂CH₂CH₂CH₂CH₂OSO₃Na,

CH₃CH₂CH₂CH₂CH₂CH₂C(O)CH₂CH₂CH₂CH₂OSO₃Na,

CH₃CH₂CH₂CH₂CH₂CH₂CH₂C(O)CH₂CH₂CH₂OSO₃Na,

CH₃CH₂CH₂CH₂CH₂CH₂CH₂CH₂C(O)CH₂CH₂OSO₃Na,

CH₃CH₂CH₂CH₂CH₂CH₂CH₂CH₂CH₂C(O)CH₂OSO₃Na,

CH₃C(O)CH₂CH₂CH₂CH₂CH₂CH₂CH₂CH₂CH₂OCH₂CH₂OSO₃Na,

CH₃C(O)CH₂CH₂CH₂CH₂CH₂CH₂CH₂CH₂CH₂C(O)NHCH₂OSO₃Na,

CH₃C(O)CH₂CH₂CH₂CH₂CH₂CH₂CH₂CH₂CH₂NHC(O)CH₂OSO₃Na,

CH₃C(O)CH₂CH₂CH₂CH₂CH₂CH₂CH₂CH₂CH₂C(O)OSO₃Na,

CH₃C(O)CH₂CH₂CH₂CH₂CH₂CH₂CH₂CH₂CH₂C(O)OCH₂OSO₃Na,

CH₃C(O)CH₂CH₂CH₂CH₂CH₂CH₂CH₂CH₂CH₂OC(O)CH₂OSO₃Na,

CH₃C(O)CH₂CH₂CH₂CH₂CH₂CH₂CH₂CH₂CH₂OSO₃H,

CH₃C(O)CH₂CH₂CH₂CH₂CH₂CH₂CH₂CH₂CH₂OSO₃Li,

CH₃C(O)CH₂CH₂CH₂CH₂CH₂CH₂CH₂CH₂CH₂OSO₃K,

CH₃C(O)CH₂CH₂CH₂CH₂CH₂CH₂CH₂CH₂CH₂OSO₃NH₄,

CH₃C(O)CH₂CH₂CH₂CH₂CH₂CH₂CH₂CH₂CH(CH₃)₂OSO₃Na,

CH₃C(O)CH₂CH₂CH₂CH₂CH₂CH₂CH₂CH₂CH₂CH₂CH₂CH₂CH₂CH₂CH₂CH₂CH₂O SO₃Na,

CH₃C(O)CH₂CH₂CH₂CH₂CH₂CH₂CH₂CH₂CH₂CH₂CH₂CH₂CH₂CH₂CH₂CH₂OSO₃ Na,

CH₃C(O)CH₂CH₂CH₂CH₂CH₂CH₂CH₂CH₂CH₂CH₂CH₂CH₂CH₂CH₂CH₂OSO₃Na ,

CH₃C(O)CH₂CH₂CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂OSO₃Na,

(CH₃)₃CC(O)CH₂CH₂CH₂CH₂CH₂CH₂CH₂CH₂CH₂CH₂CH₂CH₂CH₂CH₂CH₂CH₂ CH₂OSO₃Na,

(CH₃)₂CHC(O)CH₂CH₂CH₂CH₂CH₂CH₂CH₂CH₂CH₂CH₂CH₂CH₂CH₂CH₂CH₂C H₂CH₂OSO₃Na,

(CH₂)₅CHC(O)CH₂CH₂CH₂CH₂CH₂CH₂CH₂CH₂CH₂CH₂CH₂CH₂CH₂CH₂CH₂C H₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂O SO₃Na,

CH₃CH₂CH₂CH₂CH₂C(O)CH₂CH₂CH₂CH₂CH₂CH₂CH₂CH₂CH₂CH₂CH₂CH₂CH₂O SO₃Na,

CH₃CH₂CH₂CH₂CH₂CH₂CH₂CH₂C(O)CH₂CH₂CH₂CH₂CH₂CH₂CH₂CH₂CH₂CH₂O SO₃Na,

CH₃CH₂CH₂CH₂CH₂CH₂CH₂CH₂CH₂CH₂CH₂C(O)CH₂CH₂CH₂CH₂CH₂CH₂CH₂O SO₃Na,

CH₃CH₂CH₂CH₂CH₂CH₂CH₂CH₂CH₂CH₂CH₂CH₂CH₂CH₂C(O)CH₂CH₂CH₂CH₂O SO₃Na,

CH₃CH₂C(O)CH₂CH₂CH₂CH₂CH₂CH₂CH₂CH₂CH₂CH₂CH₂CH₂CH₂CH₂CH₂CH₂O CH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂C (O)NHCH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂N HC(O)CH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂C (O)OCH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂O C(O)CH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂C (O)OSO₃Na,

CH₃CH₂C(O)CH₂CH₂CH₂CH₂CH₂CH₂CH₂CH₂CH₂CH₂CH₂CH₂CH₂CH₂CH₂CH₂O SO₃H,

CH₃CH₂C(O)CH₂CH₂CH₂CH₂CH₂CH₂CH₂CH₂CH₂CH₂CH₂CH₂CH₂CH₂CH₂CH₂O SO₃Li,

CH₃CH₂C(O)CH₂CH₂CH₂CH₂CH₂CH₂CH₂CH₂CH₂CH₂CH₂CH₂CH₂CH₂CH₂CH₂O SO₃K,

CH₃CH₂C(O)CH₂CH₂CH₂CH₂CH₂CH₂CH₂CH₂CH₂CH₂CH₂CH₂CH₂CH₂CH₂CH₂O SO₃NH₄, and

CH₃C(O)CH₂CH₂CH₂CH₂CH₂CH₂CH₂CH₂CH₂CH₂CH₂CH₂CH₂CH₂CH₂CH₂CH₂C H₂CH₂CH₂CH₂OSO₃Na.

The surfactant (b) can be produced by the production method disclosed in WO 2020/022355.

Next, the surfactant (c) is described below.

In the formula (c), R^{1c} is a linear or branched alkyl group containing 1 or more carbon atoms or a cyclic alkyl group containing 3 or more carbon atoms.

When containing 3 or more carbon atoms, the alkyl group optionally contains a carbonyl group (-C(=O)-) between two carbon atoms. When containing 2 or more carbon atoms, the alkyl group optionally contains the carbonyl group at an end of the alkyl group. In other words, acyl groups such as an acetyl group represented by CH₃-C(=O)-are also included in the alkyl group.

When containing 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In R^{1c}, a divalent heterocycle may be present between two carbon atoms, or a divalent heterocycle may be present at an end and bind to - C(=O)-, or a monovalent heterocycle may be present at an end of the alkyl group.

The "number of carbon atoms" in the alkyl group as used herein includes the number of carbon atoms constituting the carbonyl groups and the number of carbon atoms constituting the heterocycles. For example, the number of carbon atoms in the group represented by CH₃-C(=O)-CH₂- is 3, the number of carbon atoms in the group represented by CH₃-C(=O)-C₂H₄-C(=O)-C₂H₄- is 7, and the number of carbon atoms in the group represented by CH₃-C(=O)- is 2.

In the alkyl group, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C(=O)-R^{101c} (wherein R^{101c} is an alkyl group).

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

In the formula (c), R^{2c} and R^{3c} are each independently a single bond or a divalent linking group.

Preferably, R^{2c} and R^{3c} are each independently a single bond, or a linear or branched alkylene group containing 1 or more carbon atoms, or a cyclic alkylene group containing 3 or more carbon atoms.

The alkylene group constituting R^{2c} and R^{3c} is preferably free from a carbonyl group.

In the alkylene group, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C(=O)-R^{102c} (wherein R^{102c} is an alkyl group).

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The total number of carbon atoms of R^{1c}, R^{2c}, and R^{3c} is 5 or more. The total number of carbon atoms is preferably 7 or more, more preferably 9 or more, while it is preferably 20 or less, more preferably 18 or less, still more preferably 15 or less.

Any two of R^{1c}, R^{2c}, and R^{3c} optionally bind to each other to form a ring.

In the formula (c), A^{c} is -COOX^{c} or -SO₃X^{c}, wherein X^{c} is H, a metal atom, NR^{4c}₄, imidazolium optionally containing a substituent, pyridinium optionally containing a substituent, or phosphonium optionally containing a substituent; and R^{4c}s are each H or an organic group (preferably, a fluorine-free organic group) and are the same as or different from each other. The organic group in R^{4c} is preferably an alkyl group. R^{4c} is preferably H or an organic group containing 1 to 10 carbon atoms, more preferably H or an organic group containing 1 to 4 carbon atoms, still more preferably H or an alkyl group containing 1 to 4 carbon atoms. Examples of the metal atom include alkali metals (Group 1) and alkaline earth metals (Group 2), and preferred is Na, K, or Li.

X^{c} is preferably H, an alkali metal (Group 1), an alkaline earth metal (Group 2), or NR^{4c}₄, more preferably H, Na, K, Li, or NH₄ because they are easily dissolved in water, still more preferably Na, K, or NH₄ because they are more easily dissolved in water, particularly preferably Na or NH₄, most preferably NH₄ because it can be easily removed. When X^{c} is NH₄, the solubility of the surfactant in an aqueous medium is excellent, and the metal component is unlikely to remain in the TFE-based polymer or the final product.

Examples of the surfactant (c) include the following surfactants. In each formula, A^{c} is as defined above.

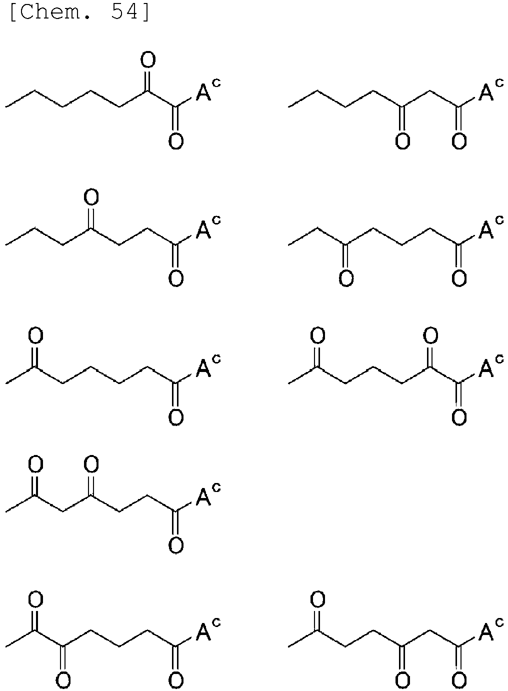

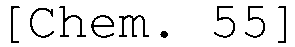

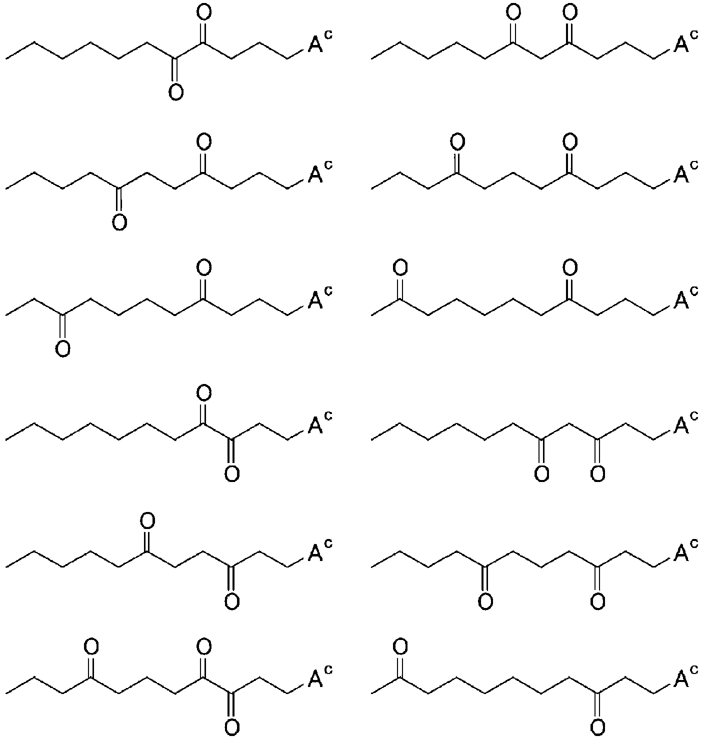

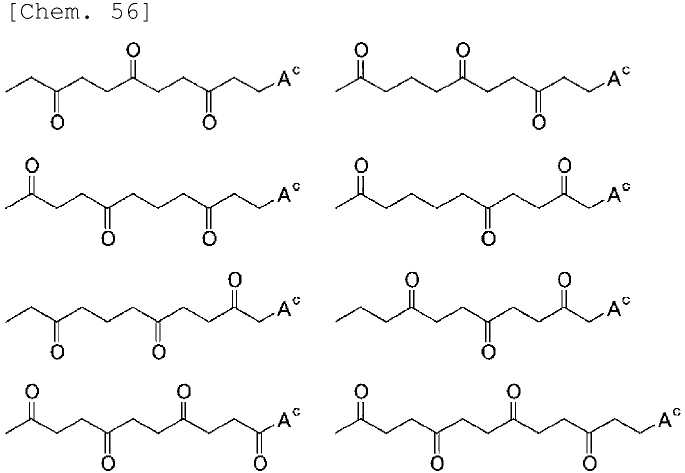

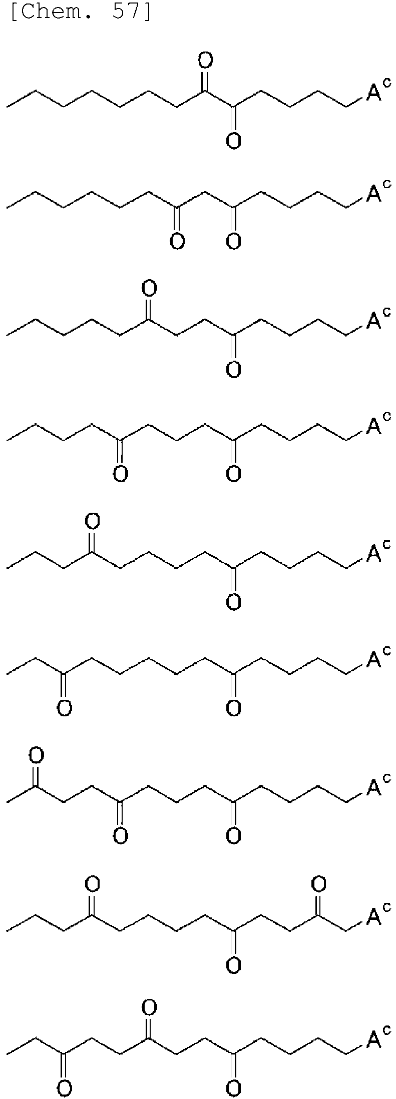

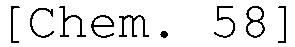

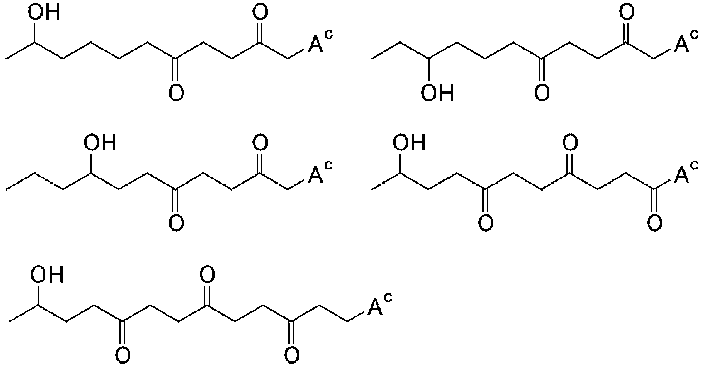

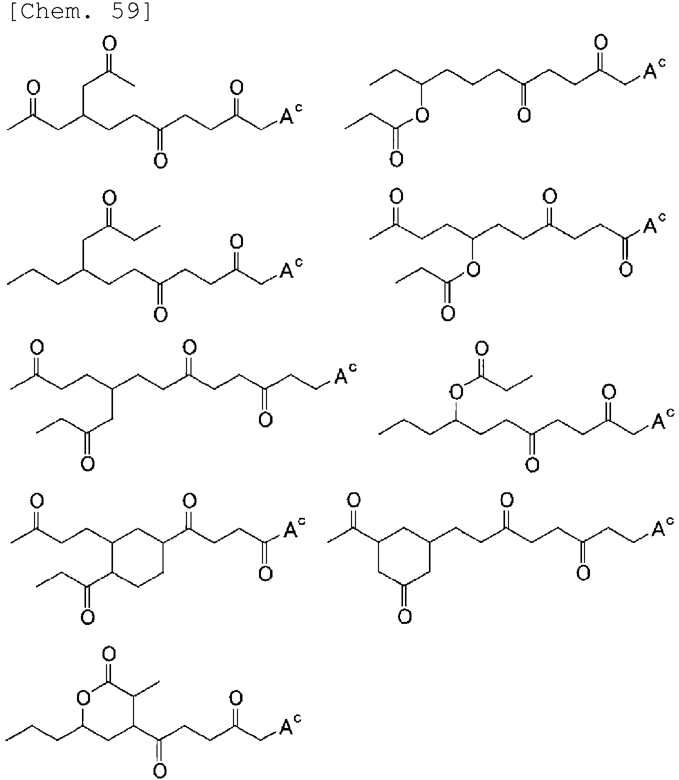

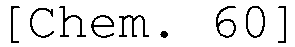

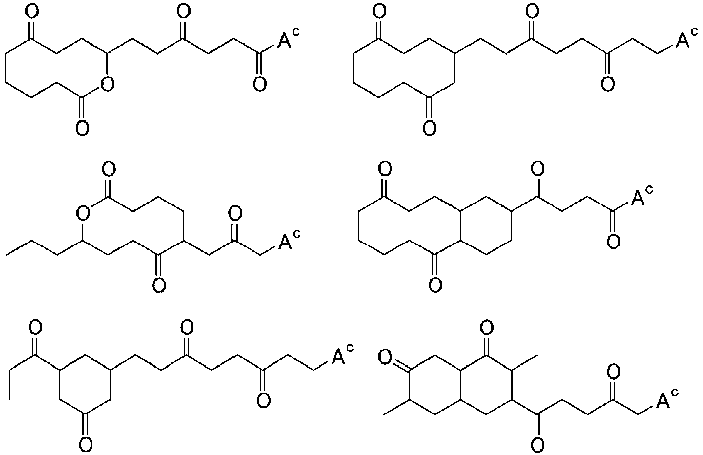

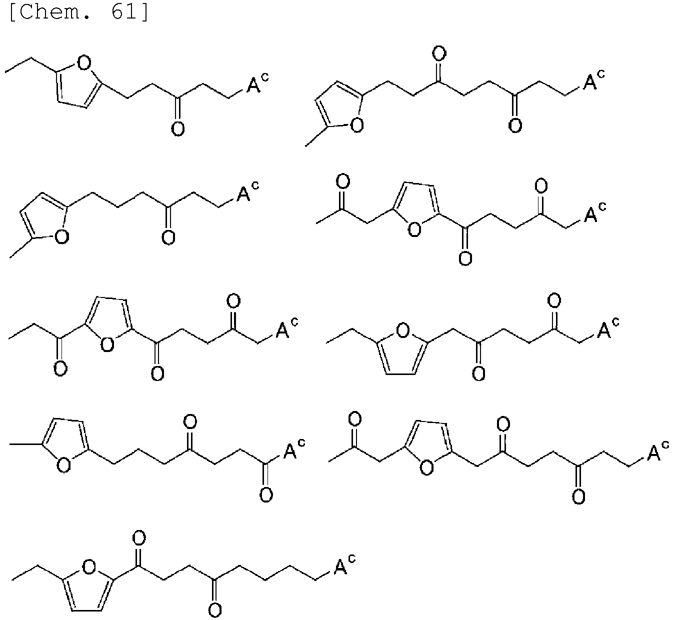

The surfactant (c) can be produced by the production method disclosed in WO 2020/022355.

Next, the surfactant (d) is described below.

In the formula (d), R^{1d} is a linear or branched alkyl group containing 1 or more carbon atoms and optionally containing a substituent or a cyclic alkyl group containing 3 or more carbon atoms and optionally containing a substituent.

When containing 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In R^{1d}, a divalent heterocycle may be present between two carbon atoms, or a divalent heterocycle may be present at an end and bind to - C(=O)-, or a monovalent heterocycle may be present at an end of the alkyl group.

The "number of carbon atoms" in the alkyl group as used herein includes the number of carbon atoms constituting the heterocycles.

The substituent which may be contained in the alkyl group for R^{1d} is preferably a halogen atom, a linear or branched alkyl group containing 1 to 10 carbon atoms, or a cyclic alkyl group containing 3 to 10 carbon atoms, or a hydroxy group, particularly preferably a methyl group or an ethyl group.

The alkyl group for R^{1d} is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R^{1d} is preferably a linear or branched alkyl group containing 1 to 10 carbon atoms and optionally containing a substituent or a cyclic alkyl group containing 3 to 10 carbon atoms and optionally containing a substituent, more preferably a linear or branched alkyl group containing 1 to 10 carbon atoms and free from a carbonyl group or a cyclic alkyl group containing 3 to 10 carbon atoms and free from a carbonyl group, still more preferably a linear or branched alkyl group containing 1 to 10 carbon atoms and not containing a substituent, further preferably a linear or branched alkyl group containing 1 to 3 carbon atoms and not containing a substituent, particularly preferably a methyl group (-CH₃) or an ethyl group (-C₂H₅), most preferably a methyl group (-CH₃).

In the formula (d), R^{2d} and R^{4d} are each independently H or a substituent. A plurality of R^{2d}s and R^{4d}s may be the same as or different from each other.

The substituent for each of R^{2d} and R^{4d} is preferably a halogen atom, a linear or branched alkyl group containing 1 to 10 carbon atoms, or a cyclic alkyl group containing 3 to 10 carbon atoms, or a hydroxy group, particularly preferably a methyl group or an ethyl group.

The alkyl group for each of R^{2d} and R^{4d} is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

The alkyl group for each of R^{2d} and R^{4d} is preferably a linear or branched alkyl group containing 1 to 10 carbon atoms and free from a carbonyl group or a cyclic alkyl group containing 3 to 10 carbon atoms and free from a carbonyl group, more preferably a linear or branched alkyl group containing 1 to 10 carbon atoms and free from a carbonyl group, still more preferably a linear or branched alkyl group containing 1 to 3 carbon atoms and not containing a substituent, particularly preferably a methyl group (-CH₃) or an ethyl group (-C₂H₅).

R^{2d} and R^{4d} are preferably each independently H or a linear or branched alkyl group containing 1 to 10 carbon atoms and free from a carbonyl group, more preferably H or a linear or branched alkyl group containing 1 to 3 carbon atoms and not containing a substituent, still more preferably H, a methyl group (-CH₃), or an ethyl group (-C₂H₅), particularly preferably H.

In the formula (d), R^{3d} is an alkylene group containing 1 to 10 carbon atoms and optionally containing a substituent. When a plurality of R^{3d}s are present, they may be the same as or different from each other.

The alkylene group is preferably free from a carbonyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkyl group free from halogen atoms such as fluorine atoms and chlorine atoms.

The alkylene group preferably contains no substituent.

The alkylene group is preferably a linear or branched alkylene group containing 1 to 10 carbon atoms and optionally containing a substituent or a cyclic alkylene group containing 3 to 10 carbon atoms and optionally containing a substituent, preferably a linear or branched alkylene group containing 1 to 10 carbon atoms and free from a carbonyl group or a cyclic alkylene group containing 3 to 10 carbon atoms and free from a carbonyl group, more preferably a linear or branched alkylene group containing 1 to 10 carbon atoms and not containing a substituent, still more preferably a methylene group (-CH₂-), an ethylene group (-C₂H₄-), an isopropylene group (-CH(CH₃)CH₂-), or a propylene group (-C₃H₆-).

Any two of R^{1d}, R^{2d}, R^{3d} and R^{4d} optionally bind to each other to form a ring.

In the formula (d), n is an integer of 1 or more. In the formula, n is preferably an integer of 1 to 40, more preferably an integer of 1 to 30, still more preferably an integer of 5 to 25.

In the formula (d), p and q are each independently an integer of 0 or more. p is preferably an integer of 0 to 10, more preferably 0 or 1. q is preferably an integer of 0 to 10, more preferably an integer of 0 to 5.

The sum of n, p, and q is preferably an integer of 6 or more. The sum of n, p, and q is more preferably an integer of 8 or more. The sum of n, p, and q is also preferably an integer of 60 or less, more preferably an integer of 50 or less, still more preferably an integer of 40 or less.

In the formula (d), A^{d} is -SO₃X^{d} or -COOX^{d}, wherein X^{d} is H, a metal atom, NR^{5d}₄, imidazolium optionally containing a substituent, pyridinium optionally containing a substituent, or phosphonium optionally containing a substituent; and R^{5d}s are each H or an organic group (preferably a fluorine-free organic group) and are the same as or different from each other. The organic group in R^{5d} is preferably an alkyl group. R^{5d} is preferably H or an organic group containing 1 to 10 carbon atoms, more preferably H or an organic group containing 1 to 4 carbon atoms, still more preferably H or an alkyl group containing 1 to 4 carbon atoms. Examples of the metal atom include alkali metals (Group 1) and alkaline earth metals (Group 2), and preferred is Na, K, or Li. Xd may be a metal atom or NR^{5d}₄ (wherein R^{5d} is as defined above).

X^{d} is preferably H, an alkali metal (Group 1), an alkaline earth metal (Group 2), or NR^{5d}₄, more preferably H, Na, K, Li, or NH₄ because they are easily dissolved in water, still more preferably Na, K, or NH₄ because they are more easily dissolved in water, particularly preferably Na or NH₄, most preferably NH₄ because it can be easily removed. When X^{d} is NH₄, the solubility of the surfactant in an aqueous medium is excellent, and the metal component is unlikely to remain in the TFE-based polymer or the final product.

In the formula (d), L is a single bond, -CO₂-B-*, - OCO-B-*, -CONR^{6d}-B-*, -NR^{6d}CO-B-*, or -CO- other than the carbonyl groups in -CO₂-B-, -OCO-B-, -CONR^{6d}-B-, and - NR^{6d}CO-B-, wherein B is a single bond or an alkylene group containing 1 to 10 carbon atoms and optionally containing a substituent, R^{6d} is H or an alkyl group containing 1 to 4 carbon atoms and optionally containing a substituent. The alkylene group more preferably contains 1 to 5 carbon atoms. R^{6d} is more preferably H or a methyl group, and * indicates the side bonded to A^{d} in the formula.

L is preferably a single bond.

Examples of the surfactant (d) include

CH₃C(O)CH₂CH₂CH₂CH₂CH₂CH₂CH₂CH₂COOK,

CH₃C(O)CH₂CH₂CH₂CH₂CH₂CH₂CH₂COONa,

CH₃C(O)CH₂CH₂CH₂CH₂CH₂CH₂COONa,

CH₃C(O)CH₂CH₂CH₂CH₂CH₂COONa,

CH₃C(O)CH₂CH₂CH₂CH₂COONa,

CH₃C(O)CH₂CH₂CH₂COONa,

CH₃C(O)CH₂CH₂CH₂CH₂CH₂CH₂CH₂CH₂CH₂CH₂CH₂CH₂CH₂COONa,

CH₃C(O)CH₂CH₂CH₂CH₂CH₂CH₂CH₂CH₂CH₂CH₂CH₂CH₂CH₂CH₂CH₂CH₂CH₂C H₂COONa,

(CH₃)₃CC(O)CH₂CH₂CH₂CH₂CH₂CH₂CH₂CH₂COONa,

(CH₃)₂CHC(O)CH₂CH₂CH₂CH₂CH₂CH₂CH₂CH₂COONa,

(CH₂)₅CHC(O)CH₂CH₂CH₂CH₂CH₂CH₂CH₂CH₂COONa,

CH₃CH₂C(O)CH₂CH₂CH₂CH₂CH₂CH₂CH₂COONa,

CH₃CH₂CH₂C(O)CH₂CH₂CH₂CH₂CH₂CH₂COONa,

CH₃CH₂CH₂CH₂C(O)CH₂CH₂CH₂CH₂CH₂COONa,

CH₃CH₂CH₂CH₂CH₂C(O)CH₂CH₂CH₂CH₂COONa,

CH₃CH₂CH₂CH₂CH₂CH₂C(O)CH₂CH₂CH₂COONa,

CH₃CH₂CH₂CH₂CH₂CH₂CH₂C(O)CH₂CH₂COONa,

CH₃CH₂CH₂CH₂CH₂CH₂CH₂CH₂C(O)CH₂COONa,

CH₃C(O)CH₂CH₂CH₂CH₂CH₂CH₂CH₂CH₂OCH₂CH₂COONa,

CH₃C(O)CH₂CH₂CH₂CH₂CH₂CH₂CH₂CH₂C(O)NHCH₂COOK,

CH₃C(O)CH₂CH₂CH₂CH₂CH₂CH₂CH₂CH₂NHC(O)CH₂COOK,

CH₃C(O)CH₂CH₂CH₂CH₂CH₂CH₂CH₂CH₂C(O)OCH₂COONa,

CH₃C(O)CH₂CH₂CH₂CH₂CH₂CH₂CH₂CH₂OC(O)CH₂COONa,

CH₃C(O)CH₂CH₂CH₂CH₂CH₂CH₂CH₂CH₂C(O)COONa,

CH₃C(O)CH₂CH₂CH₂CH₂CH₂CH₂CH₂CH₂C(O)COOH,

CH₃C(O)CH₂CH₂CH₂CH₂CH₂CH₂CH₂CH₂C(O)COOLi,

CH₃C(O)CH₂CH₂CH₂CH₂CH₂CH₂CH₂CH₂C(O)COONH₄,

CH₃C(O)CH₂CH₂CH₂CH₂CH₂CH₂CH₂CH₂C(O)COONa, CH₃C(O)CH₂CH₂CH₂CH₂CH₂CH₂CH₂C(CH₃)₂COOK,

CH₃C(O)CH₂CH₂CH₂CH₂CH₂CH₂CH₂CH₂CH₂SO₃Na,

CH₃C(O)CH₂CH₂CH₂CH₂CH₂CH₂CH₂CH₂CH₂CH₂CH₂CH₂CH₂SO₃Na,

CH₃C(O)CH₂CH₂CH₂CH₂CH₂CH₂CH₂CH₂CH₂CH₂CH₂CH₂CH₂CH₂CH₂CH₂CH₂C H₂SO₃Na,

CH₃C(O)CH₂CH₂CH₂CH₂CH₂CH₂CH₂CH₂CH₂CH₂SO₃Na,

(CH₃)₃CC(O)CH₂CH₂CH₂CH₂CH₂CH₂CH₂CH₂CH₂SO₃Na,

(CH₃)₂CHC(O)CH₂CH₂CH₂CH₂CH₂CH₂CH₂CH₂CH₂SO₃Na,

(CH₂)₅CHC(O)CH₂CH₂CH₂CH₂CH₂CH₂CH₂CH₂CH₂SO₃Na,

CH₃C(O)CH₂CH₂CH₂CH₂CH₂CH₂CH₂CH₂SO₃Na,

CH₃C(O)CH₂CH₂CH₂CH₂CH₂CH₂CH₂SO₃Na,

CH₃C(O)CH₂CH₂CH₂CH₂CH₂CH₂SO₃Na,

CH₃C(O)CH₂CH₂CH₂CH₂CH₂SO₃Na,

CH₃C(O)CH₂CH₂CH₂CH₂SO₃Na,

CH₃C(O)CH₂CH₂CH₂SO₃Na,

CH₃C(O)CH₂CH₂SO₃Na,

CH₃C(O)CH₂SO₃Na,

CH₃C(O)CH₂CH₂CH₂CH₂CH₂CH₂CH₂CH₂CH₂OCH₂CH₂CH₂SO₃Na,

CH₃C(O)CH₂CH₂CH₂CH₂CH₂CH₂CH₂CH₂CH₂C(O)NHCH₂SO₃Na,

CH₃C(O)CH₂CH₂CH₂CH₂CH₂CH₂CH₂CH₂CH₂NHC(O)CH₂SO₃Na,

CH₃C(O)CH₂CH₂CH₂CH₂CH₂CH₂CH₂CH₂CH₂C(O)SO₃Na,

CH₃C(O)CH₂CH₂CH₂CH₂CH₂CH₂CH₂CH₂CH₂C(O)OCH₂SO₃Na,

CH₃C(O)CH₂CH₂CH₂CH₂CH₂CH₂CH₂CH₂CH₂OC(O)CH₂SO₃Na,

CH₃C(O)CH₂CH₂CH₂CH₂CH₂CH₂CH₂CH₂CH₂SO₃H,

CH₃C(O)CH₂CH₂CH₂CH₂CH₂CH₂CH₂CH₂CH₂SO₃K,

CH₃C(O)CH₂CH₂CH₂CH₂CH₂CH₂CH₂CH₂CH₂SO₃Li,

CH₃C(O)CH₂CH₂CH₂CH₂CH₂CH₂CH₂CH₂CH₂SO₃NH₄,

and

CH₃C(O)CH₂CH₂CH₂CH₂CH₂CH₂CH₂CH₂C(CH₃)₂SO₃Na.

The surfactant (d) can be produced by the production method disclosed in WO 2020/022355.

Next, the surfactant (e) is described below.

In the formula (e), R^{1e} to R^{5e} each represent H or a monovalent substituent, with the proviso that at least one of R^{1e} or R^{3e} represents a group represented by the formula: -Y^{e}-R^{6e} and at least one of R^{2e} or R^{5e} represents a group represented by the formula: -X^{e}-A^{e} or a group represented by the formula: -Y^{e}-R^{6e}. Any two of R^{1e} to R^{5e} optionally bind to each other to form a ring.

The substituent which may be contained in the alkyl group for R^{1e} is preferably a halogen atom, a linear or branched alkyl group containing 1 to 10 carbon atoms, or a cyclic alkyl group containing 3 to 10 carbon atoms, or a hydroxy group, particularly preferably a methyl group or an ethyl group.

The alkyl group for R^{1e} is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R^{1e} is preferably a linear or branched alkyl group containing 1 to 10 carbon atoms and optionally containing a substituent or a cyclic alkyl group containing 3 to 10 carbon atoms and optionally containing a substituent, more preferably a linear or branched alkyl group containing 1 to 10 carbon atoms and free from a carbonyl group or a cyclic alkyl group containing 3 to 10 carbon atoms and free from a carbonyl group, still more preferably a linear or branched alkyl group containing 1 to 10 carbon atoms and not containing a substituent, further preferably a linear or branched alkyl group containing 1 to 3 carbon atoms and not containing a substituent, particularly preferably a methyl group (-CH₃) or an ethyl group (-C₂H₅), most preferably a methyl group (-CH₃).

The monovalent substituent is preferably a group represented by the formula: -Y^{e}-R^{6e}, a group represented by the formula: -X^{e}-A^{e}, -H, and an alkyl group containing 1 to 20 carbon atoms and optionally containing a substituent, - NH₂, -NHR^{9e} (wherein R^{9e} is an organic group (preferably, a fluorine-free organic group)), -OH, -COOR^{9e} (wherein R^{9e} is an organic group (preferably, a fluorine-free organic group)) or -OR^{9e} (R^{9e} is an organic group (preferably, a fluorine-free organic group)). The alkyl group preferably contains 1 to 10 carbon atoms.

R^{9e} is preferably a C1-C10 alkyl group or a C1-C10 alkylcarbonyl group, more preferably a C1-C4 alkyl group or a C1-C4 alkylcarbonyl group.

In the formula, X^{e}s at respective occurrences are the same as or different from each other and are each a divalent linking group or a bond.

When R^{6e} contains none of a carbonyl group, an ester group, an amide group, and a sulfonyl group, X^{e} is preferably a divalent linking group containing at least one selected from the group consisting of a carbonyl group, an ester group, an amide group, and a sulfonyl group.

X^{e} is preferably a divalent linking group containing at least one bond selected from the group consisting of - CO-, -S(=O)₂-, -O-, -COO-, -OCO-, -S(=O)₂-O-, -O-S(=O)₂-, - CONR^{8e}-, and -NR^{8e}CO-, a C1-C10 alkylene group, or a bond. R^{8e} represents H or an organic group (preferably, a fluorine-free organic group).

The organic group in R^{8e} is preferably an alkyl group. R^{8e} is preferably H or a C1-C10 organic group, more preferably H or a C1-C4 organic group, still more preferably H or a C1-C4 alkyl group, further preferably H.

In the formula (e), A^{e}s at respective occurrences are the same as or different from each other and are each - COOM^{e}, -SO₃M^{e}, or -OSO₃M^{e}, wherein M^{e} is H, a metal atom, NR^{7e}₄, imidazolium optionally containing a substituent, pyridinium optionally containing a substituent, or phosphonium optionally containing a substituent; and R^{7e} is H or an organic group (preferably, a fluorine-free organic group); and the four R^{7e}s may be the same as or different from each other. In a preferred case, in the formula (e), A^{e} is -COOM^{e}.

The organic group in R^{7e} is preferably an alkyl group. R^{7e} is preferably H or a C1-C10 organic group, more preferably H or a C1-C4 organic group, still more preferably H or a C1-C4 alkyl group.

Examples of the metal atom include alkali metals (Group 1) and alkaline earth metals (Group 2), and preferred is Na, K, or Li.

M^{e} is preferably H, a metal atom, or NR^{7e}₄, more preferably H, an alkali metal (Group 1), an alkaline earth metal (Group 2), or NR^{7e}₄, still more preferably H, Na, K, Li, or NH₄, further preferably Na, K, or NH₄, particularly preferably Na or NH₄, most preferably NH₄.

In the formula (e), Y^{e}s at respective occurrences are the same as or different from each other and are each a divalent linking group selected from the group consisting of -S(=O)₂-, -O-, -COO-, -OCO-, -CONR^{8e}-, and -NR^{8e}CO-, or a bond, wherein R^{8e} is H or an organic group (preferably, a fluorine-free organic group).

Y^{e} is preferably a divalent linking group selected from the group consisting of a bond, -O-, -COO-, -OCO-, - CONR^{8e}-, and -NR^{8e}CO-, more preferably a divalent linking group selected from the group consisting of a bond, -COO-, and -OCO-.

The organic group in R^{8e} is preferably an alkyl group. R^{8e} is preferably H or a C1-C10 organic group, more preferably H or a C1-C4 organic group, still more preferably H or a C1-C4 alkyl group, further preferably H.

In the formula (e), R^{6e}s at respective occurrences are the same as or different from each other and are each an alkyl group containing 2 or more carbon atoms and optionally containing, between carbon atoms, at least one selected from the group consisting of a carbonyl group, an ester group, an amide group, and a sulfonyl group. The organic group (preferably, a fluorine-free organic group) represented by R^{6e} preferably contains 2 to 20 carbon atoms, more preferably 2 to 10 carbon atoms.

The alkyl group for R^{6e} can contain, between carbon atoms, one or two or more of at least one selected from the group consisting of a carbonyl group, an ester group, an amide group, and a sulfonyl group, but the alkyl group contains no such groups at ends. In the alkyl group for R^{6e}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R^{6e} is preferably
a group represented by the formula: -R^{10e}-CO-R^{11e},
a group represented by the formula: -R^{10e}-COO-R^{11e},
a group represented by the formula: -R^{11e},
a group represented by the formula: -R^{10e}-NR^{8e}CO-R^{11e}, or
a group represented by the formula: -R^{10e}-CONR^{8e}-R^{11e}, wherein R^{8e} is H or an organic group (preferably, a fluorine-free organic group); R^{10e} is an alkylene group; and R^{11e} is an alkyl group optionally containing a substituent.

R^{6e} is more preferably a group represented by the formula: -R^{10e}-CO-R^{11e}.

The organic group in R^{8e} is preferably an alkyl group. R^{8e} is preferably H or a C1-C10 organic group, more preferably H or a C1-C4 organic group, still more preferably H or a C1-C4 alkyl group, further preferably H.

The alkylene group for R^{10e} preferably contains 1 or more, more preferably 3 or more carbon atoms, and preferably 20 or less, more preferably 12 or less, still more preferably 10 or less, particularly preferably 8 or less carbon atoms. Further, the alkylene group for R^{10e} preferably contains 1 to 20, more preferably 1 to 10, still more preferably 3 to 10 carbon atoms.

The alkyl group for R^{11e} may contain 1 to 20 carbon atoms, and preferably contains 1 to 15, more preferably 1 to 12, still more preferably 1 to 10, further preferably 1 to 8, even more preferably 1 to 6, still even more preferably 1 to 3, particularly preferably 1 or 2, most preferably 1 carbon atom. The alkyl group for R^{11e} preferably consists only of primary carbons, secondary carbons, and tertiary carbons, particularly preferably consists only of primary carbons and secondary carbons. In other words, R^{11e} is preferably a methyl group, an ethyl group, an n-propyl group, or an isopropyl group, most preferably a methyl group.

In a preferred case, in the formula (e), at least one of R^{2e} or R^{5e} is a group represented by the formula: -X^{e}-A^{e}, and A^{e} is -COOM^{e}.

The surfactant (e) is preferably a compound represented by the following formula (e-1), a compound represented by the following formula (e-2), or a compound represented by the following formula (e-3), more preferably a compound represented by the formula (e-1) or a compound represented by the formula (e-2): 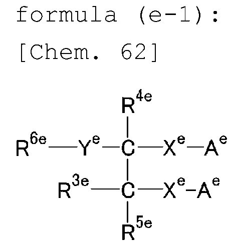 wherein R^{3e} to R^{6e}, X^{e}, A^{e}, and Y^{e} are as defined above; 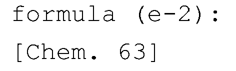 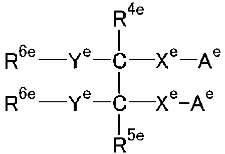 wherein R^{4e} to R^{6e}, X^{e}, A^{e}, and Y^{e} are as defined above; 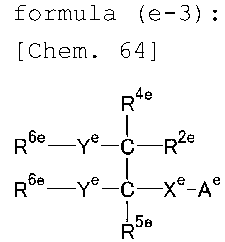 wherein R^{2e}, R^{4e} to R^{6e}, X^{e}, A^{e}, and Y^{e} are as defined above.

The group represented by the formula: -X^{e}-A^{e} is preferably

-COOM^{e},

-R^{12e}COOM^{e},

-SO₃M^{e},

-OSO₃M^{e},

-R^{12e}SO₃M^{e},

-R^{12e}OSO₃M^{e},

-OCO-R^{12e}-COOM^{e},

-OCO-R^{12e}-SO₃M^{e},

-OCO-R^{12e}-OSO₃M^{e},

-COO-R^{12e}-COOM^{e},

-COO-R^{12e}-SO₃M^{e},

-COO-R^{12e}-OSO₃M^{e},

-CONR^{8e}-R^{12e}-COOM^{e},

-CONR^{8e}-R^{12e}-SO₃M^{e},

-CONR^{8e}-R^{12e}-OSO₃M^{e},

-NR^{8e}CO-R^{12e}-COOM^{e},

-NR^{8e}CO-R^{12e}-SO₃M^{e},

-NR^{8e}CO-R^{12e}-OSO₃M^{e},

-OS(=O)₂-R^{12e}-COOM^{e},

-OS(=O)₂-R^{12e}-SO₃M^{e}, or

-OS(=O)₂-R^{12e}-OSO₃M^{e}

(wherein R^{8e} and M^{e} are as defined above; and R^{12e} is a C1-C10 alkylene group).

In the alkylene group for R^{12e}, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The group represented by the formula: -Y^{e}-R^{6e} is preferably
a group represented by the formula: -R^{10e}-CO-R^{11e},
a group represented by the formula: -OCO-R^{10e}-CO-R^{11e},
a group represented by the formula: -COO-R^{10e}-CO-R^{11e},
a group represented by the formula: -OCO-R^{10e}-COO-R^{11e},
a group represented by the formula: -COO-R^{11e},
a group represented by the formula: -NR'^{8e}CO-R^{10e}-CO-R^{11e}, or
a group represented by the formula: -CONR^{8e}-R^{10e}-NR^{8e}CO-R^{11e}
(wherein R^{8e}, R^{10e}, and R^{11e} are as defined above).

In the formulas, R^{4e} and R^{5e} are each independently preferably H or a C1-C4 alkyl group.

In the alkyl group for R^{4e} and R^{5e}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R^{3e} in the formula (e-1) is preferably H or an alkyl group containing 1 to 20 carbon atoms and optionally containing a substituent, more preferably H or an alkyl group containing 1 to 20 carbon atoms and containing no substituent, still more preferably H.

In the alkyl group for R^{3e}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R^{2e} in the formula (e-3) is preferably H, OH, or a C1-C20 alkyl group optionally containing a substituent, more preferably H, OH, or a C1-C20 alkyl group containing no substituent, still more preferably H or OH.

In the alkyl group for R^{2e}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The surfactant (e) can be produced by a known production method.

The specific hydrocarbon surfactant is also preferably a carboxylic acid-type hydrocarbon surfactant. The carboxylic acid-type hydrocarbon surfactant may be any surfactant that contains a carboxy group (-COOH) or a group where a hydrogen atom of a carboxy group is replaced by an inorganic cation (e.g., metal atom, ammonium). Usable is, for example, a hydrocarbon surfactant containing a carboxy group or a group where a hydrogen atom of a carboxy group is replaced by an inorganic cation, from among specific hydrocarbon surfactants described above.

In the carboxylic acid-type hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The carboxylic acid-type hydrocarbon surfactant preferably contains a carboxy group (-COOH) or a group where a hydrogen atom of a carboxy group is replaced by an inorganic cation (e.g., metal atom, ammonium), among at least one selected from the group consisting of the surfactant (c) represented by the formula (c) and the surfactant (d) represented by the formula (d).

The specific hydrocarbon surfactant is also preferably a sulfonic acid-type hydrocarbon surfactant. The sulfonic acid-type hydrocarbon surfactant may be any surfactant that contains a -SO₃H group, a -OSO₃H group, or a group where a hydrogen atom of any of these groups is replaced by an inorganic cation (e.g., metal atom, ammonium). Usable is, for example, a hydrocarbon surfactant containing a -SO₃H group, a -OSO₃H group, or a group where a hydrogen atom of any of these groups is replaced by an inorganic cation, from among specific hydrocarbon surfactants described above.

In the sulfonic acid-type hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The TFE-based polymer composition of the disclosure can be efficiently produced by using at least one of the specific hydrocarbon surfactants. The TFE-based polymer composition of the disclosure may be produced by simultaneously using two or more of the specific hydrocarbon surfactants, or may be produced by simultaneously using a different compound with surface activity in addition to any of the specific hydrocarbon surfactants, as long as the compound is volatile or may remain in a molded article or the like of the TFE-based polymer.

The different compound with surface activity used may be any of those disclosed in JP 2013-542308 T, JP 2013-542309 T, and JP 2013-542310 T, for example.

The different compound with surface activity may be a surfactant including a hydrophilic moiety and a hydrophobic moiety on the same molecule, such as a hydrocarbon surfactant. These may be cationic, nonionic, or anionic.

In the compound, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Cationic surfactants usually have a positively charged hydrophilic moiety such as alkylated ammonium halide (e.g., alkylated ammonium bromide) and a hydrophobic moiety such as long chain fatty acids.

In the cationic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Anionic surfactants usually have a hydrophilic moiety such as a carboxylate, a sulfonate, or a sulfate and a hydrophobic moiety that is a long chain hydrocarbon moiety such as alkyl.

In the anionic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Common nonionic surfactants are free from a charged group and have a hydrophilic moiety which is a long-chain hydrocarbon. The hydrophilic moiety of nonionic surfactants contains a water-soluble functional group such as an ethylene ether chain derived from polymerization with ethylene oxide.

In the nonionic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Examples of nonionic surfactants:
polyoxyethylene alkyl ethers, polyoxyethylene alkyl phenyl ethers, polyoxyethylene alkyl esters, sorbitan alkyl esters, polyoxyethylene sorbitan alkyl esters, glycerol esters, and derivatives thereof.

Specific examples of polyoxyethylene alkyl ethers: polyoxyethylene lauryl ether, polyoxyethylene cetyl ether, polyoxyethylene stearyl ether, polyoxyethylene oleyl ether, and polyoxyethylene behenyl ether.

Specific examples of polyoxyethylene alkyl phenyl ethers: polyoxyethylene nonylphenyl ether, and polyoxyethylene octylphenyl ether.

Specific examples of polyoxyethylene alkyl esters: polyethylene glycol monolaurate, polyethylene glycol monooleate, and polyethylene glycol monostearate.

Specific examples of sorbitan alkyl esters: polyoxyethylene sorbitan monolaurate, polyoxyethylene sorbitan monopalmitate, polyoxyethylene sorbitan monostearate, and polyoxyethylene sorbitan monooleate.

Specific examples of polyoxyethylene sorbitan alkyl esters: polyoxyethylene sorbitan monolaurate, polyoxyethylene sorbitan monopalmitate, and polyoxyethylene sorbitan monostearate.

Specific examples of glycerol esters: glycerol monomyristate, glycerol monostearate, and glycerol monooleate.

Specific examples of the derivatives: polyoxyethylene alkylamine, polyoxyethylene alkylphenyl-formaldehyde condensate, and polyoxyethylene alkyl ether phosphate.

The ethers and esters may have an HLB value of 10 to 18.

Examples of nonionic surfactants include Triton^{®} X series (X15, X45, X100, etc.), Tergitol^{®} 15-S series, Tergitol^{®} TMN series (TMN-6, TMN-10, TMN-100, etc.), and Tergitol^{®} L series, which are available from Dow Chemical Company, and Pluronic^{®} R series (31R1, 17R2, 10R5, 25R4 (m to 22, n to 23) and Iconol^{®} TDA series (TDA-6, TDA-9, TDA-10), which are available from BASF.

Examples of the anionic hydrocarbon surfactant include Versatic^{®} 10 available from Resolution Performance Products and Avanel S series (S-70, S-74, etc.) available from BASF.

The different compound with surface activity may also be an anionic surfactant represented by R-L-M wherein R is a linear or branched alkyl group containing 1 or more carbon atoms and optionally containing a substituent or a cyclic alkyl group containing 3 or more carbon atoms and optionally containing a substituent, and optionally contains a monovalent or divalent heterocycle or optionally forms a ring when containing 3 or more carbon atoms; L is - ArSO₃⁻, -SO₃⁻, -SO₄-, -PO₃⁻, or -COO⁻; and M is H, a metal atom, NR⁵₄ (wherein R⁵s may be the same as or different from each other and each are H or an organic group (preferably a fluorine-free organic group)), imidazolium optionally containing a substituent, pyridinium optionally containing a substituent, or phosphonium optionally containing a substituent, where -ArSO₃⁻ is aryl sulfonate. R⁵ is preferably H or an organic group containing 1 to 10 carbon atoms, more preferably H or an organic group containing 1 to 4 carbon atoms.

Specific examples thereof include a compound represented by CH₃-(CH₂)ₙ-L-M (wherein n is an integer of 6 to 17, and L and M are the same as described above) as typified by lauryl acid.

Mixtures of those in which R is an alkyl group containing 12 to 16 carbon atoms and L-M is sulfate or sodium dodecyl sulfate (SDS) can also be used.

The different compound with surface activity may also be an anionic surfactant represented by R⁶(-L-M)₂ wherein R⁶ is a linear or branched alkylene group containing 1 or more carbon atoms and optionally containing a substituent or a cyclic alkylene group containing 3 or more carbon atoms and optionally containing a substituent, and optionally contains a monovalent or divalent heterocycle or optionally forms a ring when containing 3 or more carbon atoms; L is - ArSO₃⁻, -SO₃⁻, -SO₄-, -PO₃⁻, or -COO⁻; and M is H, a metal atom, NR⁵₄, imidazolium optionally containing a substituent, pyridinium optionally containing a substituent, or phosphonium optionally containing a substituent; R⁵ is H or an organic group (preferably, a fluorine-free organic group); and -ArSO₃⁻ is aryl sulfonate.

The different compound with surface activity may also be an anionic surfactant represented by R⁷(-L-M)₃ wherein R⁷ is a linear or branched alkylidyne group containing 1 or more carbon atoms and optionally containing a substituent or a cyclic alkylidyne group containing 3 or more carbon atoms and optionally containing a substituent, and optionally contains a monovalent or divalent heterocycle or optionally forms a ring when containing 3 or more carbon atoms; L is -ArSO₃⁻, -SO₃⁻, -SO₄-, -PO₃⁻, or -COO⁻; and M is H, a metal atom, NR⁵₄, imidazolium optionally containing a substituent, pyridinium optionally containing a substituent, or phosphonium optionally containing a substituent; R⁵ is H or an organic group (preferably, a fluorine-free organic group); and -ArSO₃⁻ is aryl sulfonate.

Examples of the siloxane hydrocarbon surfactant include those described in Silicone Surfactants, R. M. Hill, Marcel Dekker, Inc., ISBN: 0-8247-00104. The structure of the siloxane surfactant includes defined hydrophobic and hydrophilic moieties. The hydrophobic moiety contains one or more dihydrocarbyl siloxane units, where the substituents on the silicone atoms are completely hydrocarbon.

In the sense that the carbon atoms of the hydrocarbyl groups are fully replaced by hydrogen atoms where they can be replaced by halogen such as fluorine, these siloxane surfactants can also be regarded as hydrocarbon surfactants, i.e., the monovalent substituents on the carbon atoms of the hydrocarbyl groups are hydrogen.

In the siloxane surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The siloxane hydrocarbon surfactants also include those disclosed in U.S. Pat. No. 6,841,616.

Examples of siloxane-based anionic hydrocarbon surfactants include Noveon^{®} available from Lubrizol Advanced Materials, Inc. and SilSense^{™} PE-100 silicone and SilSense^{™} CA-1 silicone available from Consumer Specialties.

Examples of the anionic hydrocarbon surfactant also include a sulfosuccinate surfactant Lankropol^{®} K8300 available from Akzo Nobel Surface Chemistry LLC.

Examples of the sulfosuccinate surfactant include sodium diisodecyl sulfosuccinate (Emulsogen^{®} SB10 by Clariant) and sodium diisotridecyl sulfosuccinate (Polirol^{®} TR/LNA by Cesapinia Chemicals).

Examples of the different compound with surface activity also include PolyFox^{®} surfactants (e.g., PolyFox^{™} PF-156A or PolyFox^{™} PF-136A) available from Omnova Solutions, Inc.

The different compound with surface activity is preferably an anionic hydrocarbon surfactant. The anionic hydrocarbon surfactant may be one described above. For example, the following compound can be suitably used.

An example of the anionic hydrocarbon surfactant is a compound (α) represented by the following formula (α):

R¹⁰⁰-COOM (α)

wherein R¹⁰⁰ is a monovalent organic group (preferably a fluorine-free organic group) containing 1 or more carbon atoms; and M is H, a metal atom, NR¹⁰¹₄, imidazolium optionally containing a substituent, pyridinium optionally containing a substituent, or phosphonium optionally containing a substituent; and R¹⁰¹s are each H or an organic group (preferably a fluorine-free organic group) and may be the same as or different from each other. The organic group for R¹⁰¹ is preferably an alkyl group. R¹⁰¹ is preferably H or an organic group containing 1 to 10 carbon atoms, more preferably H or an organic group containing 1 to 4 carbon atoms, still more preferably H or an alkyl group containing 1 to 4 carbon atoms.

From the viewpoint of surface activity, the number of carbon atoms in R¹⁰⁰ is preferably 2 or more, more preferably 3 or more. From the viewpoint of water-solubility, the number of carbon atoms in R¹⁰⁰ is preferably 29 or less, more preferably 23 or less.

Examples of the metal atom as M include alkali metals (Group 1) and alkaline earth metals (Group 2), and preferred is Na, K, or Li. M is preferably H, a metal atom, or NR¹⁰¹₄, more preferably H, an alkali metal (Group 1), an alkaline earth metal (Group 2), or NR¹⁰¹₄, still more preferably H, Na, K, Li, or NH₄, further preferably Na, K, or NH₄, particularly preferably Na or NH₄, most preferably NH₄.

The compound (α) may also be an anionic surfactant represented by R¹⁰²-COOM (wherein R¹⁰² is a linear or branched alkyl, alkenyl, alkylene, or alkenylene group containing 1 or more carbon atoms and optionally containing a substituent or a cyclic alkyl, alkenyl, alkylene, or alkenylene group containing 3 or more carbon atoms and optionally containing a substituent, which optionally contains an ether bond, and optionally contains a monovalent or divalent heterocycle or optionally forms a ring when containing 3 or more carbon atoms; and M is as defined above).

Specific examples include a compound represented by CH₃-(CH₂)ₙ-COOM wherein n is an integer of 2 to 28 and M is as defined above.

The compound (α) may be free from a carbonyl group (other than the carbonyl group in the carboxy group) from the viewpoint of emulsion stability.

A preferred example of the carbonyl group-free hydrocarbon-containing surfactant is a compound represented by the following formula (A1):

R¹⁰³-COO-M (A1)

wherein R¹⁰³ is an alkyl, alkenyl, alkylene, or alkenylene group containing 6 to 17 carbon atoms, which optionally contains an ether bond; and M is H, a metal atom, NR¹⁰¹₄, imidazolium optionally containing a substituent, pyridinium optionally containing a substituent, or phosphonium optionally containing a substituent, and R¹⁰¹s are the same as or different from each other and each are H or an organic group (preferably, a fluorine-free organic group).

In the formula (A1), R¹⁰³ is preferably an alkyl or alkenyl group (which may contain an ether group). The alkyl or alkenyl group for R¹⁰³ may be linear or branched. The number of carbon atoms in R¹⁰³ may be, but is not limited to, 2 to 29.

When the alkyl group is linear, the number of carbon atoms in R¹⁰³ is preferably 3 to 29, more preferably 5 to 23. When the alkyl group is branched, the number of carbon atoms in R¹⁰³ is preferably 5 to 35, more preferably 11 to 23.

When the alkenyl group is linear, the number of carbon atoms in R¹⁰³ is preferably 2 to 29, more preferably 9 to 23. When the alkenyl group is branched, the number of carbon atoms in R¹⁰³ is preferably 2 to 29, more preferably 9 to 23.

Examples of the alkyl and alkenyl groups include methyl, ethyl, isobutyl, t-butyl, and vinyl groups.

Examples of the compound (α) include butyric acid, valeric acid, caproic acid, enanthic acid, caprylic acid, pelargonic acid, capric acid, lauric acid, myristic acid, pentadecylic acid, palmitic acid, palmitoleic acid, margaric acid, stearic acid, oleic acid, vaccenic acid, linoleic acid, (9,12,15)-linolenic acid, (6,9,12)-linolenic acid, eleostearic acid, arachidic acid, 8,11-eicosadienoic acid, mead acid, arachidonic acid, behenic acid, lignoceric acid, nervonic acid, cerotic acid, montanic acid, melissic acid, crotonic acid, myristoleic acid, palmitoleic acid, sapienic acid, elaidic acid, gadoleic acid, eicosenoic acid, erucic acid, nervonic acid, eicosadienoic acid, docosadienoic acid, linolenic acid, pinolenic acid, α-eleostearic acid, β-eleostearic acid, dihomo-γ-linolenic acid, eicosatrienoic acid, stearidonic acid, arachidonic acid, eicosatetraenoic acid, adrenic acid, bosseopentaenoic acid, eicosapentaenoic acid, osbondic acid, sardonic acid, tetracosapentaenoic acid, docosahexaenoic acid, and herring acid, and salts thereof.

Particularly, preferred is at least one selected from the group consisting of lauric acid, capric acid, myristic acid, pentadecylic acid, palmitic acid, and salts thereof.

Non-limiting examples of the salts include those in which the hydrogen atom of the carboxy group is a metal atom, NR¹¹₄, imidazolium optionally containing a substituent, pyridinium optionally containing a substituent, or phosphonium optionally containing a substituent as M in the above-described formula.

The anionic hydrocarbon surfactant may also be a compound (β) represented by the following formula (β):

R¹⁰⁰-SO₃M (β)

wherein R¹⁰⁰ is a monovalent organic group (preferably a fluorine-free organic group) containing 1 or more carbon atoms; and M is H, a metal atom, NR¹⁰¹₄, imidazolium optionally containing a substituent, pyridinium optionally containing a substituent, or phosphonium optionally containing a substituent; and R¹⁰¹s are each H or an organic group (preferably a fluorine-free organic group) and may be the same as or different from each other. The organic group for R¹⁰¹ is preferably an alkyl group. R1⁰¹ is preferably H or an organic group containing 1 to 10 carbon atoms, more preferably H or an organic group containing 1 to 4 carbon atoms, still more preferably H or an alkyl group containing 1 to 4 carbon atoms.

From the viewpoint of surface activity, the number of carbon atoms in R¹⁰⁰ is preferably 2 or more, more preferably 3 or more. From the viewpoint of water-solubility, the number of carbon atoms in R¹⁰⁰ is preferably 29 or less, more preferably 23 or less.

Examples of the metal atom as M include alkali metals (Group 1) and alkaline earth metals (Group 2), and preferred is Na, K, or Li. M is preferably H, a metal atom, or NR¹⁰¹₄, more preferably H, an alkali metal (Group 1), an alkaline earth metal (Group 2), or NR¹⁰¹₄, still more preferably H, Na, K, Li, or NH₄, further preferably Na, K, or NH₄, particularly preferably Na or NH₄, most preferably NH₄.

The compound (β) may also be an anionic surfactant represented by R¹⁰²-SO₃M (wherein R¹⁰² is a linear or branched alkyl, alkenyl, alkylene, or alkenylene group containing 1 or more carbon atoms and optionally containing a substituent, or a cyclic alkyl, alkenyl, alkylene, or alkenylene group containing 3 or more carbon atoms and optionally containing a substituent, which optionally contains an ether bond, and optionally contains a monovalent or divalent heterocycle or optionally forms a ring when containing 3 or more carbon atoms; and M is as defined above).

Specific examples include a compound represented by CH₃-(CH₂)ₙ-SO₃M (wherein n is an integer of 2 to 28 and M is as defined above).

The compound (β) may be free from a carbonyl group (other than the carbonyl group in the carboxy group) from the viewpoint of emulsion stability.

A preferred example of the carbonyl group-free hydrocarbon-containing surfactant is a compound represented by the following formula (B1):

R¹⁰³-SO₃-M (B1)

wherein R¹⁰³ is an alkyl, alkenyl, alkylene, or alkenylene group containing 6 to 17 carbon atoms, which optionally contains an ether bond; and M is H, a metal atom, NR¹⁰¹₄, imidazolium optionally containing a substituent, pyridinium optionally containing a substituent, or phosphonium optionally containing a substituent, and R¹⁰¹s are the same as or different from each other and each are H or an organic group (preferably, a fluorine-free organic group).

In the formula (B), R¹⁰³ is preferably an alkyl or alkenyl group (which may contain an ether group). The alkyl or alkenyl group for R¹⁰³ may be linear or branched. The number of carbon atoms in R¹⁰³ may be, but is not limited to, 2 to 29.

When the alkyl group is linear, the number of carbon atoms in R¹⁰³ is preferably 3 to 29, more preferably 5 to 23. When the alkyl group is branched, the number of carbon atoms in R¹⁰³ is preferably 5 to 35, more preferably 11 to 23.

When the alkenyl group is linear, the number of carbon atoms in R¹⁰³ is preferably 2 to 29, more preferably 9 to 23. When the alkenyl group is branched, the number of carbon atoms in R¹⁰³ is preferably 2 to 29, more preferably 9 to 23.

Examples of the alkyl and alkenyl groups include methyl, ethyl, isobutyl, t-butyl, and vinyl groups.

Examples of the compound (β) include sulfonic acids such as aliphatic sulfonic acids, unsaturated aliphatic sulfonic acids, and aromatic sulfonic acids, sulfate esters such as aliphatic sulfate esters, unsaturated aliphatic sulfate esters, and aromatic sulfate esters, and their salts.

Examples of the sulfonic acids include 1-hexanesulfonic acid, 1-octanesulfonic acid, 1-decanesulfonic acid, 1-dodecanesulfonic acid, perfluorobutanesulfonic acid, linear alkylbenzene sulfonic acid, toluene sulfonic acid, cumensulfonic acid, octylbenzene sulfonic acid, DBS, naphthalene sulfonic acid, naphthalene disulfonic acid, naphthalene trisulfonic acid, and butyl naphthalene sulfonic acid. Examples of the sulfate esters include sodium alkyl sulfate esters, alpha sulfo fatty acid ester salts, alkyl sulfate ester salts, polyoxyethylene alkyl ether sulfate ester salts, alpha olefin sulfonate salts, lauryl sulfate, myristyl sulfate, laureth sulfate, and polyoxyethyelne alkyl phenol sulfonate.

The compound (β) preferably includes at least one selected from the group consisting of saturated aliphatic sulfate esters, aromatic sulfate esters, and their salts, more preferably at least one selected from the group consisting of sodium alkyl sulfate esters, alpha sulfo fatty acid ester salts, alkyl sulfate ester salts, polyoxyethylene alkyl ether sulfate ester salts, alpha olefin sulfonate salts, lauryl sulfate, myristyl sulfate, laureth sulfate, polyoxyethyelne alkyl phenol sulfonate, and their salts.

Non-limiting examples of the salts include those in which the hydrogen atom of the sulfonic acid group is a metal atom, NR¹¹₄, imidazolium optionally containing a substituent, pyridinium optionally containing a substituent, or phosphonium optionally containing a substituent as M in the above-described formula.

The anionic hydrocarbon surfactant may also be a surfactant (1-0A) represented by the following formula (1-0A): 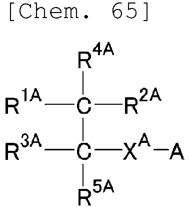 wherein R^{1A} to R^{5A} are each H, a monovalent hydrocarbon group optionally containing an ester group between carbon atoms, or a group represented by the formula: -X^{A}-A, with at least one of R^{2A} or R^{5A} being a group represented by the formula: -X^{A}-A;
X^{A}s at respective occurrences are the same as or different from each other and are each a divalent hydrocarbon group or a bond;
As at respective occurrences are the same as or different from each other and are each -COOM (wherein M is H, a metal atom, NR⁷₄, imidazolium optionally containing a substituent, pyridinium optionally containing a substituent, or phosphonium optionally containing a substituent, and R⁷s are each H or an organic group (preferably a fluorine-free organic group)); and
any two of R^{1A} to R^{5A} optionally bind to each other to form a ring.

In the formula (1-0A), the number of carbon atoms in the monovalent hydrocarbon group optionally containing an ester group between carbon atoms for each of R^{1A} to R^{5A} is preferably 1 to 50, more preferably 5 to 20. Any two of R^{1A} to R^{5A} optionally bind to each other to form a ring. The monovalent hydrocarbon group optionally containing an ester group between carbon atoms is preferably an alkyl group.

In the formula, the number of carbon atoms in the divalent hydrocarbon group for X^{A} is preferably 1 to 50, more preferably 5 to 20. Examples of the divalent hydrocarbon group include an alkylene group and an alkanediyl group. Preferred is an alkylene group.

In the formula (1-0A), either R^{2A} or R^{5A} is preferably a group represented by the formula: -X^{A}-A. More preferably, R^{2A} is a group represented by the formula: -X^{A}-A.

In a preferred case, in the formula (1-0A), R^{2A} is a group represented by the formula: -X^{A}-A, and R^{1A}, R^{3A}, R^{4A}, and R^{5A} are each H. In this case, X^{A} is preferably a bond or an alkylene group containing 1 to 5 carbon atoms.

In a preferred case, in the formula (1-0A), R^{2A} is a group represented by the formula: -X^{A}-A, R^{1A} and R^{3A} are each a group represented by -Y^{A}-R⁶, Y^{A}s at respective occurrences are the same as or different from each other and are each -COO-, -OCO-, or a bond, and R⁶s at respective occurrences are the same as or different from each other and are each an alkyl group containing 2 or more carbon atoms. In this case, R^{4A} and R^{5A} are each preferably H.

Examples of the hydrocarbon surfactant represented by the formula (1-0A) include glutaric acid and a salt thereof, adipic acid and a salt thereof, pimelic acid and a salt thereof, suberic acid and a salt thereof, azelaic acid and a salt thereof, and sebacic acid and a salt thereof.

An aliphatic carboxylic acid-type hydrocarbon surfactant represented by the formula (1-0A) may be a double-chain, double-hydrophilic-group synthetic surfactant, and examples thereof include gemini surfactants including Gemsurf (Chukyo Yushi Co., Ltd.) such as Gemsurf α142 (number of carbon atoms: 12, lauryl group), Gemsurf α102 (number of carbon atoms: 10), and Gemsurf α182 (number of carbon atoms: 14).

The anionic hydrocarbon surfactant may also be a compound I represented by the following formula I:

R-(XZ)ₙ (I)

wherein R is a hydrophobic hydrocarbon moiety containing one or more saturated or unsaturated, acyclic or cyclic aliphatic groups, where the percentage of the total CH₃ groups based on the sum of CH₃, CH₂, and CH groups in one or more aliphatic groups is at least about 70% and the hydrophobic moiety contains no siloxane unit; Xs may be the same as or different from each other and each represent an ionic hydrophilic moiety; and Zs may be the same as or different from each other and each represent one or more counter ions of the ionic hydrophilic moiety; and n is 1 to 3.

The compound I exhibits low reactivity with a polymerization initiator and/or a propagating fluoropolymer radical in emulsion polymerization of a fluoromonomer.

The compound I preferably includes a substituted moiety represented by the following formula: 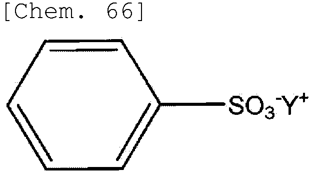 wherein Y⁺ is hydrogen, ammonium, quaternary ammonium, a nitrogen heterocycle, an alkali metal, or an alkaline earth metal.

The compound I is preferably a compound II represented by the following formula II: 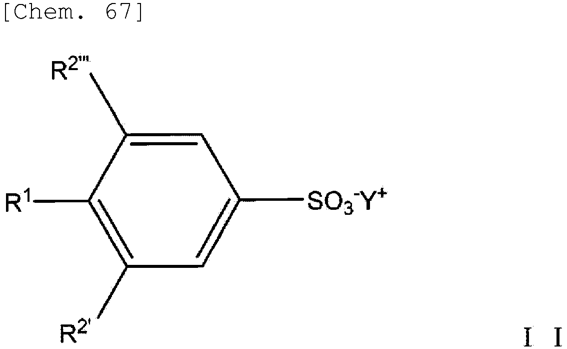 wherein R^{2'} and R^{2‴} are the same as or different from each other and are each a saturated or unsaturated, acyclic or cyclic aliphatic group containing 4 to 16 carbon atoms, where the percentage of the total CH₃ groups based on the sum of CH₃, CH₂, and CH groups in R^{2'} and R^{2‴} groups is at least about 70% or R^{2'} and R^{2‴} optionally bind together to form a saturated or unsaturated aliphatic ring optionally containing an ether or ester bond, with the percentage of the total CH₃ groups based on the sum of CH₃, CH₂, and CH groups in the ring being at least about 70%; R¹ is hydrogen, methoxy, ethoxy, or phenoxy; and Y⁺ is hydrogen, ammonium, quaternary ammonium, a nitrogen heterocycle, an alkali metal, or an alkaline earth metal.

The following compounds are preferred as the compound II, for example.

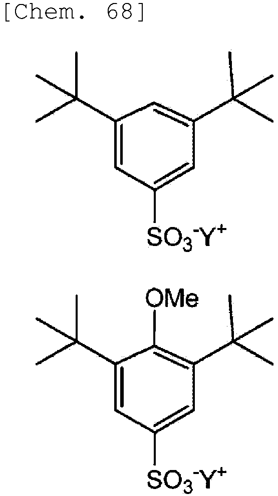

In the formula, Y⁺ may be hydrogen, ammonium, or an alkali metal.

The compound I is also preferably a compound III represented by the following formula III: 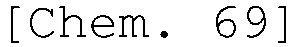 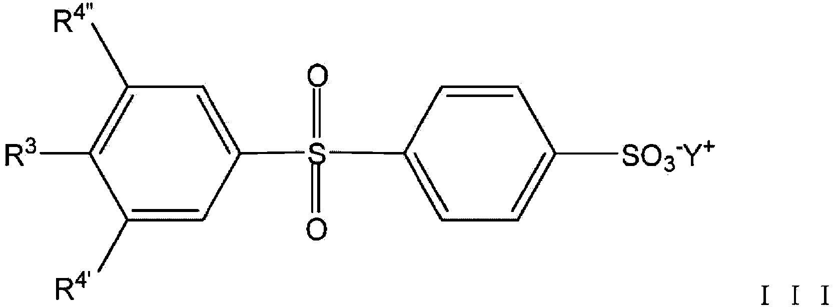 wherein R³, R^{4'}, and R^{4"} are the same as or different from each other and are each hydrogen or a saturated or unsaturated, acyclic or cyclic aliphatic group containing 4 to 16 carbon atoms, where the percentage of the total CH₃ groups based on the sum of CH₃, CH₂, and CH groups in R³, R^{4'}, and R^{4"} groups is at least about 70%, at least one of R³, R^{4'}, and R^{4"} is not hydrogen, when R^{4'} and R^{4"} are each hydrogen, R³ is not hydrogen, and when R³ is hydrogen, R^{4'}, and R^{4"} are each not hydrogen; and Y⁺ is hydrogen, ammonium, quaternary ammonium, a nitrogen heterocycle, an alkali metal, or an alkaline earth metal.

The compound III is preferably the following compound, for example.

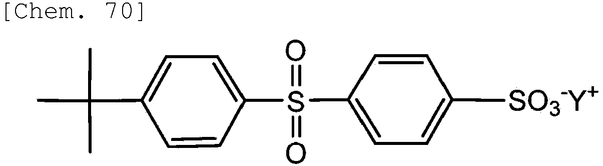

In the formula, Y⁺ may be hydrogen, ammonium, or an alkali metal.

The TFE-based polymer composition of the disclosure can be obtained by a production method including a polymerization step of polymerizing tetrafluoroethylene alone or polymerizing tetrafluoroethylene and a modifying monomer copolymerizable with the tetrafluoroethylene in an aqueous medium having a pH of 4.0 or more in the presence of a hydrocarbon surfactant and a polymerization initiator to obtain a TFE-based polymer even in a case where the specific hydrocarbon surfactant is not used.

Conventionally, the pH of the aqueous medium used in the polymerization has been less than 4.0 because an acidic polymerization initiator has been used in the polymerization step for producing a TFE-based polymer. As a result of diligent studies by the disclosers, surprisingly, it has been found that by setting the pH of the aqueous medium used for polymerization to 4.0 or more, the stability of polymerization is improved and a TFE-based polymer having a high molecular weight can be produced.

The production method includes polymerizing tetrafluoroethylene alone or tetrafluoroethylene and a modifying monomer copolymerizable with the tetrafluoroethylene in an aqueous medium having a pH of 4.0 or more. The pH should be 4.0 or more, preferably more than 4.0, more preferably 4.5 or more, still more preferably 5.0 or more, further preferably 5.5 or more, even more preferably 6.0 or more, particularly preferably 6.5 or more, particularly preferably 7.0 or more, particularly preferably 7.5 or more, particularly preferably 8.0 or more. The upper limit of the pH is not limited, but may be, for example, 13.0 or less. From the viewpoint of corrosion of the polymerization tank, it is preferably 12.0 or less, more preferably 11.5 or less, still more preferably 11.0 or less.

The pH can be measured with a pH meter.

In the production method, the method of adjusting the pH of the aqueous medium to 4.0 or more is not limited, and the pH can be made 4.0 or more by using, for example, an alkaline aqueous solution, an alkaline aqueous dispersion, or a pH adjuster. Still, the method is not limited.

Further, even in a case where a polymerization initiator that shows acidity when dissolved in an aqueous medium is used, the pH can be adjusted to 4.0 or more by further adding an alkaline compound such as sodium hydroxide. The alkaline compound may be any compound which dissolves in water and ionizes to produce OH⁻, and non-limiting examples thereof include hydroxides of alkali metals such as sodium hydroxide or potassium hydroxide; hydroxides of alkaline earth metals; ammonia; and amines. The polymerization step may include a step of adding an alkaline compound to an aqueous medium.

In the production method, the pH of the aqueous medium may be 4.0 or more during the entire period of the polymerization step. Further, the pH may be 4.0 or more in the middle of the polymerization step, or the pH may be 4.0 or more in the latter half of the polymerization step. Further, the pH may be 4.0 or more in the middle and the latter half of the polymerization step.

In the polymerization step, the pH of the aqueous medium is preferably 4.0 or more for at least 60% (preferably at least 70%, more preferably at least 80%, still more preferably at least 90%, further preferably at least 95%, even more preferably at least 99%, particularly preferably 100%) of the period from the time of the initiation of the polymerization to the time when the polymer solid concentration is 3% by mass (preferably 5% by mass, more preferably 8% by mass, still more preferably 10% by mass, further preferably 15% by mass, even more preferably 18% by mass, yet still further preferably 20% by mass, particularly preferably 25% by mass).

In the polymerization step, the pH of the aqueous medium is preferably 4.0 or more for at least 60% (preferably at least 70%, more preferably at least 80%, still more preferably at least 90%, further preferably at least 95%, even more preferably at least 99%, particularly preferably 100%) of the period from the time when the polymer solid concentration is 10% by mass (preferably 8% by mass, more preferably 5% by mass, still more preferably 3% by mass, further preferably from the time of polymerization initiation) to the time when the polymer solid concentration is 15% by mass.

In the polymerization step, the pH of the aqueous medium is preferably 4.0 or more for at least 60% (preferably at least 70%, more preferably at least 80%, still more preferably at least 90%, further preferably at least 95%, even more preferably at least 99%, particularly preferably 100%) of the period from the time when the polymer solid concentration is 15% by mass to the time when the polymer solid concentration is 18% by mass (preferably 20% by mass, more preferably 25% by mass).

In the polymerization step, the pH of the aqueous medium is preferably 4.0 or more for at least 60% (preferably at least 70%, more preferably at least 80%, still more preferably at least 90%, further preferably at least 95%, more preferably at least 99%, particularly preferably 100%) of the period from the time when the polymer solid concentration is 25% by mass (preferably 20% by mass, more preferably 18% by mass, still more preferably 15% by mass, further preferably 10% by mass, even more preferably 8% by mass, particularly preferably 5% by mass, more preferably 3% by mass, still more preferably from the time of polymerization initiation) to the completion of the polymerization.

In any case, the pH of the aqueous medium is preferably more than 4.0, more preferably 4.5 or more, still more preferably 5.0 or more, further preferably 5.5 or more, even more preferably 6.0 or more, particularly preferably 6.5 or more, more preferably 7.0 or more, still more preferably 7.5 or more, further preferably 8.0 or more.

In the production method, the hydrocarbon surfactant is a fluorine-free hydrocarbon surfactant, preferably an anionic hydrocarbon surfactant, more preferably a carboxylic acid-type hydrocarbon surfactant. The anionic hydrocarbon surfactant and the carboxylic acid-type hydrocarbon surfactant suitably used may be, for example, but not limited to, the compound (α) exemplified in the different compounds with surface activity.

In the production method, the hydrocarbon surfactant is a fluorine-free hydrocarbon surfactant, preferably an anionic hydrocarbon surfactant, also preferably a sulfonic acid-type hydrocarbon surfactant. The anionic hydrocarbon surfactant and the sulfonic acid-type hydrocarbon surfactant are not limited. For example, the compound (β) exemplified in the different compounds with surface activity can be suitably used.

The TFE-based polymer composition of the disclosure can be obtained by a production method including a polymerization step of polymerizing tetrafluoroethylene alone or polymerizing tetrafluoroethylene and a modifying monomer copolymerizable with the tetrafluoroethylene in an aqueous medium in the presence of an anionic hydrocarbon surfactant and a polymerization initiator to obtain a TFE-based polymer even in a case where the specific hydrocarbon surfactant is not used, in which the hydrocarbon surfactant contains a salt of the hydrocarbon surfactant. In other words, at least a part of the anionic hydrocarbon surfactant in the polymerization step is in the form of a salt.

As a result of diligent studies by the disclosers and others, surprisingly, it has been found that an anionic hydrocarbon surfactant containing a salt of the anionic hydrocarbon surfactant improves the stability of polymerization and a TFE-based polymer having a high molecular weight can be produced.

The anionic hydrocarbon surfactant will be described later.

It can be confirmed by measuring the conductivity that the anionic hydrocarbon surfactant contains a salt of the hydrocarbon surfactant.

In the production method, the anionic hydrocarbon surfactant preferably has a salt concentration of 50% by mass or more, more preferably 60% by mass or more, still more preferably 70% by mass or more, further preferably 80% by mass or more, even more preferably 90% by mass or more, particularly preferably 95% by mass or more, based on the total mass of the anionic hydrocarbon surfactant.

The proportion of the salt can be measured based on the solution concentration and the conductivity.

In the production method, the hydrocarbon surfactant is more preferably a carboxylic acid-type hydrocarbon surfactant. The hydrocarbon surfactant is free from fluorine.

In the salt of an anionic hydrocarbon surfactant, the cation that replaces the hydrogen atom of the acid (excluding hydrogen atom) is, for example, a metal atom, NR^{y}₄ (where R^{y}s may be the same as or different from each other and are each H or an organic group (preferably a fluorine-free organic group)), imidazolium optionally containing a substituent, pyridinium optionally containing a substituent, or phosphonium optionally containing a substituent. Ry is preferably H or an alkyl group, more preferably H or an alkyl group containing 1 to 10 carbon atoms, still more preferably H or an alkyl group containing 1 to 4 carbon atoms.

The cation in the salt of the anionic hydrocarbon surfactant is preferably a metal atom or NR^{y}₄, more preferably NR^{y}₄, still more preferably NH₄.

Since the conductivity varies greatly depending on the temperature, the conductivity is measured using a thermostatic bath while keeping the sample liquid temperature at 25°C and the cell temperature of the pH meter at the same temperature.

In the production method, the polymerization step is preferably performed substantially in the absence of the hydrocarbon surfactant in the form of an organic acid. Polymerization substantially in the absence of the hydrocarbon surfactant in the form of an organic acid further improves the stability of the polymerization, and a high-molecular-weight TFE-based polymer can be obtained.

Substantially in the absence of the hydrocarbon surfactant in the form of an organic acid, the concentration of the organic acid is preferably 1.0% by mass or less, more preferably 0.5% by mass or less, still more preferably 0.1% by mass or less, even more preferably 0.05% by mass or less, particularly preferably 0.01% by mass or less, relative to the mass of the resulting aqueous dispersion.

As used herein, the term "organic acid" means an organic compound that exhibits acidity. Examples of the organic acid include a carboxylic acid containing a -COOH group, and a sulfonic acid containing a -SO₃H group, and preferred is a carboxylic acid from the viewpoint that the pH of an aqueous solution containing the organic acid can be easily adjusted.

Further, "form of an organic acid" is a form in which H is not free from the acidic group contained in the organic acid (for example, -COOH group, -SO₃H group).

In the production method, the hydrocarbon surfactant is an anionic hydrocarbon surfactant.

In the polymerization step, the amount of the hydrocarbon surfactant at the initiation of the polymerization is preferably more than 50 ppm relative to the aqueous medium. The amount of the hydrocarbon surfactant at the initiation of the polymerization is preferably 60 ppm or more, more preferably 70 ppm or more, still more preferably 80 ppm or more, further preferably 100 ppm or more. The upper limit thereof is preferably, but not limited to, 10000 ppm, more preferably 5000 ppm, for example. When the amount of the hydrocarbon surfactant at the initiation of polymerization is in the above range, it is possible to obtain an aqueous dispersion having a smaller average primary particle size and superior stability.

It can be said that the polymerization started when the gas TFE in the reactor became a TFE-based polymer and the pressure drop in the reactor occurred. U.S. Pat. No. 3,391,099 (Punderson) discloses a dispersion polymerization of tetrafluoroethylene in an aqueous medium comprising two separate steps of a polymerization process comprising: first the formation of a polymer nucleus as a nucleation site, and then the growth step comprising polymerization of the established particles. The polymerization is usually started when both the monomer to be polymerized and the polymerization initiator are charged in the reactor. Further, in the disclosure, an additive related to the formation of a nucleation site is referred to as a nucleating agent.

The polymerization step preferably includes an addition step of adding a composition containing a hydrocarbon surfactant after the initiation of the polymerization. The addition step further improves the stability of polymerization, and a higher-molecular-weight TFE-based polymer can be obtained.

The hydrocarbon surfactant may be, for example, in the form of a solid (for example, powder of a hydrocarbon surfactant) or in the form of a liquid.

The composition is only required to contain a hydrocarbon surfactant, and may be composed of only a hydrocarbon surfactant or may be a solution or dispersion of a hydrocarbon surfactant containing a hydrocarbon surfactant and a liquid medium. Therefore, the addition step can also be said to be a step of adding a hydrocarbon surfactant alone or a composition containing the hydrocarbon surfactant after the initiation of polymerization.

The hydrocarbon surfactant is not limited to one type, and may be a mixture of two or more types.

The liquid medium may be either an aqueous medium or an organic solvent, or may be a combination of an aqueous medium and an organic solvent.

Specific examples of the composition include an aqueous solution in which a hydrocarbon surfactant is dissolved in an aqueous medium and an aqueous dispersion in which a hydrocarbon surfactant is dispersed in an aqueous medium.

The hydrocarbon surfactant added in the addition step is preferably 0.0001 to 10% by mass relative to the aqueous medium. It is more preferably 0.001% by mass or more, still more preferably 0.01% by mass or more, particularly preferably 0.05% by mass or more relative to the aqueous medium. Further, it is more preferably 5% by mass or less, still more preferably 3% by mass or less, particularly preferably 1% by mass or less relative to the aqueous medium.

Since the stability of polymerization is improved and a higher-molecular-weight TFE-based polymer can be obtained, the composition is preferably an aqueous solution containing a hydrocarbon surfactant and having a pH of 5.0 or more.

The pH of the aqueous solution is more preferably 6.0 or more, still more preferably 6.5 or more, further preferably 7.0 or more, even more preferably 7.5 or more, particularly preferably 8.0 or more. The upper limit of pH is not limited, and may be 12.0 or less, or 11.0 or less.

The hydrocarbon surfactant in the addition step is preferably an anionic hydrocarbon surfactant, more preferably a carboxylic acid-type hydrocarbon surfactant.

The anionic hydrocarbon surfactant and the carboxylic acid-type hydrocarbon surfactant suitably used may be, for example, but not limited to, the compound (α) exemplified in the different compounds with surface activity.

The carboxylic acid-type hydrocarbon surfactant used in the polymerization step and the addition step preferably includes at least one selected from the group consisting of: a surfactant containing a carboxy group (-COOH) or a group obtained by replacing the hydrogen atom of the carboxy group by an inorganic cation (e.g., metal atom, ammonium) among the surfactant (e), the anionic surfactant represented by R⁶(-L-M)₂ described above, and the anionic surfactant represented by R⁷(-L-M)₃ described above; the compound (α); the surfactant (1-0A); and those obtained by radically treating or oxidizing these surfactants. The carboxylic acid-type hydrocarbon surfactant may be used alone or in a mixture of two or more.

The compound (α) includes not only the anionic hydrocarbon surfactant represented by the formula: R¹⁰²-COOM (wherein R¹⁰² and M are as defined above) (preferably, the compound represented by the formula (A1)), but also those containing a carboxy group (-COOH) or a group in which the hydrogen atom of the carboxy group is replaced by an inorganic cation (e.g., metal atom, ammonium) among the anionic surfactant represented by the formula: R-L-M (wherein R, L, and M are as defined above), the surfactant (c), and the surfactant (d).

The carboxylic acid-type hydrocarbon surfactant is preferably the compound (α), more preferably includes at least one selected from the group consisting of a compound represented by the formula (A1), a compound represented by the formula (c) wherein A^{c} is -COOX^{c}, a compound represented by the formula (d) wherein A^{d} is -COOX^{d}, a compound represented by the formula (e) wherein A^{e} is - COOM^{e}, a compound represented by the formula (1-0A) wherein A is -COOM, and those obtained by radically treating or oxidizing these surfactants, still more preferably includes at least one selected from the group consisting of a compound represented by the formula (A1) and a compound obtained by radically treating or oxidizing the compound.

In particular, preferred is at least one selected from the group consisting of lauric acid, capric acid, myristic acid, pentadecylic acid, palmitic acid, salts thereof, and those obtained by radically treating or oxidizing these compounds. Non-limiting examples of the salts include those in which the hydrogen atom of the carboxy group is a metal atom, NR¹⁰¹₄, imidazolium optionally containing a substituent, pyridinium optionally containing a substituent, or phosphonium optionally containing a substituent as M in the above-described formula.

In the production method, tetrafluoroethylene is preferably polymerized substantially in the absence of a fluorine-containing surfactant.

The phrase "substantially in the absence of a fluorine-containing surfactant" in the production method means that the amount of a fluorine-containing surfactant in the aqueous medium is 10 ppm by mass or less, preferably 1 ppm by mass or less, more preferably 100 ppb by mass or less, still more preferably 10 ppb by mass or less, further preferably less than 10 ppb by mass, further preferably 1 ppb or less, particularly preferably less than 1 ppb by mass.

The phrase "substantially in the absence of a fluorine-containing surfactant" also means that no fluorine-containing surfactant is intentionally added.

Examples of the fluorine-containing surfactant include fluorine-containing anionic surfactants.

The fluorine-containing anionic surfactant may be, for example, a fluorine atom-containing surfactant containing 20 or less carbon atoms in total in the portion excluding the anionic group.

The fluorine-containing surfactant may also be a surfactant containing fluorine and having a molecular weight of 1000 or lower, preferably 800 or lower in the anionic moiety.

The "anionic moiety" means the portion of the fluorine-containing surfactant excluding the cation. For example, in the case of F(CF₂)ₙ₁COOM represented by the formula (I) to be described later, the portion "F(CF₂)ₙ₁COO" corresponds to the anionic portion.

Specific examples of the fluorine-containing surfactant include those described in US 2007/0015864, US 2007/0015865, US 2007/0015866, US 2007/0276103, US 2007/0117914, US 2007/142541, US 2008/0015319, US 3250808, US 3271341, JP 2003-119204 A, WO 2005/042593, WO 2008/060461, WO 2007/046377, WO 2007/119526, WO 2007/046482, WO 2007/046345, US 2014/0228531, WO 2013/189824, and WO 2013/189826.

Examples of the fluorine-containing anionic surfactant include compounds represented by the above formula (N⁰).

As described above, examples of the fluorine-containing anionic surfactant include a carboxylic acid-based fluorine-containing surfactant and a sulfonic acid-based fluorine-containing surfactant.

The TFE-based polymer composition of the disclosure can be suitably produced by a production method including an addition step of adding at least one selected from the group consisting of a radical scavenger and a decomposer of a polymerization initiator. The addition step is performed during the step of performing the emulsion polymerization described above in an aqueous medium. The radical concentration during polymerization can be adjusted by adding a radical scavenger or a decomposer of a polymerization initiator. In order to lower the radical concentration, a radical scavenger is preferable.

The radical scavenger used is a compound that has no reinitiation ability after addition or chain transfer to free radicals in the polymerization system. Specifically, the compound used is a compound having a function of readily causing a chain transfer reaction with a primary radical or propagating radical and then generating a stable radical that does not react with a monomer or a compound having a function of readily causing an addition reaction with a primary radical or propagating radical to generate a stable radical.

In general, those called chain transfer agents are characterized by their activity in terms of chain transfer constant and reinitiation efficiency, and among them, those with almost 0% reinitiation efficiency are called radical scavengers.

The radical scavenger can also be described as, for example, a compound whose chain transfer constant to TFE at the polymerization temperature is greater than the polymerization rate constant and whose reinitiation efficiency is substantially 0%. The phrase "reinitiation efficiency is substantially 0%" means that the generated radicals make the radical scavenger a stable radical.

Preferably, the radical scavenger is a compound having a chain transfer constant (Cs) (= chain transfer rate constant (kc)/polymerization rate constant (kp)) to TFE at the polymerization temperature of greater than 0.1. The compound has a chain transfer constant (Cs) of more preferably 0.5 or more, still more preferably 1.0 or more, further preferably 5.0 or more, particularly preferably 10 or more.

The radical scavenger in the disclosure preferably includes, for example, at least one selected from the group consisting of aromatic hydroxy compounds, aromatic amines, N,N-diethylhydroxylamine, quinone compounds, terpenes, thiocyanates, and cupric chloride (CuCl₂).

Examples of aromatic hydroxy compounds include unsubstituted phenols, polyhydric phenols, salicylic acid, m- or p-salicylic acid, gallic acid, and naphthol.

Examples of unsubstituted phenols include o-, m-, or p-nitrophenol, o-, m-, or p-aminophenol, and p-nitrosophenol. Examples of polyhydric phenols include catechol, resorcinol, hydroquinone, pyrogallol, phloroglucin, and naphtresorcinol.

Examples of aromatic amines include o-, m-, or p-phenylenediamine, and benzidine.

Examples of quinone compounds include o-, m-, or p-benzoquinone, 1,4-naphthoquinone, and alizarin.

Examples of thiocyanates include ammonium thiocyanate (NH₄SCN), potassium thiocyanate (KSCN), and sodium thiocyanate (NaSCN).

Among these, the radical scavenger is preferably an aromatic hydroxy compound, more preferably an unsubstituted phenol or a polyhydric phenol, still more preferably hydroquinone.

In order to reduce the standard specific gravity, the amount of the radical scavenger added is preferably an amount equivalent to 3% to 500% (on a molar basis) of the polymerization initiator concentration. The lower limit thereof is more preferably 5% (molar basis), still more preferably 8% (molar basis), still more preferably 10% (molar basis), further preferably 15% (molar basis), even more preferably 20% (molar basis), particularly preferably 25% (molar basis), particularly preferably 30% (molar basis), particularly preferably 35% (molar basis). The upper limit thereof is more preferably 400% (molar basis), still more preferably 300% (molar basis), further preferably 200% (molar basis), even more preferably 100% (molar basis).

The decomposer of a polymerization initiator may be any compound that can decompose the polymerization initiator used, and preferably includes, for example, at least one selected from the group consisting of sulfites, bisulfites, bromates, diimine, diimine salts, oxalic acid, oxalates, copper salts, and iron salts. Examples of sulfites include sodium sulfite and ammonium sulfite. An example of copper salts is copper(II) sulfate and an example of iron salts is iron(II) sulfate.

The amount of the decomposer of a polymerization initiator added is in the range of 25 to 300% by mass based on the amount of the oxidizing agent combined as a polymerization initiator (redox initiator described later). The amount thereof is preferably 25 to 150% by mass, still more preferably 50 to 100% by mass.

In order to reduce the standard specific gravity, the amount of the decomposer of a polymerization initiator added is preferably an amount equivalent to 3% to 500% (on a molar basis) of the polymerization initiator concentration. The lower limit thereof is more preferably 5% (molar basis), still more preferably 8% (molar basis), still more preferably 10% (molar basis), still more preferably 13% (molar basis), further preferably 15% (molar basis). The upper limit thereof is more preferably 400% (molar basis), still more preferably 300% (molar basis), further preferably 200% (molar basis), even more preferably 100% (molar basis).

At least one selected from the group consisting of a radical scavenger and a decomposer of a polymerization initiator is preferably added when the concentration of the TFE-based polymer formed in the aqueous medium is 5% by mass or more. More preferably, it is added when the concentration is 10% by mass or more.

Further, it is preferably added when the concentration of the TFE-based polymer formed in the aqueous medium is 40% by mass or less. It is more preferably added when the concentration is 35% by mass or less, still more preferably when the concentration is 30% by mass or less.

The addition step may be a step of continuously adding at least one selected from the group consisting of a radical scavenger and a decomposer of a polymerization initiator.

Continuously adding at least one selected from the group consisting of a radical scavenger and a decomposer of a polymerization initiator means, for example, adding the at least one selected from the group consisting of a radical scavenger and a decomposer of a polymerization initiator not all at once but over time without interruption or in portions.

The polymerization step may include polymerization of tetrafluoroethylene further in the presence of a nucleating agent.

The nucleating agent preferably includes at least one selected from the group consisting of, for example, fluoropolyethers, nonionic surfactants, and chain transfer agents.

In this case, the polymerization step is preferably a step of polymerizing tetrafluoroethylene in an aqueous medium in the presence of a hydrocarbon surfactant and the nucleating agent to obtain a TFE-based polymer.

As the fluoropolyether, perfluoropolyether is preferable.

The fluoropolyether preferably has a repeating unit represented by any of the formulas (1a) to (1d):

(-CFCF₃-CF₂-O-)ₙ (1a)

(-CF₂-CF₂-CF₂-O-)ₙ (1b)

(-CF₂-CF₂-O-)ₙ-(-CF₂-O-)ₘ (1c)

(-CF₂-CFCF₃-O-)ₙ-(-CF₂-O-)ₘ (1d)

wherein m and n are integers of 1 or more.

The fluoropolyether is preferably fluoropolyether acid or a salt thereof, and the fluoropolyether acid is preferably a carboxylic acid, a sulfonic acid, a sulfonamide, or a phosphonic acid, more preferably a carboxylic acid. Among the fluoropolyether acid or a salt thereof, a salt of fluoropolyether acid is preferable, an ammonium salt of fluoropolyether acid is more preferable, and an ammonium salt of fluoropolyethercarboxylic acid is still more preferable.

The fluoropolyether acid or a salt thereof can have any chain structure in which oxygen atoms in the main chain of the molecule are separated by saturated fluorocarbon groups containing 1 to 3 carbon atoms. Two or more types of fluorocarbon groups can be present in the molecule.

The fluoropolyether acid or its salt is preferably a compound represented by the following formula:

CF₃-CF₂-CF₂-O(-CFCF₃-CF₂-O-)ₙCFCF₃-COOH,

CF₃-CF₂-CF₂-O(-CF₂-CF₂-CF₂-O-)ₙ-CF₂-CF₂COOH,

or

HOOC-CF₂-O(-CF₂-CF₂-O-)ₙ-(-CF₂-O-)ₘCF₂COOH,

wherein m and n are the same as above,

These structures are described in J. Appl. Polymer Sci., 57, 797 (1995) examined by Kasai. As disclosed herein, such fluoropolyethers can have a carboxylic acid group or a salt thereof at one end or both ends. Similarly, such fluoropolyethers may have a sulfonic acid or phosphonic acid group or a salt thereof at one end or both ends. In addition, fluoropolyethers having acid functional groups at both ends may have different groups at each end. Regarding a monofunctional fluoropolyether, the other end of the molecule is usually perfluorinated, but may contain a hydrogen or chlorine atom.

Fluoropolyethers having acid groups at one or both ends contain at least two ether oxygens, preferably at least four ether oxygens, still more preferably at least six ether oxygens. Preferably, at least one fluorocarbon group separating ether oxygens, more preferably at least two of such fluorocarbon groups contain 2 or 3 carbon atoms. Still more preferably, at least 50% of the fluorocarbon groups separating ether oxygens contains 2 or 3 carbon atoms. Also preferably, the fluoropolyether contains at least 15 carbon atoms in total, and for example, a preferable minimum value of n or n + m in the repeating unit structure is preferably at least 5. Two or more fluoropolyethers having an acid group at one end or both ends can be used in the method according to the disclosure. Typically, fluoropolyethers may contain a plurality of compounds in varying proportions within the molecular weight range based on the average molecular weight, unless special care is taken in the production of a single specific fluoropolyether compound.

The fluoropolyether preferably has a number-average molecular weight of 800 g/mol or higher. The fluoropolyether acid or a salt thereof preferably has a number-average molecular weight of lower than 6000 g/mol, because the fluoropolyether acid or a salt thereof may be difficult to disperse in an aqueous medium. The fluoropolyether acid or a salt thereof more preferably has a number-average molecular weight of 800 to 3500 g/mol, still more preferably 1000 to 2500 g/mol.

The amount of the fluoropolyether is preferably 5 to 3000 ppm, more preferably 5 to 2000 ppm in the aqueous medium. The lower limit thereof is still more preferably 10 ppm and the upper limit thereof is still more preferably 100 ppm.

Examples of the nonionic surfactant as the nucleating agent include the nonionic surfactant described above, and preferred is a fluorine-free nonionic surfactant. Examples of the nonionic surfactant include a compound represented by the following formula (i):

R³-O-A¹-H (i)

wherein R³ is a linear or branched primary or secondary alkyl group containing 8 to 18 carbon atoms, and A¹ is a polyoxyalkylene chain.

R³ preferably contains 10 to 16, more preferably 12 to 16 carbon atoms. When R³ contains 18 or less carbon atoms, the aqueous dispersion tends to have good dispersion stability. When R³ contains more than 18 carbon atoms, it is difficult to handle due to its high flowing temperature. When R³ contains less than 8 carbon atoms, the surface tension of the aqueous dispersion becomes high, so that the permeability and wettability are likely to decrease.

The polyoxyalkylene chain may be composed of oxyethylene and oxypropylene. The polyoxyalkylene chain is composed of an average repeating number of 5 to 20 oxyethylene groups and an average repeating number of 0 to 2 oxypropylene groups, and is a hydrophilic group. The number of oxyethylene units may have either a broad or narrow monomodal distribution as typically supplied, or a broader or bimodal distribution which may be obtained by blending. When the average repeating number of oxypropylene groups is more than 0, the oxyethylene groups and oxypropylene groups in the polyoxyalkylene chain may be arranged in blocks or randomly.

From the viewpoint of viscosity and stability of the aqueous dispersion, a polyoxyalkylene chain composed of an average repeating number of 7 to 12 oxyethylene groups and an average repeating number of 0 to 2 oxypropylene groups is preferred. In particular, when A¹ has 0.5 to 1.5 oxypropylene groups on average, good low foaming properties can be achieved, which is preferable.

More preferably, R³ is (R')(R")HC-, where R' and R" are the same or different linear, branched, or cyclic alkyl groups, and the total number of carbon atoms is at least 5, preferably 7 to 17. Preferably, at least one of R' or R" is a branched or cyclic hydrocarbon group.

Specific examples of the polyoxyethylene alkyl ether include C₁₃H₂₇-O-(C₂H₄O)₁₀-H, C₁₂H₂₅-O-(C₂H₄O)₁₀-H, C₁₀H₂₁CH(CH₃)CH₂-O-(C₂H₄O)₉-H, C₁₃H₂₇-O-(C₂H₄O)₉-(CH(CH₃)CH₂O)-H, C₁₆H₃₃-O-(C₂H₄O)₁₀-H, and HC(C₅H₁₁)(C₇H₁₅)-O-(C₂H₄O)₉-H. Examples of commercially available products of the polyoxyethylene alkyl ethers include Genapol X080 (product name, available from Clariant), NOIGEN TDS series (available from DKS Co., Ltd.) exemplified by NOIGEN TDS-80 (trade name), LEOCOL TD series (available from Lion Corp.) exemplified by LEOCOL TD-90 (trade name), LIONOL^{®} TD series (available from Lion Corp.), T-Det A series (available from Harcros Chemicals Inc.) exemplified by T-Det A 138 (trade name), and TERGITOL^{®} 15 S series (available from Dow).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all product names, available from Dow Chemical Co., Ltd.).

The hydrophobic group of the nonionic surfactant may be any of an alkylphenol group, a linear alkyl group, and a branched alkyl group.

Examples of the polyoxyethylene alkylphenyl ether-based nonionic compound include, for example, a compound represented by the following formula (ii):

R⁴-C₆H₄-O-A²-H (ii)

wherein R⁴ is a linear or branched primary or secondary alkyl group containing 4 to 12 carbon atoms, and A² is a polyoxyalkylene chain. Specific examples of the polyoxyethylene alkylphenyl ether-based nonionic compound include Triton^{®} X-100 (product name, available from Dow Chemical Co., Ltd.).

Examples of other nonionic surfactants include bifunctional block copolymers supplied from BASF as Pluronic^{®} R series, tridecyl alcohol alkoxylates supplied from BASF Corporation as Iconol^{®} TDA series, and hydrocarbon-containing siloxane surfactants, preferably hydrocarbon surfactants. In the sense that the hydrocarbyl groups are fully replaced by hydrogen atoms where they can be replaced by halogen such as fluorine, these siloxane surfactants can also be regarded as hydrocarbon surfactants, i.e., the monovalent substituents on the hydrocarbyl groups are hydrogen.

In the production method, in addition to the specific hydrocarbon surfactant and other compounds with surface activity used as necessary, an additive may also be used to stabilize the compounds. Examples of the additive include a buffer, a pH adjuster, a stabilization aid, and a dispersion stabilizer.

Preferred examples of the stabilization aid include paraffin wax, fluorine oil, fluorine solvent, and silicone oil. One stabilization aid may be used alone or two or more thereof may be used in combination. The stabilization aid is more preferably paraffin wax. The paraffin wax may be liquid, semi-solid, or solid at room temperature, and is preferably a saturated hydrocarbon containing 12 or more carbon atoms. The paraffin wax commonly has a melting point of preferably 40°C to 65°C, more preferably 50°C to 65°C.

The amount of the stabilizing aid used is preferably 0.1 to 12% by mass, more preferably 0.1 to 8% by mass, based on the mass of the aqueous medium used. It is desirable that the stabilizing aid is sufficiently hydrophobic so that the stabilizing aid is completely separated from the TFE-based polymer aqueous emulsion after emulsion polymerization of TFE, and does not serve as a contaminating component.

In the production method, the emulsion polymerization may be performed by charging a polymerization reactor with an aqueous medium, the hydrocarbon surfactant, a monomer, and optionally other additives, stirring the contents of the reactor, maintaining the reactor at a predetermined polymerization temperature, and adding a predetermined amount of a polymerization initiator to thereby initiate the polymerization reaction. After the initiation of the polymerization reaction, the components such as the monomer, the polymerization initiator, a chain transfer agent, and the surfactant may additionally be added depending on the purpose. The hydrocarbon surfactant may be added after the polymerization reaction is initiated.

In the emulsion polymerization, the polymerization temperature and the polymerization pressure are determined as appropriate in accordance with the types of the monomers used, the target molecular weight of the TFE-based polymer, and the reaction rate. Usually, the polymerization temperature is 5°C to 150°C, preferably 10°C or higher, more preferably 30°C or higher, still more preferably 50°C or higher. The polymerization temperature is more preferably 120°C or lower, still more preferably 100°C or lower.

The polymerization pressure is 0.05 to 10 MPaG. The polymerization pressure is more preferably 0.3 MPaG or higher, still more preferably 0.5 MPaG or higher. The polymerization pressure is more preferably 5.0 MPaG or lower, still more preferably 3.0 MPaG or lower.

In particular, in order to improve the yield, the polymerization pressure is preferably 1.0 MPaG or higher, more preferably 1.2 MPaG or higher, still more preferably 1.5 MPaG or higher, further preferably 1.8 MPaG or higher, particularly preferably 2.0 MPaG or higher.

In the emulsion polymerization, the hydrocarbon surfactant is preferably added when the concentration of the TFE-based polymer formed in the aqueous medium is less than 0.60% by mass. The hydrocarbon surfactant is more preferably added when the concentration is 0.50% by mass or less, still more preferably 0.36% by mass or less, further preferably 0.30% by mass or less, even more preferably 0.20% by mass or less, particularly preferably 0.10% by mass or less. Most preferably, the hydrocarbon surfactant is added along with the initiation of polymerization. The concentration is the concentration relative to the total of the aqueous medium and the TFE-based polymer.

In the emulsion polymerization, the amount of the hydrocarbon surfactant at the initiation of the polymerization is preferably 1 ppm or more relative to the aqueous medium. The amount of the hydrocarbon surfactant at the initiation of the polymerization is preferably 10 ppm or more, more preferably 50 ppm or more, still more preferably 100 ppm or more, further preferably 200 ppm or more. The upper limit thereof is preferably, but not limited to, 100000 ppm, more preferably 50000 ppm, for example. When the amount of the hydrocarbon surfactant at the initiation of polymerization is in the above range, it is possible to obtain an aqueous dispersion having a smaller average primary particle size and superior stability.

The polymerization initiator may be any initiator capable of generating radicals within the above polymerization temperature range, and any known oil-soluble and/or water-soluble polymerization initiator may be used. The polymerization initiator may be combined with a reducing agent, for example, into the form of a redox agent, which initiates the polymerization. The concentration of the polymerization initiator is appropriately determined in accordance with the types of the monomers, the target molecular weight of the TFE-based polymer, and the reaction rate.

The polymerization initiator used may be an oil-soluble radical polymerization initiator or a water-soluble radical polymerization initiator.

The oil-soluble radical polymerization initiator may be a known oil-soluble peroxide. Examples thereof include dialkyl peroxycarbonates such as diisopropyl peroxydicarbonate and di-sec-butyl peroxydicarbonate, peroxyesters such as t-butyl peroxyisobutyrate and t-butyl peroxypivalate, and dialkyl peroxides such as di-t-butyl peroxide.

The water-soluble radical polymerization initiator may be a known water-soluble peroxide. Examples thereof include ammonium salts, potassium salts, and sodium salts of any of persulfuric acid, perboric acid, perchloric acid, perphosphoric acid, and percarbonic acid, t-butyl permaleate, and t-butyl hydroperoxide. The initiator may also contain a reducing agent such as a sulfite or a sulfurous acid salt. The amount thereof used may be 0.1 to 20 times the amount of the peroxide.

For example, in the case of the polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, ammonium cerium nitrate, and a bromate. Examples of the reducing agent include a sulfite, a bisulfite, a bromate, a diimine, and oxalic acid. Examples of the persulfate include ammonium persulfate and potassium persulfate. Examples of the sulfite include sodium sulfite and ammonium sulfite. In order to increase the decomposition rate of the initiator, the combination of the redox initiator is also preferably combined with a copper salt or an iron salt. An example of copper salts is copper(II) sulfate and an example of iron salts is iron(II) sulfate.

The oxidizing agent of the redox initiator is preferably permanganic acid or its salt, a persulfate, manganese triacetate, a cerium(IV) salt, or bromic acid or its salt. The reducing agent of the redox initiator is preferably a dicarboxylic acid or its salt, or a diimine.

More preferably, the oxidizing agent is permanganic acid or its salt, a persulfate, or bromic acid or its salt, and the reducing agent is a dicarboxylic acid or its salt.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, a polymerization vessel may be charged with an oxidizing agent or a reducing agent in advance, and the other may be continuously or intermittently added thereto to start polymerization. For example, in the case of using potassium permanganate/ammonium oxalate, preferably, a polymerization vessel is charged with ammonium oxalate and potassium permanganate is continuously added thereto.

In the redox initiator herein, "potassium permanganate/ammonium oxalate" refers to a combination of potassium permanganate and ammonium oxalate. The same applies to other compounds.

As the redox initiator, an oxidizing agent or a reducing agent capable of adjusting the pH of an aqueous solution of the redox initiator to 4.0 or more is preferably used. The aqueous solution of the redox initiator means a 0.50% by mass aqueous solution of an oxidizing agent or a 0.50% by mass aqueous solution of a reducing agent.

That is, at least one of the 0.50% by mass aqueous solution of the oxidizing agent and the 0.50% by mass aqueous solution of the reducing agent has a pH of 4.0 or more, and it is preferable that both the 0.50% by mass aqueous solution of the oxidizing agent and the 0.50% by mass aqueous solution of the reducing agent have a pH of 4.0 or more.

The pH of the aqueous solution of the redox initiator (0.50% by mass aqueous solution of oxidizing agent or 0.50% by mass aqueous solution of reducing agent) is more preferably 5.0 or more, still more preferably 5.5 or more, particularly preferably 6.0 or more.

The redox initiator is particularly preferably a combination of an oxidizing agent in the form of a salt and a reducing agent in the form of a salt.

For example, the oxidizing agent in the form of a salt more preferably includes at least one selected from the group consisting of persulfates, permanganates, cerium(IV) salts, and bromates, still more preferably a permanganate, particularly preferably potassium permanganate.

The reducing agent in the form of a salt more preferably includes at least one selected from the group consisting of oxalates, malonates, succinates, glutarates, and bromates, still more preferably an oxalate, particularly preferably ammonium oxalate.

Specifically, the redox initiator preferably includes at least one selected from the group consisting of potassium permanganate/ammonium oxalate, potassium bromate/ammonium sulfite, manganese triacetate/ammonium oxalate, and ammonium cerium nitrate/ammonium oxalate, preferably at least one selected from the group consisting of potassium permanganate/ammonium oxalate, potassium bromate/ammonium sulfite, and ammonium cerium nitrate/ammonium oxalate.

Use of a redox initiator in the polymerization step can increase the molecular weight of the resulting TFE-based polymer. Therefore, the SSG can be made small and the TFE-based polymer is expandable.

Use of a redox initiator in the polymerization step can also increase the number of TFE-based polymer particles generated in the aqueous dispersion. The yield of the resulting TFE-based polymer can also be increased.

When a redox initiator is used, the oxidizing agent and the reducing agent may be added all at once at the initial stage of polymerization, or the reducing agent may be added all at once at the initial stage of polymerization and the oxidizing agent may be added continuously. Alternatively, the oxidizing agent may be added all at once at the initial stage of polymerization and the reducing agent may be added continuously, or both the oxidizing agent and the reducing agent may be added continuously.

When a redox initiator is used as the polymerization initiator, the amount of the oxidizing agent added is preferably 5 to 10000 ppm, more preferably 10 to 1000 ppm relative to the aqueous medium, and the amount of the reducing agent added is preferably 5 to 10000 ppm, more preferably from 10 to 1000 ppm relative to the aqueous medium.

When a redox initiator is used in the polymerization step, the polymerization temperature is preferably 100°C or lower, more preferably 95°C or lower, still more preferably 90°C or lower. The polymerization temperature is preferably 10°C or higher, more preferably 20°C or higher, still more preferably 30°C or higher.

The polymerization initiator may be added in any amount. For example, it may be added in an amount that does not significantly decrease the polymerization rate (e.g., at a concentration of several parts per million relative to water) or more at one time in an early stage of polymerization or intermittently or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces. More specifically, the amount of the polymerization initiator added is preferably 1 ppm or more, more preferably 10 ppm or more, still more preferably 50 ppm or more, relative to the aqueous medium. The amount of the polymerization initiator added is preferably 100000 ppm or less, more preferably 10000 ppm or less, still more preferably 5000 ppm or less.

The aqueous medium is a reaction medium in which polymerization is allowed to occur, and means a liquid that contains water. The aqueous medium may be any one containing water, and may be one containing water as well as, for example, a fluorine-free organic solvent such as alcohol, ether, and ketone and/or a fluorine-containing organic solvent having a boiling point of 40°C or lower.

In the emulsion polymerization, a known chain transfer agent may be further added to adjust the polymerization rate and the molecular weight depending on the purpose.

Examples of the chain transfer agent include esters such as dimethyl malonate, diethyl malonate, methyl acetate, ethyl acetate, butyl acetate, and dimethyl succinate, isopentane, methane, ethane, propane, isobutane, methanol, ethanol, isopropanol, acetone, a variety of mercaptans, a variety of halogenated hydrocarbons such as carbon tetrachloride, and cyclohexane.

The chain transfer agent to be used may be a bromine compound or an iodine compound. An example of a polymerization method using a bromine compound or an iodine compound is a method of performing polymerization of a fluoromonomer in an aqueous medium substantially in the absence of oxygen and in the presence of a bromine compound or an iodine compound (iodine transfer polymerization). Representative examples of the bromine compound or the iodine compound to be used include compounds represented by the following formula:

R^{a}IₓBr_{y}

wherein x and y are each an integer of 0 to 2 and satisfy 1 ≤ x + y ≤ 2; and R^{a} is a saturated or unsaturated fluorohydrocarbon or chlorofluorohydrocarbon group containing 1 to 16 carbon atoms, or a hydrocarbon group containing 1 to 3 carbon atoms, each of which optionally contains an oxygen atom. Use of a bromine compound or an iodine compound allows iodine or bromine to be introduced into the polymer to serve as a crosslinking point.

Examples of the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

Of these, 1,4-diiodoperfluorobutane, 1,6-diiodoperfluorohexane, and 2-iodoperfluoropropane are preferably used in terms of polymerization reactivity, crosslinkability, availability, and the like.

The amount of the chain transfer agent used is usually 1 to 50000 ppm, preferably 1 to 20000 ppm, relative to the total amount of the fluoromonomer fed.

The chain transfer agent may be added to the reaction vessel all at once before initiation of the polymerization, may be added all at once after initiation of the polymerization, may be added in multiple portions during the polymerization, or may be added continuously during the polymerization.

An aqueous dispersion of a TFE-based polymer can be obtained by the step (A2). The aqueous dispersion normally contains a TFE-based polymer, the compound (1) and/or the compound (2), and an aqueous medium. The aqueous dispersion may have any solid concentration. For example, the solid concentration may be 1.0 to 70% by mass. The solid concentration is preferably 8.0% by mass or higher, more preferably 10.0% by mass or higher, while it is preferably 60.0% by mass or lower, more preferably 50.0% by mass or lower.

In the production method, the amount attached is preferably 3.0% by mass or less, more preferably 2.0% by mass or less, more preferably 1.0% by mass or less, still more preferably 0.8% by mass or less, further preferably 0.7% by mass or less, particularly preferably 0.6% by mass or less, based on the TFE-based polymer finally obtained.

The step (A) is also preferably a step (A3) including polymerizing TFE in an aqueous medium in the presence of a macromolecular compound containing an ionic group to obtain an aqueous dispersion of a TFE-based polymer. The ionic group in the macromolecular compound provides a polar group.

In the polymerization of the step (A3), the amount of the macromolecular compound added is preferably more than 0.02% by mass and 10% by mass or less relative to the aqueous medium, with a more preferred upper limit being 3% by mass, still more preferred upper limit being 1% by mass. Adding the macromolecular compound in an amount within this range enables smooth progress of polymerization of the monomer in the aqueous medium. The amount of the macromolecular compound added corresponds to the total amount of the macromolecular compound added in the polymerization.

In the polymerization, the macromolecular compound may be added all at once or the macromolecular compound may be added continuously. Adding the macromolecular compound continuously means, for example, the macromolecular compound is not added all at once but added over time without interruption or in portions. In the polymerization, an aqueous solution containing the macromolecular compound and water may be prepared and this aqueous solution may be added.

In the polymerization, preferably, adding the macromolecular compound is started before the solid content of the TFE-based polymer formed in the aqueous medium reaches 0.5% by mass and thereafter the macromolecular compound is added continuously. The timing to start adding the macromolecular compound is preferably before the solid content of the TFE-based polymer reaches 0.3% by mass, more preferably before the solid content reaches 0.2% by mass, still more preferably before the solid content reaches 0.1% by mass, particularly preferably simultaneous with the start of polymerization. The solid content refers to the amount of the TFE-based polymer relative to the sum of the aqueous medium and the TFE-based polymer.

Using at least one of the macromolecular compounds in the polymerization enables efficient production of the TFE-based polymer. Two or more compounds encompassed by the macromolecular compound may be used together, and a compound having surface activity different from the macromolecular compound may be used together as long as it has volatility or is allowed to remain in a molded article formed from the TFE-based polymer, for example.

In order to obtain primary particles of a TFE-based polymer with a low aspect ratio in the polymerization and to increase the solid concentration of the aqueous dispersion, preferably, a modifying monomer is polymerized together with TFE, a nucleating agent is used, or these approaches are combined.

In the case of using a nucleating agent, the amount of the nucleating agent added may be selected as appropriate in accordance with the type of the nucleating agent. The amount of the nucleating agent added may be 5000 ppm by mass or less, preferably 1000 ppm by mass or less, more preferably 500 ppm by mass or less, still more preferably 100 ppm by mass or less, particularly preferably 50 ppm by mass or less, most preferably 10 ppm by mass or less relative to the aqueous medium.

In the polymerization, the nucleating agent is preferably added to the aqueous medium before start of the polymerization or before the solid content of the TFE-based polymer formed in the aqueous medium reaches 5.0% by mass. Adding the nucleating agent in an early stage of the polymerization enables production of an aqueous dispersion having a small average primary particle size and excellent stability.

The amount of the nucleating agent added in an early stage of the polymerization is preferably 5% by mass or less, more preferably 1.0% by mass or less, still more preferably 0.5% by mass or less, particularly preferably 0.1% by mass or less relative to the TFE-based polymer obtained. The lower limit of the amount of the nucleating agent added in an early stage of the polymerization may be, but is not limited to, 0.01 ppm by mass, for example.

Using the nucleating agent can lead to a TFE-based polymer having a smaller primary particle size in comparison with polymerization in the absence of the nucleating agent.

Examples of the nucleating agent include a dicarboxylic acid, a perfluoropolyether (PFPE) acid or a salt thereof, and a hydrocarbon-containing surfactant. The nucleating agent is preferably free from an aromatic ring, and is preferably an aliphatic compound.

The nucleating agent is preferably added before adding a polymerization initiator or simultaneously with adding the polymerization initiator; also, it may be added during polymerization to adjust the particle size distribution.

The amount of the dicarboxylic acid is preferably 1000 ppm by mass or less, more preferably 500 ppm by mass or less, still more preferably 100 ppm by mass or less relative to the aqueous medium.

The perfluoropolyether (PFPE) acid or its salt may have any chain structure in which oxygen atoms in the main chain of the molecule are separated by saturated fluorocarbon groups containing 1 to 3 carbon atoms. Also, two or more types of fluorocarbon groups may be present in the molecule. A typical structure has a repeating unit represented by any of the following formulas.

(-CFCF₃-CF₂-O-)ₙ (VII)

(-CF₂-CF₂-CF₂-O-)ₙ (VIII)

(-CF₂-CF₂-O-)ₙ-(-CF₂-O-)ₘ (IX)

(-CF₂-CFCF₃-O-)n-(-CF₂-O-)ₘ (X)

These structures are disclosed by Kasai in J. Appl. Polymer Sci. 57, 797 (1995). As disclosed in this literature, the PFPE acid or its salt may have a carboxylic acid group or its salt at one end or each end. The PFPE acid or its salt may also have a sulfonic acid or phosphonic acid group or its salt at one end or at each end. Moreover, the PFPE acid or its salt may have a different group at each end. In the case of monofunctional PFPE, the other end of the molecule is usually perfluorinated but may have a hydrogen or chlorine atom. The PFPE acid or its salt contains at least two ether oxygens, preferably at least four ether oxygens, still more preferably at least six ether oxygens. Preferably at least one, more preferably at least two of the fluorocarbon groups separating the ether oxygens contain two or three carbon atoms. Further preferably, at least 50% of the fluorocarbon groups separating the ether oxygens contain two or three carbon atoms. Preferably, the PFPE acid or its salt contains a total of at least 15 carbon atoms, and, for example, a preferred minimum value of n or n + m in the repeating unit structure is at least 5. Two or more PFPE acids or their salts having an acid group at one end or at each end may be used in the production method of the disclosure. The PFPE acid or its salt preferably has a number average molecular weight of lower than 6000 g/mol.

The hydrocarbon-containing surfactant is added in an amount of preferably 40 ppm by mass or less, more preferably 30 ppm by mass or less, still more preferably 20 ppm by mass or less relative to the aqueous medium. The amount by ppm of a lipophilic nucleating portion present in the aqueous medium is presumed to be smaller than the amount of the above component added. Thus, the amount of the lipophilic nucleating portion is smaller than 40 ppm by mass, 30 ppm by mass, and 20 ppm by mass in the respective cases. The lipophilic nucleating portion seems to be present in the form of molecule, so that a slight amount of the hydrocarbon-containing surfactant can form a large amount of a lipophilic nucleating portion. Accordingly, adding merely about 1 ppm by mass of the hydrocarbon-containing surfactant to an aqueous medium can provide a beneficial effect. The lower limit is preferably 0.01 ppm by mass.

The hydrocarbon-containing surfactant encompasses a nonionic surfactant and a cationic surfactant, including siloxane surfactants such as those disclosed in US 7897682 B (Brothers et al.) and US 7977438 B (Brothers et al.).

The hydrocarbon-containing surfactant is preferably a nonionic surfactant (e.g., nonionic hydrocarbon surfactant). In other words, the nucleating agent is preferably a nonionic surfactant. The nonionic surfactant is preferably free from an aromatic portion.

An example of the nonionic surfactant is a nonionic surfactant that may be contained in a composition to be used for concentration.

In the polymerization, the macromolecular compound may be used together with a compound containing a functional group reactive in radical polymerization and a hydrophilic group.

In the polymerization, in addition to the macromolecular compound and a different compound having surface activity used as necessary, an additive may also be used to stabilize the compounds. Examples of the additive include a buffer, a pH adjuster, a stabilization aid, and a dispersion stabilizer.

The stabilization aid is preferably paraffin wax, fluorine-containing oil, a fluorine-containing solvent, silicone oil, or the like. One stabilization aid may be used alone or two or more stabilization aids may be used in combination. The stabilization aid is more preferably paraffin wax. The paraffin wax may be liquid, semi-solid, or solid at room temperature, and is preferably a saturated hydrocarbon containing 12 or more carbon atoms. The paraffin wax commonly has a melting point of preferably 40°C to 65°C, more preferably 50°C to 65°C.

The amount of the stabilizing aid used is preferably 0.1 to 12% by mass, more preferably 0.1 to 8% by mass, based on the mass of the aqueous medium used. Preferably, the stabilization aid is sufficiently hydrophobic so that the stabilization aid is completely separated from the aqueous dispersion after polymerization and does not serve as a contaminating component.

The polymerization is performed by charging a polymerization reactor with an aqueous medium, the macromolecular compound, a monomer, and optionally a different additive, stirring the contents in the reactor, maintaining the reactor at a predetermined polymerization temperature, and then adding a predetermined amount of a polymerization initiator to start the polymerization reaction. After the polymerization reaction starts, the monomer, the polymerization initiator, a chain transfer agent, the macromolecular compound, and the like may be additionally fed in accordance with the purposes. The macromolecular compound may be added after the polymerization reaction starts.

Commonly, the polymerization temperature is 5°C to 120°C and the polymerization pressure is 0.05 to 10 MPaG. The polymerization temperature and the polymerization pressure are determined as appropriate in accordance with the types of the monomers used, the target molecular weight of the TFE-based polymer, and the reaction rate.

To exert an influence on the molecular weight distribution, i.e., to achieve a wide molecular weight distribution or to achieve bimodal or multimodal molecular weight distribution, the polymerization temperature may be changed during polymerization.

The polymerization medium may have a pH within a range from 2 to 11, preferably 3 to 10, most preferably 4 to 10.

The polymerization initiator may be any initiator capable of generating radicals within the above polymerization temperature range, and any known oil-soluble and/or water-soluble polymerization initiator may be used. The polymerization initiator may be combined with a reducing agent, for example, into the form of a redox agent, which initiates the polymerization. The concentration of the polymerization initiator is appropriately determined in accordance with the types of the monomers, the target molecular weight of the TFE-based polymer, and the reaction rate.

The polymerization initiator used may be an oil-soluble radical polymerization initiator or a water-soluble radical polymerization initiator.

The oil-soluble radical polymerization initiator may be a known oil-soluble peroxide. Typical examples thereof include dialkyl peroxycarbonates such as diisopropyl peroxydicarbonate and di-sec-butyl peroxydicarbonate, peroxy esters such as t-butyl peroxyisobutyrate and t-butyl peroxypivalate, dialkyl peroxides such as di-t-butyl peroxide, as well as di(perfluoroacyl) or di(fluorochloroacyl) peroxides such as di(ω-hydro-dodecafluorohexanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydrododecafluoroheptanoyl-ω-hydrohexadecafluorononanoyl peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The water-soluble radical polymerization initiator may be a known water-soluble peroxide. Examples thereof include ammonium salts, potassium salts, and sodium salts of any of persulfuric acid, perboric acid, perchloric acid, perphosphoric acid, and percarbonic acid, organic peroxides such as disuccinic peroxide and diglutaric peroxide, t-butyl permaleate, and t-butyl hydroperoxide. The initiator may also contain a reducing agent such as a sulfite and the amount thereof used may be 0.1 to 20 times the peroxide.

For example, in the case of the polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, and ammonium cerium nitrate. Examples of the reducing agent include a sulfite, a bisulfite, a bromate, a diimine, and oxalic acid. Examples of the persulfate include ammonium persulfate and potassium persulfate. Examples of the sulfite include sodium sulfite and ammonium sulfite. In order to increase the decomposition rate of the initiator, the combination of the redox initiator is also preferably combined with a copper salt or an iron salt. An example of copper salts is copper(II) sulfate and an example of iron salts is iron(II) sulfate.

Examples of the redox initiator include combinations of potassium permanganate/oxalic acid, ammonium persulfate/bisulfite/iron sulfate, manganese triacetate/oxalic acid, ammonium cerium nitrate/oxalic acid, and bromate/bisulfite, with potassium permanganate/oxalic acid being preferred. In the case of using a redox initiator, an oxidizing agent or a reducing agent may be fed to a polymerization vessel in advance, and the other may be continuously or intermittently added to start polymerization. For example, in the case of using potassium permanganate/oxalic acid, preferably, oxalic acid is fed to a polymerization vessel and potassium permanganate is continuously added thereto.

The polymerization initiator may be added in any amount. For example, it may be added in an amount that does not significantly decrease the polymerization rate (e.g., concentration of several parts per million relative to water) or more at one time in an early stage of polymerization or intermittently or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces.

The aqueous medium is a reaction medium in which polymerization is allowed to occur, and means a liquid that contains water. The aqueous medium may be any one containing water, and may be one containing water as well as, for example, a fluorine-free organic solvent such as alcohol, ether, and ketone and/or a fluorine-containing organic solvent having a boiling point of 40°C or lower.

In the polymerization, a known chain transfer agent, radical scavenger, or decomposing agent may be further added in accordance with the purposes to adjust the polymerization rate and the molecular weight.

Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The chain transfer agent to be used may be a bromine compound or an iodine compound. An example of a polymerization method using a bromine compound or an iodine compound is a method of performing polymerization of a fluoromonomer in an aqueous medium substantially in the absence of oxygen and in the presence of a bromine compound or an iodine compound (iodine transfer polymerization). Representative examples of the bromine compound or the iodine compound to be used include compounds represented by the formula:

R^{a}IₓBr_{y}

wherein x and y are each an integer of 0 to 2 and satisfy 1 ≤ x + y ≤ 2; and R^{a} is a saturated or unsaturated fluorohydrocarbon or chlorofluorohydrocarbon group containing 1 to 16 carbon atoms, or a hydrocarbon group containing 1 to 3 carbon atoms, each of which optionally contains an oxygen atom. Use of a bromine compound or an iodine compound allows iodine or bromine to be introduced into the polymer to serve as a crosslinking point.

Examples of the bromine compound or iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

From the viewpoints of polymerization reactivity, crosslinkability, availability, and the like, preferably used among these are 1,4-diiodoperfluorobutane, 1,6-diiodoperfluorohexane, and 2-iodoperfluoropropane.

The amount of the chain transfer agent used is commonly 1 to 50000 ppm by mass, preferably 1 to 20000 ppm by mass relative to the total amount of the fluoromonomer fed.

The chain transfer agent may be added to the reaction vessel all at once before initiation of the polymerization, may be added all at once after initiation of the polymerization, may be added in multiple portions during the polymerization, or may be added continuously during the polymerization.

The polymerization initiator used may be a persulfate (e.g., ammonium persulfate) or an organic peroxide such as disuccinic peroxide or diglutaric peroxide alone or in the form of a mixture of these. Any of these may be used in combination with a reducing agent such as sodium sulfite to form a redox system. Further, during polymerization, a radical scavenger such as hydroquinone or catechol may be added or a decomposing agent for a peroxide such as ammonium sulfite may be added to adjust the radical concentration in the system.

In the polymerization, a fluoromonomer may be polymerized in an aqueous medium in the presence of the macromolecular compound to produce an aqueous dispersion of fluoropolymer particles and, in this aqueous dispersion of the fluoropolymer particles, the fluoromonomer may be seed-polymerized to the fluoropolymer particles, whereby a fluoropolymer may be obtained.

The polymerization is preferably such that a fluoromonomer is polymerized substantially in the absence of a fluorine-containing surfactant (except for a compound containing a functional group reactive in radical polymerization and a hydrophilic group). This production method can provide a TFE-based polymer even without a fluorine-containing surfactant.

The phrase "substantially in the absence of a fluorine-containing surfactant" herein means that the amount of the fluorine-containing surfactant is 10 ppm by mass or less relative to the aqueous medium. The amount of the fluorine-containing surfactant relative to the aqueous medium is preferably 1 ppm by mass or less, more preferably 100 ppb by mass or less, still more preferably 10 ppb by mass or less, further preferably less than 10 ppb by mass, further preferably 1 ppb by mass or less, particularly preferably less than 1 ppb by mass.

Examples of the fluorine-containing surfactant include those described above.

The polymerization can provide an aqueous dispersion containing the TFE-based polymer, the macromolecular compound, and the aqueous medium. The amount (solid concentration) of the TFE-based polymer in the aqueous dispersion is commonly 10 to 50% by mass, more preferably 15% by mass or more, while preferably 40% by mass or less, more preferably 35% by mass or less.

The aqueous dispersion may be additionally combined with the macromolecular compound.

The coagulation in the step (B) can be performed by a known method.

In the case of the TFE-based polymer aqueous dispersion, coagulation is normally performed by diluting the aqueous dispersion obtained by polymerization, such as polymer latex, to a polymer concentration of 10 to 25% by mass (preferably a polymer concentration of 10 to 20% by mass) using water, optionally adjusting the pH to a neutral or alkaline pH, and stirring the dilution in a container equipped with a stirrer more vigorously than the stirring during the reaction. In the coagulation, stirring may be performed while adding a coagulant such as a water-soluble organic compound, e.g., methanol or acetone, an inorganic salt, e.g., potassium nitrate or ammonium carbonate, or an inorganic acid, e.g., hydrochloric acid, sulfuric acid, or nitric acid. The coagulation may be continuously performed using, for example, an inline mixer.

The drying (heat treatment) in the step (C) is typically performed by means such as vacuum, high frequency, or hot air, while the wet powder is kept in a state where it does not flow so much, preferably in a stationary state. Friction between powder particles, especially at high temperature, generally has an unfavorable effect on a fine powdery TFE-based polymer. This is because particles of this TFE-based polymer are easily fibrillated even by a small shearing force to lose their original stable particle structure.

In order to easily set the amount of the polar group and the apparent density within the above-described ranges, the drying temperature in the step (C) is preferably 100°C or higher, more preferably 110°C or higher, still more preferably 120°C or higher, further preferably 130°C or higher, while it is preferably 200°C or lower, more preferably 180°C or lower, still more preferably 170°C or lower, further preferably 160°C or lower.

In the case of drying in vacuum, drying at low temperature such as 60°C or higher, 70°C or higher, 80°C or higher, or 90°C or higher is also preferred.

In order to easily set the amount of the polar group and the apparent density within the above-described ranges, the duration of the drying in the step (C) is preferably 2 hours or longer, more preferably 5 hours or longer, still more preferably 8 hours or longer, further preferably 10 hours or longer. The upper limit is not limited. Still, it is preferably 100 hours, more preferably 50 hours, still more preferably 30 hours, for example.

In order to easily set the amount of the polar group and the apparent density within the above-described ranges, the wind speed in the step (C) is preferably 0.01 m/s or higher, more preferably 0.03 m/s or higher, still more preferably 0.05 m/s or higher, further preferably 0.1 m/s or higher. In order to reduce or prevent powder scattering, the wind speed is preferably 50 m/s or lower, more preferably 30 m/s or lower, still more preferably 10 m/s or lower.

The drying in the step (C) can be performed using an electric furnace or a steam furnace. For example, the heat treatment may be performed with an electric furnace such as a co-flow box electric furnace, a ventilated box electric furnace, a ventilated conveyor electric furnace, a band electric furnace, a radiant conveyor electric furnace, a fluidized bed electric furnace, a vacuum electric furnace, a stirring electric furnace, an convection electric furnace, or a hot air circulating electric furnace, or a steam furnace corresponding to any of the foregoing electric furnaces (a device of the type defined by replacing the "electric furnace" in the device name of the foregoing electric furnace with "steam furnace"). In order to more efficiently remove water and the fluorine-containing compound, preferred are a co-flow box electric furnace, a ventilated box electric furnace, a ventilated conveyor electric furnace, a band electric furnace, a fluidized bed electric furnace, a hot air circulating electric furnace, and steam furnaces corresponding to the forgoing furnaces (devices of the types determined by replacing the "electric furnace" in the device names of the foregoing electric furnaces with "steam furnace").

In the drying in the step (C), in order to easily set the amount of the polar group and the apparent density within the above-described ranges and more efficiently remove water and the fluorine-containing compound, the wet powder is preferably placed in a container with air permeability on the bottom and/or sides. The container with air permeability on the bottom and/or sides may be any container capable of withstanding the drying temperature. Preferably, it is made of metal such as stainless steel.

The container with air permeability on the bottom and/or sides is preferably a tray (vat) having air permeability on the bottom and/or sides, more preferably a tray (mesh tray) having the bottom and/or sides made of mesh.

The mesh is preferably either a woven wire mesh or perforated metal.

The opening of the mesh is preferably 2000 µm or less (mesh No. 10 or higher (ASTM)), more preferably 595 µm or less (mesh No. 30 or higher), still more preferably 297 µm or less (mesh No. 50 or higher), further preferably 177 µm or less (mesh No. 80 or higher), even more preferably 149 µm or less (mesh No. 100 or higher), particularly preferably 74 µm or less (mesh No. 200 or higher). The opening is preferably 25 µm or more (mesh No. 500 or lower).

When the mesh is a woven wire mesh, examples of weaving methods include plain weave, twill weave, plain Dutch weave, and twilled Dutch weave.

When the mesh is a perforated metal, the aperture ratio is preferably 10% or higher, more preferably 20% or higher, still more preferably 30% or higher. The aperture ratio is preferably 95% or lower.

In order to easily set the amount of the polar group and the apparent density within the above-described ranges and more efficiently remove water and the fluorine-containing compound, the amount of the wet powder placed in the step (C) is preferably 10 g/cm² or less, more preferably 8 g/cm² or less, still more preferably 5 g/cm² or less, particularly preferably 3 g/cm² or less, while preferably 0.01 g/cm² or more, more preferably 0.05 g/cm² or more, still more preferably 0.1 g/cm² or more.

In order to easily set the amount of the polar group and the apparent density within the above-described ranges and more efficiently remove water and the fluorine-containing compound, the water content of the wet powder to be dried in the step (C) is preferably 10% by mass or higher, more preferably 20% by mass or higher, still more preferably 30% by mass or higher, while preferably 150% by mass or lower, more preferably 100% by mass or lower based on the wet powder.

The TFE-based polymer composition of the disclosure is for use in a binder for an electrochemical device. In the binder for an electrochemical device, the TFE-based polymer composition of the disclosure may be used alone or may be used in the form of mixture with a different material (e.g., a polymer different from the TFE-based polymer). Still, the TFE-based polymer composition of the disclosure is preferably used substantially alone, more preferably used alone. The phrase "the TFE-based polymer composition of the disclosure is substantially used alone" means that the TFE-based polymer composition is used such that the amount of the TFE-based polymer composition in the binder for an electrochemical device falls within the range described below.

The disclosure also provides a binder for an electrochemical device consisting essentially of a TFE-based polymer composition, the TFE-based polymer composition containing a polar group in an amount of less than 0.020 meq/g based on the TFE-based polymer composition, being non melt-processible, and having an apparent density of less than 0.50 g/mL.

Containing a specific TFE-based polymer composition, the binder of the disclosure can reduce the resistance of the electrochemical device and yield a mixture sheet with excellent adhesion to a substrate (e.g., metal of the current collector and the like, carbon-coated layer, electrode mixture layer). Also, the binder of the disclosure can improve the cycle characteristics of an electrochemical device.

Since the binder of the disclosure can be used in a dry process, it is not necessary to use a large amount of dispersion medium such as water or an organic solvent and the electrode active material or solid electrolyte to be used together can be selected from a wide range of selections, which is advantageous in terms of production process. The process and cost derived from use of a dispersion medium can be reduced.

Moreover, the binder of the disclosure has excellent binding force to active materials and electrolytes, which can reduce the amount of the binder used.

The TFE-based polymer composition in the binder of the disclosure may be the same composition as the TFE-based polymer composition of the disclosure described above, and preferred embodiments are also the same.

The binder of the disclosure consists essentially of the TFE-based polymer composition. This allows remarkable exertion of the effect attributable to the TFE-based polymer composition. The phrase "consists essentially of the TFE-based polymer composition" means that the amount of the TFE-based polymer composition is 95.0% by mass or more based on the binder.

The amount of the TFE-based polymer composition is preferably 98.0% by mass or more, more preferably 99.0% by mass or more, still more preferably 99.5% by mass or more, particularly preferably 99.9% by mass or more, most preferably 99.95% by mass or more based on the binder.

The binder of the disclosure also preferably consists of the TFE-based polymer composition.

Preferably, the binder of the disclosure is substantially free from organic solvents. This can reduce the process and cost derived from use of organic solvents. The phrase "substantially free from organic solvents" means that the organic solvent content of the binder is 5% by mass or less.

The organic solvent content is preferably 3% by mass or less, more preferably 1% by mass or less, still more preferably 0.1% by mass or less, further preferably 0.01% by mass or less, particularly preferably 0.001% by mass or less.

The binder of the disclosure is preferably in the form of powder.

The binder of the disclosure is for use in electrochemical devices such as batteries and capacitors.

Examples of batteries include secondary batteries such as lithium-ion batteries.

The binder may be used in any capacitor. An electrochemical capacitor is preferred. Examples of electrochemical capacitors include electric double layer capacitors, hybrid capacitors, and redox capacitors. Examples of hybrid capacitors include sodium-ion capacitors, lithium-ion capacitors, and magnesium-ion capacitors. Among these, electric double layer capacitors are particularly preferred.

The binder of the disclosure can be suitably used as a binder for batteries, and can be particularly suitably used as a binder for secondary batteries such as lithium-ion batteries.

The binder of the disclosure may be used for producing electrochemical device members, preferably battery members.

The binder of the disclosure can be particularly suitably used as a binder for an electrode.

The binder of the disclosure can be also suitably used as a binder in a solid electrolyte layer of a solid-state secondary battery.

The disclosure also provides an electrode mixture containing the TFE-based polymer composition of the disclosure or the binder of the disclosure, and an electrode active material. The electrode mixture of the disclosure used can reduce the resistance of the electrochemical device and yield a mixture sheet with excellent adhesion to a substrate (e.g., metal of the current collector and the like, carbon-coated layer, electrode mixture layer). Also, the electrode mixture of the disclosure can improve the cycle characteristics of an electrochemical device. In addition, since the electrode active material can be held even when the amount of the binder is small, the electrode mixture can contain larger amounts of materials for improving electrochemical device characteristics, such as active materials or conductive aids.

Examples of the electrode active material include a positive electrode active material and a negative electrode active material.

The positive electrode active material may be any material that can electrochemically occlude and release alkali metal ions. Still, the positive electrode material is preferably, for example, a material containing an alkali metal and at least one transition metal. Specific examples include alkali metal-containing transition metal composite oxides and alkali metal-containing transition metal phosphate compounds. Particularly preferred among these as the positive electrode material are alkali metal-containing transition metal composite oxides which produce high voltage. Examples of the alkali metal ions include lithium ions, sodium ions, and potassium ions. In a preferred embodiment, the alkali metal ions may be lithium ions. That is, in this embodiment, the alkali metal ion secondary battery is a lithium-ion secondary battery.

Examples of the alkali metal-containing transition metal composite oxides include alkali metal-manganese spinel composite oxides (e.g., lithium-manganese spinel composite oxides) represented by the formula:

MₐMn_{2-b}M¹_{b}O₄

wherein M includes at least one metal selected from the group consisting of Li, Na, and K; 0.9 ≤ a; 0 ≤ b ≤ 1.5; and M¹ includes at least one metal selected from the group consisting of Fe, Co, Ni, Cu, Zn, Al, Sn, Cr, V, Ti, Mg, Ca, Sr, B, Ga, In, Si, and Ge;
alkali metal-nickel composite oxides (e.g., lithium-nickel composite oxides) represented by the formula:

   MNi_{1-c}M²_{c}O₂

   wherein M includes at least one metal selected from the group consisting of Li, Na, and K; 0 ≤ c ≤ 0.5; and M² includes at least one metal selected from the group consisting of Fe, Co, Mn, Cu, Zn, Al, Sn, Cr, V, Ti, Mg, Ca, Sr, B, Ga, In, Si, and Ge; and
alkali metal-cobalt composite oxides (e.g., lithium-cobalt composite oxides) represented by the formula:

   MCo_{1-d}M³_{d}O₂

   wherein M includes at least one metal selected from the group consisting of Li, Na, and K; 0 ≤ d ≤ 0.5; and M³ includes at least one metal selected from the group consisting of Fe, Ni, Mn, Cu, Zn, Al, Sn, Cr, V, Ti, Mg, Ca, Sr, B, Ga, In, Si, and Ge.

In the above formulas, M is preferably a metal selected from the group consisting of Li, Na, and K, more preferably Li or Na, still more preferably Li.

In order to achieve high-energy-density, high-output secondary batteries, preferred among these are MCoO₂, MMnO₂, MNiO₂, MMn₂O₄, MNi_{0.8}Co_{0.15}Al_{0.05}O₂, and MNi_{1/3}Co_{1/3}Mn_{1/3}O₂, and preferred is a compound represented by the following formula (3):

MNiₕCoᵢMnⱼM⁵ₖO₂ (3)

wherein M includes at least one metal selected from the group consisting of Li, Na, and K; M⁵ includes at least one selected from the group consisting of Fe, Cu, Zn, Al, Sn, Cr, V, Ti, Mg, Ca, Sr, B, Ga, In, Si, and Ge; and (h + i + j + k) = 1.0, 0 ≤ h ≤ 1.0, 0 ≤ i ≤ 1.0, 0 ≤ j ≤ 1.5, and 0 ≤ k ≤ 0.2.

Examples of the alkali metal-containing transition metal phosphate compound include a compound represented by the following formula (4):

MₑM⁴_{f}(PO₄)_{g} (4)

wherein M includes at least one metal selected from the group consisting of Li, Na, and K; M⁴ includes at least one selected from the group consisting of V, Ti, Cr, Mn, Fe, Co, Ni, and Cu; and 0.5 ≤ e ≤ 3, 1 ≤ f ≤ 2, and 1 ≤ g ≤ 3. In the above formulas, M is preferably a metal selected from the group consisting of Li, Na, and K, more preferably Li or Na, still more preferably Li. In other words, the alkali metal-containing transition metal phosphate compound is preferably a lithium-containing transition metal phosphate compound.

The transition metal of the lithium-containing transition metal phosphate compound is preferably V, Ti, Cr, Mn, Fe, Co, Ni, Cu, or the like. Specific examples thereof include iron phosphates such as LiFePO₄, Li₃Fe₂(PO₄)₃, and LiFeP₂O₇, cobalt phosphates such as LiCoPO₄, and those obtained by replacing some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphate compound preferably has an olivine structure.

Examples of a different positive electrode active material include a lithium-nickel composite oxide. The lithium-nickel composite oxide is preferably a positive electrode active material represented by the following formula (5):

Li_{y}Ni₁₋ₓMₓO₂ (5)

wherein 0.01 ≤ x ≤ 0.7, 0.9 ≤ y ≤ 2.0, and M is a metal atom (other than Li and Ni).

Other examples of the different positive electrode active material include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃. In particular, a positive electrode active material such as M₂MnO₃ or MNi_{0.5}Mn_{1.5}O₂ is preferred because the crystal structure thereof does not collapse even when the secondary battery is operated at a voltage exceeding 4.4 V or at a voltage of 4.6 V or higher. Thus, an electrochemical device such as a secondary battery including a positive electrode material containing any of the above-exemplified positive electrode active materials is preferred because the residual capacity thereof is less likely to decrease and the percentage increase in resistance thereof is less likely to change even after storage at high temperatures and the battery performance thereof may not be impaired even when the battery is operated at high voltages.

Other examples of the different positive electrode active material also include solid solution materials of M₂MnO₃ and MM⁶O₂ (wherein M includes at least one metal selected from the group consisting of Li, Na, and K; and M⁶ is a transition metal such as Co, Ni, Mn, or Fe).

The solid solution material is, for example, an alkali metal manganese oxide represented by the formula Mx[Mn_{(1-y)}M⁷_{y}]O_{z}. In the formula, M includes at least one metal selected from the group consisting of Li, Na, and K; and M⁷ includes at least one metal element other than M or Mn, containing, for example, one or more elements selected from the group consisting of Co, Ni, Fe, Ti, Mo, W, Cr, Zr, and Sn. The values of x, y, and z in the formula are within the ranges of 1 < x < 2, 0 ≤ y < 1, and 1.5 < z < 3, respectively. In particular, a manganese-containing solid solution material such as Li_{1.2}Mn_{0.5}Co_{0.14}Ni_{0.14}O₂, which is a Li₂MnO₃-based solid solution of LiNiO₂ and LiCoO₂, is preferred because it can provide an alkali metal ion secondary battery with a high energy density.

In order to improve the continuous charge characteristics, the positive electrode active material preferably contains lithium phosphate. Lithium phosphate may be used in any manner, and is preferably used in admixture with the positive electrode active material. The lower limit of the amount of lithium phosphate used is preferably 0.1% by mass or more, more preferably 0.3% by mass or more, still more preferably 0.5% by mass or more, based on the sum of the amounts of the positive electrode active material and lithium phosphate. The upper limit thereof is preferably 10% by mass or less, more preferably 8% by mass or less, still more preferably 5% by mass or less.

To a surface of the positive electrode active material may be attached a substance having a composition different from that of the positive electrode active material. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

Such a substance may be attached to a surface of the positive electrode active material by, for example, a method of dissolving or suspending the substance in a solvent, impregnating the positive electrode active material with the solution or suspension, and drying the impregnated material; a method of dissolving or suspending a precursor of the substance in a solvent, impregnating the positive electrode active material with the solution or suspension, and heating the material and the precursor to cause a reaction therebetween; or a method of adding the substance to a precursor of the positive electrode active material and simultaneously sintering the substance and the precursor. In the case of attaching carbon, for example, a carbonaceous material in the form of activated carbon may be mechanically attached to the surface afterward.

For the amount of the substance attached to the surface in terms of the mass relative to the amount of the positive electrode active material, the lower limit thereof is preferably 0.1 ppm or more, more preferably 1 ppm or more, still more preferably 10 ppm or more, while the upper limit thereof is preferably 20% or less, more preferably 10% or less, still more preferably 5% or less. The substance attached to the surface can reduce or prevent oxidation of the electrolyte on the surface of the positive electrode active material, improving the battery life. Too small an amount of the substance may fail to sufficiently provide this effect. Too large an amount thereof may hinder the entrance and exit of lithium ions, increasing the resistance.

Particles of the positive electrode active material may have any shape conventionally used, such as a bulky shape, a polyhedral shape, a spherical shape, an ellipsoidal shape, a plate shape, a needle shape, or a pillar shape. The primary particles may aggregate to form secondary particles.

The positive electrode active material has a tap density of preferably 0.5 g/cm³ or higher, more preferably 0.8 g/cm³ or higher, still more preferably 1.0 g/cm³ or higher. The positive electrode active material having a tap density below the lower limit may cause an increased amount of a dispersion medium required and increased amounts of a conductive material and a binder required in formation of the positive electrode active material layer, as well as limitation on the packing fraction of the positive electrode active material in the positive electrode active material layer, resulting in limitation on the battery capacity. The use of a complex oxide powder having a high tap density enables formation of a positive electrode active material layer with a high density. A higher tap density is normally preferred, and there is no upper limit. Still, too high a tap density may be a rate-determining factor of diffusion of lithium ions in the positive electrode active material layer with the electrolyte serving as a diffusion medium, easily impairing the load characteristics. Thus, the upper limit of the tap density is preferably 4.0 g/cm³ or lower, more preferably 3.7 g/cm³ or lower, still more preferably 3.5 g/cm³ or lower.

The tap density is determined as a powder packing density (tap density) g/cm³ when 5 to 10 g of the positive electrode active material powder is packed into a 10-mL glass graduated cylinder and the cylinder is tapped 200 times with a stroke of about 20 mm.

The particles of the positive electrode active material have a median size d50 (or a secondary particle size when the primary particles aggregate to form secondary particles) of preferably 0.3 µm or more, more preferably 0.5 µm or more, still more preferably 0.8 µm or more, most preferably 1.0 µm or more, while preferably 30 µm or less, more preferably 27 µm or less, still more preferably 25 µm or less, most preferably 22 µm or less. The particles having a median size below the lower limit may fail to provide a product with a high tap density. The particles having a median size above the upper limit may cause prolonged diffusion of lithium in the particles, possibly impairing the battery performance. Mixing two or more positive electrode active materials having different median sizes d50 can further improve the ease of packing in formation of the positive electrode.

The median size d50 is determined using a known laser diffraction/scattering particle size distribution analyzer. In the case of using LA-920 (Horiba, Ltd.) as the particle size distribution analyzer, the dispersion medium used in the measurement is a 0.1% by mass aqueous solution of sodium hexametaphosphate and the measurement refractive index is set to 1.24 after 5-minute ultrasonic dispersion.

When the primary particles aggregate to form secondary particles, the average primary particle size of the positive electrode active material is preferably 0.05 µm or more, more preferably 0.1 µm or more, still more preferably 0.2 µm or more. The upper limit thereof is preferably 5 µm or less, more preferably 4 µm or less, still more preferably 3 µm or less, most preferably 2 µm or less. The primary particles having an average primary particle size above the upper limit may have difficulty in forming spherical secondary particles, adversely affecting the powder packing. Further, such primary particles may have a greatly reduced specific surface area, highly possibly impairing the battery performance such as output characteristics. In contrast, the primary particles having an average primary particle size below the lower limit may usually be insufficiently grown crystals, causing poor charge and discharge reversibility, for example.

The primary particle size is measured by scanning electron microscopic (SEM) observation. Specifically, the primary particle size is determined as follows. A photograph at a magnification of 10000x is first taken. Any 50 primary particles are selected and the maximum length between the left and right boundary lines of each primary particle is measured along the horizontal line. Then, the average value of the maximum lengths is calculated, which is defined as the primary particle size.

The positive electrode active material has a BET specific surface area of preferably 0.1 m²/g or more, more preferably 0.2 m²/g or more, still more preferably 0.3 m²/g or more. The upper limit thereof is preferably 50 m²/g or less, more preferably 40 m²/g or less, still more preferably 30 m²/g or less. The positive electrode active material having a BET specific surface area smaller than the above range may easily impair the battery performance. The positive electrode active material having a BET specific surface area larger than the above range may less easily have an increased tap density, easily causing a difficulty in processing the material in formation of the positive electrode active material layer.

The BET specific surface area is defined by a value determined by single point BET nitrogen adsorption utilizing a gas flow method using a surface area analyzer (e.g., fully automatic surface area measurement device, available from Ohkura Riken Co., Ltd.), a sample pre-dried in nitrogen stream at 150°C for 30 minutes, and a nitrogen-helium gas mixture with the nitrogen pressure relative to the atmospheric pressure being accurately adjusted to 0.3.

When the secondary battery of the disclosure is used as a large-size lithium-ion secondary battery for hybrid vehicles or distributed generation, it needs to achieve high output. Thus, the particles of the positive electrode active material are preferably mainly composed of secondary particles. The particles of the positive electrode active material preferably include 0.5 to 7.0% by volume of fine particles having an average secondary particle size of 40 µm or less and having an average primary particle size of 1 µm or less. The presence of fine particles having an average primary particle size of 1 µm or less enlarges the contact area with the electrolyte and enables more rapid diffusion of lithium ions between the electrode mixture and the electrolyte, improving the output performance of the battery.

The positive electrode active material may be produced by any common method of producing an inorganic compound. In particular, a spherical or ellipsoidal active material can be produced by various methods. For example, a material substance of transition metal is dissolved or crushed and dispersed in a solvent such as water, and the pH of the solution or dispersion is adjusted under stirring to form a spherical precursor. The precursor is recovered and, if necessary, dried. Then, a Li source such as LiOH, Li₂CO₃, or LiNO₃ is added thereto and the mixture is sintered at high temperature, thereby providing an active material.

In production of the positive electrode, one of the aforementioned positive electrode active materials may be used alone or two or more thereof having different compositions may be used in any combination at any ratio. Preferred examples of the combination in this case include a combination of LiCoO₂ with a ternary system such as LiNi_{0.33}Co_{0.33}Mn_{0.33}O₂, a combination of LiCoO₂ with either LiMn₂O₄ or one obtained by replacing one or more Mn atoms in LiMn₂O₄ with a different transition metal, and a combination of LiFePO₄ with either LiCoO₂ or one obtained by replacing one or more Co atoms in LiCoO₂ with a different transition metal.

In order to achieve a high battery capacity, the amount of the positive electrode active material is preferably 50 to 99.5% by mass, more preferably 80 to 99% by mass, of the positive electrode mixture. The amount of the positive electrode active material in the positive electrode active material layer is preferably 80% by mass or more, more preferably 82% by mass or more, particularly preferably 84% by mass or more. The upper limit thereof is preferably 99% by mass or less, more preferably 98% by mass or less. Too small an amount of the positive electrode active material in the positive electrode active material layer may lead to an insufficient electric capacity. In contrast, too large an amount thereof may lead to insufficient strength of the positive electrode.

The negative electrode active material is not limited, and may be, for example, any one selected from lithium metal; a material containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, or non-graphitizable carbon; a silicon-containing compound such as silicon or a silicon alloy; and Li₄Ti₅O₁₂, or a mixture of two or more of these. Among these, a material at least partially containing a carbonaceous material and/or a silicon-containing compound can be particularly suitably used.

A negative electrode active material used in the disclosure suitably contains silicon as a constituent element. With a negative electrode active material containing silicon as a constituent element, a high-capacity battery can be produced.

As a material containing silicon, silicon particles, particles having a structure where fine silicon particles are dispersed in a silicon-based compound, silicon oxide particles represented by the formula: SiOx (0.5 ≤ x ≤ 1.6), or a mixture of these is/are preferred. The use of any of these can provide a negative electrode mixture for lithium-ion secondary batteries with higher initial charge-discharge efficiency, high capacity, and excellent cycle characteristics.

The term "silicon oxide" herein is a generic term for amorphous silicon oxides. Silicon oxides prior to disproportionation are represented by the formula: SiOx (0.5 ≤ x ≤ 1.6) where x preferably satisfies 0.8 ≤ x < 1.6, more preferably 0.8 ≤ x < 1.3. Such a silicon oxide can be obtained, for example, by heating a mixture of silicon dioxide and metallic silicon to generate silicon monoxide gas, followed by cooling and deposition of the silicon monoxide gas.

The particles having a structure where silicon fine particles are dispersed in a silicon-based compound can be obtained, for example, by a method including sintering a mixture of silicon fine particles and a silicon-based compound or by a disproportionation reaction in which silicon oxide particles (SiOx) prior to disproportionation are heated in an inert non-oxidizing atmosphere such as an argon atmosphere at a temperature of 400°C or higher, suitably 800°C to 1100°C. A material obtained by the latter method is particularly suitable because silicon microcrystals are uniformly dispersed. The disproportionation reaction as described above can adjust the size of silicon nanoparticles to 1 to 100 nm. The silicon oxide in the particles having a structure in which silicon nanoparticles are dispersed in silicon oxide is preferably silicon dioxide. Dispersion of silicon nanoparticles (crystals) in an amorphous silicon oxide can be confirmed by transmission electron microscopy.

The physical properties of the silicon-containing particles can be appropriately selected according to the aimed composite particles. For example, the average particle size is preferably 0.1 to 50 µm. The lower limit is more preferably 0.2 µm or more, still more preferably 0.5 µm or more. The upper limit is more preferably 30 µm or less, still more preferably 20 µm or less. The average particle size is expressed as a weight average particle size determined by particle size distribution measurement by a laser diffraction method.

The BET specific surface area is preferably 0.5 to 100 m²/g, more preferably 1 to 20 m²/g. With the BET specific surface area of 0.5 m²/g or more, there is no risk of decreasing the adhesiveness of the negative electrode material upon processing into the electrode and impairing the battery characteristics. A BET specific surface area of 100 m²/g or less can increase the proportion of silicon dioxide on the particle surface, which eliminates the risk of battery capacity reduction upon use of the silicon particles as a negative electrode material for a lithium-ion secondary battery.

The silicon-containing particles are provided with conductivity when coated with carbon, which improves the battery characteristics. Examples of methods for imparting conductivity include mixing the silicon-containing particles with conductive particles such as graphite particles, coating the surfaces of the silicon-containing particles with carbon films, and a combination of both. Preferred is a method of coating the silicon-containing particles with carbon films, and more preferred is a method of chemical vapor deposition (CVD).

In order to increase the capacity of the resulting electrode mixture, the amount of the negative electrode active material in the electrode mixture is preferably 40% by mass or more, more preferably 50% by mass or more, particularly preferably 60% by mass or more. The upper limit thereof is preferably 99% by mass or less, more preferably 98% by mass or less.

The electrode mixture of the disclosure preferably further contains a conductive aid.

Any known conductive material can be used as the conductive aid. Specific examples include metal materials such as copper and nickel, and carbon materials such as graphite including natural graphite and artificial graphite, carbon black including acetylene black, Ketjen black, channel black, furnace black, lamp black, and thermal black, amorphous carbon including needle coke, carbon nanotubes, fullerene, and VGCF. One of these may be used alone or two or more thereof may be used in any combination at any ratio.

The conductive aid is used in an amount of usually 0.01% by mass or more, preferably 0.1% by mass or more, more preferably 1% by mass or more, while usually 50% by mass or less, preferably 30% by mass or less, more preferably 15% by mass or less, in the electrode mixture. The conductive aid in an amount below this range may cause insufficient conductivity. In contrast, the conductive aid in an amount above this range may cause a low battery capacity.

The electrode mixture of the disclosure may further contain a thermoplastic resin. Examples of the thermoplastic resin include polyvinylidene fluoride, polypropylene, polyethylene, polystyrene, polyethylene terephthalate, and polyethylene oxide. One of these may be used alone or two or more thereof may be used in any combination at any ratio.

The proportion of the thermoplastic resin relative to the electrode active material is commonly 0.01% by mass or more, preferably 0.05% by mass or more, more preferably 0.10% by mass or more, while commonly 3.0% by mass or less, preferably 2.5% by mass or less, more preferably 2.0% by mass or less. Adding a thermoplastic resin can improve the mechanical strength of the electrode. The thermoplastic resin added in excess of the above range may lower the proportion of the electrode active material in the electrode mixture, resulting in a low capacity of the battery and high resistance between the active materials.

The amount of the binder in the electrode mixture of the disclosure may be 0.1% by mass or more, preferably 0.2% by mass or more, more preferably 0.5% by mass or more based on the electrode mixture. The amount may be 50% by mass or less, preferably 40% by mass or less, more preferably 30% by mass or less, further preferably 10% by mass or less, particularly preferably 5% by mass or less, most preferably 3% by mass or less based on the electrode mixture. Too low a proportion of the binder may fail to sufficiently hold the electrode mixture active material and cause insufficient mechanical strength of the electrode mixture sheet, impairing the battery performance such as cycle characteristics. Too high a proportion of the binder may lead to a decrease in battery capacity and conductivity. Since the binder of the disclosure has excellent binding force, the electrode active material can be sufficiently held even when the binder content is small.

In the electrode mixture of the disclosure, the binder component preferably consists essentially of the TFE-based polymer composition, more preferably consists of the TFE-based polymer composition. The phrase "the binder component consists essentially of the TFE-based polymer composition" means that the amount of the TFE-based polymer composition in the binder component constituting the electrode mixture is 95.0% by mass or more based on the binder component. The amount of the TFE-based polymer composition is preferably 98.0% by mass or more, more preferably 99.0% by mass or more, still more preferably 99.5% by mass or more, particularly preferably 99.9% by mass or more, most preferably 99.95% by mass or more based on the binder component.

The electrode mixture of the disclosure is preferably in the form of a sheet.

The electrode mixture of the disclosure can suitably be used as an electrode mixture for a secondary battery. In particular, the electrode mixture of the disclosure is suitable for a lithium-ion secondary battery. The electrode mixture of the disclosure, when used for a secondary battery, is commonly used in the form of a sheet.

The electrode mixture sheet preferably has a thickness of 300 µm or less, more preferably 250 µm or less, still more preferably 200 µm or less, further preferably 180 µm or less, particularly preferably 150 µm or less, while preferably 10 µm or more, more preferably 15 µm or more, still more preferably 20 µm or more.

An exemplary specific method of producing an electrode mixture sheet containing an electrode mixture is described below. The electrode mixture sheet is obtainable by a production method including: (1) mixing an electrode active material, a binder, and optionally a conductive aid to prepare a raw material composition containing these; (2) molding the raw material composition obtained in the step (1) into a bulky shape; and (3) rolling the bulky raw material composition obtained in the step (2) into a sheet.

The raw material composition mixed in the step (1) is in a state where materials such as the electrode active material and the binder are simply mixed and does not have a fixed shape. Specific examples of mixing methods include mixing with the use of a W-type mixer, a V-type mixer, a drum mixer, a ribbon mixer, a conical screw mixer, a single screw kneader, a twin-screw kneader, a mix muller, a stirring mixer, or a planetary mixer.

For the binder mixing conditions in the step (1), the rotational speed is preferably 3000 rpm or less. The rotational speed is preferably 10 rpm or more, more preferably 15 rpm or more, still more preferably 20 rpm or more, while preferably 2000 rpm or less, more preferably 1500 rpm or less, still more preferably 1000 rpm or less. Mixing at a rotational speed below this range may take a long time, affecting the productivity. A rotational speed above the range may cause excessive fibrillation, resulting in an electrode mixture sheet having poor strength and poor flexibility.

Molding the raw material composition into a bulky shape in the step (2) means forming the raw material composition into a single mass. Specific examples of a method of molding the raw material composition into a bulky shape include extrusion molding and press molding. The term "bulky" does not specify the shape and means any state of single mass, including a rod shape, a sheet shape, a spherical shape, a cubic shape, and the like.

A specific example of a rolling method in the step (3) is a method of rolling the bulky raw material composition using, for example, a roller press, a flat plate press, or a calender roller.

The step (3) is also preferably followed by a step (4) of applying a larger load to the resulting rolled sheet to form a thinner sheet-shaped product. Repeating the step (4) is also preferred. Thinning the rolled sheet not in one time but in steps as described can lead to better flexibility. The number of performing the step (4) is preferably twice or more and 10 times or less, more preferably 3 times or more and 9 times or less. A specific example of a rolling method is a method of rotating two or a plurality of rollers and passing the rolled sheet therebetween to provide a thinner sheet-shaped product.

To control the fibrillation size, the step (3) or the step (4) is also preferably followed by a step (5) of coarsely crushing the rolled sheet, again forming the coarsely crushed product into a bulky product, and then rolling the bulky product into a sheet-shaped product. Repeating the step (5) is also preferred. The number of performing the step (5) is preferably once or more and 12 times or less, more preferably twice or more and 11 times or less.

Specific examples of a method of coarsely crushing the rolled sheet and again forming the coarsely crushed product into a bulky product in the step (5) include a method of folding the sheet, a method of forming the sheet into a rod- or a thin sheet-shaped product, and a method of forming the sheet into chips. The term "coarsely crushing" herein means changing the form of the rolled sheet obtained in the step (3) or step (4) into a different form so as to roll the product into a sheet-shaped product in the subsequent step, and encompasses simply folding the rolled sheet.

The step (5) may be followed by the step (4), and may be repeated. In any of the steps (2), (3), (4), and (5), uniaxial stretching or biaxial stretching may be performed. The fibrillation size can also be controlled in accordance with the degree of coarse crushing in the step (5).

In the step (3), (4), or (5), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility. The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

The electrode mixture sheet can also suitably be produced by a production method including:
a step (a) of mixing a powdery component and a binder to prepare an electrode mixture; and
a step (b) of calendering or extrusion-molding the electrode mixture to form a sheet,
the mixing in the step (a) including:
   (a1) homogenizing the powdery component and the binder into powder; and
   (a2) mixing the powdery raw material mixture obtained in the step (a1) to prepare the electrode mixture.

For example, PTFE has two transition temperatures at about 19°C and about 30°C. At lower than 19°C, PTFE can be easily mixed while maintaining its shape. In contrast, at higher than 19°C, the PTFE particulate structure loosens and becomes more sensitive to mechanical shearing. At temperatures higher than 30°C, more significant fibrillation occurs.

Accordingly, the homogenizing in the step (a1) is preferably performed at 19°C or lower, preferably at a temperature of 0°C to 19°C.

In other words, such a step (a1) is preferably performed such that the materials are mixed and thereby homogenized while fibrillation is reduced.

The mixing in the subsequent step (a2) is preferably performed at a temperature of 30°C or higher to promote fibrillation.

The step (a2) is preferably performed at 30°C to 150°C, more preferably 35°C to 120°C, still more preferably 40°C to 100°C.

In an embodiment, the calendering or extrusion molding in the step (b) is performed at a temperature of 30°C to 150°C, preferably 35°C to 120°C, more preferably 40°C to 100°C.

The mixing in the step (a) is preferably performed with shearing force applied.

Specific examples of mixing methods include mixing with the use of a W-type mixer, a V-type mixer, a drum mixer, a ribbon mixer, a conical screw mixer, a single screw kneader, a twin-screw kneader, a mix muller, a stirring mixer, a planetary mixer, a Henschel mixer, or a rapid mixer.

For the mixing conditions, the number of rotations and the mixing duration are set as appropriate. For example, the number of rotations is suitably 15000 rpm or less. The number of rotations is preferably 10 rpm or more, more preferably 50 rpm or more, still more preferably 100 rpm or more, while preferably 12000 rpm or less, more preferably 10000 rpm or less, still more preferably 8000 rpm or less. At the number of rotations below this range, mixing may take a long time, affecting the productivity. At the number of rotations above this range, fibrillation may occur excessively, resulting in an electrode mixture sheet having poor strength.

The step (a1) is preferably performed with a weaker shearing force than that in the step (a2).

The step (a1) is preferably performed for a shorter time than that in the step (a2).

In the step (a2), the raw material composition preferably contains no liquid solvent, but a lubricant in a small amount may be used. In other words, the powdery raw material mixture obtained in the step (a1) may be combined with a lubricant, whereby a paste may be prepared.

Examples of the lubricant include, but are not limited to, water, ether compounds, alcohols, ionic liquids, carbonates, aliphatic hydrocarbons (e.g., low polar solvents such as heptane and xylene), isoparaffinic hydrocarbon compounds, and petroleum distillates (e.g., gasoline (C4-C10), naphtha (C4-C11), kerosene/paraffin (C10-C16), and mixtures of any of these).

The lubricant has a water content of preferably 1000 ppm or less.

A water content of 1000 ppm or less is preferred to reduce deterioration of the electrochemical device. The water content is more preferably 500 ppm or less.

The lubricant, when used, is particularly preferably a low polar solvent such as butyl butyrate or an ether compound.

The amount of the lubricant, when used, is 5.0 to 35.0 parts by weight, preferably 10.0 to 30.0 parts by weight, more preferably 15.0 to 25.0 parts by weight relative to the total weight of the composition fed to the step (a1).

The raw material composition preferably contains substantially no liquid medium. In a conventional method for producing an electrode mixture, typically, a solvent containing a binder dissolved therein is used to prepare a slurry containing an electrode mixture component in the form of powder dispersed therein, and the slurry is applied and dried to produce an electrode mixture sheet. In this case, a solvent to disperse or dissolve a binder is used. Still, solvents that can dissolve a binder resin commonly used in conventional cases are limited to specific solvents such as N-methyl pyrrolidone. Since such a solvent is highly polar and the use thereof requires a drying step, the use of the solvent leads to additional steps and cost. These solvents react with an electrolyte such as an electrolyte solution and a solid electrolyte to deteriorate the electrolyte and may cause poor battery performance due to residual components in preparation of a slurry or after drying. In addition, low polar solvents such as heptane can dissolve very limited types of binder resin and have a low flash point, which may cause a difficulty in handling.

Not using a solvent but using a powdery binder containing less water in forming an electrode mixture sheet can provide a battery in which the electrolyte is less likely to be deteriorated. The above production method can provide an electrode mixture sheet containing a binder having a fine fibrous structure and can reduce a burden on the production process owing to elimination of slurry production.

The step (b) includes calendering or extrusion. The calendering and extrusion can be performed by known methods. Thereby, the material can be formed into the shape of an electrode mixture sheet.

The step (b) preferably includes (b1) forming the electrode mixture obtained in the step (a) into a bulky electrode mixture and (b2) calendering or extrusion-molding the bulky electrode mixture.

Forming into a bulky electrode mixture means forming the electrode mixture into a single mass.

Specific examples of methods of forming into a bulky shape include extrusion molding and press molding.

The term "bulky" does not specify the shape and means any state of single mass, including a rod shape, a sheet shape, a spherical shape, a cubic shape, and the like. The size of the mass is preferably such that the diameter or minimum side of the cross section is 10000 µm or more. The size is more preferably 20000 µm or more.

A specific example of the calendering or extrusion molding in the step (b2) is a method of rolling the electrode mixture using a roller press or a calender roller.

The step (b) is preferably performed at 30°C to 150°C. As described above, PTFE has a glass transition temperature around 30°C and is thus easily fibrillated at 30°C or higher. Accordingly, the step (b) is preferably performed at such temperatures.

The calendering or extrusion molding applies a shearing force, which fibrillates the PTFE and gives the shape.

The step (b) is also preferably followed by a step (c) of applying a larger load on the resulting rolled sheet to form a thinner sheet-shaped product. Repeating the step (c) is also preferred. Thinning the rolled sheet not in one time but in steps as described can lead to better flexibility.

The number of performing the step (c) is preferably twice or more and 10 times or less, more preferably 3 times or more and 9 times or less.

A specific example of a rolling method is a method of rotating two or a plurality of rollers and passing the rolled sheet therebetween to provide a thinner sheet-shaped product.

In order to control the sheet strength, the step (b) or the step (c) is also preferably followed by a step (d) of coarsely crushing the rolled sheet, again forming the coarsely crushed product into a bulky product, and then rolling the bulky product into a sheet-shaped product. Repeating the step (d) is also preferred. The number of performing the step (d) is preferably once or more and 12 times or less, more preferably twice or more and 11 times or less.

Specific examples of a method of coarsely crushing the rolled sheet and again forming the coarsely crushed product into a bulky product in the step (d) include a method of folding the rolled sheet, a method of forming the rolled sheet into a rod- or a thin sheet-shaped product, and a method of forming the rolled sheet into chips. The phrase "coarsely crushing" herein means changing the form of the rolled sheet obtained in the step (b) or step (c) into a different form so as to roll the product into a sheet-shaped product in the subsequent step, and encompasses simply folding the rolled sheet.

The step (d) may be followed by the step (c), or may be repeated.

In any of the steps (a), (b), (c), and (d), uniaxial stretching or biaxial stretching may be performed.

The sheet strength can also be adjusted in accordance with the degree of coarse crushing in the step (d).

In the step (b), (c), or (d), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility.

The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

The steps (c) and (d) are preferably performed at 30°C or higher, more preferably 60°C or higher. The steps (c) and (d) are preferably performed at 150°C or lower.

The electrode mixture sheet may be used as an electrode mixture sheet for a secondary battery. The electrode mixture sheet may be for either a negative electrode or a positive electrode. In particular, the electrode mixture sheet is suitable for a lithium-ion secondary battery.

The disclosure also provides an electrode containing the TFE-based polymer composition of the disclosure or the binder of the disclosure, an electrode active material, and a current collector. The electrode of the disclosure can reduce the resistance of the electrochemical device, and it ensures strong adhesion between the current collector and the mixture sheet. Also, the electrode of the disclosure can improve the cycle characteristics of the electrochemical device. In addition, since the electrode active material can be held even when the amount of the binder is small, the electrode mixture can contain larger amounts of materials for improving electrochemical device characteristics, such as active materials or conductive aids.

The electrode of the disclosure may contain the aforementioned electrode mixture of the disclosure (preferably the electrode mixture sheet) and a current collector.

The electrode of the disclosure may be a positive electrode or may be a negative electrode.

The positive electrode is preferably composed of a current collector and an electrode mixture sheet containing the positive electrode active material. Examples of the material of the current collector for a positive electrode include metal materials such as aluminum, titanium, tantalum, stainless steel, and nickel, and alloys thereof; and carbon materials such as carbon cloth and carbon paper. Preferred is any metal material, especially aluminum or an alloy thereof.

In the case of a metal material, the current collector may be in the form of metal foil, a metal cylinder, a metal coil, a metal plate, expanded metal, perforated metal, foamed metal, or the like. In the case of a carbon material, it may be in the form of a carbon plate, a carbon film, a carbon cylinder, or the like. Preferred among these is metal foil. The metal foil may be in the form of a mesh, as appropriate. The metal foil may have any thickness, and the thickness is usually 1 µm or more, preferably 3 µm or more, more preferably 5 µm or more, while it is usually 1 mm or less, preferably 100 µm or less, more preferably 50 µm or less. The metal foil having a thickness below this range may have insufficient strength as a current collector. Conversely, the metal foil having a thickness above this range may have poor handleability.

In order to improve the adhesion between the current collector and the positive electrode active material layer and to reduce the electric contact resistance between the current collector and the positive electrode active material layer, the surface of the current collector is also preferably roughened.

The surface roughness of the current collector, expressed as Sa (arithmetic mean height), is preferably about 260 nm or higher, more preferably about 280 nm or higher, still more preferably about 300 nm or higher.

In order to reduce the electric contact resistance between the current collector and the positive electrode active material layer, the current collector also preferably has a conductive aid applied on the surface thereof. Examples of the conductive aid include carbon and noble metals such as gold, platinum, and silver. Carbon is particularly preferred because of its light weight.

The positive electrode may be produced by a usual method. In an exemplary method, the electrode mixture sheet and the current collector are laminated via an adhesive, followed by vacuum drying.

The density of the positive electrode mixture sheet is preferably 2.80 g/cm³ or higher, more preferably 3.00 g/cm³ or higher, still more preferably 3.20 g/cm³ or higher, while preferably 3.80 g/cm³ or lower, more preferably 3.75 g/cm³ or lower, still more preferably 3.70 g/cm³ or lower. The positive electrode mixture sheet having a density above this range may easily have cracks inside the sheet. The negative electrode mixture sheet having a density below this range may cause poor conductivity between the active materials and increase the battery resistance, failing to provide high output.

The positive electrode may have any thickness. In order to achieve a high capacity and high output, the lower limit of the thickness of the mixture layer on one side of the current collector excluding the thickness of the metal foil of the current collector is preferably 10 µm or more, more preferably 20 µm or more, while preferably 500 µm or less, more preferably 450 µm or less.

The negative electrode is suitably composed of a current collector and an electrode mixture sheet containing the negative electrode active material. Examples of the material of the current collector for a negative electrode include metal materials such as copper, nickel, titanium, tantalum, and stainless steel, and alloys thereof; and carbon materials such as carbon cloth and carbon paper. Preferred is any metal material, especially copper, nickel, or an alloy thereof.

In the case of a metal material, the current collector may be in the form of metal foil, a metal cylinder, a metal coil, a metal plate, expanded metal, perforated metal, foamed metal, or the like. In the case of a carbon material, it may be in the form of a carbon plate, a carbon film, a carbon cylinder, or the like. Preferred among these is metal foil. The metal foil may be in the form of a mesh, as appropriate. The metal foil may have any thickness, and the thickness is usually 1 µm or more, preferably 3 µm or more, more preferably 5 µm or more, while it is usually 1 mm or less, preferably 100 µm or less, more preferably 50 µm or less. The metal foil having a thickness below this range may have insufficient strength as a current collector. Conversely, the metal foil having a thickness above this range may have poor handleability.

In order to improve the adhesion between the current collector and the positive electrode active material layer and to reduce the electric contact resistance between the current collector and the positive electrode active material layer, the surface of the current collector is also preferably roughened.

The surface roughness of the current collector, expressed as Sa (arithmetic mean height), is preferably about 260 nm or higher, more preferably about 280 nm or higher, still more preferably about 300 nm or higher.

In order to reduce the electric contact resistance between the current collector and the positive electrode active material layer, the current collector also preferably has a conductive aid applied on the surface thereof. Examples of the conductive aid include carbon and noble metals such as gold, platinum, and silver. Carbon is particularly preferred because of its light weight.

The negative electrode may be produced by a usual method. In an exemplary method, the electrode mixture sheet and the current collector are laminated via an adhesive, followed by vacuum drying.

The density of the negative electrode mixture is preferably 1.3 g/cm³ or higher, more preferably 1.4 g/cm³ or higher, still more preferably 1.5 g/cm³ or higher, while preferably 2.0 g/cm³ or lower, more preferably 1.9 g/cm³ or lower, still more preferably 1.8 g/cm³ or lower. The negative electrode mixture sheet having a density above this range may easily have cracks inside the sheet. The negative electrode mixture sheet having a density below this range may cause poor conductivity between the active materials and increase the battery resistance, failing to provide high output.

The negative electrode may have any thickness. In order to achieve a high capacity and high output, the lower limit of the thickness of the mixture layer on one side of the current collector excluding the thickness of the metal foil of the current collector is preferably 10 µm or more, more preferably 20 µm or more, while preferably 500 µm or less, more preferably 450 µm or less.

The disclosure also provides a secondary battery including the aforementioned electrode of the disclosure.

The secondary battery of the disclosure may be a secondary battery obtainable by using an electrolyte solution or may be a solid-state secondary battery.

The solid-state secondary battery herein is a secondary battery containing a solid electrolyte. It may be a semi-solid-state secondary battery containing, as an electrolyte, a solid electrolyte and a liquid component, or an all-solid-state secondary battery containing a solid electrolyte alone as an electrolyte.

The secondary battery containing an electrolyte solution may include components used for a known secondary battery, such as an electrolyte solution and a separator. These will be explained in detail below.

A non-aqueous electrolyte solution is preferably used as the electrolyte solution. The non-aqueous electrolyte solution used may be a solution obtained by dissolving a known electrolyte salt in a known organic solvent for dissolving an electrolyte salt.

Any organic solvents for dissolving electrolyte salts may be used. One or more of known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorine solvents such as fluoroethylene carbonate, fluoroether, and fluorinated carbonate can be used.

Examples of electrolyte salts include LiClO₄, LiAsF₆, LiBF₄, LiPF₆, LiN(SO₂CF₃)₂, and LiN(SO₂C₂F₅)₂. In order to achieve favorable cycle characteristics, particularly preferred is LiPF₆, LiBF₄, LiN(SO₂CF₃)₂, LiN(SO₂C₂F₅)₂, or a combination of any of these.

The concentration of the electrolyte salt is preferably 0.8 mol/L or higher, more preferably 1.0 mol/L or higher. The upper limit is usually 1.5 mol/L or lower, though it depends on the organic solvent for dissolving an electrolyte salt used.

The secondary battery containing an electrolyte solution preferably further includes a separator. The separator may be formed from any known material and may have any known shape as long as the resulting separator is stable to the electrolyte solution and has excellent liquid-retaining ability. The separator is preferably in the form of a porous sheet or a nonwoven fabric formed from a material stable to the electrolyte solution, such as resin, glass fiber, or inorganic matter, and having excellent liquid-retaining ability.

Examples of the material of a resin or glass-fiber separator include polyolefins such as polyethylene and polypropylene, aromatic polyamides, polytetrafluoroethylene, polyether sulfone, and glass filters. One of these materials may be used alone or two or more thereof may be used in any combination at any ratio, for example, in the form of a polypropylene/polyethylene bilayer film or a polypropylene/polyethylene/polypropylene trilayer film. In order to achieve good permeability of the electrolyte solution and a good shut-down effect, the separator is preferably a porous sheet or a nonwoven fabric formed from a polyolefin such as polyethylene or polypropylene.

The separator may have any thickness, and the thickness is usually 1 µm or more, preferably 5 µm or more, more preferably 8 µm or more, while usually 50 µm or less, preferably 40 µm or less, more preferably 30 µm or less. The separator thinner than the above range may have poor insulation and poor mechanical strength. The separator thicker than the above range may cause not only poor battery performance such as poor rate characteristics but also a low energy density of the whole electrolyte battery.

Examples of the inorganic matter include oxides such as alumina and silicon dioxide, nitrides such as aluminum nitride and silicon nitride, and sulfates such as barium sulfate and calcium sulfate, each in the form of particles or fibers.

The separator is in the form of a thin film such as a nonwoven fabric, a woven fabric, or a microporous film. The thin film favorably has a pore size of 0.01 to 1 µm and a thickness of 5 to 50 µm. Instead of the above separate thin film, the separator may have a structure in which a composite porous layer containing particles of the above inorganic matter is disposed on a surface of one or each of the positive and negative electrodes using a resin binder. For example, alumina particles having a 90% particle size of less than 1 µm may be applied to the respective surfaces of the positive electrode with fluororesin used as a binder to form a porous layer.

The external case may be made of any material that is stable to the electrolyte to be used. Specific examples thereof include metals such as nickel-plated steel plates, stainless steel, aluminum and aluminum alloys, and magnesium alloys, and a layered film (laminated film) of resin and aluminum foil. In order to reduce weight, a metal such as aluminum or an aluminum alloy or a laminated film is favorably used.

An external case made of metal may have a sealed-up structure formed by welding the metal by laser welding, resistance welding, or ultrasonic welding, or a caulking structure using the metal with a resin gasket in between. An external case made of a laminated film may have a sealed-up structure formed by hot-melting resin layers. In order to improve the sealability, a resin that is different from the resin of the laminated film may be disposed between the resin layers. Especially, in the case of forming a sealed-up structure by hot-melting the resin layers with current collecting terminals in between, metal and resin are to be bonded. Thus, the resin to be disposed between the resin layers is favorably a resin having a polar group or a modified resin having a polar group introduced therein.

The secondary battery containing the electrolyte solution may have any shape, such as a cylindrical shape, a square shape, a laminate shape, a coin shape, or a large-size shape. The shapes and the structures of the positive electrode, the negative electrode, and the separator may be changed in accordance with the shape of the battery.

The solid-state secondary battery is preferably an all-solid-state secondary battery. The solid-state secondary battery is preferably a lithium-ion battery or is preferably a sulfide-based solid-state secondary battery.

The solid-state secondary battery preferably includes a positive electrode, a negative electrode, and a solid electrolyte layer between the positive electrode and the negative electrode.

In the solid-state secondary battery, the binder of the disclosure may be used for an electrode layer or a solid electrolyte layer.

According to a preferred embodiment of the disclosure, the disclosure relates to a mixture for a solid-state secondary battery (preferably a mixture sheet) containing the binder of the disclosure and a solid electrolyte and a solid electrolyte layer (preferably a solid electrolyte layer sheet) containing the binder of the disclosure and a solid electrolyte.

The solid electrolyte used in a mixture for a solid-state secondary battery may be a sulfide-based solid electrolyte or an oxide-based solid electrolyte. In particular, when a sulfide-based solid electrolyte is used, the mixture for an electrochemical device is advantageously flexible.

The sulfide-based solid electrolyte is not limited. The sulfide-based solid electrolyte used may be any one selected from Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li₄₋ₓGe₁₋ₓPₓS₄ (x = 0.6 to 0.8), Li_{4+y}Ge_{1-y}Ga_{y}S₄ (y = 0.2 to 0.3), LiPSCl, LiCl, Li_{7-x-2y}PS_{6-x-y}Clₓ (0.8 ≤ x ≤ 1.7, 0 < y ≤ -0.25x + 0.5), and Li₁₀SnP₂S₁₂, or a mixture of two or more thereof.

The sulfide-based solid electrolyte preferably contains lithium. Sulfide-based solid electrolytes containing lithium are used in solid-state batteries in which lithium ions are used as carriers, and are particularly preferred in that they provide electrochemical devices having high energy density.

The oxide-based solid electrolyte is preferably a compound that contains an oxygen atom (O), has conductivity of metal ions belonging to Group 1 or Group 2 of the periodic table, and has electronic insulating properties.

Specific examples of the compound include LiₓₐLa_{ya}TiO₃ (xa = 0.3 to 0.7, ya = 0.3 to 0.7) (LLT), Li_{xb}La_{yb}Zr_{zb}M^{bb}_{mb}O_{nb} (wherein M^{bb} includes at least one element selected from Al, Mg, Ca, Sr, V, Nb, Ta, Ti, Ge, In, and Sn; xb satisfies 5 ≤ xb ≤ 10; yb satisfies 1 ≤ yb ≤ 4; zb satisfies 1 ≤ zb ≤ 4; mb satisfies 0 ≤ mb ≤ 2; and nb satisfies 5 ≤ nb ≤ 20), Li_{xc}B_{yc}M^{cc}_{zc}O_{nc} (wherein M^{cc} includes at least one element selected from C, S, Al, Si, Ga, Ge, In, and Sn; xc satisfies 0 ≤ xc ≤ 5; yc satisfies 0 ≤ yc ≤ 1; zc satisfies 0 ≤ zc ≤ 1; and nc satisfies 0 ≤ nc ≤ 6), Li_{xd}(Al,Ga)_{yd}(Ti,Ge)_{zd}Si_{ad}P_{md}O_{nd} (1 ≤ xd ≤ 3, 0 ≤ yd ≤ 2, 0 ≤ zd ≤ 2, 0 ≤ ad ≤ 2, 1 ≤ md ≤ 7, and 3 ≤ nd ≤ 15), Li₍₃₋₂ₓₑ₎M^{ee}ₓₑD^{ee}O (wherein xe is a number of 0 or more and 0.1 or less, M^{ee} is a divalent metal atom, D^{ee} is a halogen atom or a combination of two or more halogen atoms), Li_{xf}Si_{yf}O_{zf} (1 ≤ xf ≤ 5, 0 < yf ≤ 3, and 1 ≤ zf ≤ 10), Li_{xg}S_{yg}O_{zg} (1 ≤ xg ≤ 3, 0 < yg ≤ 2, and 1 ≤ zg ≤ 10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w < 1), Li_{3.5}Zn_{0.25}GeO₄ having a lithium super ionic conductor (LISICON) crystal structure, La_{0.51}Li_{0.34}TiO_{2.94} having a perovskite crystal structure, La_{0.55}Li_{0.35}TiO₃, LiTi₂P₃O₁₂ having a natrium super ionic conductor (NASICON) crystal structure, Li_{1+xh+yh}(Al,Ga)ₓₕ(Ti,Ge)₂₋ₓₕSi_{yh}P_{3-yh}O₁₂ (0 ≤ xh ≤ 1 and 0 ≤ yh ≤ 1), and Li₇La₃Zr₂O₁₂ (LLZ) having a garnet crystal structure. Ceramic materials in which element substitution is performed for LLZ are also known. Examples thereof include Li_{6.24}La₃Zr₂Al_{0.24}O_{11.98} and Li_{6.25}Al_{0.25}La₃Zr₂O₁₂ in which partial element substitution using Al is performed for LLZ, Li_{6.6}La₃Zr_{1.6}Ta_{0.4}O₁₂ in which partial element substitution using Ta is performed for LLZ, and Li_{6.75}La₃Zr_{1.75}Nb_{0.25}O₁₂ in which partial element substitution using Nb is performed for LLZ. Other examples include LLZ-based ceramic materials in which element substitution using at least one of magnesium (Mg) and A (A includes at least one element selected from the group consisting of calcium (Ca), strontium (Sr), and barium (Ba)) is performed for LLZ. Phosphorus compounds containing Li, P and O are also desirable. Examples include lithium phosphate (Li₃PO₄), LiPON in which one or more oxygen atoms in lithium phosphate are replaced with nitrogen, and LiPOD¹ (wherein D¹ includes at least one selected from Ti, V, Cr, Mn, Fe, Co, Ni, Cu, Zr, Nb, Mo, Ru, Ag, Ta, W, Pt, Au, and the like). LiA1^{O}N (wherein A¹ includes at least one selected from Si, B, Ge, Al, C, Ga, and the like) can also be preferably used. Specific examples include Li₂O-Al₂O₃-SiO₂-P₂O₅-TiO₂-GeO₂ and Li₂O-Al₂O₃-SiO₂-P₂O₅-TiO₂.

The oxide-based solid electrolyte preferably contains lithium. Oxide-based solid electrolytes containing lithium are used in solid-state batteries in which lithium ions are used as carriers, and are particularly preferred in that they provide electrochemical devices having high energy density.

The oxide-based solid electrolyte is preferably an oxide having a crystal structure. Oxides having a crystal structure are particularly preferred in terms of good Li ion conductivity. The oxide having a crystal structure may be of perovskite type (e.g., La_{0.51}Li_{0.34}TiO_{2.94}), NASICON type (e.g., Li_{1.3}Al_{0.3}Ti_{1.7}(PO₄)₃), or garnet type (e.g., Li₇La₃Zr₂O₁₂ (LLZ)). Preferred among these is the garnet type.

The volume average particle size of the oxide-based solid electrolyte is not limited. Still, the volume average particle size is preferably 0.01 µm or more, more preferably 0.03 µm or more. The upper limit is preferably 100 µm or less, more preferably 50 µm or less. The average particle size of the oxide-based solid electrolyte particles is measured by the following procedure. A 1% by mass dispersion of the oxide-based solid electrolyte particles is prepared by dilution with water (or heptane in the case of a substance unstable in water) in a 20-mL sample bottle. The diluted dispersion sample is irradiated with 1-kHz ultrasonic waves for 10 minutes, and immediately thereafter used for the test. Data was acquired from this dispersion sample 50 times using a quartz cell for measurement at a temperature of 25°C with a laser diffraction/scattering particle size distribution analyzer LA-920 (HORIBA), and the volume average particle size was determined. For other detailed conditions and the like, JIS Z8828:2013 "Particle size analysis - Dynamic light scattering" is referred as necessary. Five samples are prepared for each level and the average value is used.

The solid-state secondary battery may include a separator between the positive electrode and the negative electrode. Examples of the separator include porous films such as polyethylene and polypropylene films; nonwoven fabrics made of resin such as polypropylene, and nonwoven fabrics such as glass fiber nonwoven fabrics.

The solid-state secondary battery may further include a battery case. The battery case may have any shape that can accommodate the above-mentioned components such as the positive electrode, the negative electrode, and the solid electrolyte layer. Specifically, the battery may be of cylindrical type, square type, coin type, or laminate type.

The solid-state secondary battery can be produced by, for example, laminating a positive electrode, a solid electrolyte layer sheet, and a negative electrode in this order and pressing them.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

Physical properties were measured by the following methods.

### <Average primary particle size>

The TFE-based polymer aqueous dispersion was diluted with water to a solid concentration of 0.15% by mass. The transmittance of 550-nm light relative to the unit length of the resulting diluted latex was measured. The Feret diameters in a transmission electron microscopic image were measured and the number-based length average primary particle size was determined therefrom. A calibration curve was obtained from these values. Using this calibration curve, the average primary particle size was determined from the measured transmittance of 550-nm light incident on each sample.

### <Polymer solid concentration>

A TFE-based polymer aqueous dispersion in an amount of 1 g was dried in an air dryer at 150°C for 60 minutes, and the ratio of the mass of the heating residue to the mass (1 g) of the aqueous dispersion, expressed as a percentage, was used as the polymer solid concentration.

### <Melt fabricability>

In conformity with ASTM D1238 using a melt indexer, the mass (g/10 min) of a polymer flowing out of a nozzle (inner diameter: 2.095 mm, length: 8 mm) per 10 minutes at 372°C and a load of 5 kg was measured. Those having an MFR of 0.25 g/10 min or more were judged to be melt-fabricable, and those having an MFR of less than 0.25 g/10 min were judged to be non melt-processible.

### <Apparent density>

The apparent density was determined in conformity with JIS K6892.

### <Standard specific gravity (SSG)>

The SSG was determined by the water displacement method in conformity with ASTM D792 using a sample molded in conformity with ASTM D4895-89.

### <Amount of modifying monomer>

The TFE-based polymer composition was press-molded into a thin-film disc and this thin-film disc was subjected to FT-IR measurement, so that the infrared absorbances were obtained. The HFP content was determined by multiplying the ratio (absorbance at 982 cm⁻¹)/(absorbance at 935 cm⁻¹) by 0.3.

The amount of the hydrophilic monomer D was calculated from the amount used during polymerization.

### <Oxygen concentration in reactor>

Gas from an exhaust gas line of the reactor in a N₂ flow was determined and analyzed using a trace oxygen analyzer (trade name "PS-820-L", available from Iijima Electronics Corp.), whereby the oxygen concentration during the reaction was determined.

### <Concentration of polymer E>

About 1 g of an aqueous solution of the polymer was dried in a vacuum dryer under conditions of 60°C and 60 minutes and the mass of the heating residue was weighed. The ratio of the mass of the heating residue to the mass of the polymer aqueous solution (1 g), expressed in percentage, was used.

### <Methods of determining weight average molecular weight (Mw) and number average molecular weight (Mn) of polymer E>

The molecular weights Mw and Mn of the polymer E were calculated by gel permeation chromatography (GPC) using GPC HLC-8020 available from Tosoh Corp. and columns available from Shodex (one GPC KF-801, one GPC KF-802, and two GPC KF-806M connected in series) with a flow of tetrahydrofuran (THF) as a solvent at a flow rate of 1 mL/min and with monodispersed polystyrene standards.

### <Method of determining amount of dimer and trimer of monomer E in polymer E>

### (1) Extraction from aqueous solution

The solid content of an aqueous solution of the polymer was measured and the aqueous solution in an amount corresponding to a polymer solid content of 0.2 g was weighed. Water and methanol were added thereto so that the volume ratio of water, including the water contained in the aqueous solution, and methanol was 50/50 (% by volume), whereby a liquid mixture containing the polymer as well as water and methanol was obtained. The resulting liquid mixture was centrifuged at 4000 rpm for one hour, so that a supernatant containing the polymer was obtained. This supernatant obtained was filtered using an ultrafiltration disc (cut-off molecular weight: 3000 Da), whereby an extract was collected.

The extract was analyzed using a liquid chromatograph mass spectrometer (Waters, LC-MS ACQUITY UPLC/TQD), whereby a chromatogram of the extract was obtained.

The amount of the dimer and trimer of the monomer contained in the extract was determined by converting the integral values of the peaks derived from the dimer and trimer of the monomer in the chromatogram of the extract into the amount of the dimer and trimer of the monomer using a calibration curve.

### (2) Calibration curve of monomers

Methanol standard solutions of each monomer at five different known levels of amount from 1 ng/mL to 100 ng/mL were prepared and analyzed using a liquid chromatograph mass spectrometer (Waters, LC-MS ACQUITY UPLC/TQD). The relation between the amount of the individual monomer and the integral value of the peak corresponding to the amount was plotted, so that a calibration curve (first order approximation) of the individual monomer was drawn. Based on the calibration curve (first order approximation) of the individual monomer, calibration curves of the dimer and trimer of the individual monomer were drawn.

### Instrument configuration and LC-MS measurement conditions

**[Table 1]**

| LC system | | | | |
|---|---|---|---|---|
| | Device | Acquity UPLC from Waters | | |
| | Column | Acquity UPLC BEH C18 1.7 µm (2.1 × 50 mm) from Waters | | |
| | Mobile phase | A CH₃CN | | |
| | | B 20 mM CH₃COONH₄/H₂O | | |
| | | | 0 → 1.5 min | A:B = 10:90 |
| | | | 1.5 → 8.5 min | A:B = 10:90 → A:B = 90:10 Linear gradient |
| | | | 8.5 → 10 min | A:B = 90:10 |
| | Flow rate | | 0.4 mL/min | |
| | Column temperature | 40°C | | |
| | Sample injection amount | 5 µL | | |

| MS system | | | | |
|---|---|---|---|---|
| | Device | TQ Detector | | |
| | Measurement mode | MRM (Multiple Reaction Monitoring) | | |
| | Ionization method | Electrospray ionization | | |
| | | SCAN | | |

The quantitation limit in this instrument configuration is 1 ng/mL.

### <DLS measurement of polymer E>

In dynamic light scattering, a polymer dispersion with a solid concentration adjusted to about 1.0% by mass was prepared and the measurement was performed by 70 measurement processes using ELSZ-1000S (available from Otsuka Electronics Co., Ltd.) at 25°C. The refractive index of the solvent (water) was 1.3328 and the viscosity of the solvent (water) was 0.8878 mPa·s.

### <Amount of polymer E in TFE-based polymer composition (powder)>

The amount of the polymer E in the TFE-based polymer composition (powder) was determined from the spectrum obtained by solid-state ¹⁹F-MAS NMR analysis.

### <Amount of specific compound containing fluorine>

The amount was measured by liquid chromatography mass spectrometry under the following conditions.

### (Method of measuring amount of compound represented by formula (N⁰))

A 1-g portion of each TFE-based polymer composition weighed was combined with 10 g (12.6 mL) of methanol, followed by ultrasonication for 60 minutes, whereby an extract was obtained. The resulting extract was subjected to a LC/MS/MS assay. The extract was subjected to measurement for fluorine-containing compounds therein using a liquid chromatograph mass spectrometer (Waters, LC-MS ACQUITY UPLC/TQD). The instrument configuration and LC-MS measurement conditions are shown in Table 2. Using aqueous solutions of a fluorine-containing compound at a known concentration, aqueous solutions of the fluorine-containing compound at five or more different levels of concentration were prepared, and the aqueous solutions of the respective amounts were subjected to LC/MS analysis. The relation between the amount and the area relative to the amount was plotted, so that a calibration curve was drawn. Based on the resulting calibration curve, the area of the fluorine-containing compound in the extract in the LC/MS chromatogram was converted to the amount of the fluorine-containing compound.

The detection limit in this measurement method is 10 ppb by mass.

**[Table 2]**

| LC system | | | | |
|---|---|---|---|---|
| | Device | Acquity UPLC from Waters | | |
| | Column | Acquity UPLC BEH C18 1.7 µm (2.1 × 50 mm) from Waters | | |
| | Mobile phase | A CH₃CN | | |
| | | B 20 mM CH₃COONH₄/H₂O | | |
| | | | 0 → 1.5 min | A:B = 10:90 |
| | | | 1.5 → 8.5 min | A:B = 10:90 → A:B = 90:10 Linear gradient |
| | | | 8.5 → 0 min | A:B = 90:10 |
| | Flow rate | | 0.4 mL/min | |
| | Column temperature | 40°C | | |
| | Sample injection amount | 5 µL | | |

| MS system | | | | |
|---|---|---|---|---|
| | Device | TQ Detector | | |
| | Measurement mode | MRM (Multiple Reaction Monitoring) | | |
| | Ionization method | Electrospray ionization | | |
| | | Negative mode | | |

### <Method of measuring amount of compound represented by formula (1)>

### Extraction from composition (powder)

To a 1-g portion of the composition (powder) was added 10 g (12.6 mL) of methanol, followed by ultrasonication for 60 minutes, whereby a supernatant solution containing the compound represented by the formula (1) was extracted. The resulting extract was appropriately concentrated by nitrogen purge, whereby a concentrated extract was obtained.

### Measurement of the amount of compound represented by formula (1) contained in extract

The amount of the compound represented by the formula (1) contained in the extract was obtained by conversion to perfluorooctanoic acid.

### Calibration curve for perfluorooctanoic acid

Methanol standard solutions having five different known levels from 1 ng/mL to 100 ng/mL of perfluorooctanoic acid were prepared, and analyzed using a liquid chromatograph-mass spectrometer (Waters, LC-MS ACQUITY UPLC/TQD). By first order approximation based on the sample concentrations and the peak integral values, the values of a and b were obtained by the following relational equation (1). $A = a \times X + b$ (1)
A: The peak area of perfluorooctanoic acid
X: The concentration (ng/mL) of perfluorooctanoic acid

### Instrument configuration and LC-MS measurement conditions

**[Table 3]**

| LC system | | | | |
|---|---|---|---|---|
| | Device | Acquity UPLC from Waters | | |
| | Column | Acquity UPLC BEH C18 1.7 µm (2.1 × 50 mm) from Waters | | |
| | Mobile phase | A CH₃CN | | |
| | | B 20 mM CH₃COONH₄ /H₂O | | |
| | | | 0 → 1.5 min | A:B = 10:90 |
| | | | 1.5 → 8.5 min | A:B = 10:90 → A:B = 90:10 Linear gradient |
| | | | 8.5 → 10 min | A:B = 90:10 |
| | Flow rate | | 0.4 mL/min | |
| | Column temperature | 40°C | | |
| | Sample injection amount | 5 µL | | |

| MS system | | | | |
|---|---|---|---|---|
| | Device | TQ Detector | | |
| | Measurement mode | MRM (Multiple Reaction Monitoring) | | |
| | Ionization method | Electrospray ionization | | |
| | | Negative mode | | |

### MRM measurement parameter

**[Table 4]**

| Compound | Precursor | Product |
|---|---|---|
| Perfluorooctanoic acid | 413 | 369 |

### Amount of compound represented by formula (1) containing 4 to 20 carbon atoms in extract

The amount of the compound represented by the formula (1) containing 4 to 20 carbon atoms was determined using a liquid chromatograph-mass spectrometer. For the extracted liquid phase, the peak areas of the compounds represented by the formula (1) with respective numbers of carbon atoms were determined by the MRM method.

### MRM measurement parameter

**[Table 5]**

| Compound name | Number of carbon atoms | Precursor | Product |
|---|---|---|---|
| (H-(CF₂)₃-COO)M | 4 | 195 | 131 |
| (H-(CF₂)₄-COO)M | 5 | 245 | 181 |
| (H-(CF₂)₅-COO)M | 6 | 295 | 231 |
| (H-(CF₂)₆-COO)M | 7 | 345 | 281 |
| (H-(CF₂)₇-COO)M | 8 | 395 | 331 |
| (H-(CF₂)₈-COO)M | 9 | 445 | 381 |
| (H-(CF₂)₉-COO)M | 10 | 495 | 431 |
| (H-(CF₂)₁₀-COO)M | 11 | 545 | 481 |
| (H-(CF₂)₁₁-COO)M | 12 | 595 | 531 |
| (H-(CF₂)₁₂-COO)M | 13 | 645 | 581 |
| (H-(CF₂)₁₃-COO)M | 14 | 695 | 631 |
| (H-(CF₂)₁₄-COO)M | 15 | 745 | 681 |
| (H-(CF₂)₁₅-COO)M | 16 | 795 | 731 |
| (H-(CF₂)₁₆-COO)M | 17 | 845 | 781 |
| (H-(CF₂)₁₇-COO)M | 18 | 895 | 831 |
| (H-(CF₂)₁₈-COO)M | 19 | 945 | 881 |
| (H-(CF₂)₁₉-COO)M | 20 | 995 | 931 |

The amount of the compound represented by the formula (1) containing (m + 1) carbon atoms in the extract was calculated using the following equation (3). The values of a and b in the equation (3) were determined using the relational equation (1). $XCm = \left(\left(ACm-b\right)/a\right) \times \left(\left(50\times m+45\right)/413\right)$ (3)
XCm: The amount (ng/mL) of the compound represented by the formula (1) containing (m + 1) carbon atoms in the extract
ACm: The peak area of the compound represented by the formula (1) containing (m + 1) carbon atoms in the extract

The quantitation limit in this measurement is 1 ng/mL.

### Amount of compound represented by formula (1) containing (m + 1) carbon atoms in composition

The amount of the compound represented by the formula (1) containing (m + 1) carbon atoms in the composition was determined using the following equation (4). $YCm = XCm \times 12.6$ (4) YCm: The amount of the compound represented by the formula (1) containing (m + 1) carbon atoms in the composition

The quantitation limit is 10 ppb by mass.

### (Method of measuring amount of compound represented by formula (2))

### Extraction from composition (powder)

To a 1-g portion of the composition (powder) was added 10 g (12.6 mL) of methanol, followed by ultrasonication for 60 minutes, whereby a supernatant solution containing the compound represented by the formula (2) was extracted. The resulting extract was appropriately concentrated by nitrogen purge, whereby a concentrated extract was obtained.

### Measurement of amount of compound represented by formula (2) in extract

The amount of the compound represented by the formula (2) contained in the extract was obtained by conversion to perfluorooctanesulfonic acid.

### Calibration curve for perfluorooctanesulfonic acid

Methanol standard solutions having five different known levels from 1 ng/mL to 100 ng/mL of perfluorooctanesulfonic acid were prepared, and analyzed using a liquid chromatograph mass spectrometer (Waters, LC-MS ACQUITY UPLC/TQD). By first order approximation based on the sample concentrations and the peak integral values, the values of a and b were obtained by the following relational equation (1). $A = a \times X + b$ (1)
A: Peak area of perfluorooctanesulfonic acid
X: Concentration (ng/mL) of perfluorooctanesulfonic acid

### Instrument configuration and LC-MS measurement conditions

**[Table 6]**

| LC system | | | | |
|---|---|---|---|---|
| | Device | Acquity UPLC from Waters | | |
| | Column | Acquity UPLC BEH C18 1.7 µm (2.1 × 50 mm) from Waters | | |
| | Mobile phase | A CH₃CN | | |
| | | B 20 mM CH₃COONH₄/H₂O | | |
| | | | 0 → 1.5 min | A:B = 10:90 |
| | | | 1.5 → 8.5 min | A:B = 10:90 → A:B = 90:10 Linear gradient |
| | | | 8.5 → 10 min | A:B = 90:10 |
| | Flow rate | | 0.4 mL/min | |
| | Column temperature | 40 °C | | |
| | Sample injection amount | 5 µL | | |

| MS system | | | | |
|---|---|---|---|---|
| | Device | TQ Detector | | |
| | Measurement mode | MRM (multiple reaction monitoring) | | |
| | Ionization method | Electrospray ionization | | |
| | | Negative mode | | |

### MRM measurement parameter

**[Table 7]**

| Compound | Precursor | Product |
|---|---|---|
| Perfluorooctanesulfonic acid | 499 | 99 |

### Amount of compound represented by formula (2) containing 4 to 20 carbon atoms in extract

The amount of the compound represented by the formula (2) containing 4 to 20 carbon atoms was measured using a liquid chromatograph-mass spectrometer. For the extracted liquid phase, the peak areas of the compounds represented by the formula (2) with respective numbers of carbon atoms were determined by the MRM method.

### MRM measurement parameter

**[Table 8]**

| Compound | Number of carbon atoms | Precursor | Product |
|---|---|---|---|
| (H-(CF₂)₄-SO₃)M | 4 | 281 | 99 |
| (H-(CF₂)₅-SO₃)M | 5 | 331 | 99 |
| (H-(CF₂)₆-SO₃)M | 6 | 381 | 99 |
| (H-(CF₂)₇-SO₃)M | 7 | 431 | 99 |
| (H-(CF₂)₈-SO₃)M | 8 | 481 | 99 |
| (H-(CF₂)₉-SO₃)M | 9 | 531 | 99 |
| (H-(CF₂)₁₀-SO₃)M | 10 | 581 | 99 |
| (H-(CF₂)₁₁-SO₃)M | 11 | 631 | 99 |
| (H-(CF₂)₁₂-SO₃)M | 12 | 681 | 99 |
| (H-(CF₂)₁₃-SO₃)M | 13 | 731 | 99 |
| (H-(CF₂)₁₄-SO₃)M | 14 | 781 | 99 |
| (H-(CF₂)₁₅-SO₃)M | 15 | 831 | 99 |
| (H-(CF₂)₁₆-SO₃)M | 16 | 881 | 99 |
| (H-(CF₂)₁₇-SO₃)M | 17 | 931 | 99 |
| (H-(CF₂)₁₈-SO₃)M | 18 | 981 | 99 |
| (H-(CF₂)₁₉-SO₃)M | 19 | 1031 | 99 |
| (H-(CF₂)₂₀-SO₃)M | 20 | 1081 | 99 |

The amount of the compound represented by the formula (2) containing n carbon atoms in the extract was calculated using the following equation (3). The values of a and b in the equation (3) were determined using the relational equation (1). $XSn = \left(\left(ASn-b\right)/a\right) \times \left(\left(50\times n+81\right)/499\right)$ (3)
XSn: Amount (ng/mL) of compound represented by formula (2) containing n carbon atoms in extract
ASn: Peak area of compound represented by formula (2) containing n carbon atoms in extract

The quantitation limit in this measurement is 1 ng/mL.

### Amount of compound represented by formula (2) containing n carbon atoms in composition

The amount of the compound represented by the formula (2) containing n carbon atoms in the composition was determined using the following equation (4). $YSn = XSn \times 12.6$ (4) YSn: Amount of compound represented by formula (2) containing n carbon atoms in composition (ppb relative to TFE-based polymer)

The quantitation limit is 10 ppb by mass.

### <Amount of polar group in TFE-based polymer composition (powder)>

The amount of the polar group was determined from the amount of the polymer E, the amount of the compound represented by the formula (1), the amount of the compound represented by the formula (2), and the amount of the hydrophilic monomer D in the TFE-based polymer composition (powder).

The following fluorine-containing compound having a molecular weight of 1000 or lower were provided.

Perfluoroether carboxylic acid A ammonium salt: Ammonium perfluoro(2-methyl-3-oxahexanoate) available from Fujifilm Wako Pure Chemical Corporation, structural formula: CF₃CF₂CF₂OCF(CF₃)COONH₄

The following hydrophilic monomer was provided.

Hydrophilic monomer D: Ammonium 2,3,3,3-tetrafluoro-2-[(1,1,2-trifluoro-2-propenyl)oxy]-propanoate, structural formula: CH₂=CFCF₂OCF(CF₃)COONH₄

### Production Example 1

A 6-L stainless-steel autoclave equipped with a stainless-steel stirring blade and a temperature-controlling jacket was charged with 3480 g of deionized water, 100 g of paraffin wax, 15.75 g of the perfluoroether carboxylic acid A ammonium salt, and 35 mg of the hydrophilic monomer D. The inside of the autoclave was purged with nitrogen gas with warming to 70°C to remove oxygen. TFE was injected to set the pressure inside the autoclave to 0.78 MPaG and the temperature inside the autoclave was maintained at 70°C under stirring. Next, an aqueous solution prepared by dissolving 14.0 mg of ammonium persulfate in 20 g of water was injected with TFE into the autoclave, whereby a polymerization reaction was started. The pressure inside the autoclave dropped as the polymerization reaction progressed. TFE was thus added so that the temperature inside the autoclave was maintained at 70°C and the pressure inside the autoclave was maintained at 0.78 MPaG.

When 433 g of TFE had been consumed from the start of the polymerization, an aqueous solution prepared by dissolving 17.0 mg of hydroquinone serving as a radical scavenger in 20 g of water was injected with TFE. The polymerization was further continued. When the amount of TFE polymerized reached 1273 g from the start of the polymerization, stirring and feeding of TFE were stopped. Immediately thereafter, the gas inside the autoclave was released to normal pressure and the polymerization reaction was terminated. The resulting aqueous dispersion was taken out and cooled, and the paraffin wax was separated, whereby a TFE-based polymer aqueous dispersion was obtained. The resulting TFE-based polymer aqueous dispersion had an average primary particle size of 295 nm and a solid concentration of 26.5% by mass.

### Manufacturing Example 1

The TFE-based polymer aqueous dispersion obtained in Production Example 1 was diluted to a solid concentration of 13% by mass and nitric acid was added thereto. The TFE-based polymer was coagulated with stirring in the container, and water was filtered out, whereby a wet powder was obtained.

The resulting TFE-based polymer wet powder was placed in a stainless-steel mesh tray (in an amount of 2.0 g/cm²) and heated at 135°C for 10 hours in a hot air circulating electric furnace, whereby a TFE-based polymer composition A was obtained.

The resulting TFE-based polymer composition A was non melt-processible and had an SSG of 2.158, an amount of the polymerized unit based on the hydrophilic monomer D of 0.0027% by mass, an amount of the perfluoroether carboxylic acid A of 10 ppb by mass, an amount of the polar group (carboxy group) of 0.0006 meq/g, and an apparent density of 0.41 g/mL.

### Preparation Example 1

A reactor was charged with 220 g of a monomer E represented by CH₂=CF(CF₂OCFCF₃COOH) and 513 g of water, as well as ammonium persulfate (APS) in an amount of 0.5 mol% relative to the monomer E. The contents were heated and stirred in a nitrogen atmosphere at 60°C for 24 hours, whereby a polymer E aqueous solution E-1 containing a polymer E, which was a homopolymer of CH₂=CF(CF₂OCFCF₃COOH), was obtained.

The resulting polymer E aqueous solution E-1 was subjected to GPC analysis. As a result, the polymer E had an Mw of 180000 and an Mn of 86000, and the amount of the dimer and trimer was 2.0% by mass relative to the polymer E.

The resulting polymer E aqueous solution E-1 was combined with water to adjust the concentration of the polymer E to 5.0% by mass, and then brought into contact with a ultrafiltration membrane (cut-off molecular weight: 50000 Da, made of polyethylene) at 30°C and a water pressure of 0.1 MPa, whereby ultrafiltration was performed. Ultrafiltration was continued while water was poured as appropriate until the volume of the eluted water filtrate reached seven times the volume of the aqueous solution, whereby a polymer E aqueous solution E-2 was obtained. The resulting polymer E aqueous solution E-2 was subjected to GPC analysis. As a result, the polymer E had an Mw of 180000 and an Mn of 140000, and the amount of the dimer and trimer was less than 1 ppm relative to the polymer E. The resulting polymer E aqueous solution E-2 had a concentration of 5.0% by mass. The polymer E aqueous solution E-2 was subjected to DLS analysis, but the particle size was not measurable. The polymer E had an ionic group content of 3.91 meq/g, a fluorine substitution percentage of 80%, and an ion exchange ratio of 4.

### Production Example 2

A 6-L stainless steel reactor equipped with a stirrer was charged with 3457 g of deionized water, 180 g of paraffin wax, 107.4 g of the polymer E aqueous solution E-2, 1.8 g of an aqueous solution of 0.1% by mass Triton^{®} X-100 (trade name, available from The Dow Chemical Co.), and 1.1 g of a 1.0% by mass isopropanol aqueous solution. Ammonia water was added to adjust the pH to 9.1. The contents of the reactor were then heated to 70°C while being suctioned and simultaneously the reactor was purged with TFE to remove oxygen in the reactor, and the contents were stirred. Then, 2.4 g of HFP was added to the reactor and TFE was added until the pressure reached 0.73 MPaG. Into the reactor was injected 17.9 mg of an ammonium persulfate (APS) initiator dissolved in 20 g of deionized water, and the pressure in the reactor was set to 0.83 MPaG. Injection of the initiator was followed by a pressure drop, so that start of polymerization was observed. TFE was added to the reactor so that the pressure was constant at 0.78 MPaG. When TFE consumed in the reaction reached about 180 g, TFE feed and stirring were stopped. The gas inside the reactor was then slowly released until the pressure inside the reactor reached 0.02 MPaG. TFE was then fed until the pressure inside the reactor reached 0.78 MPaG, and stirring was restarted to continue the reaction. When TFE consumed in the reaction reached about 540 g, 14.3 mg of hydroquinone dissolved in 20 g of deionized water was injected into the reactor to continue the reaction. When TFE consumed in the reaction reached about 1200 g, TFE feed was stopped and stirring was stopped, so that the reaction was completed. The reactor was vented until the pressure inside the reactor reached ambient pressure, and the contents were taken out of the reactor and cooled. Supernatant paraffin wax was removed from the TFE-based polymer aqueous dispersion. The resulting TFE-based polymer aqueous dispersion had a solid concentration of 24.4% by mass and an average primary particle size of 261 nm.

### Manufacturing Example 2

The TFE-based polymer aqueous dispersion obtained in Production Example 2 was diluted with deionized water to a solid concentration of 13% by mass and nitric acid was added thereto. The resulting dilution was stirred vigorously in a container equipped with a stirrer for coagulation, and water was filtered out, whereby a wet powder was obtained.

The resulting wet powder was placed in a stainless-steel mesh tray (in an amount of 2.0 g/cm²) and heated at 120°C for 20 hours in a hot air circulating electric furnace, whereby a TFE-based polymer composition B was obtained.

The resulting TFE-based polymer composition B was non melt-processible and had an SSG of 2.176, an amount of the polymerized unit based on HFP of 0.094% by mass, an amount of the polymer E of 0.46% by mass, an amount of the polar group (carboxy group) of 0.016 meq/g, and an apparent density of 0.39 g/mL.

### Preparation Example 2

A mixture of 10-undecen-1-ol (16 g), 1,4-benzoquinone (10.2 g), DMF (160 mL), water (16 mL), and PdCl₂ (0.34 g) was heated and stirred at 90°C for 12 hours.

Then, the solvent was removed under reduced pressure. The resulting residue was purified by separation and column chromatography, whereby 11-hydroxyundecan-2-one (15.4 g) was obtained.

A mixture of 11-hydroxyundecan-2-one (13 g), sulfur trioxide-triethylamine complex (13.9 g), and tetrahydrofuran (140 mL) was stirred at 50°C for 12 hours. A solution of sodium methoxide (3.8 g)/methanol (12 mL) was added dropwise to the reaction solution.

The precipitated solid was filtered under reduced pressure and washed with ethyl acetate, whereby sodium 10-oxoundecyl sulfate (15.5 g) (hereinafter referred to as surfactant A) was obtained.

To a 1-L glass reactor equipped with a stirrer was added 588.6 g of deionized water and 70.0 g of the surfactant A. The reactor was hermetically sealed, and the inside of the reactor was replaced with nitrogen so that oxygen was removed. The temperature of the reactor was increased to 90°C and the pressure was increased with nitrogen to 0.4 MPaG. Ammonium persulfate (APS) in an amount of 41.4 g was fed, followed by stirring for three hours. Stirring was stopped, and depressurization was performed until the pressure inside the reactor reached the atmospheric pressure, followed by cooling, whereby a surfactant aqueous solution B was obtained.

### Production Example 3

To a 6-L SUS reactor equipped with a stirrer was added 3600 g of deionized water, 180 g of paraffin wax, and 0.540 g of the surfactant A. The reactor was hermetically sealed, and the inside of the reactor was replaced with nitrogen so that oxygen was removed. The temperature of the reactor was increased to 70°C and the reactor was filled with TFE to set the pressure at 2.70 MPa. As polymerization initiators, 0.620 g of ammonium persulfate (APS) and 1.488 g of disuccinic acid peroxide (DSP) were fed. TFE was fed so that the reaction pressure was constant at 2.70 MPa. While feeding of TFE was started, continuous feeding of the surfactant aqueous solution B was started. When 540 g of TFE had been fed, 20 g of deionized degassed water containing 0.76 g of hydroquinone dissolved therein was added. Stirring was stopped when 1200 g of TFE had been fed, and depressurization was performed until the pressure inside the reactor reached the atmospheric pressure. By the end of the reaction, 103 g of the surfactant aqueous solution B was fed. The contents were taken out of the reactor and cooled, and the paraffin wax was separated, whereby a TFE-based polymer aqueous dispersion was obtained.

The resulting TFE-based polymer aqueous dispersion had a solid concentration of 25.9% by mass and an average primary particle size of 290 nm.

### Manufacturing Example 3

The TFE-based polymer aqueous dispersion obtained in Production Example 3 was diluted with deionized water to a solid concentration of 13% by mass and nitric acid was added thereto. The resulting dilution was stirred vigorously in a container equipped with a stirrer for coagulation, and water was filtered out, whereby a wet powder was obtained.

The resulting wet powder was placed in a stainless-steel mesh tray (in an amount of 2.0 g/cm²) and heated at 150°C for 10 hours in a hot air circulating electric furnace, whereby a TFE-based polymer composition C was obtained.

The resulting TFE-based polymer composition C was non melt-processible and had an SSG of 2.151, a thermal instability index of 42, a 1.0% mass reduction temperature of 492°C, an amount of the polar groups (carboxy group and sulfonic acid group) of 0.009 meq/g, and an apparent density of 0.42 g/mL.

The amount of (H-(CF₂)ₘ₋₁-COO)H (wherein m is 4 to 20) was 5491 ppb by mass based on the TFE-based polymer composition C, and the amount of (H-(CF₂)ₙ-SO₃)H (wherein n is 4 to 20) was 3797 ppb by mass based on the TFE-based polymer composition C.

### Manufacturing Example 4

A TFE-based polymer composition X was obtained as in Manufacturing Example 1, except that the heat treatment at 135°C for 10 hours was changed to the heat treatment at 240°C for 18 hours.

The resulting TFE-based polymer composition X was non melt-processible and had an SSG of 2.158, an amount of the polar group (carboxy group) of 2.0 × 10⁻⁷ meq/g, and an apparent density of 0.49 g/mL.

### Manufacturing Example 5

The TFE-based polymer composition B obtained in Manufacturing Example 2 in an amount of 30 g was placed in a reactor. The temperature inside the reactor was raised to 200°C, and the air inside the reactor was removed by nitrogen purge for one hour. While maintaining the temperature at 200°C, a gas mixture prepared by diluting fluorine gas (F₂) as a fluorine radical source with nitrogen gas (fluorine/nitrogen (volume ratio) = 20/80) was continuously flowed at a flow rate of about 50 mL/min for 480 minutes (eight hours) at atmospheric pressure (amount of fluorine radical source added (i.e., amount of fluorine gas): 7.5 g). After the reaction ended, the inside of the reactor was immediately purged with nitrogen gas for one hour to remove the fluorine gas. A starch-iodide test was performed to confirm the absence of fluorine gas in the inert gas based on the presence or absence of color development of the indicator. The temperature of the reactor was cooled to room temperature, and the TFE-based polymer composition D was recovered.

The resulting TFE-based polymer composition D was non melt-processible and had fibrillatability. The resulting TFE-based polymer composition D had an endothermic peak temperature of 342°C, an SSG of 2.176, an amount of the polymerized unit based on HFP of 0.094% by mass, an amount of the polar group (carboxy group) of 0.000 meq/g, and an apparent density of 0.41 g/mL. No polymer E was detected.

The TFE-based polymer compositions obtained above were evaluated by the following methods.

### Evaluation of liquid electrolyte battery

Production of mixture sheets of Examples A1 to A4 and Comparative Example A1, evaluation of electrodes, and evaluation of batteries were performed by the following procedures.

### <Production of positive electrode mixture sheet>

The active material and the conductive aid were weighed out, and the materials were fed into a V-type mixer, followed by mixing at 37 rpm for 10 minutes, whereby a mixture containing the active material and the conductive aid was obtained. Then, the binder (TFE-based polymer composition) weighed out was added to the mixture and the mixture was sufficiently cooled in a thermostatic bath at 5°C. The mixture containing the active material, the conductive aid, and the binder was fed into a 1-L Henschel mixer and treated at 1000 rpm for three minutes to homogenize the mixture.

Then, the mixture was thoroughly heated in a thermostatic bath at 50°C, and treated in a Henschel mixer at 2500 rpm for 30 minutes so that fibrillation was promoted, whereby an electrode mixture was obtained.

The electrode mixture was fed to metal rolls arranged side by side in parallel to each other (temperature of the left and right rolls: 100°C, rotation speed of the left roll: 1 m/min, rotation speed of the right roll: 0.5 m/min) and rolled, whereby an electrode mixture sheet was obtained. The amount of the electrode mixture fed to the Henschel mixer was 1000 g in total.

Tables 9 shows the material types and compositions.

**[Table 9]**

| | (A) Active material | (B) Binder | (C) Conductive aid | Composition ratio A:B:C (mass ratio) |
|---|---|---|---|---|
| Example A1 | Li(Ni_{0.6}Mn_{0.2}Co_{0.2})O₂ | TFE-based polymer composition A | denka Li-400 | 96.0:1.9:2.1 |
| Example A2 | Li(Ni_{0.6}Mn_{0.2}Co_{0.2})O₂ | TFE-based polymer composition B | denka Li-400 | 96.0:1.9:2.1 |
| Example A3 | Li(Ni_{0.6}Mn_{0.2}Co_{0.2})O₂ | TFE-based polymer composition C | denka Li-400 | 96.0:1.9:2.1 |
| Example A4 | Li(Ni_{0.6}Mn_{0.2}Co_{0.2})O₂ | TFE-based polymer composition X | denka Li-400 | 96.0:1.9:2.1 |
| Comparative Example A1 | Li(Ni_{0.6}Mn_{0.2}Co_{0.2})O₂ | TFE-based polymer composition D | denka Li-400 | 96.0:1.9:2.1 |

denka Li-400: carbon black available from Denka Co., Ltd.

### <Production of positive electrode>

The positive electrode mixture sheet was bonded to 20-µm aluminum foil in the following manner.

The adhesive used was a slurry prepared by dispersing polyvinylidene fluoride (PVDF) and carbon black at a solid ratio of 65:35 in N-methylpyrrolidone (NMP) as a solvent. The above adhesive was applied to aluminum foil and dried on a hot plate at 120°C for 15 minutes, whereby a carbon-coated current collector was formed.

The positive electrode mixture sheet pressed by a roll press to have a desired density was placed on the carbon-coated current collector, and the positive electrode mixture sheet and the current collector were bonded to each other using a roll press machine (100°C, 15 KN). The thickness of the positive electrode was finally 120 µm and the density was 3.5 g/cc.

The workpiece was cut into the desired size, followed by tab attachment. This piece was used as a positive electrode.

### <Evaluation of adhesion force (90-degree peel test of electrode/current collector interface)>

The mixture side of the electrode cut into a size of 1.2 × 8.0 cm was fixed to a movable jig. A tape was attached to the current collector side, and the stress (N/mm) when the tape was pulled at an angle of 90 degrees at a speed of 100 mm/min was measured using an autograph. A 1 N load cell was used as the load cell of the autograph. The adhesion forces of Examples A1 to A3 and Comparative Example A1 in which the positive electrode active material was used were evaluated relative to the adhesion force of Example A4 taken as 100.

The results are shown in Table 10.

### <Production of negative electrode>

First, 97.6 parts by mass of a carbonaceous material (graphite) was mixed with 1.2 parts by mass of an aqueous dispersion of sodium carboxymethyl cellulose (concentration of sodium carboxymethyl cellulose: 1% by mass) and 1.2 parts by mass of an aqueous dispersion of styrene-butadiene rubber (concentration of styrene-butadiene rubber: 50% by mass) respectively serving as a thickening agent and a binder. The components were mixed using a disperser to form a slurry. The resulting slurry was applied to 10-µm-thick copper foil and dried. The workpiece was rolled using a press machine and cut into the desired size, followed by tab attachment. This piece was used as a negative electrode.

### <Preparation of electrolyte solution>

A solvent mixture of ethylene carbonate (EC) and ethyl methyl carbonate (EMC) (EC:EMC = 30:70 (volume ratio)) was weighed as an organic solvent into a sample bottle, and fluoroethylene carbonate (FEC) and vinylene carbonate (VC) each in an amount of 1% by mass were added thereto and dissolved therein, whereby a mixed solution was prepared. A LiPF₆ salt was mixed with this mixed solution at 23°C such that the concentration thereof in the electrolyte solution was 1.1 mol/L, whereby a non-aqueous electrolyte solution was obtained.

### <Production of aluminum laminate cell>

The positive electrode and the negative electrode were placed to face each other with a 20-µm-thick porous polyethylene film (separator) in between. The non-aqueous electrolyte solution prepared above was injected thereinto and the non-aqueous electrolyte solution was made to sufficiently permeate into the components such as the separator. The workpiece was then sealed, pre-charged, and aged, whereby a lithium-ion secondary battery was produced.

### <Evaluation of cycle characteristics>

The lithium ion secondary battery produced above in a state of being sandwiched and pressurized between plates was subjected to constant current/constant voltage charge (hereinafter, referred to as CC/CV charge) to 4.2 V at a current corresponding to 0.5 C and at 25°C. After a 0.1 C cut-off, the battery was discharged to 3 V at a constant current of 1 C. This was counted as one cycle, and the discharge capacity at the third cycle was used to determine the initial discharge capacity (mAh/g). Here, 1 C means the current value at which the reference capacity of the battery is discharged in one hour. For example, 0.2 C means 1/5 of this current value.

The initial discharge capacities of Examples A1 to A3 and Comparative Example A1 were evaluated relative to the initial discharge capacity of Example A4 taken as 100.

The cycle was repeated, and the ratio of the discharge capacity after 20 cycles to the initial discharge capacity (third cycle) was determined. This value was defined as the cycle capacity retention (%). 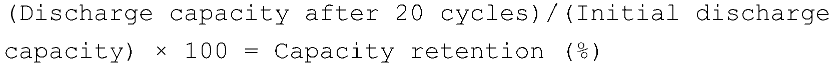 (Discharge capacity after 20 cycles)/(Initial discharge capacity) × 100 = Capacity retention (%)

The results are shown in Table 10.

### <Direct-current resistance evaluation>

Next, the battery after 20 charge/discharge cycles was again fully charged. After standing for 30 minutes, the battery was discharged at 1 C for five seconds. Based on the voltage drop ΔV during the discharge and the Ohm's law: $R \left[Ω\right] = ΔV \left[V\right] / 1 C current \left[A\right] ,$ [A], the direct-current resistance (DC-IR) was determined.

The results are shown in Table 10.

**[Table 10]**

| | Adhesion force | Direct-current resistance (Ω) | Initial capacity | Capacity retention (%) |
|---|---|---|---|---|
| Example A1 | 106 | 1.35 | 102 | 96.4 |
| Example A2 | 118 | 1.33 | 103 | 96.4 |
| Example A3 | 110 | 1.30 | 103 | 96.1 |
| Example A4 | 100 | 1.40 | 100 | 95.8 |
| Comparative Example A1 | 100 | 1.46 | 99 | 95.7 |

### Evaluation of electrode mixture sheet for solid-state battery

The negative electrode mixture sheets of Examples B1 and B2 and Comparative Example B1 were produced by the following procedure, and evaluated. The production and evaluation were performed in an argon atmosphere.

### <Production of negative electrode mixture sheet>

The active material, the binder (TFE-based polymer composition), and the solid electrolyte were weighed into a container, and the mixture was sufficiently cooled in a thermostatic bath at 5°C. The mixture containing the active material, the binder, and the solid electrolyte was fed into a mixer (crush millser available from Iwatani Corporation) and processed for two minutes to homogenize the mixture.

Then, the mixture was sufficiently heated in a thermostatic bath at 40°C, and treated in the mixer for 20 minutes so that fibrillation was promoted, whereby an electrode mixture was obtained.

The electrode mixture was fed to parallel metal rolls (rotational speed: 0.1 m/min) and rolled, whereby an electrode mixture sheet was obtained. The resulting rolled sheet was folded into two and thereby coarsely crushed, and the electrode mixture was again fed to the metal rolls (rotational speed: 0.1 m/min) and rolled, whereby an electrode mixture sheet with higher strength was obtained.

Then, the electrode mixture sheet was placed on a carbon-coated current collector, and the negative electrode mixture sheet and the current collector were bonded to each other using a roll press machine (100°C, 15 KN).

The electrode mixture sheet was then fed to a roll press machine to adjust the gap. The thickness of the positive electrode mixture layer was finally adjusted to 160 µm.

Tables 11 shows the material types and compositions.

**[Table 11]**

| | (A) Active material | (B) Binder | (C) Conductive aid | (D) Solid electrolyte | Composition ratio A:B:C:D (mass ratio) |
|---|---|---|---|---|---|
| Example B1 | Natural graphite | TFE-based polymer composition C | Not used | Li₆PS₅Cl | 70:2.0:0:28 |
| Example B2 | Natural graphite | TFE-based polymer composition X | Not used | Li₆PS₅Cl | 70:2.0:0:28 |
| Comparative Example B1 | Natural graphite | TFE-based polymer composition D | Not used | Li₆PS₅Cl | 70:2.0:0:28 |

### <Evaluation of adhesion force (90-degree peel test of electrode/current collector interface)>

The mixture side of the electrode cut into a size of 0.8 × 6.0 cm was fixed to a movable jig. A tape was attached to the current collector side, and the stress (N/mm) when the tape was pulled at an angle of 90 degrees at a speed of 50 mm/min was measured. The adhesion forces of Example B1 and Comparative Example B1 in which the negative electrode active material was used were evaluated relative to the adhesion force of Example B2 taken as 100.

The results are shown in Table 12.

### <Evaluation of negative electrode penetration resistance>

A negative electrode sheet prepared using a solid electrolyte was cut to an appropriate size, and gold was vapor-deposited on the electrode mixture layer on the side opposite to the current collecting foil. Then, the resulting solid electrolyte mixture sheet punched out to a Φ15 mm circle was placed in a pressure cell, the cell screws were tightened with 8 N, and the top and bottom of the cell were caused to function as electrodes. FIG. 1 shows a schematic cross-sectional view of the pressure cell used.

The penetration resistance of this sample was measured using Battery HiTester available from Hioki E.E. Corporation according to the equation shown below. 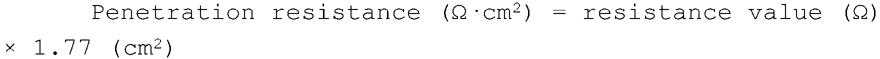 Penetration resistance (Ω·cm2) = resistance value (Ω) × 1.77 (cm2)

The penetration resistance values of Example B1 and Comparative Example B1 were evaluated relative to the penetration resistance value of Example B2 taken as 100.

The results are shown in Table 12.

**[Table 12]**

| | Adhesion force | Penetration resistance |
|---|---|---|
| Example B1 | 112 | 86 |
| Example B2 | 100 | 100 |
| Comparative Example B1 | 98 | 102 |

It has been confirmed that use of the TFE-based polymer composition of the disclosure improves the adhesion between the electrode mixture and the foil, enabling favorable electron transfer and being useful for improving the properties of electrochemical devices.

### REFERENCE SIGNS LIST

- 1:: screw
- 2:: nut
- 3:: insulating sheet
- 4:: solid electrolyte electrode
- 5:: deposited gold
- 6:: upper electrode
- 7:: lower electrode

## Claims

1. A tetrafluoroethylene-based polymer composition for use in a binder for an electrochemical device,
the tetrafluoroethylene-based polymer composition comprising a polar group in an amount of less than 0.020 meq/g based on the tetrafluoroethylene-based polymer composition, being non melt-processible, and having an apparent density of less than 0.50 g/mL.

2. The tetrafluoroethylene-based polymer composition according to claim 1,
wherein the apparent density is 0.35 g/mL or more and less than 0.50 g/mL.

3. The tetrafluoroethylene-based polymer composition according to claim 1 or 2,
wherein the tetrafluoroethylene-based polymer composition is for use in a binder for a lithium-ion secondary battery and is in a form of powder.

4. A binder for an electrochemical device consisting essentially of a tetrafluoroethylene-based polymer composition,
the tetrafluoroethylene-based polymer composition comprising a polar group in an amount of less than 0.020 meq/g based on the tetrafluoroethylene-based polymer composition, being non melt-processible, and having an apparent density of less than 0.50 g/mL.

5. The binder for an electrochemical device according to claim 4,
wherein the apparent density of the tetrafluoroethylene-based polymer composition is 0.35 g/mL or more and less than 0.50 g/mL.

6. The binder for an electrochemical device according to claim 4 or 5,
wherein the polar group includes at least one functional group selected from the group consisting of an amino group, a nitrile group, and an oxygen-containing polar group.

7. The binder for an electrochemical device according to claim 6,
wherein the oxygen-containing polar group includes at least one functional group selected from the group consisting of a carbonyl group-containing group, an epoxy group, an oxetanyl group, -SO₃X^{a}, -SO₂X^{a}, -OSO₂X^{a}, -PO₃X^{a}, and -OX^{a} where X^{a} is -H, a metal atom, -NR¹₄, imidazolium optionally containing a substituent, pyridinium optionally containing a substituent, phosphonium optionally containing a substituent, an alkyl group, or a nitrile group; and R¹ is H or an organic group.

8. The binder for an electrochemical device according to any one of claims 4 to 7,
wherein the tetrafluoroethylene-based polymer is a copolymer of tetrafluoroethylene and a monomer containing a polar group.

9. The binder for an electrochemical device according to any one of claims 4 to 8,
wherein the tetrafluoroethylene-based polymer composition contains a fluorine-containing compound containing a hydrophilic group.

10. The binder for an electrochemical device according to claim 9,
wherein the hydrophilic group includes at least one selected from the group consisting of -SO₃M^{a}, -SO₂M^{a}, - OSO₂M^{a}, -PO₃M^{a}, -COOM^{a}, -OCOM^{a}, and -OM^{a}, where M^{a} is -H, a metal atom, -NR¹₄, imidazolium optionally containing a substituent, pyridinium optionally containing a substituent, or phosphonium optionally containing a substituent; and R¹ is H or an organic group.

11. The binder for an electrochemical device according to claim 9 or 10,
wherein the fluorine-containing compound containing a hydrophilic group is a compound represented by the following formula (N⁰):
Xⁿ⁰-Rfⁿ⁰-Y⁰ (N⁰)
wherein Xⁿ⁰ is H, Cl, or F; Rfⁿ⁰ is a C3-C20 linear, branched, or cyclic alkylene group in which any or all of H atoms are replaced by F atoms, where the alkylene group optionally contains at least one ether bond and a part of the H atoms are optionally replaced by Cl atoms; and Y⁰ is an anionic group.

12. The binder for an electrochemical device according to any one of claims 9 to 11,
wherein the fluorine-containing compound containing a hydrophilic group includes at least one selected from the group consisting of a compound represented by the following formula (1) and a compound represented by the following formula (2),
formula (1): (H-(CF₂)ₘ₋₁-COO)ₚM¹
wherein m is 4 to 20; M¹ is H, a metal atom, NR⁵₄ where R⁵s are optionally the same as or different from each other and each represent H or a C1-C10 organic group, imidazolium optionally containing a substituent, pyridinium optionally containing a substituent, or phosphonium optionally containing a substituent; and p is 1 or 2, and
formula (2): (H-(CF₂)ₙ-SO₃)_{q}M²
wherein n is 4 to 20; M² is H, a metal atom, NR⁵₄ where R⁵ is as defined above, imidazolium optionally containing a substituent, pyridinium optionally containing a substituent, or phosphonium optionally containing a substituent; and q is 1 or 2.

13. The binder for an electrochemical device according to claim 9 or 10,
wherein the fluorine-containing compound containing a hydrophilic group is a macromolecular compound containing an ionic group.

14. The binder for an electrochemical device according to claim 13,
wherein the macromolecular compound includes at least one selected from the group consisting of a polymer (I) containing a polymerized unit (I) based on a monomer represented by the following formula (I) and a compound (II) represented by the following formula (II),
formula (I):
CX¹X³=CX²R(-CZ¹Z²-A⁰)ₘ (I)
wherein X¹ and X³ are each independently F, Cl, H, or CF₃; A⁰ is an anionic group; X² is H, F, an alkyl group, or a fluorine-containing alkyl group; R is a linking group; Z¹ and Z² are each independently H, F, an alkyl group, or a fluorine-containing alkyl group; and m is an integer of 1 or more, and
formula (II):
T^{X}-X^{A}-R^{FA1}-R^{FA2}-X^{A}-T^{X}' (II)
wherein
R^{FA1} is -Rf¹ₚ-R^{F}-O_{q}-;
R^{FA2} is -Rf²ₚ-R^{FX}-O_{q}-,
where R^{F} is a divalent fluoropolyether group,
R^{FX} is a divalent fluoropolyether group containing an anionic group,
Rf¹ and Rf² are each independently a C1-C6 alkylene group optionally substituted with one or more fluorine atoms,
each p is independently 0 or 1, and
each q is independently 0 or 1;
each X^{A} is independently a single bond or a divalent to decavalent group; and
T^{X} and T^{X}' are each independently selected from the group consisting of (i) a C1-C24 (hydro)(fluoro)carbon group optionally containing one or more of H, O, and Cl and free from the anionic group and (ii) a C1-C24 (hydro)(fluoro)carbon group containing at least one anionic group.

15. The binder for an electrochemical device according to claim 14,
wherein the macromolecular compound includes the polymer (I) containing a polymerized unit (I) based on a monomer represented by the formula (I).

16. The binder for an electrochemical device according to any one of claims 4 to 15,
wherein the binder for an electrochemical device is a binder for a lithium-ion secondary battery and is in a form of powder.

17. An electrode mixture comprising: the tetrafluoroethylene-based polymer composition according to any one of claims 1 to 3 or the binder for an electrochemical device according to any one of claims 4 to 16; and an electrode active material.

18. The electrode mixture according to claim 17,
wherein the electrode mixture is in a form of a sheet.

19. An electrode comprising: the tetrafluoroethylene-based polymer composition according to any one of claims 1 to 3 or the binder for an electrochemical device according to any one of claims 4 to 16; an electrode active material; and a current collector.

20. A secondary battery comprising the electrode according to claim 19.
